# EUROPÄISCHE PATENTSCHRIFT

(11) **EP 2 918 658 B1**
(45) Veröffentlichungstag und Bekanntmachung des Hinweises auf die Patenterteilung: **13.05.2020**
(21) Anmeldenummer: 15000445.5
(22) Anmeldetag: 13.02.2015
(51) Int. Cl.: C09K 19/04, C09K 19/14, C09K 19/12, C09K 19/30

(54) **Flüssigkristalline Medien mit homöotroper Ausrichtung**
Liquid crystalline media with homeotropic alignment
Milieux cristallins liquides présentant une disposition homéotrope

(30) Priorität: 10.03.2014 EP 14000831; 24.11.2014 EP 14003943
(43) Veröffentlichungstag der Anmeldung: 16.09.2015
(73) Patentinhaber: Merck Patent GmbH, 64293 Darmstadt (DE)
(72) Erfinder: Archetti, Graziano, 64289 Darmstadt (DE); Saito, Izumi, 64285 Darmstadt (DE); Fortte, Rocco, 65933 Frankfurt am Main (DE); Kodek, Thorsten, 64546 Moerfelden-Walldorf (DE)

(56) Entgegenhaltungen:
- WO-A1-2013/004372
- WO-A1-2013/099804
- WO-A1-2014/094959
- DE-A1-102011 108 708
- JP-A- 2014 029 471
- US-A1- 2013 287 970

## Beschreibung

Die vorliegende Erfindung betrifft flüssigkristalline Medien (FK-Medien) mit negativer oder positiver dielektrischer Anisotropie enthaltend eine niedermolekulare Komponente und eine polymerisierbare Komponente. Die polymerisierbare Komponente umfasst selbst-ausrichtende, polymerisierbare Mesogene (polymerisierbare Selbstorientierungsadditive), die eine homöotrope (vertikale) Ausrichtung der FK-Medien an einer Oberfläche oder den Zellwänden einer Flüssigkristallanzeige (FK-Anzeige) bewirken. Die Erfindung umfasst daher auch FK-Anzeigen mit homöotroper Ausrichtung des flüssigkristallinen Mediums (FK-Mediums) ohne Orientierungsschichten. Die Erfindung offenbart neue Strukturen für polymerisierbare Selbstorientierungsadditive, die eine bestimmte Position der funktionalen Gruppen aufweisen.

Das Prinzip der elektrisch kontrollierten Doppelbrechung, der ECB-Effekt (electrically controlled birefringence) oder auch DAP-Effekt (Deformation aufgerichteter Phasen) wurde erstmals 1971 beschrieben (M.F. Schieckel und K. Fahrenschon, "Deformation of nematic liquid crystals with vertical orientation in electrical fields", Appl. Phys. Lett. 19 (1971), 3912). Es folgten Arbeiten von J.F. Kahn (Appl. Phys. Lett. 20 (1972), 1193) und G. Labrunie und J. Robert (J. Appl. Phys. 44 (1973), 4869).

Die Arbeiten von J. Robert und F. Clerc (SID 80 Digest Techn. Papers (1980), 30), J. Duchene (Displays 7 (1986), 3) und H. Schad (SID 82 Digest Techn. Papers (1982), 244) haben gezeigt, dass flüssigkristalline Phasen hohe Werte für das Verhältnis der elastischen Konstanten K₃/K₁, hohe Werte für die optische Anisotropie Δn und Werte für die dielektrische Anisotropie von Δε ≤ -0,5 aufweisen müssen, um für hochinformative Anzeigeelemente basierend auf dem ECB-Effekt eingesetzt werden zu können. Auf dem ECB-Effekt basierende elektrooptische Anzeigeelemente weisen eine homöotrope Randorientierung auf (VA-Technologie = Vertical Aligned).

Anzeigen, die den ECB-Effekt verwenden, haben sich als sogenannte VAN-(Vertically Aligned Nematic) Anzeigen beispielsweise in den Bauformen MVA-(Multi-Domain Vertical Alignment, z.B.: Yoshide, H. et al., Vortrag 3.1: "MVA LCD for Notebook or Mobile PCs ...", SID 2004 International Symposium, Digest of Technical Papers, XXXV, Buch I, S. 6 bis 9 und Liu, C.T. et al., Vortrag 15.1: "A 46-inch TFT-LCD HDTV Technnology ...", SID 2004 International Symposium, Digest of Technical Papers, XXXV, Buch II, S. 750 bis 753), PVA- (Patterned Vertical Alignment, z.B.: Kim, Sang Soo, Vortrag 15.4: "Super PVA Sets New State-of-the-Art for LCD-TV", SID 2004 International Symposium, Digest of Technical Papers, XXXV, Buch II, S. 760 bis 763), ASV- (Advanced Super View, z.B.: Shigeta, Mitzuhiro und Fukuoka, Hirofumi, Vortrag 15.2: "Development of High Quality LCDTV", SID 2004 International Symposium, Digest of Technical Papers, XXXV, Buch II, S. 754 bis 757) Anzeigen, neben IPS- (In Plane Switching) (z.B.: Yeo, S.D., Vortrag 15.3: "A LC Display for the TV Application", SID 2004 International Symposium, Digest of Technical Papers, XXXV, Buch II, S. 758 & 759) und den lange bekannten TN- (Twisted Nematic) Anzeigen, als eine der drei zur Zeit wichtigsten neueren Typen von Flüssigkristallanzeigen, insbesondere für Fernsehanwendungen, etabliert. In allgemeiner Form werden die Technologien z.B. in Souk, Jun, SIDSeminar 2004, Seminar M-6: "Recent Advances in LCD Technology", Seminar Lecture Notes, M-6/1 bis M-6/26 und Miller, lan, SIDSeminar 2004, Seminar M-7: "LCD-Television", Seminar Lecture Notes, M-7/1 bis M-7/32, verglichen. Obwohl die Schaltzeiten moderner ECB-Anzeigen durch Ansteuerungsmethoden mit Übersteuerung (overdrive) bereits deutlich verbessert wurden, z.B.: Kim, Hyeon Kyeong et al., Vortrag 9.1: "A 57-in. Wide UXGA TFT-LCD for HDTV Application", SID 2004 International Symposium, Digest of Technical Papers, XXXV, Buch I, S. 106 bis 109, ist die Erzielung von videotauglichen Schaltzeiten, insbesondere beim Schalten von Graustufen, immer noch ein noch nicht zufriedenstellend gelöstes Problem.

Mit der Erzeugung der VA-Displays mit zwei oder mehr Domänen unterschiedlicher Vorzugsrichtung ist ein beträchtlicher Aufwand verbunden.

Ein Ziel dieser Erfindung ist es, die Herstellprozesse und die Anzeigevorrichtungen selbst zu vereinfachen, ohne die Vorteile der VA-Technik, wie relativ schnelle Schaltzeiten und gute Blickwinkelabhängigkeit, aufzugeben.

VA-Anzeigen die FK-Medien mit positiver dielektrischer Anisotropie enthalten, werden in S.H. Lee et al. Appl. Phys. Lett. (1997), 71, 2851-2853 beschrieben. Diese Anzeigen verwenden auf eine Substratoberfläche angeordnete Interdigitalelektroden (In-plane Ansteuerelektroden-Konfiguration kammförmiger Struktur), wie sie unter anderem bei den kommerziell erhältlichen IPS-(in-plane switching) Anzeigen zum Einsatz kommen (wie z.B. in DE 40 00 451 und EP 0 588 568 offenbart), und weisen eine homöotrope Anordnung des Flüssigkristallmediums auf, die zu einer planaren Anordnung beim Anlegen einer elektrischen Feldes wechselt.

Weiterentwicklungen der oben genannten Anzeige sind zum Beispiel in K.S. Hun et al. J. Appl. Phys. (2008), 104, 084515 (DSIPS: 'double-side in-plane switching' für Verbesserungen von Treiberspannung und Transmission), M. Jiao et al. App. Phys. Lett (2008), 92, 111101 (DFFS: 'dual fringe field switching' für verbesserte Schaltzeiten) und Y.T. Kim et al. Jap. J. App. Phys. (2009), 48, 110205 (VAS: 'viewing angle switchable' LCD) zu finden. Darüber hinaus sind VA-IPS-Anzeigen auch unter dem Namen Positiv-VA und HT-VA bekannt.

Bei allen solche Anzeigen (hier nachfolgend allgemein als VA-IPS-Anzeigen bezeichnet) ist auf beiden Substratoberflächen eine Orientierungsschicht zur homöotropen Ausrichtung des FK-Mediums aufgebracht, deren Erzeugung bisher mit einem beträchtlichen Aufwand verbunden ist.

Ein Ziel dieser Erfindung ist es, die Herstellprozesse selbst zu vereinfachen, ohne die Vorteile der VA-IPS-Technik, wie relativ schnelle Schaltzeiten, gute Blickwinkelabhängigkeit und hohen Kontrast aufzugeben.

Für die technische Anwendung dieser Effekte in elektrooptischen Anzeigeelementen werden FK-Phasen benötigt, die einer Vielzahl von Anforderungen genügen müssen. Besonders wichtig sind hier die chemische Beständigkeit gegenüber Feuchtigkeit, Luft, den Materialien in den Substratoberflächen und physikalischen Einflüssen wie Wärme, Strahlung im infraroten, sichtbaren und ultravioletten Bereich und elektrische Gleich- und Wechselfelder.

Ferner wird von technisch verwendbaren FK-Phasen eine flüssigkristalline Mesophase in einem geeigneten Temperaturbereich und eine niedrige Viskosität gefordert.

VA- und VA-IPS-Anzeigen sollen im Allgemeinen einen sehr hohen spezifischen Widerstand bei gleichzeitig großem Arbeitstemperaturbereich, kurze Schaltzeiten und niedriger Schwellenspannung, mit deren Hilfe verschiedene Graustufen erzeugt werden können, besitzen.

In den herkömmlichen VA- und VA-IPS-Displays sorgt eine Polyimidschicht auf den Substratoberflächen für die homöotrope Orientierung des Flüssigkristalls. Die Herstellung einer geeigneten Orientierungsschicht im Display erfordert einen erheblichen Aufwand. Außerdem können Wechselwirkungen der Orientierungsschicht mit dem FK-Medium den elektrischen Widerstand der Anzeige verschlechtern. Wegen solcher möglichen Wechselwirkungen reduziert sich die Zahl der geeigneten Flüssigkristallkomponenten erheblich. Daher wäre es erstrebenswert die homöotrope Ausrichtung des FK-Mediums ohne Polyimid zu erreichen.

Der Nachteil der häufig verwendeten Aktivmatrix-TN-Anzeigen beruht in ihrem vergleichsweise niedrigen Kontrast, der relativ hohen Blickwinkel-abhängigkeit und der Schwierigkeit in diesen Anzeigen Graustufen zu erzeugen.

Wesentlich bessere Blickwinkelabhängigkeiten weisen VA-Displays auf und werden daher hauptsächlich für Fernseher und Monitore verwendet.

Eine Weiterentwicklung stellen die sogenannten PS-bzw. PSA-Anzeigen ("Polymer Sustained" bzw. "Polymer Sustained Alignment") dar, für die auch gelegentlich der Begriff "Polymer Stabilized" verwendet wird. Ohne nennenswerte Einbußen sonstiger Parameter, wie insbesondere der günstigen Blickwinkelabhängigkeit des Kontrastes, zeichnen sich die PSA-Anzeigen durch die Verkürzung der Schaltzeiten aus.

In diesen Anzeigen wird dem FK-Medium eine geringe Menge (zum Beispiel 0,3 Gew.-%, typischerweise <1 Gew.-%) einer oder mehrerer polymerisierbarer Verbindung(en) zugesetzt, welche nach Einfüllen in die FK-Zelle mit oder ohne angelegte elektrische Spannung zwischen den Elektroden *in situ* polymerisiert bzw. vernetzt wird, üblicherweise durch UV-Photopolymerisation. Als besonders geeignet hat sich der Zusatz von polymerisierbaren mesogenen oder flüssigkristallinen Verbindungen, auch als reaktive Mesogene oder "RM"s bezeichnet, zur FK-Mischung erwiesen. Die PSA-Technik wird bisher hauptsächlich für FK-Medien mit negativer dielektrischer Anisotropie eingesetzt.

Nachfolgend wir der Begriff "PSA", falls nicht anders angegeben, stellvertretend für PS-Anzeigen und PSA-Anzeigen verwendet.

Mittlerweile wird das PSA-Prinzip in diversen klassischen FK-Anzeigen angewendet. So sind beispielsweise PSA-VA-, PSA-OCB-, PSA-IPS-, PSA-FFS- und PSA-TN-Anzeigen bekannt. Die Polymerisation der polymerisierbaren Verbindung(en) erfolgt bei PSA-VA- und PSA-OCB-Anzeigen vorzugsweise bei angelegter elektrischer Spannung, bei PSA-IPS-Anzeigen mit oder ohne angelegte elektrische Spannung. Wie man in Testzellen nachweisen kann, führt das PS(A)-Verfahren zu einem 'pretilt' in der Zelle. Bei PSA-OCB-Anzeigen beispielsweise kann man erreichen, dass die Bend-Struktur stabilisiert wird, so dass man ohne Offset-Spannung auskommt oder diese reduzieren kann. Im Falle von PSA-VA-Anzeigen wirkt sich der 'pretilt' positiv auf die Schaltzeiten aus. Für PSA-VA-Anzeigen kann ein Standard-MVA- bzw. -PVA Pixel- und Elektroden-Layout verwendet werden. Darüber hinaus kann man aber beispielsweise auch mit nur einer strukturierten Elektrodenseite und ohne 'Protrusions' auskommen, was die Herstellung wesentlich vereinfacht und gleichzeitig zu einem sehr guten Kontrast bei sehr guter Lichtdurchlässigkeit führt.

PSA-VA-Anzeigen sind beispielsweise in JP 10-036847 A, EP 1 170 626 A2, US 6,861,107, US 7,169,449, US 2004/0191428 A1, US 2006/0066793 A1 und US 2006/0103804 A1 beschrieben. PSA-OCB-Anzeigen sind beispielsweise in T.-J- Chen et al., Jpn. J. Appl. Phys. (2006), 45, 2702-2704 und S. H. Kim, L.-C- Chien, Jpn. J. Appl. Phys. (2004), 43, 7643-7647 beschrieben. PSA-IPS-Anzeigen sind zum Beispiel in US 6,177,972 und Appl. Phys. Lett. (1999), 75(21), 3264 beschrieben. PSA-TN-Anzeigen sind zum Beispiel in Optics Express (2004), 12(7), 1221 beschrieben. PSA-VA-IPS Anzeigen sind zum Beispiel in WO 2010/089092 A1 offenbart.

PSA-Anzeigen können ebenso wie die oben beschriebenen konventionellen FK-Anzeigen als Aktivmatrix- oder Passivmatrix-Anzeigen (PM) betrieben werden. Bei Aktivmatrix-Anzeigen erfolgt die Ansteuerung einzelner Bildpunkte üblicherweise durch integrierte, nicht-lineare aktive Elemente wie beispielsweise Transistoren (z.B. Dünnfilmtransistoren, engl. 'thin film transistor' bzw. "TFT"), bei Passivmatrix-Anzeigen üblicherweise nach dem Multiplex-Verfahren, wobei beide Verfahren aus dem Stand der Technik bekannt sind.

Insbesondere für Monitor- und vor allem TV-Anwendungen ist nach wie vor die Optimierung der Schaltzeiten, wie aber auch des Kontrastes und der Luminanz (also auch Transmission) der FK-Anzeige gefragt. Hier kann das PSA-Verfahren entscheidende Vorteile bringen. Insbesondere bei PSA-VA-Anzeigen kann man ohne nennenswerte Einbußen sonstiger Parameter eine Verkürzung der Schaltzeiten erreichen, die mit einem in Testzellen messbaren 'pretilt' korrelieren.

Im Stand der Technik werden für PSA-VA beispielsweise polymerisierbare Verbindungen der folgenden Formel verwendet 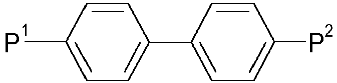 worin P eine polymerisierbare Gruppe, üblicherweise eine Acrylat- oder Methacrylatgruppe bedeutet, wie beispielsweise in US 7,169,449 beschrieben.

Der Aufwand für das Erzeugen einer Polyimidschicht, Behandlung der Schicht und Verbesserung mit Erhebungen oder Polymerschichten, ist relativ groß. Eine vereinfachende Technologie wäre daher wünschenswert, die einerseits die Produktionskosten verringert und andererseits die Bildqualität (Blickwinkelabhängigkeit, Kontrast, Schaltzeiten) zu optimieren hilft.

Die Druckschriften WO 2012/038026 A1 (DE 102011108708 A1) und WO 2013/004372 A1 beschreiben selbstausrichtende Mesogene (nicht-polymerisierbare, konventionelle Selbstorientierungsadditive) mit einer Hydroxygruppe, die an einer mesogenen Grundstruktur aus zwei oder mehr Ringen hängt. Die darin offenbarten Strukturen besitzen keine erfindungsgemäß angeordnete polymerisierbare Gruppe. Selbstausrichtende Mesogene mit mehreren Hydroxygruppen werden in der älteren Anmeldung WO 2014/094959 A1 behandelt (Art. 54(3)-Dokument). In den Druckschriften WO 2013/099804 A1 und JP 2014-029471 A werden Verbindungen mit einer OH-Gruppe und einer endständigen (Meth)acrylatgruppe offenbart. Die Druckschrift US 2013/287970 A1 offenbart eine polymerisierbare Verbindung ohne OH-Gruppe, die als "strong anchoring monomer" bezeichnet wird.

Die bestehenden Ansätze um zu VA-Displayanwendungen ohne Polyimidschicht zu gelangen sind jedoch noch nicht vollständig zufrieden stellend.

Die vorliegende Erfindung betrifft ein FK-Medium enthaltend eine niedermolekulare, nicht polymerisierbare flüssigkristalline Komponente und eine polymerisierbare oder polymerisierte Komponente umfassend eine oder mehrere Verbindungen der Formel I, wobei die polymerisierte Komponente durch Polymerisieren der polymerisierbaren Komponente erhältlich ist,

R¹-[A³-Z³]ₘ-[A²]ₖ-[Z²]ₙ-A¹-R^{a} (I)

worin
- A¹, A², A³: jeweils unabhängig voneinander eine aromatische, heteroaromatische, alicyclische oder heterocyclische Gruppe, welche auch annelierte Ringe enthalten kann, und welche auch durch eine Gruppe L oder -Sp-P ein- oder mehrfach substituiert sein kann,
- L: jeweils unabhängig voneinander H, F, Cl, Br, I, -CN, -NO₂, -NCO, -NCS, -OCN, -SCN, -C(=O)N(R⁰)₂, -C(=O)R⁰, optional substituiertes Silyl, optional substituiertes Aryl oder Cycloalkyl mit 3 bis 20 C-Atomen, oder geradkettiges oder verzweigtes Alkyl, Alkoxy, Alkylcarbonyl, Alkoxycarbonyl, Alkylcarbonyloxy oder Alkoxycarbonyloxy mit 1 bis 25 C-Atomen, worin auch ein oder mehrere H-Atome durch F oder Cl ersetzt sein können,
- P: eine polymerisierbare Gruppe,
- Sp: eine Abstandsgruppe (auch bezeichnet als Spacer oder Spacergruppe) oder eine Einfachbindung,
- Z²: jeweils unabhängig voneinander -O-, -S-, -CO-, -CO-O-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₁-, -CF₂CH₂-, -CH₂CF₂-, -(CF₂)ₙ₁-, -CH=CH-, -CF=CF-, -C≡C-, -CH=CH-COO-, -OCO-CH=CH-, -(CR⁰R⁰⁰)ₙ₁-, -CH(-Sp-P)-, -CH₂CH(-Sp-P)-, -CH(-Sp-P)CH(-Sp-P)-,
- Z³: jeweils unabhängig voneinander eine Einfachbindung, -O-, -S-, -CO-, -CO-O-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₁-, -CF₂CH₂-, -CH₂CF₂-, -(CF₂)ₙ₁-, -CH=CH-, -CF=CF-, -C≡C-, -CH=CH-COO-, -OCO-CH=CH-, -(CR⁰R⁰⁰)ₙ₁-, -CH(-Sp-P)-, -CH₂CH(-Sp-P)-, -CH(-Sp-P)CH(-Sp-P)-,
- n1: 1, 2, 3 oder 4,
- n: 0 oder 1,
- m: 0, 1, 2, 3, 4, 5 oder 6, bevorzugt 0, 1, 2 oder 3,
- k: 0 oder 1,
- R⁰: jeweils unabhängig voneinander Alkyl mit 1 bis 12 C-Atomen,
- R⁰⁰: jeweils unabhängig voneinander H oder Alkyl mit 1 bis 12 C-Atomen,
- R¹: unabhängig voneinander H, Halogen, geradkettiges, verzweigtes oder cyclisches Alkyl mit 1 bis 25 C-Atomen, worin auch eine oder mehrere nicht benachbarte CH₂-Gruppen durch -O-, -S-, -CO-, -CO-O-, -O-CO-, -O-CO-O- so ersetzt sein können, dass O- und/oder S-Atome nicht direkt miteinander verknüpft sind und worin auch ein oder mehrere H-Atome durch F oder Cl, ersetzt sein können, oder eine Gruppe -Sp-P,
- R^{a}: eine Ankergruppe der Formel 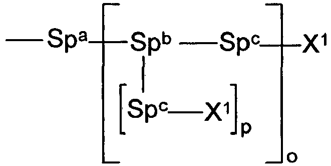 oder 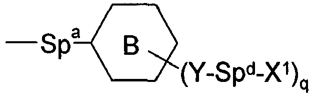
- p: 1 oder 2,
- q: 2 oder 3,
- B: ein substituiertes oder unsubstituiertes Ringsystem oder kondensiertes Ringsystem, bevorzugt ein Ringsystem ausgewählt aus Benzol, Pyridin, Cyclohexan, Dioxan oder Tetrahydropyran,
- Y: unabhängig voneinander -O-, -S-, -C(O)-, -C(O)O-, -OC(O)-, -NR¹¹- oder eine Einfachbindung,
- o: 0 oder 1,
- X¹: unabhängig voneinander H, Alkyl, Fluoralkyl, OH, NH₂, NHR¹¹, NR¹¹₂, OR¹¹, C(O)OH, -CHO, wobei mindestens eine Gruppe X¹ einen Rest ausgewählt aus -OH, -NH₂, NHR¹¹, C(O)OH und -CHO, bedeutet,
- R¹¹: Alkyl mit 1 bis 12 C-Atomen,
- Sp^{a}, Sp^{c}, Sp^{d}: jeweils unabhängig voneinander eine Abstandsgruppe oder eine Einfachbindung
- Sp^{b}: eine tri- oder tetravalente Gruppe, bevorzugt CH, N oder C,
bedeuten,
wobei die Verbindung der Formel I mindestens eine polymerisierbare Gruppe P innerhalb der Gruppen A¹, A², A³, Z² und Z³, wie sie vorhanden sind, enthält.

Die polymerisierbare oder polymerisierte Komponente des FK-Medium enthält optional weitere polymerisierbare Verbindungen. Dabei kommen bevorzugt solche zum Einsatz, die für das PSA-Prinzip geeignet sind.

Die Erfindung betrifft weiter eine FK-Anzeige enthaltend eine FK-Zelle mit zwei Substraten und mindestens zwei Elektroden, wobei mindestens ein Substrat lichtdurchlässig ist und mindestens ein Substrat eine oder zwei Elektroden aufweist, sowie einer zwischen den Substraten befindlichen Schicht eines erfindungsgemäßen FK-Mediums. Die FK-Anzeige ist vorzugsweise eine des PSA-Typs.

Ein weiterer Gegenstand der Erfindung ist die Verwendung von Verbindungen der Formel I als Additiv für FK-Medien zur Herbeiführung einer homöotropen Orientierung gegenüber einer das FK-Medium begrenzenden Oberfläche.

Ein weiterer Aspekt der vorliegenden Erfindung ist ein Verfahren zur Herstellung eines erfindungsgemäßen FK-Medium, das dadurch gekennzeichnet ist, dass man eine oder mehrere polymerisierbare Selbstorientierungsadditive (Verbindungen der Formel I) mit einer niedermolekularen, flüssigkristallinen Komponente mischt und optional eine oder mehrere polymerisierbare Verbindungen und optional eine weitere, nicht polymerisierbare, Selbstorientierungsadditiv (z.B. der Formel I') und/oder beliebige Additive zugibt.

Ein weiterer Gegenstand der Erfindung ist ein Verfahren zu Herstellung einer FK-Anzeige enthaltend eine FK-Zelle mit zwei Substraten und mindestens zwei Elektroden, wobei mindestens ein Substrat lichtdurchlässig ist und mindestens ein Substrat eine oder zwei Elektroden aufweist, umfassend die Verfahrensschritte:
- Füllen der Zelle mit einem erfindungsgemäßen FK-Medium, wobei sich eine homöotrope (vertikale) Ausrichtung des FK-Mediums gegenüber den Substratoberflächen einstellt, und
- Polymerisieren der polymerisierbaren Komponente(n), optional unter Anlegen einer Spannung an die Zelle oder unter der Wirkung eines elektrischen Feldes, in einem oder mehreren Verfahrensschritten.

Die erfindungsgemäße Verwendung der Selbstorientierungsadditive als Additive von FK-Medien ist nicht an bestimmte FK-Medien gebunden. Das FK-Medium bzw. die darin enthaltene nicht-polymerisierbare Komponente kann positive oder negative dielektrische Anisotropie aufweisen. Das FK-Medium ist bevorzugt nematisch, da die meisten auf dem VA-Prinzip basierten Anzeigen nematische FK-Medien umfassen.

Das polymerisierbare Selbstorientierungsadditiv wird im FK-Medium als Additiv eingebracht. Es bewirkt eine homöotrope Ausrichtung des Flüssigkristalls gegenüber den Substratoberflächen (wie z.B. eine Oberfläche aus Glas oder mit ITO oder mit Polyimid beschichtet). Es scheint in Anbetracht der Untersuchungen zu dieser Erfindung so, dass die polare Ankergruppe in Wechselwirkung mit der Substratoberfläche tritt. Dadurch richten sich die organischen Verbindungen auf der Substratoberfläche aus und induzieren eine homöotrope Orientierung des Flüssigkristalls. Die Ankergruppe sollte nach dieser Auffassung sterisch zugänglich sein, also nicht wie im Fall einer phenolischen (phenylsubstituierten) OH-Gruppe von ortho-ständigen tert-Butylgruppen umgeben sein, wie es beispielsweise in 2,6-Di-tert-butylphenol der Fall ist. D.h. Verbindungen mit einer Kopfgruppe der Formel 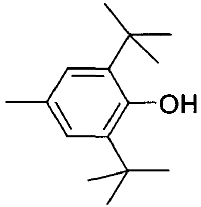 sind bevorzugt nicht in Formel I und den Unterformeln umfasst.

Die FK-Zelle der erfindungsgemäße FK-Anzeige weist bevorzugt kein Orientierungsschicht, insbesondere keine Polyimidschicht zur homöotropen Ausrichtung des FK-Mediums. Die polymerisierte Komponente des FK-Mediums wird in diesem Zusammenhang nicht als Orientierungsschicht angesehen. Für den Fall, dass eine FK-Zelle dennoch eine Orientierungsschicht oder eine vergleichbare Schicht aufweist, so ist erfindungsgemäß diese Schicht nicht für die homöotrope Orientierung ursächlich. Das Reiben von z. B. Polyimidschichten ist erfindungsgemäß nicht erforderlich um eine homöotrope Orientierung des FK-Mediums gegenüber der Substratoberfläche zu erreichen. Die erfindungsgemäße FK-Anzeige ist vorzugsweise eine VA-Anzeige mit einem FK-Medium mit negativer dielektrischer Anisotropie und auf gegenüberliegenden Substraten angeordneten Elektroden. Alternativ handelt es sich um eine VA-IPS-Anzeige mit einem FK-Medium mit positiver dielektrischer Anisotropie und mindestens auf einem Substrat angeordneten Interdigital-Elektroden handelt.

Das polymerisierbare Selbstorientierungsadditiv der Formel I wird vorzugsweise in einer Konzentration von weniger als 10 Gew.-%, besonders bevorzugt ≤ 5 Gew.-% und ganz besonders ≤ 3 Gew.-% eingesetzt. Es wird bevorzugt in einer Konzentration von mindestens 0,05 Gew.-% eingesetzt, bevorzugt mindestens 0,2 Gew.-%. Der Einsatz von 0,1 bis 2,5 Gew.-% des Selbstorientierungsadditivs führt in der Regel schon zu vollständig homöotroper Orientierung der FK-Schicht bei den üblichen Zelldicken (3 bis 4 µm) mit den üblichen Substratmaterialien und unter den üblichen Bedingungen der Herstellungsprozesse einer FK-Anzeige. Durch die polymerisierbare Natur werden auch höhere Konzentrationen an Selbstorientierungsadditiven möglich, ohne das FK-Medium nachhaltig zu beeinflussen, da die polymerisierbare Substanz durch die Polymerisation wieder gebunden wird.

Das erfindungsgemäße FK-Medium kann neben den polymerisierbaren Selbstorientierungsadditiven der Formel I auch weitere Selbstorientierungsadditive enthalten, die nicht polymerisierbar oder von anderer Struktur sind. In einer bevorzugten Ausführungsform enthält das FK-Medium daher ein oder mehrere Selbstorientierungsadditive ohne polymerisierbare Gruppe (konventionelle Selbstorientierungsadditive). Die Konzentration des polymerisierbaren und konventionellen Selbstorientierungsadditive zusammen beträgt bevorzugt die oben angegebenen Werte, also beispielsweise 0,1 bis 2,5 Gew.-%. Mit einer Kombination von Selbstorientierungsadditiven mit und ohne polymerisierbarer Gruppe erhält man den zusätzlichen Vorteil, dass die Selbstausrichtung des FK-Mediums stabiler gegen den Einfluss von Stress wird (erhöhte Prozessierbarkeit).

Die weiteren, nicht-polymerisierbaren Selbstorientierungsadditive können eine Struktur der Formel I' haben:

R¹-[A³-Z³]ₘ-[A²]ₖ-[Z²]ₙ-A¹-R^{a} I'

worin m, k, n und die Gruppe R^{a} wie für Formel I voranstehend definiert sind, und
- A¹, A², A³: jeweils unabhängig voneinander eine aromatische, heteroaromatische, alicyclische oder heterocyclische Gruppe, welche auch anellierte Ringe enthalten kann, und welche auch durch eine Gruppe L ein- oder mehrfach substituiert sein kann,
- Z²: jeweils unabhängig voneinander -O-, -S-, -CO-, -CO-O-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₁-, -CF₂CH₂-, -CH₂CF₂-, -(CF₂)ₙ₁-, -CH=CH-, -CF=CF-, -C≡C-, -CH=CH-COO-, -OCO-CH=CH-, -(CR⁰R⁰⁰)ₙ₁-,
- Z³: jeweils unabhängig voneinander eine Einfachbindung, -O-, -S-, -CO-, -CO-O-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₁-, -CF₂CH₂-, -CH₂CF₂-, -(CF₂)ₙ₁-, -CH=CH-, -CF=CF-, -C≡C-, -CH=CH-COO-, -OCO-CH=CH-, -(CR⁰R⁰⁰)ₙ₁-,
- n1: 1, 2, 3, oder 4,
- L: jeweils unabhängig voneinander H, F, Cl, Br, I, -CN, -NO₂, -NCO, -NCS, -OCN, -SCN, -C(=O)N(R⁰)₂, -C(=O)R⁰, optional substituiertes Silyl, optional substituiertes Aryl oder Cycloalkyl mit 3 bis 20 C-Atomen, oder geradkettiges oder verzweigtes Alkyl, Alkoxy, Alkylcarbonyl, Alkoxycarbonyl, Alkylcarbonyloxy oder Alkoxycarbonyloxy mit 1 bis 25 C-Atomen, worin auch ein oder mehrere H-Atome durch F oder Cl ersetzt sein können,
- R⁰: jeweils unabhängig voneinander Alkyl mit 1 bis 12 C-Atomen,
- R⁰⁰: jeweils unabhängig voneinander H oder Alkyl mit 1 bis 12 C-Atomen,
und
- R¹: unabhängig voneinander H, Halogen, geradkettiges, verzweigtes oder cyclisches Alkyl mit 1 bis 25 C-Atomen, worin auch eine oder mehrere nicht benachbarte CH₂-Gruppen durch -O-, -S-, -CO-, -CO-O-, -O-CO-, -O-CO-O-so ersetzt sein können, dass O- und/oder S-Atome nicht direkt miteinander verknüpft sind und worin auch ein oder mehrere H-Atome durch F oder Cl, ersetzt sein können,
bedeuten.

Die Formel I' umfasst im Gegensatz zur Formel I keine polymerisierbare Gruppe -Sp-P oder P.

Nachfolgend werden bevorzugte und beispielhafte Strukturen der Selbstorientierungsadditive offenbart, insbesondere der polymerisierbaren Selbstorientierungsadditive:
Die Ankergruppe R^{a} enthält definitionsgemäß eine, zwei oder drei Gruppen X¹, die als Bindeglied zu einer Oberfläche dienen sollen. Die Abstandsgruppen sollen eine flexible Bindung zwischen der mesogenen Gruppe mit Ringen und der Gruppe(n) X¹ herstellen. Die Struktur der Abstandsgruppen ist daher sehr variabel und im allgemeinsten Fall der Formel I nicht abschließend definiert. Der Fachmann wird erkennen, das dabei eine Vielzahl von möglichen Variationen von Ketten in Frage kommt.

Eine Ankergruppe der Formel 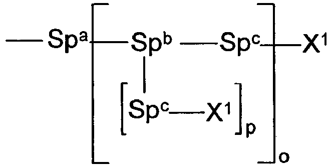 wie vor und nachstehend definiert, steht bevorzugt für eine Ankergruppe ausgewählt aus den folgenden Formeln: 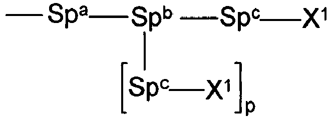 oder

-Sp^{a}-X¹,

worin jeweils unabhängig die Gruppen wie vor und nachstehend definiert sind, besonders bevorzugt für eine Gruppe der Formeln

-Sp^{a}-X¹

oder 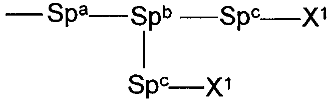 oder 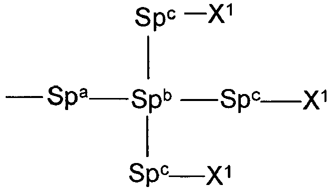 worin jeweils unabhängig die Gruppen wie vor- und nachstehend definiert sind.

Besonders bevorzugte Ankergruppen der Formel R^{a} sind ausgewählt aus den folgenenden Teilformeln, wobei die Gruppe R^{a} über die gestrichelte Bindung an die Gruppe A¹ der Formel I bzw. I' angebunden ist:

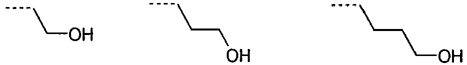

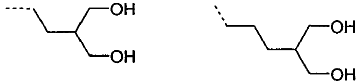

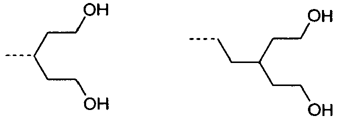

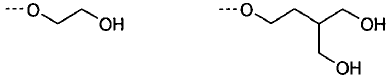

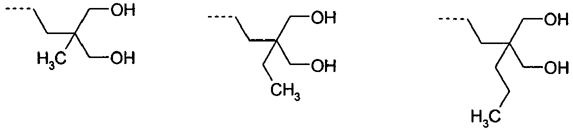

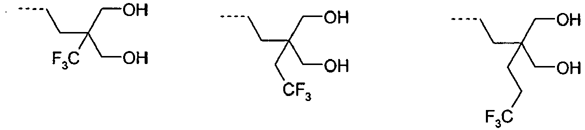

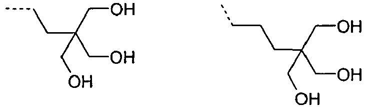

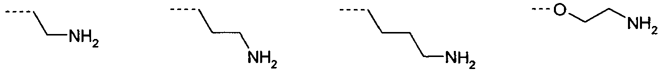

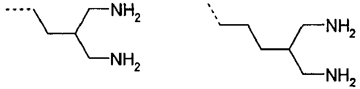

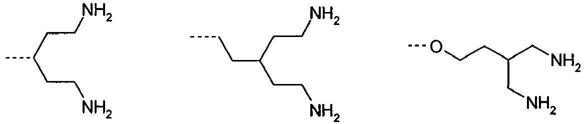

Die Ankergruppe R^{a} in den vorangehenden Formeln und Unterformeln umfasst besonders bevorzugt eine, zwei oder drei OH-Gruppen.

Der Begriff "Abstandsgruppe oder "Spacer", hierin in der Regel mit "Sp" (bzw. Sp^{a/c/d/1/2}) bezeichnet, ist dem Fachmann bekannt und in der Literatur beschrieben, z.B. in Pure Appl. Chem. 73(5), 888 (2001) und C. Tschierske, G. Pelzl, S. Diele, Angew. Chem. (2004), 116, 6340-6368. In der vorliegenden Offenbarung bezeichnet der Begriff "Abstandsgruppe" oder "Spacer" eine verbindende Gruppe, beispielsweise eine Alkylengruppe, welche eine mesogene Gruppe mit einer polymerisierbaren Gruppe verbindet. Während die mesogene Gruppe in der Regel Ringe umfasst, ist die Abstandsgruppe in der Regel ohne Ringsysteme, also kettenförmig, wobei die Kette auch verzweigt sein kann. Als Kette wird beispielsweise eine Alkylengruppe aufgefasst. Substitutionen an und in der Kette, z.B durch -O- oder -COO-, sind im Allgemeinen mit umfasst. Funktionell ist der Spacer (die Abstandsgruppe) eine Verbrückung zwischen angegliederten funktionalen Strukturteilen, die eine gewisse räumliche Flexibilität zueinander ermöglicht.

Die Gruppe Sp^{b} bedeutet bevorzugt
eine trivalente Gruppe der Formel ausgewählt aus CH, C(Me), C(CH₂CH₃) oder N,
oder die tetravalente Gruppe C (vierbindiges Kohlenstoffatom).

Die Gruppe Sp^{a} bedeutet bevorzugt eine Gruppe ausgewählt aus den Formeln -CH₂-, -CH₂CH₂-, -OCH₂CH₂-, -CH₂CH₂CH₂-, -OCH₂CH₂CH₂-, -CH₂CH₂CH₂CH₂-, -OCH₂CH₂CH₂CH₂-, -CH₂CH₂OCH₂CH₂-, -OCH₂CH₂OCH₂CH₂-,
Die Gruppe Sp^{c} oder Sp^{d} bedeutet bevorzugt ein Gruppe ausgewählt aus den Formeln -CH₂-, -CH₂CH₂-, -CH₂CH₂CH₂-, -CH₂CH₂CH₂CH₂-, -CH₂CH₂OCH₂CH₂-,
Eine oben definierte Ankergruppe der Formel 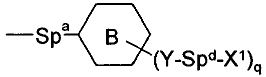 steht bevorzugt für 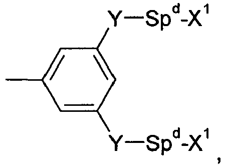 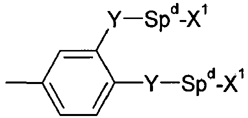 oder 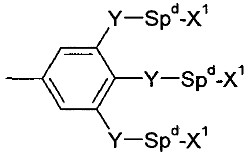 worin Y, Sp^{d}, und X¹ wie für Formel I definiert sind.

Die Ringgruppen A¹, A², A³ bedeuten jeweils unabhängig bevorzugt 1,4-Phenylen, Naphthalin-1,4-diyl oder Naphthalin-2,6-diyl, wobei in diesen Gruppen auch eine oder mehrere CH-Gruppen durch N ersetzt sein können, Cyclohexan-1,4-diyl, worin auch eine oder mehrere nicht-benachbarte CH₂-Gruppen durch O und/oder S ersetzt sein können, 3,3'-Bicyclobutyliden, 1,4-Cyclohexenylen, Bicydo[1.1.1]pentan-1,3-diyl, Bicyclo[2.2.2]octan-1,4-diyl, Spiro[3.3]heptan-2,6-diyl, Piperidin-1,4-diyl, Decahydronaphthalin-2,6-diyl, 1,2,3,4-Tetrahydronaphthalin-2,6-diyl, Indan-2,5-diyl oder Octahydro-4,7-methano-indan-2,5-diyl, Perhydro-cyclopenta[a]phenanthren-3,17-diyl (insbesondere Gonan-3,17-diyl), wobei alle diese Gruppen unsubstituiert oder durch eine Gruppe L oder -Sp-P ein- oder mehrfach substituiert sein können.

Bevorzugt ist mindestens eine der Gruppen A¹, A² und A³, soweit sie vorhanden sind, durch mindestens eine Gruppe -Sp-P substituiert.

Besonders bevorzugt bedeuten die Gruppen A¹, A², A³ jeweils unabhängig eine Gruppe ausgewählt aus
a) der Gruppe bestehend aus 1,4-Phenylen und 1,3-Phenylen, worin auch ein oder mehrere H-Atome durch L oder-Sp-P ersetzt sein können,
b) der Gruppe bestehend aus trans-1,4-Cyclohexylen, 1,4-Cyclohexenylen und 4,4'-Bicyclohexylen, worin auch eine oder mehrere nicht benachbarte CH₂-Gruppen durch -O- und/oder -S- ersetzt sein können und worin auch ein oder mehrere H-Atome durch F, L, -Sp-P ersetzt sein können. Die Gruppen A¹ und A² bedeuten insbesondere bevorzugt eine Gruppe gemäß der vorangehenden Untergruppe a). Ganz besonders bevorzugt bedeuten A¹ und A² unabhängig 1,4-Phenylen oder Cyclohexan-1,4-diyl, das durch eine Gruppe L oder -Sp-P ein- oder mehrfach substituiert sein kann.

Die Verbindungen der Formel I umfassen bevorzugt eine oder mehrere Verbindungen der Formel 11, 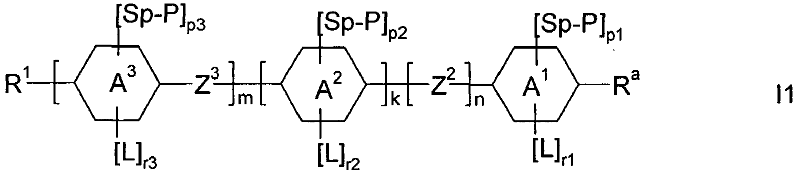 und mehr bevorzugt der Formeln IA, IB, IC oder ID: 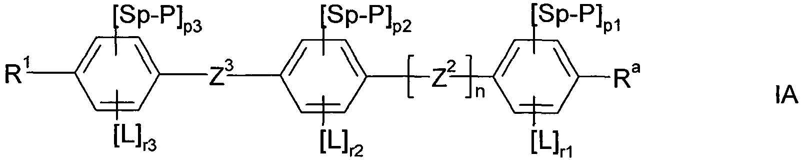 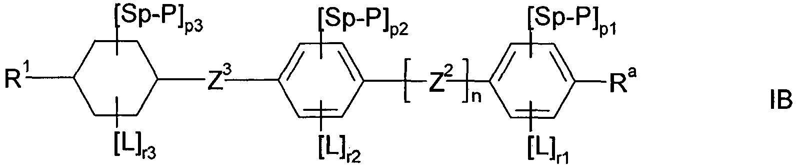 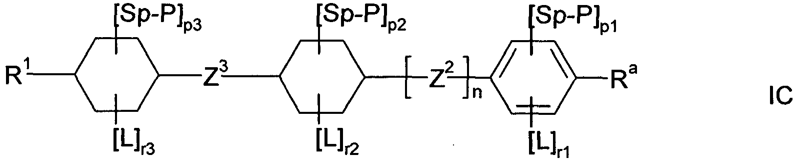 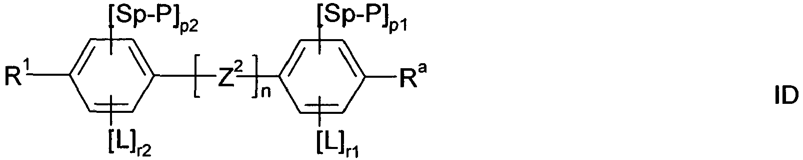 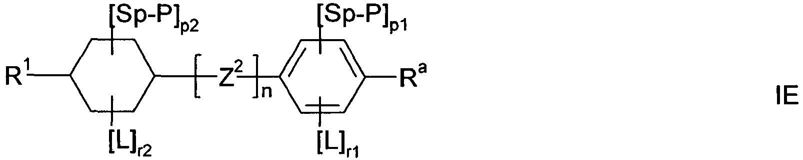
worin jeweils unabhängig R¹, R^{a}, A¹, A², A³, Z², Z³, L, Sp, P, m, k und n wie für Formel I definiert sind, und
p1, p2, p3 unabhängig 0, 1, 2 oder 3, und
r1, r2, r3 unabhängig 0, 1, 2 oder 3
bedeuten,
wobei die Verbindung der Formel I insgesamt (d. h. in Summe) mindestens eine polymerisierbare Gruppe P innerhalb der Gruppen A¹, A², A³, Z² und Z³, wie sie vorhanden sind, enthält.

Bevorzugt bedeutet in den Formeln I1 und IA, IB und IC p1 + p2 + p3 > 0, und für Formeln ID und IE entsprechend p1 + p2 > 0 d. h. mindestens eine polymerisierbare Gruppe P innerhalb der Gruppen A¹, A², A³ bzw. A¹, A² bzw. der entsprechenden Ringe in IA-IE ist vorhanden. Weiterhin ist es in einer besonderen Ausführungsform der Erfindung bevorzugt, dass in den Formeln I1 und IA, IB und IC r1 + r2 + r3 > 0, und für Formel ID und IE entsprechend r1 + r2 > 0 ist und L nicht H bedeutet, d.h. mindestens ein lateraler Substituent L innerhalb der Gruppen A¹, A², A³ bzw. A¹, A² ist vorhanden. Alternativ hierzu ist bevorzugt p1 + p2 + p3 > 1 bzw. p1 + p2 > 1, d.h. es sind zwei oder mehr laterale polymerisierbare Gruppen vorhanden. Die erfindungsgemäßen Verbindungen mit einer solchen Gruppe L bzw. zwei lateralen P-Gruppen haben unter anderem eine verbesserte Löslichkeit.

In den vor- und nachstehenden Formeln I und I' sowie in den bevorzugten Unterformeln bedeutet jeweils unabhängig der Zähler n bevorzugt 0.

Bevorzugte Verbindungen der Formel I werden durch die folgenden Formeln wiedergegeben und veranschaulicht: 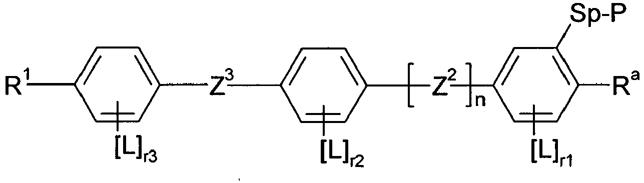 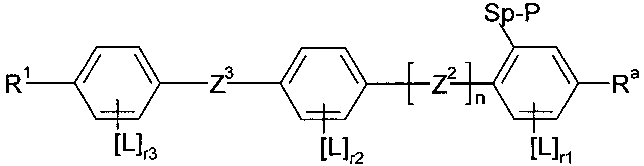 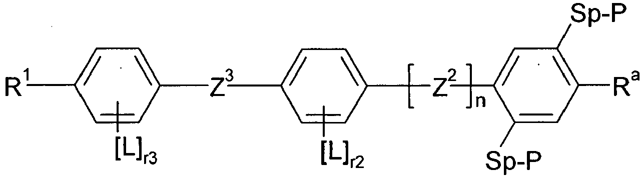 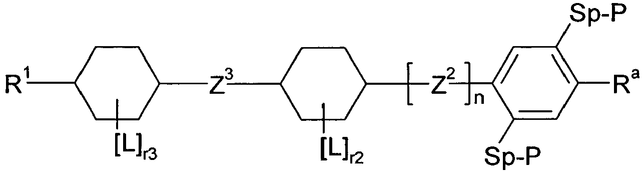 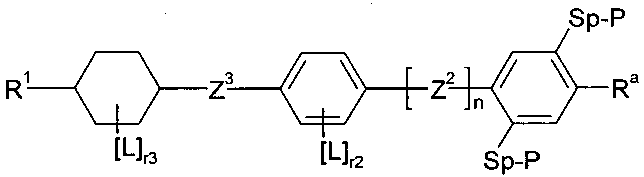 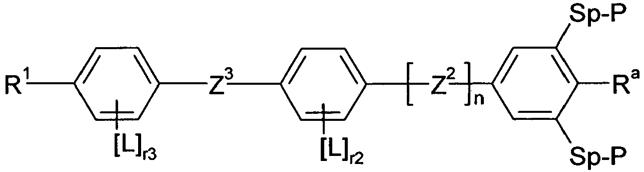 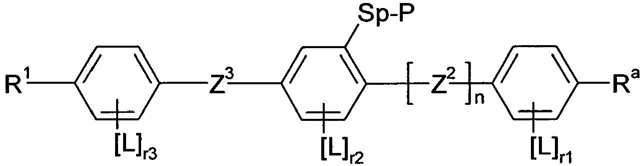 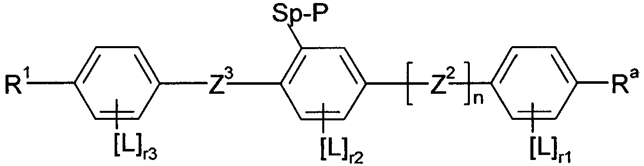 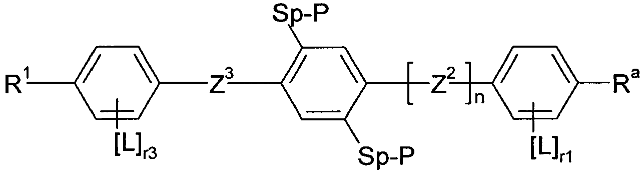 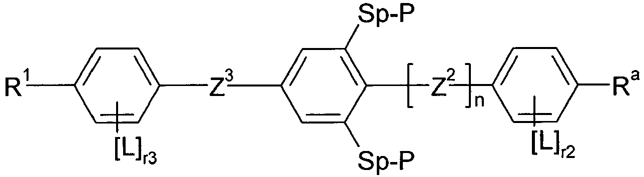 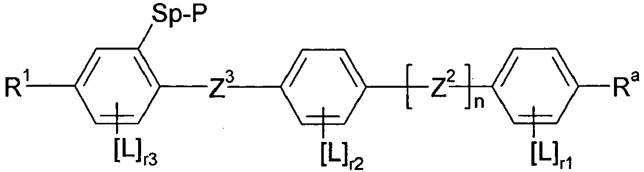 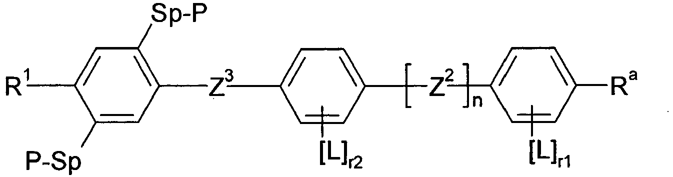 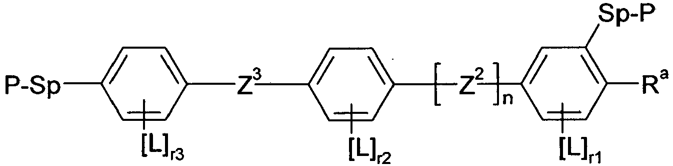 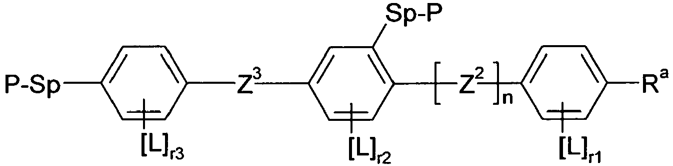 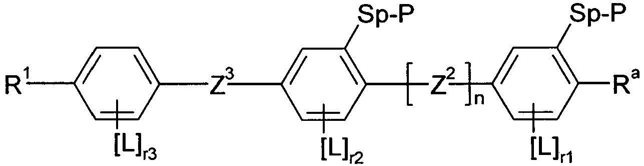 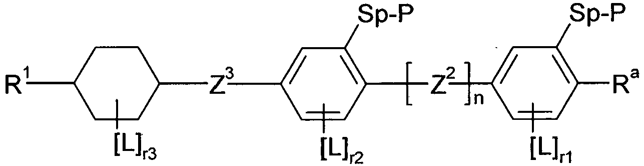 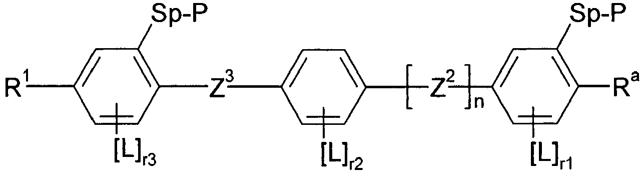 worin L, Sp, P, n und R^{a} unabhängig wie für Formel I definiert sind, r1, r2, r3 unabhängig 0, 1, 2 oder 3 bedeuten, und Z²/Z³ unabhängig wie vorangehend definiert sind, und wobei bevorzugt Z³ eine Einfachbindung oder -CH₂CH₂- und ganz besonders eine Einfachbindung bedeutet.

Ganz besonders bevorzugte Verbindungen der Formel I werden durch die folgenden Formeln veranschaulicht: 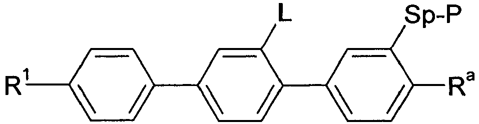 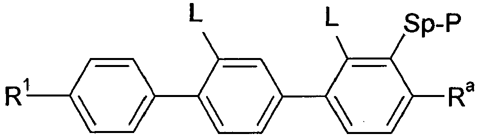 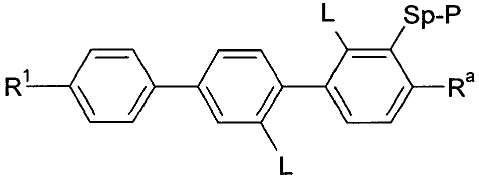 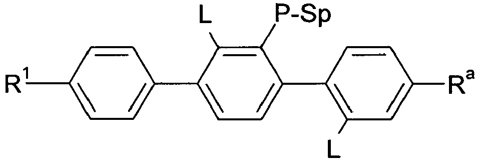 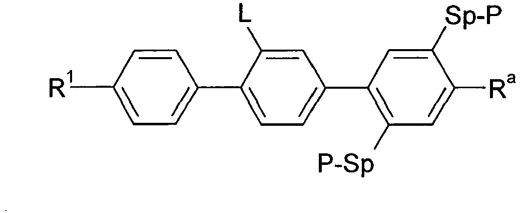 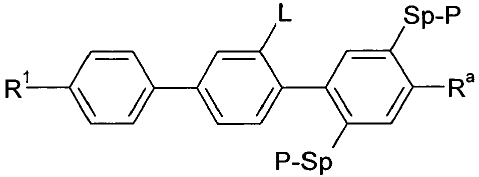 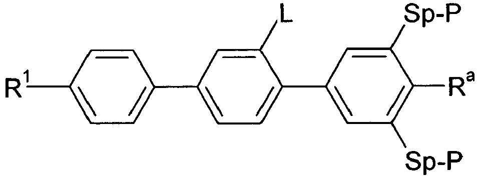 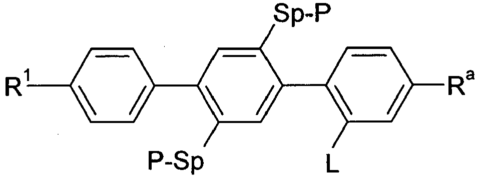 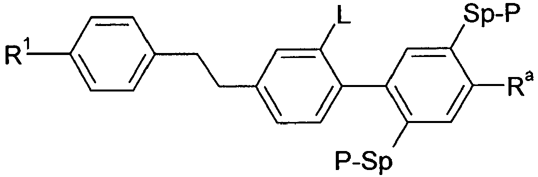 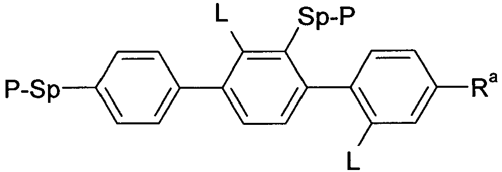 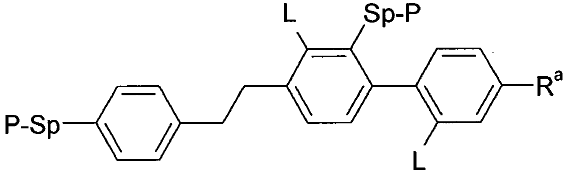 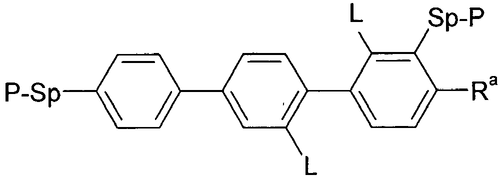 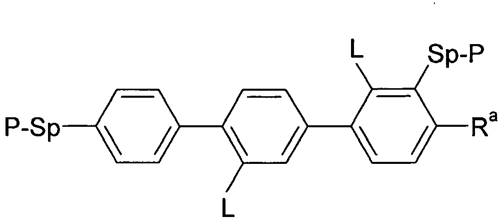 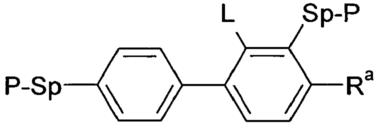 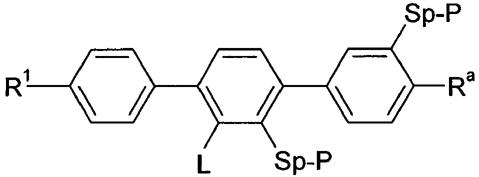 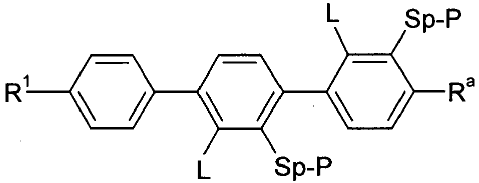 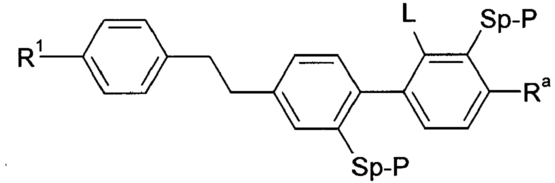 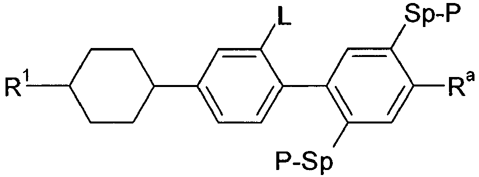 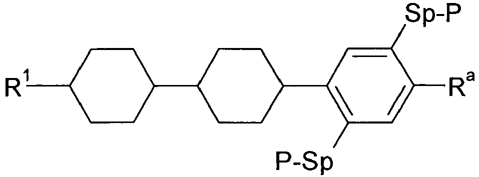 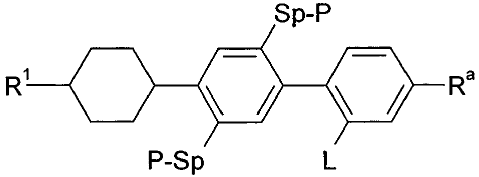 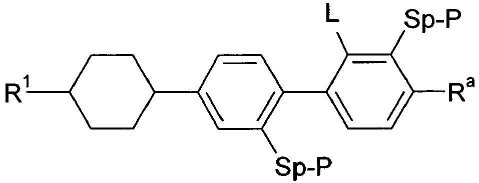 worin R¹, Sp, P, L und R^{a} unabhängig wie für Formel I definiert sind. L ist bevorzugt eine andere Gruppe als H.

Die Verbindungen der Formel 1' (konventionelle Selbstorientierungsadditive) umfassen bevorzugt Verbindungen der Formeln IA', IB', IC', ID' oder IE': 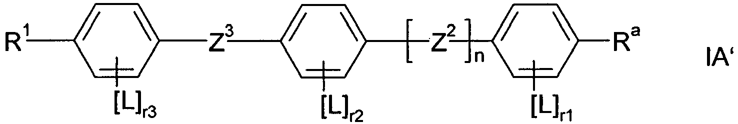 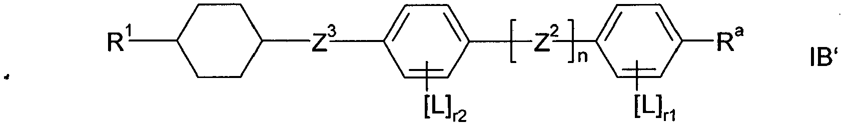 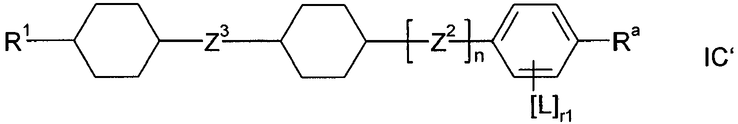 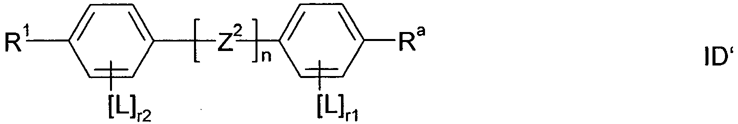 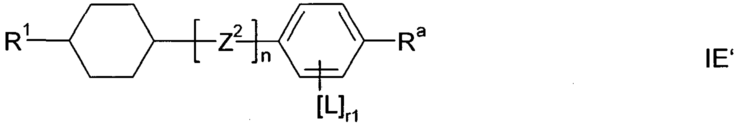
worin R¹, R^{a}, Z², Z³, L und n unabhängig wie für die vorangehenden Formeln IA bis IE definiert sind, und
r1, r2, r3 unabhängig 0,1, 2, 3 oder 4, bevorzugt 0, 1 oder 2, bedeuten.

Die Herstellung der konventionellen Selbstorientierungsadditive ist z. B. der Druckschrift WO 2012/038026 zu entnehmen.

Der Begriff "Aryl" bedeutet eine aromatische Kohlenstoffgruppe oder eine davon abgeleitete Gruppe. Der Begriff "Heteroaryl" bedeutet "Aryl" gemäß vorstehender Definition, enthaltend ein oder mehrere Heteroatome.

Aryl- und Heteroarylgruppen können einkernig oder mehrkernig sein, d.h. sie können einen Ring (wie z.B. Phenyl) oder zwei oder mehr anellierte Ringe aufweisen. Wenigstens einer der Ringe besitzt dabei eine aromatische Konjugation. Heteroarylgruppen enthalten ein oder mehrere Heteroatome, vorzugsweise ausgewählt aus O, N, S und Se.

Besonders bevorzugt sind ein-, zwei- oder dreikernige Arylgruppen mit 6 bis 25 C-Atomen sowie ein-, zwei- oder dreikernige Heteroarylgruppen mit 2 bis 25 C-Atomen, welche optional anellierte Ringe enthalten. Ferner bevorzugt sind 5-, 6- oder 7-gliedrige Aryl- und Heteroarylgruppen, worin auch eine oder mehrere CH-Gruppen durch N, S oder O so ersetzt sein können, dass O-Atome und/oder S-Atome nicht direkt miteinander verknüpft sind.

Bevorzugte Arylgruppen sind beispielsweise Phenyl, Naphthyl, Anthracen, Phenanthren, Pyren, Dihydropyren, Chrysen, Perylen, Tetracen, Pentacen, Benzpyren, Fluoren, Inden, Indenofluoren, Spirobifluoren, etc.

Bevorzugte Heteroarylgruppen sind beispielsweise 5-gliedrige Ringe wie Pyrrol, Pyrazol, Imidazol, 1,2,3-Triazol, 1,2,4-Triazol, Tetrazol, Furan, Thiophen, Selenophen, Oxazol, Isoxazol, 1,2-Thiazol, 1,3-Thiazol, 1,2,3-Oxadiazol, 1,2,4-Oxadiazol, 1,2,5-Oxadiazol, 1,3,4-Oxadiazol, 1,2,3-Thiadiazol, 1,2,4-Thiadiazol, 1,2,5-Thiadiazol, 1,3,4-Thiadiazol, 6-gliedrige Ringe wie Pyridin, Pyridazin, Pyrimidin, Pyrazin, 1,3,5-Triazin, 1,2,4-Triazin, 1,2,3-Triazin, 1,2,4,5-Tetrazin, 1,2,3,4-Tetrazin, 1,2,3,5-Tetrazin, oder kondensierte Gruppen wie Indol, Isoindol, Indolizin, Indazol, Benzimidazol, Benzotriazol, Purin, Naphthimidazol, Phenanthrimidazol, Pyridimidazol, Pyrazinimidazol, Chinoxalinimidazol, Benzoxazol, Naphthoxazol, Anthroxazol, Phenanthroxazol, Isoxazol, Benzothiazol, Benzofuran, Isobenzofuran, Dibenzofuran, Chinolin, Isochinolin, Pteridin, Benzo-5,6-chinolin, Benzo-6,7-chinolin, Benzo-7,8-chinolin, Benzoisochinolin, Acridin, Phenothiazin, Phenoxazin, Benzopyridazin, Benzopyrimidin, Chinoxalin, Phenazin, Naphthyridin, Azacarbazol, Benzocarbolin, Phenanthridin, Phenanthrolin, Thieno[2,3b]thiophen, Thieno[3,2b]thiophen, Dithienothiophen, Isobenzothiophen, Dibenzothiophen, Benzothiadiazothiophen, Cumarin oder Kombinationen dieser Gruppen.

Die (nicht-aromatischen) alicyclischen und heterocyclischen Gruppen umfassen sowohl gesättigte Ringe, d.h. solche die ausschließlich Einfachbindungen enthalten, als auch teilweise ungesättigte Ringe, d.h. solche die auch Mehrfachbindungen enthalten können. Heterocyclische Ringe enthalten ein oder mehrere Heteroatome, vorzugsweise ausgewählt aus Si, O, N, S und Se.

Die (nicht-aromatischen) alicyclischen und heterocyclischen Gruppen können einkernig sein, d.h. nur einen Ring enthalten (wie z.B. Cyclohexan), oder mehrkernig sein, d.h. mehrere Ringe enthalten (wie z.B. Decahydronaphthalin oder Bicyclooctan). Besonders bevorzugt sind gesättigte Gruppen. Ferner bevorzugt sind ein-, zwei- oder dreikernige Gruppen mit 3 bis 25 C-Atomen.

Ferner bevorzugt sind 5-, 6-, 7- oder 8-gliedrige carbocyclische Gruppen worin auch ein oder mehrere C-Atome durch Si ersetzt sein können und/oder eine oder mehrere CH-Gruppen durch N ersetzt sein können und/oder eine oder mehrere nicht-benachbarte CH₂-Gruppen durch -O- und/oder -S- ersetzt sein können.

Bevorzugte alicyclische und heterocyclische Gruppen sind beispielsweise 5-gliedrige Gruppen wie Cyclopentan, Tetrahydrofuran, Tetrahydrothiofuran, Pyrrolidin, 6-gliedrige Gruppen wie Cyclohexan, Cyclohexen, Tetrahydropyran, Tetrahydrothiopyran, 1,3-Dioxan, 1,3-Dithian, Piperidin, 7-gliedrige Gruppen wie Cycloheptan, und anellierte Gruppen wie Tetrahydronaphthalin, Decahydronaphthalin, Indan, Bicyclo[1.1.1]pentan-1,3-diyl, Bicyclo[2.2.2]octan-1,4-diyl, Spiro[3.3]heptan-2,6-diyl, Octahydro-4,7-methano-indan-2,5-diyl.

Im Zusammenhang mit der vorliegenden Erfindung bedeutet der Ausdruck "Alkyl" einen geradkettigen oder verzweigten, gesättigten oder ungesättigten, bevorzugt gesättigten, aliphatischen Kohlenwasserstoffrest mit 1 bis 15 (d.h. 1, 2, 3, 4, 5, 6, 7, 8, 9, 10, 11, 12, 13, 14 oder 15) Kohlenstoffatomen.

Der Begriff "cyclisches Alkyl" umfasst Alkylgruppen, die wenigstens einen carbocyclischen Teil aufweisen, also beispielsweise auch Cycloalkylalkyl, Alkylcycloalkyl und Alkylcycloalkylalkyl. Die carbocyclischen Gruppen umfassen z. B. Cyclopropyl, Cyclobutyl, Cyclopentyl, Cyclohexyl, Cycloheptyl, Cyclooctyl, usw.

"Halogen" steht im Zusammenhang der vorliegenden Erfindung für Fluor, Chlor, Brom beziehungsweise Iod, bevorzugt für Fluor oder Chlor.

Die oben stehenden bevorzugten Verbindungen der Formel I lassen sich prinzipiell nach folgenden exemplarischen Syntheserouten herstellen (Schema 1 bis 4): 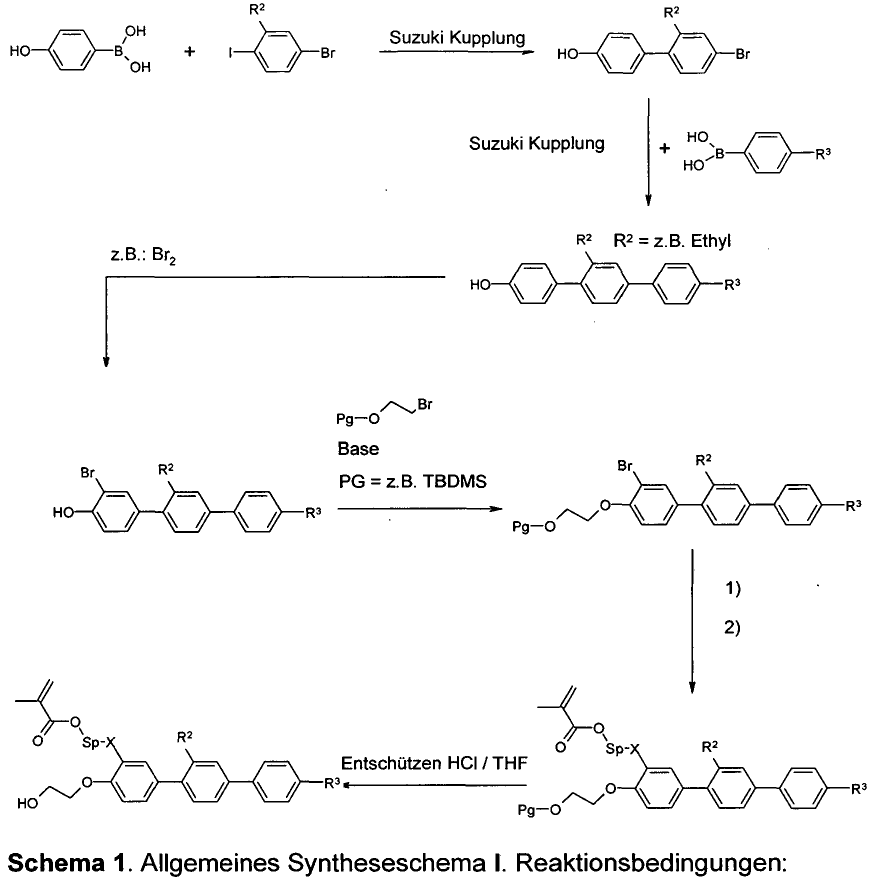
1) Funktionalisierung z.B. via:
   - n-BuLi und BF₃*OEt₂ zur Ringöffnung mit 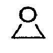 oder 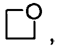
   - via Sonogashira Reaktion mit 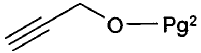 und anschließender Hydrierung, oder
   - via Boronsäureoxidation zum Phenol mit anschließender Veretherung mit 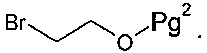
2) Veresterung mit Methacrylsäure.

Definitionen: X = CH₂, O oder Einfachbindung, Pg² = z.B. Benzyl, Sp = Spacer mit z.B.: 0 - 3 C-Atomen.

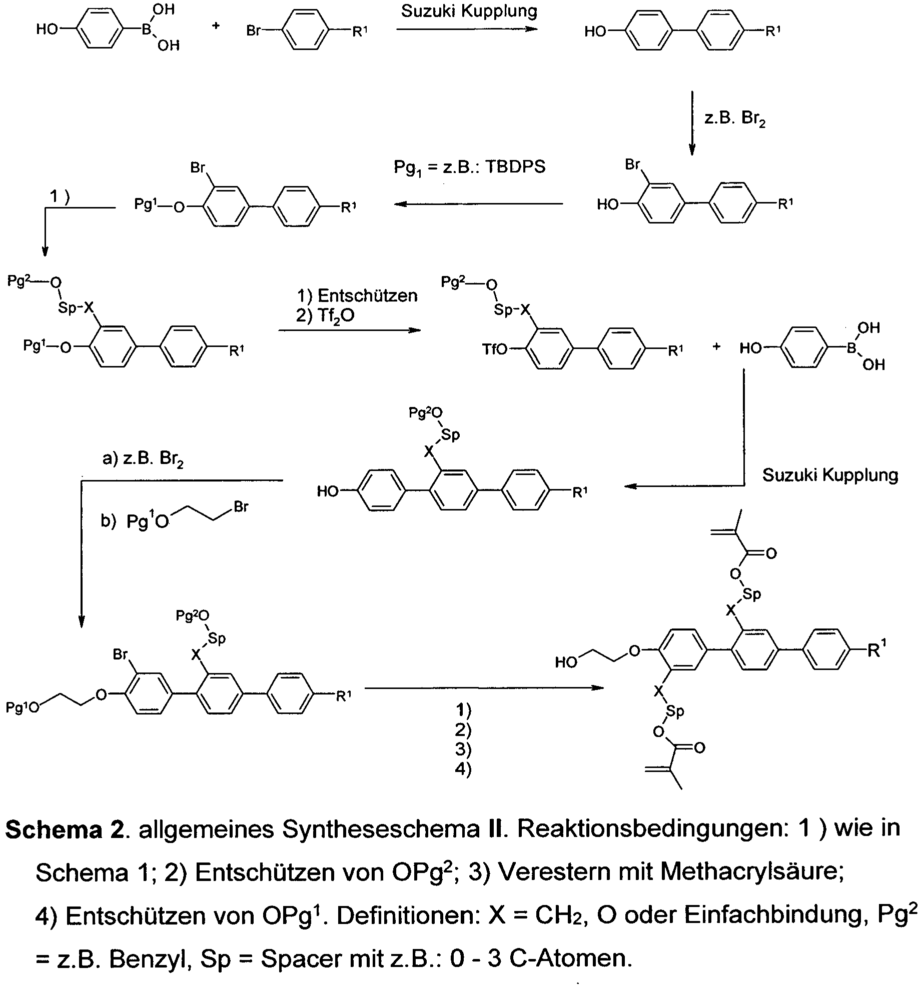

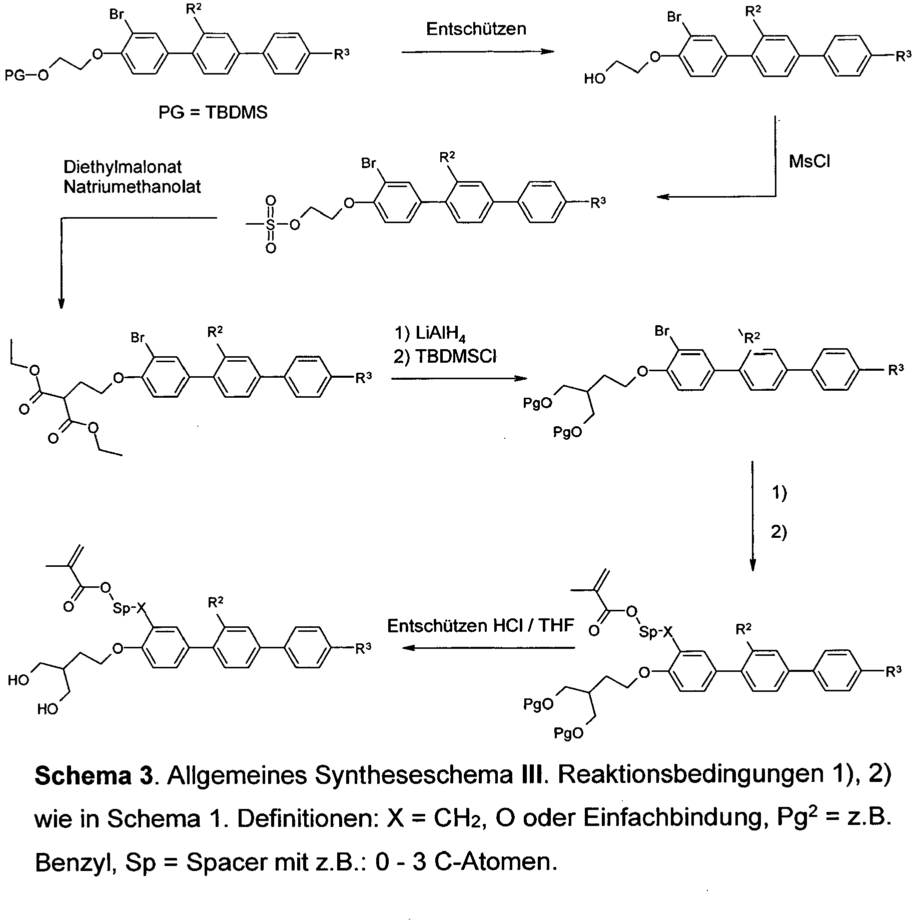

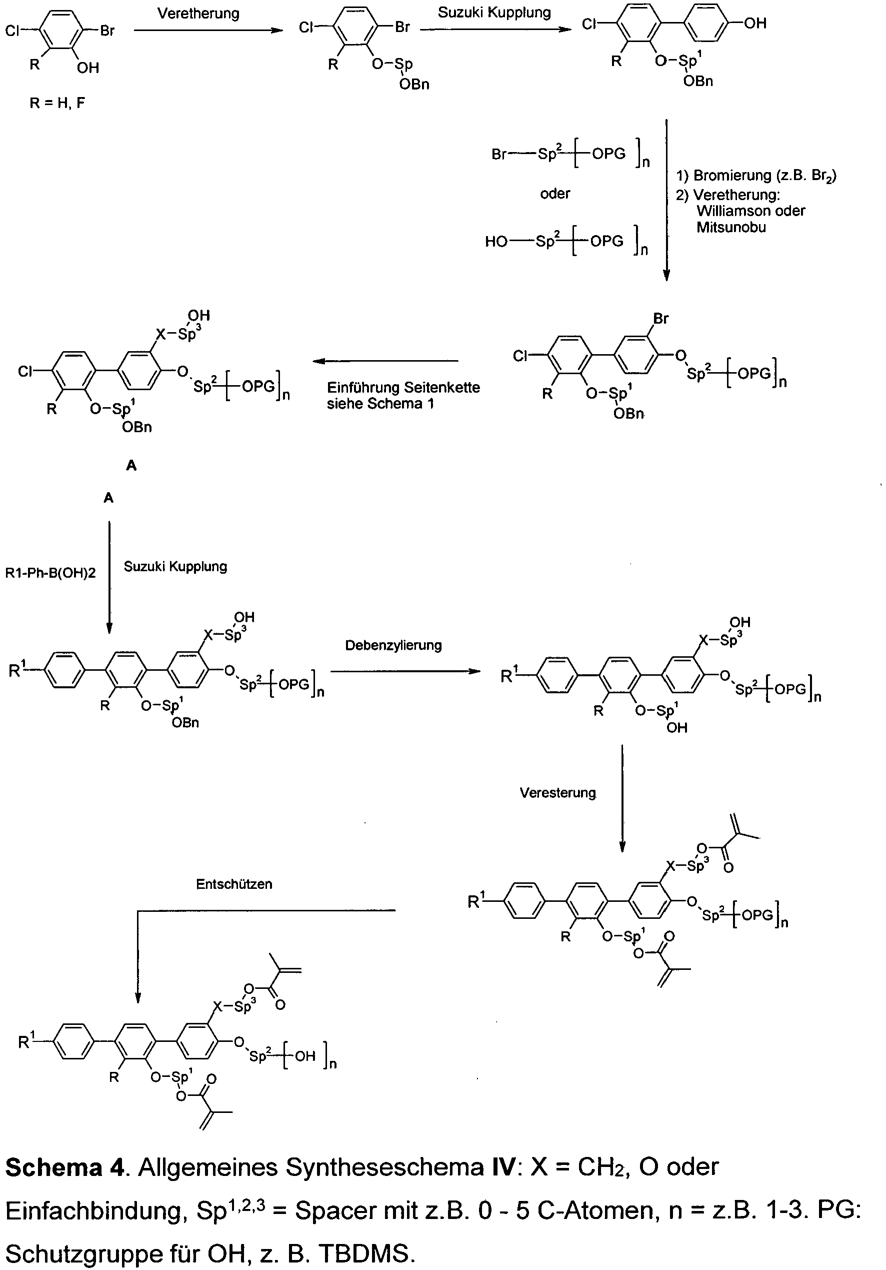

Die polymerisierbare Komponente des erfindungsgemäßen FK-Mediums umfasst vorzugsweise neben den Verbindungen der Formel I weitere polymerisierbare oder (teil-)polymerisierte Verbindungen. Dabei handelt es sich vorzugsweise um herkömmliche polymerisierbare Verbindungen ohne Ankergruppe, vorzugsweise mesogene Verbindungen, insbesondere solche die geeignet für die PSA-Technik sind. Dafür bevorzugte polymerisierbaren Verbindungen sind die unten für Formel M und deren Unterformeln angegeben Strukturen. Das daraus gebildete Polymer kann die Ausrichtung des FK-Mediums stabilisieren, optional eine Passivierungsschicht ausbilden, und optional einen Pretilt erzeugen.

Die erfindungsgemäßen FK-Medien enthalten daher vorzugweise >0 bis <5 Gew.-%, besonders bevorzugt 0,05 bis 1 Gew.-% und ganz besonders bevorzugt 0,2 bis 1 Gew.-% an polymerisierbaren Verbindungen ohne Ankergruppe R^{a}, insbesondere Verbindungen der Formel M wie unten definiert und der darunter fallenden bevorzugten Formeln.

Die Polymerisation der polymerisierbaren Komponenten erfolgt zusammen oder in Teilschritten unter unterschiedlichen Polymerisationsbedingungen. Bevorzugt erfolgt die Polymerisation unter Einwirkung von UV-Licht. In der Regel wird die Polymerisation mit Hilfe eines Polymerisationsinitiators und UV-Licht eingeleitet. Bei den bevorzugten Acrylaten wird auf diese Weise ein praktisch vollständige Polymerisation erreicht. Bei der Polymerisation kann optional eine Spannung an die Elektroden der Zelle angelegt werden oder ein anderes elektrisches Feld angewendet werden, um die Ausrichtung des FK-Mediums zusätzlich zu beeinflussen.

Besonders bevorzugt sind erfindungsgemäße FK-Medien die neben den Verbindungen der Formel I weitere polymerisierbare oder (teil-) polymerisierte Verbindungen (ohne Ankergruppe) und weitere Selbstorientierungsadditive, die nicht polymerisierbar sind, enthalten. Diese weiteren nichtpolymerisierbaren Selbstorientierungsadditive sind vorzugsweise solche wie oben beschrieben, vgl. die Formeln I', IA', IB', IC', ID', IE'.

Die optional enthaltenen weiteren Monomere der polymerisierbaren Komponente des FK-Mediums werden vorzugsweise durch die folgende Formel M beschrieben:

P¹-Sp¹-A²-(Z¹-A¹)ₙ-Sp²-P² M

worin die einzelnen Reste folgende Bedeutung besitzen:
- P¹, P²: jeweils unabhängig voneinander eine polymerisierbare Gruppe,
- Sp¹, Sp²: bei jedem Auftreten gleich oder verschieden eine Abstandsgruppe oder eine Einfachbindung,
- A¹, A²,: jeweils unabhängig voneinander einen Rest ausgewählt aus folgenden Gruppen
a) der Gruppe bestehend aus trans-1,4-Cyclohexylen, 1,4-Cyclohexenylen und 4,4'-Bicyclohexylen, worin auch eine oder mehrere nicht benachbarte CH₂-Gruppen durch -O- und/oder -S- ersetzt sein können und worin auch ein oder mehrere H-Atome durch eine Gruppe L ersetzt sein können, oder ein Rest der Formel 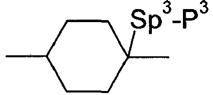
b) der Gruppe bestehend aus 1,4-Phenylen und 1,3-Phenylen, worin auch eine oder zwei CH-Gruppen durch N ersetzt sein können und worin auch ein oder mehrere H-Atome durch eine Gruppe L oder -Sp³-P ersetzt sein können,
c) der Gruppe bestehend aus Tetrahydropyran-2,5-diyl, 1,3-Dioxan-2,5-diyl, Tetrahydrofuran-2,5-diyl, Cyclobut-1,3-diyl, Piperidin-1,4-diyl, Thiophen-2,5-diyl und Selenophen-2,5-diyl, welche auch ein oder mehrfach durch eine Gruppe L substituiert sein können,
d) der Gruppe bestehend aus gesättigten, teilweise ungesättigten oder vollständig ungesättigten, und optional substituierten, polycyclischen Resten mit 5 bis 20 cyclischen C-Atomen, von denen auch eines oder mehrere durch Heteroatome ersetzt sein können, vorzugsweise ausgewählt aus der Gruppe bestehend aus Bicyclo[1.1.1]pentan-1,3-diyl, Bicyclo[2.2.2]octan-1,4-diyl, Spiro[3.3]heptan-2,6-diyl, 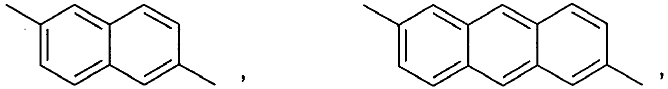 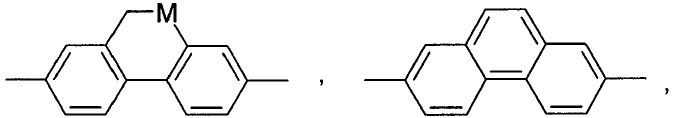 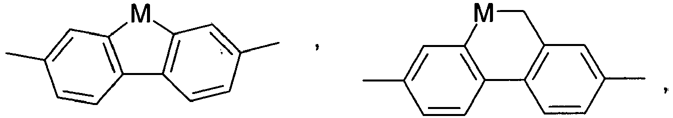 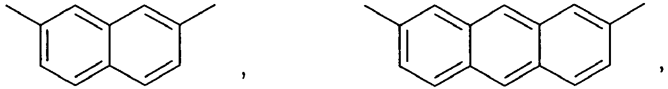 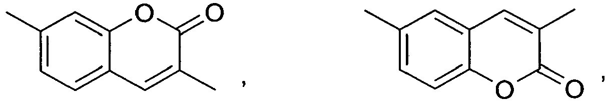 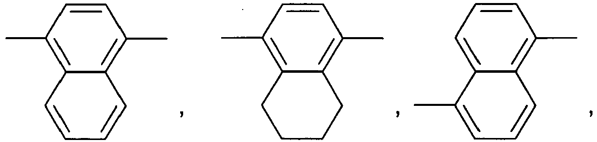 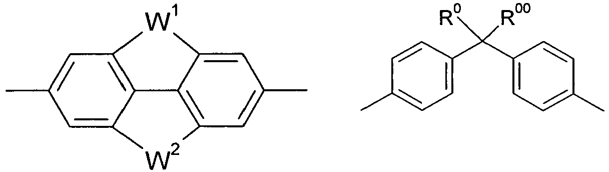 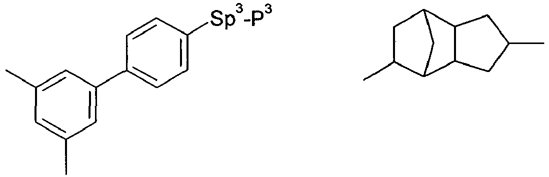 wobei in diesen Resten auch ein oder mehrere H- Atome durch eine Gruppe L oder -Sp³-P ersetzt sein können, und/oder eine oder mehrere Doppelbindungen durch Einfachbindungen ersetzt sein können, und/oder ein oder mehrere CH-Gruppen durch N ersetzt sein können,
- P³: eine polymerisierbare Gruppe,
- Sp³: eine Abstandsgruppe,
- n: 0, 1, 2 oder 3, bevorzugt 1 oder 2,
- Z¹: jeweils unabhängig voneinander -CO-O-, -O-CO-, -CH₂O-, -OCH₂-, -CF₂O-, -OCF₂-, oder -(CH₂)ₙ-, wobei n 2, 3 oder 4 ist, -O-, -CO-, -C(R^{c}R^{d})-, -CH₂CF₂-, -CF₂CF₂-, oder eine Einfachbindung,
- L: bei jedem Auftreten gleich oder verschieden F, Cl, CN, SCN, SF₅ oder geradkettiges oder verzweigtes, jeweils optional fluoriertes, Alkyl, Alkoxy, Alkylcarbonyl, Alkoxycarbonyl, Alkylcarbonyloxy oder Alkoxycarbonyloxy mit 1 bis 12 C-Atomen,
- R⁰, R⁰⁰: jeweils unabhängig voneinander H, F oder geradkettiges oder verzweigtes Alkyl mit 1 bis 12 C-Atomen, worin auch ein oder mehrere H-Atome durch F ersetzt sein können,
- M: -O-, -S-, -CH₂-, -CHY¹- oder -CY¹Y²-, und
- Y¹, und Y²: jeweils unabhängig voneinander eine der oben für R⁰ angegebenen Bedeutungen, Cl oder CN, und vorzugsweise H, F, Cl, CN, OCF₃ oder CF₃,
- W¹, W²: jeweils unabhängig voneinander -CH₂CH₂-, -CH=CH-, -CH₂-O-, -O-CH₂-, -C(R^{c}R^{d})- oder -O- bedeuten,
- R^{c} und R^{d}: jeweils unabhängig voneinander H oder Alkyl mit 1 bis 6 C-Atomen, vorzugsweise H, Methyl oder Ethyl, bedeuten,
wobei eine oder mehrere der Gruppen P¹-Sp¹⁻, -Sp²-P² und -Sp³-P³ einen Rest R^{aa} bedeuten können, mit der Maßgabe, dass mindestens eine der vorhandenen Gruppen P¹-Sp¹-, -Sp²-P² und -Sp³-P³ nicht R^{aa} bedeutet,
- R^{aa}: H, F, Cl, CN oder geradkettiges oder verzweigtes Alkyl mit 1 bis 25 C-Atomen, worin auch eine oder mehrere nicht benachbarte CH₂-Gruppen jeweils unabhängig voneinander durch C(R⁰)=C(R⁰⁰)-, -C≡C-, -O-, -S-, -CO-, -CO-O-, -O-CO-, -O-CO-O- so ersetzt sein können, dass O- und/oder S-Atome nicht direkt miteinander verknüpft sind, und worin auch ein oder mehrere H-Atome durch F, Cl, CN oder P¹⁻Sp¹⁻ ersetzt sein können, besonders bevorzugt geradkettiges oder verzweigtes, optional ein- oder mehrfach fluoriertes, Alkyl, Alkoxy, Alkenyl, Alkinyl, Alkylcarbonyl, Alkoxycarbonyl, oder Alkylcarbonyloxy mit 1 bis 12 C-Atomen (wobei die Alkenyl- und Alkinylreste mindestens zwei und die verzweigten Reste mindestens drei C-Atome aufweisen), wobei die Gruppen -OH, -NH₂, -SH, -NHR, -C(O)OH und -CHO in R^{aa} nicht enthalten sind.

Die polymerisierbare Gruppe P, P¹ P² bzw. P³ in den vorangehenden und nachfolgenden Formeln ist eine Gruppe, die für eine Polymerisationsreaktion, wie beispielsweise die radikalische oder ionische Kettenpolymerisation, Polyaddition oder Polykondensation, oder für eine polymeranaloge Umsetzung, beispielsweise die Addition oder Kondensation an eine Polymerhauptkette, geeignet ist. Besonders bevorzugt sind Gruppen für die Kettenpolymerisation, insbesondere solche enthaltend eine C=C-Doppelbindung oder -C≡C-Dreifachbindung, sowie zur Polymerisation unter Ringöffnung geeignete Gruppen wie beispielsweise Oxetan- oder Epoxygruppen Bevorzugte Gruppen P/P¹/P²/P³ sind ausgewählt aus der Gruppe bestehend aus CH₂=CW¹-CO-O-, CH₂=CW¹-CO-, 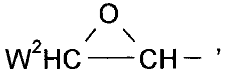 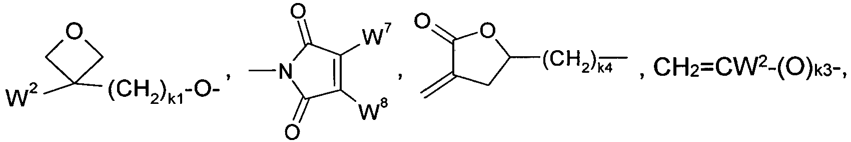 CW¹=CH-CO-(O)ₖ₃-, CH₃-CH=CH-O-, (CH₂=CH)₂CH-OCO-, (CH₂=CH-CH₂)₂CH-OCO-, (CH₂=CH)₂CH-O-, (CH₂=CH-CH₂)₂N-, (CH₂=CH-CH₂)₂N-CO-, CH₂=CH-(COO)ₖ₁-Phe-(O)ₖ₂-, CH₂=CH-(CO)ₖ₁-Phe-(O)ₖ₂-, Phe-CH=CH-, HOOC- und W⁴W⁵W⁶Si-, worin W¹ H, F, Cl, CN, CF₃, Phenyl oder Alkyl mit 1 bis 5 C-Atomen, insbesondere H, F, Cl oder CH₃ bedeutet, W² und W³ jeweils unabhängig voneinander H oder Alkyl mit 1 bis 5 C-Atomen, insbesondere H, Methyl, Ethyl oder n-Propyl bedeuten, W⁴, W⁵ und W⁶ jeweils unabhängig voneinander Cl, Oxaalkyl oder Oxacarbonylalkyl mit 1 bis 5 C-Atomen bedeuten, W⁷ und W⁸ jeweils unabhängig voneinander H, Cl oder Alkyl mit 1 bis 5 C-Atomen bedeuten, Phe 1,4-Phenylen bedeutet, welches optional mit einem oder mehreren, von P-Sp- verschiedenen Resten L wie oben definiert substituiert ist, k₁, k₂ und k₃ jeweils unabhängig voneinander 0 oder 1 bedeuten, k₃ vorzugsweise 1 bedeutet, und k₄ eine ganze Zahl von 1 bis 10 bedeutet.

Besonders bevorzugte Gruppen P/P¹/P²/P³ sind ausgewählt aus der Gruppe bestehend aus CH₂=CW¹-CO-O-, CH₂=CW¹-CO-, 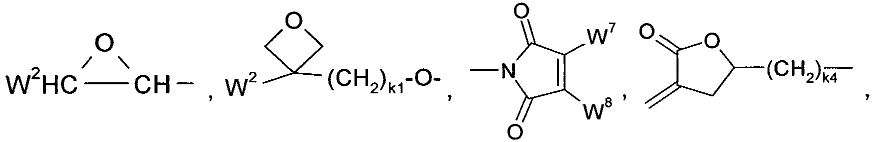 CH₂=CW²-O-, CW¹=CH-CO-(O)ₖ₃-, (CH₂=CH)₂CH-OCO-, (CH₂=CH-CH₂)₂CH-OCO-, (CH₂=CH)₂CH-O-, (CH₂=CH-CH₂)₂N-, (CH₂=CH-CH₂)₂N-CO-, CH₂=CW¹-CO-NH-, CH₂=CH-(COO)ₖ₁-Phe-(O)ₖ₂-, CH₂=CH-(CO)ₖ₁-Phe-(O)ₖ₂-, Phe-CH=CH- und W⁴W⁵W⁶Si-, worin W¹ H, F, Cl, CN, CF₃, Phenyl oder Alkyl mit 1 bis 5 C-Atomen, insbesondere H, F, Cl oder CH₃ bedeutet, W² und W³ jeweils unabhängig voneinander H oder Alkyl mit 1 bis 5 C-Atomen, insbesondere H, Methyl, Ethyl oder n-Propyl bedeuten, W⁴, W⁵ und W⁶ jeweils unabhängig voneinander Cl, Oxaalkyl oder Oxacarbonylalkyl mit 1 bis 5 C-Atomen bedeuten, W⁷ und W⁸ jeweils unabhängig voneinander H, Cl oder Alkyl mit 1 bis 5 C-Atomen bedeuten, Phe 1,4-Phenylen bedeutet, k₁, k₂ und k₃ jeweils unabhängig voneinander 0 oder 1 bedeuten, k₃ vorzugsweise 1 bedeutet, und k₄ eine ganze Zahl von 1 bis 10 bedeutet.

Ganz besonders bevorzugte Gruppen P/P¹/P²/P³ sind ausgewählt aus der Gruppe bestehend aus CH₂=CW¹-CO-O-, insbesondere CH₂=CH-CO-O-, CH₂=C(CH₃)-CO-O- und CH₂=CF-CO-O-, ferner CH₂=CH-O-, (CH₂=CH)₂CH-O-CO-, (CH₂=CH)₂CH-O-, 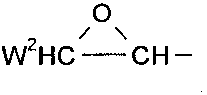 und 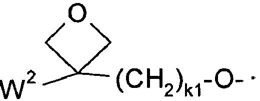 Ganz besonders bevorzugte Gruppen P/P¹/P²/P³ sind daher ausgewählt aus der Gruppe bestehend aus Acrylat-, Methacrylat-, Fluoracrylat-, ferner Vinyloxy-, Chloracrylat-, Oxetan- und Epoxygruppen, und unter diesen wiederum bevorzugt eine Acrylat- oder Methacrylatgruppe.

Bevorzugte Abstandsgruppen Sp, Sp¹ bzw. Sp² sind eine Einfachbindung oder ausgewählt aus der Formel Sp"-X", so dass der Rest P^{1/2}-Sp^{1/2}- der Formel P^{1/2}-Sp"-X"- entspricht, wobei
- Sp": Alkylen mit 1 bis 20, vorzugsweise 1 bis 12 C-Atomen bedeutet, welches optional durch F, Cl, Br, I oder CN ein- oder mehrfach substituiert ist, und worin auch eine oder mehrere nicht benachbarte CH₂-Gruppen jeweils unabhängig voneinander so durch -O-, -S-, -Si(R⁰⁰R⁰⁰⁰)-, -CO-, -CO-O-, -O-CO-, -O-CO-O-, -S-CO-, -CO-S-, -N(R⁰⁰)-CO-O-, -O-CO-N(R⁰⁰)-, -N(R⁰⁰)-CO-N(R⁰⁰)-, -CH=CH- oder -C≡C- ersetzt sein können, dass O- und/oder S-Atome nicht direkt miteinander verknüpft sind,
- X": -O-, -S-, -CO-, -CO-O-, -O-CO-, -O-CO-O-, -CO-N(R⁰⁰)-, -N(R⁰⁰)-CO-, -N(R⁰⁰)-CO-N(R⁰⁰)-, -OCH₂-, -CH₂O-, -SCH₂-, -CH₂S-, -CF₂O-, -OCF₂-, -CF₂S-, -SCF₂-, -CF₂CH₂-, -CH₂CF₂-, -CF₂CF₂-, -CH=N-, -N=CH-, -N=N-, -CH=CR⁰-, -CY²=CY³-, -C≡C-, -CH=CH-CO-O-, -O-CO-CH=CH- oder eine Einfachbindung bedeutet,
- R⁰⁰: jeweils unabhängig Alkyl mit 1 bis 12 C-Atomen bedeutet,
- R⁰⁰⁰: jeweils unabhängig H oder Alkyl mit 1 bis 12 C-Atomen bedeuten, und
- Y² und Y³: jeweils unabhängig voneinander H, F, Cl oder CN bedeuten.

X" ist vorzugsweise -O-, -S -CO-, -COO-, -OCO-, -O-COO-, oder eine Einfachbindung.

Typische Abstandsgruppen Sp" sind beispielsweise eine Einfachbindung, -(CH₂)ₚ₁-, -(CH₂CH₂O)_{q1}-CH₂CH₂-, -CH₂CH₂-S-CH₂CH₂-, oder -(SiR⁰⁰R⁰⁰⁰-O)ₚ₁-, worin p1 eine ganze Zahl von 1 bis 12 ist, q1 eine ganze Zahl von 1 bis 3 ist, und R⁰⁰ und R⁰⁰⁰ die oben angegebenen Bedeutungen besitzen.

Besonders bevorzugte Gruppen -Sp"-X"- sind -(CH₂)ₚ₁-, -(CH₂)ₚ₁-O-, -(CH₂)ₚ₁-O-CO-, -(CH₂)ₚ₁-O-CO-O-, worin p1 und q1 die oben angegebene Bedeutung haben.

Besonders bevorzugte Gruppen Sp" sind beispielsweise jeweils geradkettiges Ethylen, Propylen, Butylen, Pentylen, Hexylen, Heptylen, Octylen, Nonylen, Decylen, Undecylen, Dodecylen, Octadecylen, Ethylenoxyethylen, Methylenoxybutylen, Ethylenthioethylen, Ethylen-N-methyl-iminoethylen, 1-Methylalkylen, Ethenylen, Propenylen und Butenylen.

Die Substanzen der Formel M enthalten keine -OH, -NH₂, -SH, -NHR¹¹, -C(O)OH und -CHO Reste.

Geeignete und bevorzugte (Co-)Monomere für die Verwendung in erfindungsgemäßen Anzeigen sind beispielsweise ausgewählt aus den folgenden Formeln: 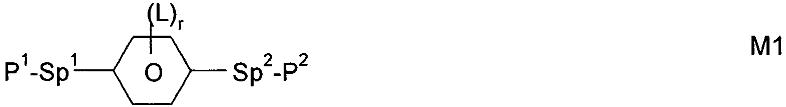 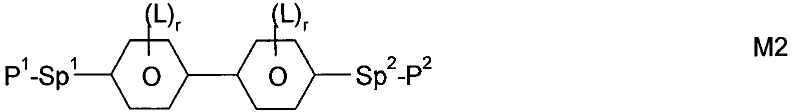 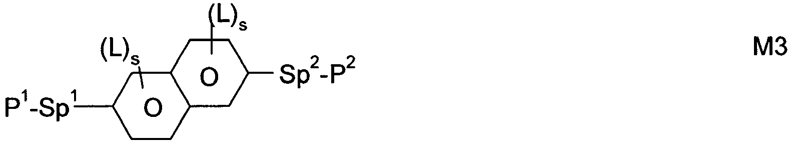 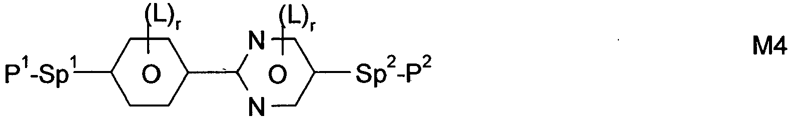 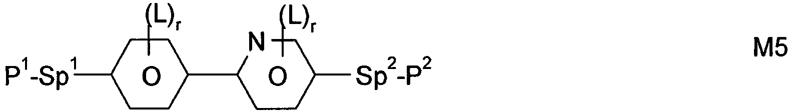 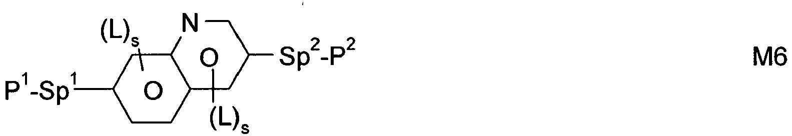 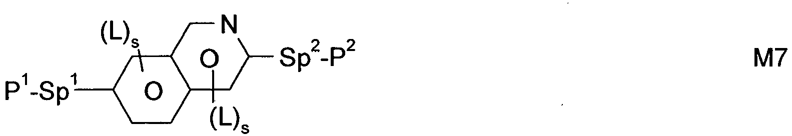 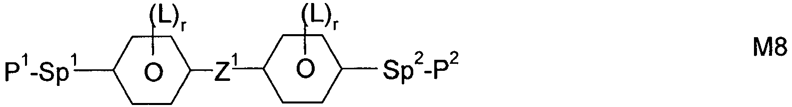 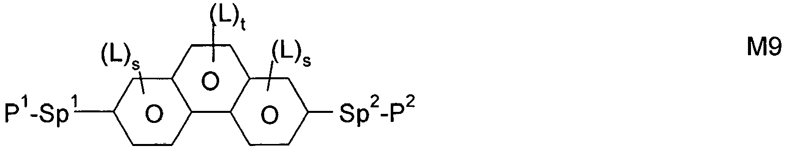 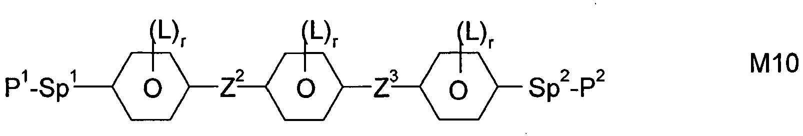 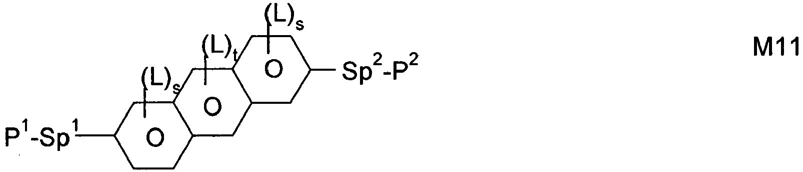 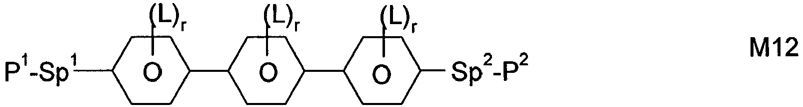 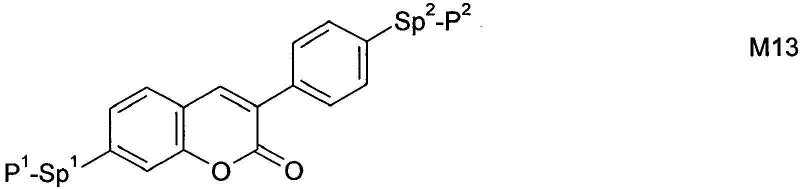 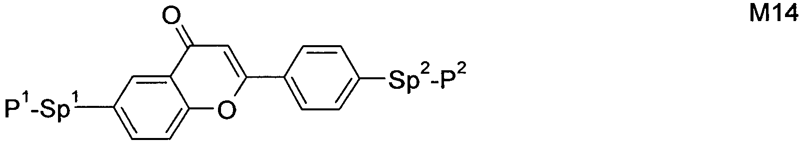 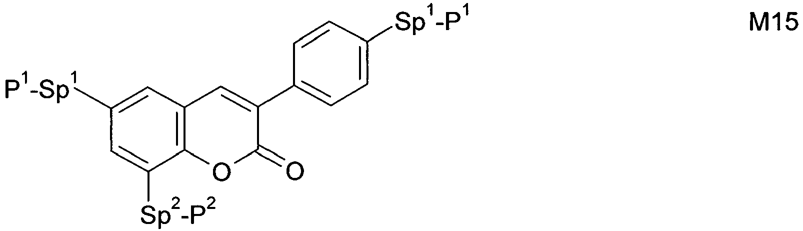 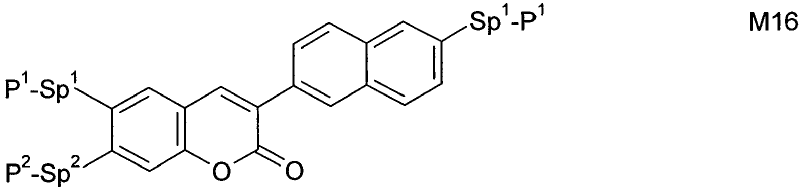 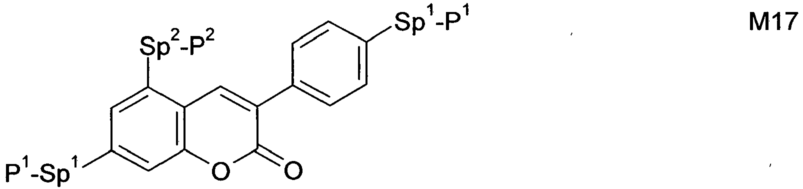 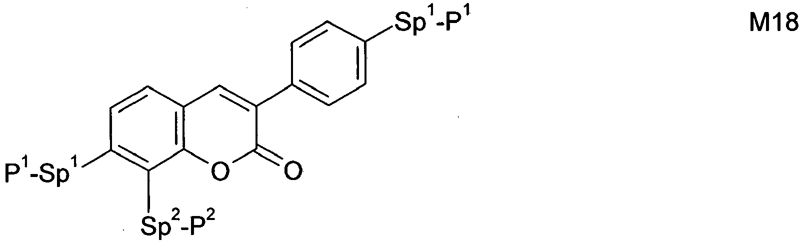 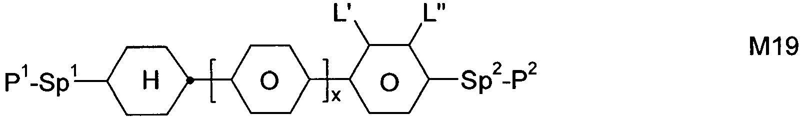 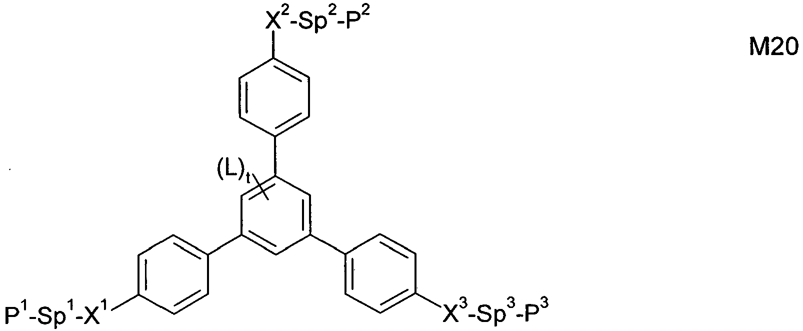 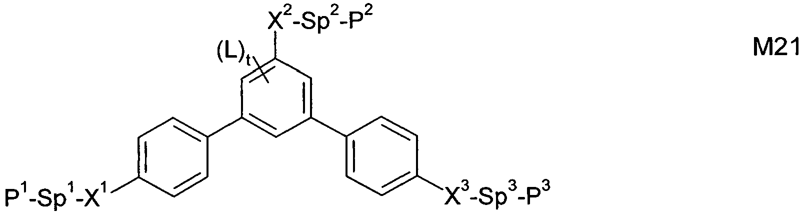 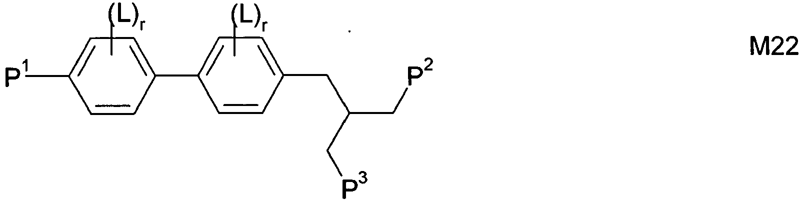 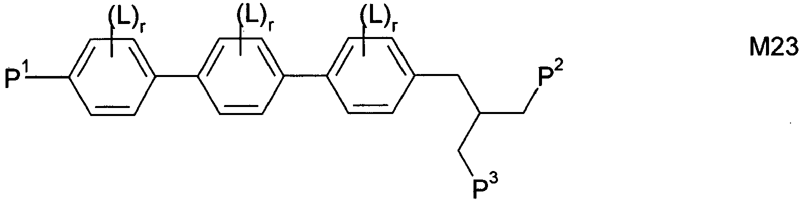 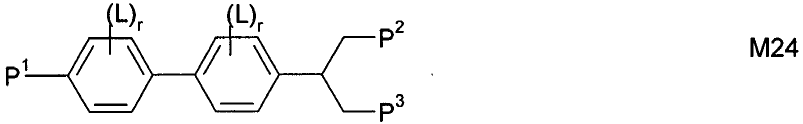 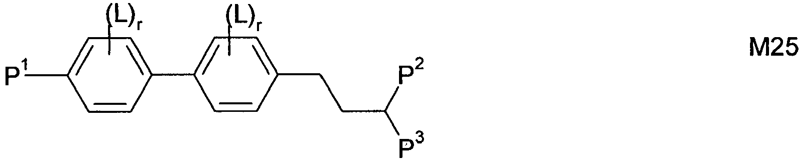 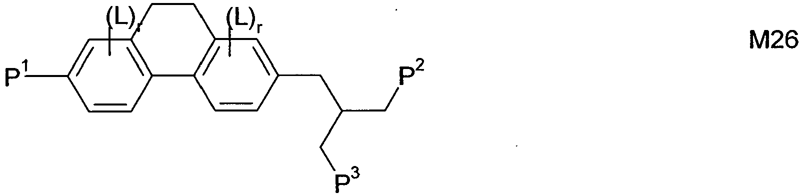 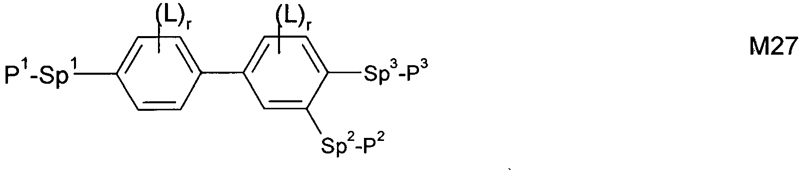 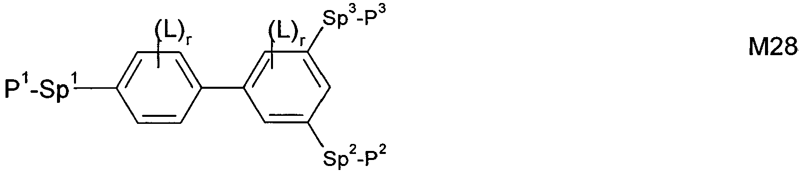 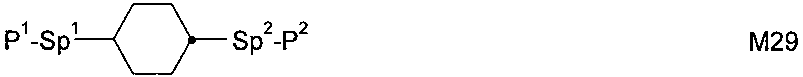 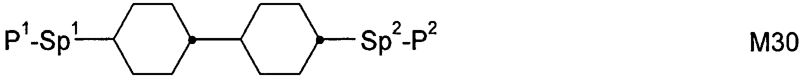 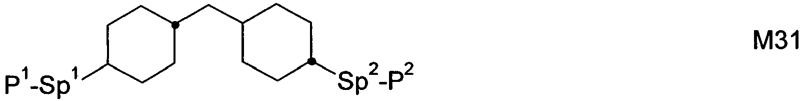 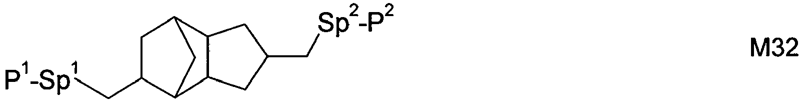 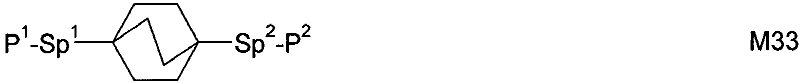 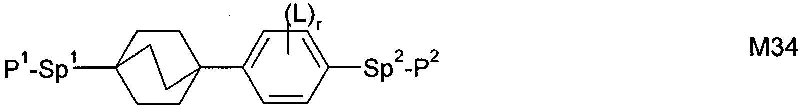 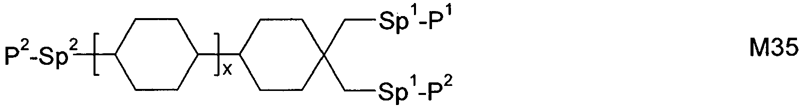 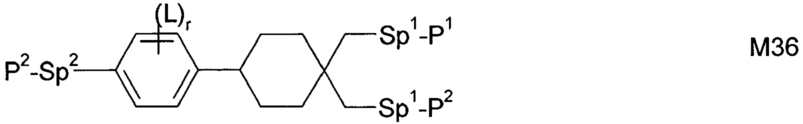 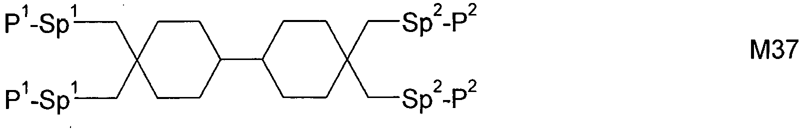 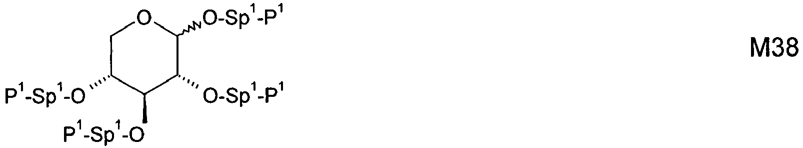 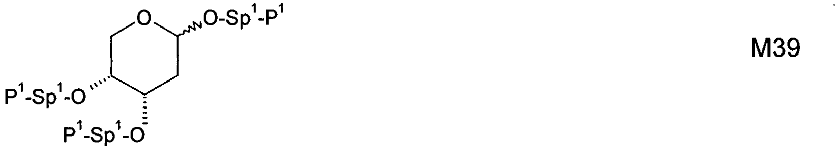 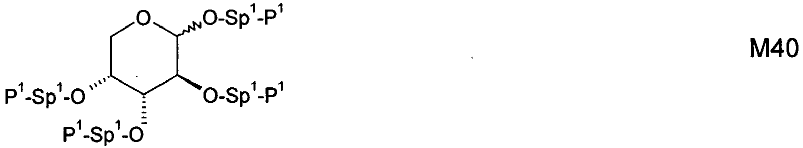 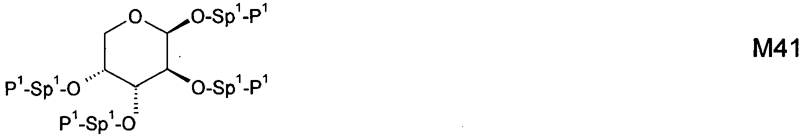 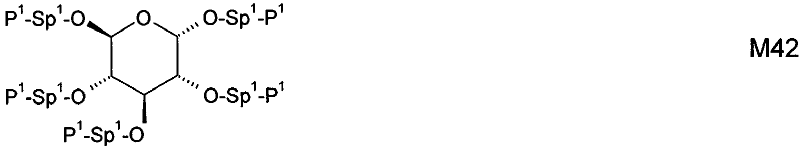 worin die einzelnen Reste folgende Bedeutung besitzen:
- P¹,P² und P³: jeweils unabhängig voneinander eine polymerisierbare Gruppe, vorzugsweise mit einer der vor- und nachstehend für P angegebenen Bedeutungen, besonders bevorzugt eine Acrylat-, Methacrylat-, Fluoracrylat-, Oxetan-, Vinyloxy- oder Epoxygruppe,
- Sp¹, Sp² und Sp³: jeweils unabhängig voneinander eine Einfachbindung oder eine Abstandsgruppe, vorzugsweise mit einer der vor- und nachstehend für Formel M angegebenen Bedeutungen, und besonders bevorzugt -(CH₂)ₚ₁-, -(CH₂)ₚ₁-O-, -(CH₂)ₚ₁-CO-O- oder -(CH₂)ₚ₁-O-CO-O-, worin p1 eine ganze Zahl von 1 bis 12 ist, und wobei in den letztgenannten Gruppen die Anbindung zum benachbarten Ring über das O-Atom erfolgt,
wobei auch einer oder mehrere der Reste P¹-Sp¹-, P²-Sp²- und P³-Sp³- einen Rest R^{aa} bedeuten können, mit der Maßgabe dass mindestens einer der vorhandenen Reste P¹-Sp¹-, P²-Sp²- und P³-Sp³- nicht R^{aa} bedeutet,
- R^{aa}: H, F, Cl, CN oder geradkettiges oder verzweigtes Alkyl mit 1 bis 25 C-Atomen, worin auch eine oder mehrere nicht benachbarte CH₂-Gruppen jeweils unabhängig voneinander durch C(R⁰)=C(R⁰⁰)-, -C≡C-, -O-, -S-, -CO-, -CO-O-, -O-CO-, -O-CO-O-so ersetzt sein können, dass O- und/oder S-Atome nicht direkt miteinander verknüpft sind, und worin auch ein oder mehrere H-Atome durch F, Cl, CN oder P¹-Sp¹- ersetzt sein können, bevorzugt geradkettiges oder verzweigtes, optional ein- oder mehrfach fluoriertes, Alkyl, Alkoxy, Alkenyl, Alkinyl, Alkylcarbonyl, Alkoxycarbonyl, oder Alkylcarbonyloxy mit 1 bis 12 C-Atomen (wobei die Alkenyl- und Alkinylreste mindestens zwei und die verzweigten Reste mindestens drei C-Atome aufweisen),
wobei -OH, -NH₂, -SH, -NHR, -C(O)OH und -CHO in der Gruppe R^{aa} nicht enthalten sind,
- R⁰, R⁰⁰: jeweils unabhängig voneinander und bei jedem Auftreten gleich oder verschieden H oder Alkyl mit 1 bis 12 C-Atomen,
- R^{y} und R^{z}: jeweils unabhängig voneinander H, F, CH₃ oder CF₃,
- X¹, X² und X³: jeweils unabhängig voneinander -CO-O-, O-CO- oder eine Einfachbindung,
- Z¹: -O-, -CO-, -C(R^{y}R^{z})-, oder -CF₂CF₂-,
- Z² und Z³: jeweils unabhängig voneinander -CO-O-, -O-CO-, -CH₂O-, -OCH₂-, -CF₂O-, -OCF₂-, oder -(CH₂)ₙ-, wobei n 2, 3 oder 4 ist,
- L: bei jedem Auftreten gleich oder verschieden F, Cl, CN, SCN, SF₅ oder geradkettiges oder verzweigtes, optional ein- oder mehrfach fluoriertes, Alkyl, Alkoxy, Alkenyl, Alkinyl, Alkylcarbonyl, Alkoxycarbonyl, Alkylcarbonyloxy oder Alkoxycarbonyloxy mit 1 bis 12 C-Atomen vorzugsweise F,
- L' und L": jeweils unabhängig voneinander H, F oder Cl,
- r: 0, 1, 2, 3 oder 4,
- s: 0, 1, 2 oder 3,
- t: 0, 1 oder 2,
- x: 0 oder 1.

In den Verbindungen der Formeln M1 bis M42 bedeutet die Ringgruppe 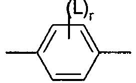 vorzugsweise 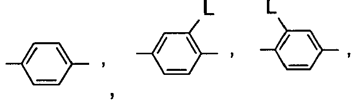 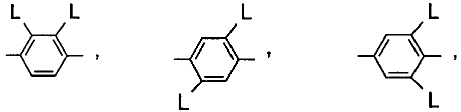 oder 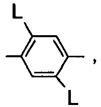 worin L, bei jedem Auftreten gleich oder verschieden, eine der vorstehenden Bedeutungen hat und vorzugsweise F, Cl, CN, NO₂, CH₃, C₂H₅, C(CH₃)₃, CH(CH₃)₂, CH₂CH(CH₃)C₂H₅, OCH₃, OC₂H₅, COCH₃, COC₂H₅, COOCH₃, COOC₂H₅, CF₃, OCF₃, OCHF₂, OC₂F₅ oder P-Sp-, besonders bevorzugt F, Cl, CN, CH₃, C₂H₅, OCH₃, COCH₃, OCF₃ oder P-Sp-, ganz besonders bevorzugt F, Cl, CH₃, OCH₃, COCH₃ oder OCF₃, insbesondere F oder CH₃ bedeutet.

Vorzugsweise umfasst das FK-Medium oder die polymerisierbare Komponente eine oder mehrere Verbindungen ausgewählt aus der Gruppe der Formeln M1-M28, besonders bevorzugt der Formeln M2-M15, ganz besonders bevorzugt der Formeln M2, M3, M9, M14 und M15. Vorzugsweise umfasst das FK-Medium oder die polymerisierbare Komponente keine Verbindungen der Formel M10, worin Z² und Z³ -(CO)O- oder -O(CO)-bedeuten.

Zur Herstellung von PSA-Anzeigen werden die polymerisierbaren Verbindungen im FK-Medium zwischen den Substraten der FK-Anzeige, optional unter Anlegen einer Spannung, durch in-situ-Polymerisation polymerisiert oder vernetzt (falls eine polymerisierbare Verbindung zwei oder mehr polymerisierbare Gruppen enthält). Die Polymerisation kann in einem Schritt durchgeführt werden. Es ist auch möglich, zunächst in einem ersten Schritt die Polymerisation unter Anlegen einer Spannung durchzuführen, um einen pretilt-Winkel zu erzeugen, und anschließend in einem zweiten Polymerisationsschritt ohne anliegende Spannung die im ersten Schritt nicht abreagierten Verbindungen zu polymerisieren bzw. zu vernetzen ("end curing").

Geeignete und bevorzugte Polymerisationsmethoden sind beispielsweise die thermische oder Photopolymerisation, vorzugsweise Photopolymerisation, insbesondere UV-Photopolymerisation. Dabei können gegebenenfalls auch ein oder mehrere Initiatoren zugesetzt werden. Geeignete Bedingungen für die Polymerisation, sowie geeignete Arten und Mengen der Initiatoren, sind dem Fachmann bekannt und in der Literatur beschrieben. Für die radikalische Polymerisation eignen sich zum Beispiel die kommerziell erhältlichen Photoinitiatoren Irgacure651®, Irgacure184®, Irgacure907®, Irgacure369®, oder Darocure1173® (Ciba AG). Falls ein Initiator eingesetzt wird, beträgt dessen Anteil vorzugsweise 0,001 bis 5 Gew.-%, besonders bevorzugt 0,001 bis 1 Gew.-%.

Die polymerisierbare Komponente oder das FK-Medium können auch einen oder mehrere Stabilisatoren enthalten, um eine unerwünschte spontane Polymerisation der RMs, beispielsweise während der Lagerung oder des Transports, zu verhindern. Geeignete Arten und Mengen der Stabilisatoren sind dem Fachmann bekannt und in der Literatur beschrieben. Besonders geeignet sind zum Beispiel die kommerziell erhältlichen Stabilisatoren der Serie Irganox® (Ciba AG), wie beispielsweise Irganox® 1076. Falls Stabilisatoren eingesetzt werden, beträgt deren Anteil, bezogen auf die Gesamtmenge der RMs beziehungsweise der polymerisierbaren Komponente, vorzugsweise 10 - 10000 ppm, besonders bevorzugt 50 - 500 ppm.

Die FK-Medien zur Verwendung in den erfindungsgemäßen FK-Anzeigen enthalten, neben den oben beschriebenen Selbstorientierungsadditiven und den optionalen polymerisierbaren Verbindungen (M) eine FK-Mischung ("Host-Mischung") enthaltend eine oder mehr, vorzugsweise zwei oder mehr niedermolekulare (d.h. monomere bzw. unpolymerisierte) Verbindungen. Letztere sind stabil bzw. unreaktiv gegenüber einer Polymerisationsreaktion unter den zur Polymerisation der polymerisierbaren Verbindungen verwendeten Bedingungen. Prinzipiell eignet sich als Host-Mischung jede zur Verwendung in herkömmlichen VA- und VA-IPS-Anzeigen geeignete dielektrisch negative bzw. positive FK-Mischung. Der Anteil der Host-Mischung beträgt für Flüssigkristallanzeigen in der Regel 95 Gew.-% oder mehr, bevorzugt 97 Gew.-% oder mehr.

Geeignete FK-Mischungen sind dem Fachmann bekannt und in der Literatur beschrieben. FK-Medien für VA-Anzeigen mit negativer dielektrischer Anisotropie sind in EP 1 378 557 A1 oder WO 2013/004372 beschrieben.

Geeignete FK-Mischungen mit positiver dielektrischer Anisotropie, die sich für LCDs und speziell für IPS-Anzeigen eignen, sind z.B. aus JP 07-181 439 (A), EP 0 667 555, EP 0 673 986, DE 195 09 410, DE 195 28 106, DE 195 28 107, WO 96/23 851 und WO 96/28 521 bekannt.

Im Folgenden werden bevorzugte Ausführungsformen für das erfindungsgemäße flüssigkristalline Medium mit negativer dielektrischer Anisotropie angeführt:
FK-Medium, welches zusätzlich eine oder mehrere Verbindungen ausgewählt aus der Gruppe der Verbindungen der Formeln A, B und C enthält, 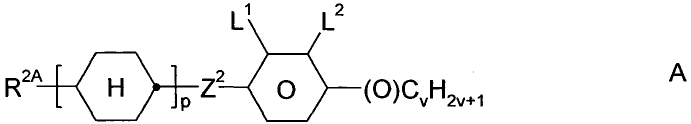 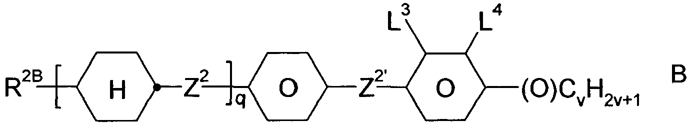 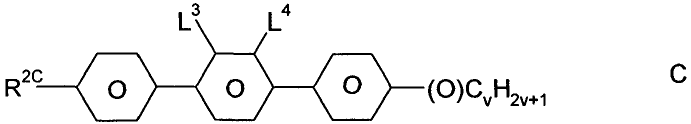 worin
- R^{2A}, R^{2B} und R^{2C}: jeweils unabhängig voneinander H, einen unsubstituierten, einen einfach durch CN oder CF₃ oder mindestens einfach durch Halogen substituierten Alkylrest mit bis zu 15 C-Atomen, wobei in diesen Resten auch eine oder mehrere CH₂-Gruppen durch -O-, -S-, 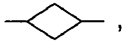 -C≡C- , -CF₂O-, -OCF₂-, -OC-O- oder -O-CO- so ersetzt sein können, dass O-Atome nicht direkt miteinander verknüpft sind,
- L¹⁻⁴: jeweils unabhängig voneinander F, Cl, CF₃ oder CHF₂,
- Z² und Z^{2'}: jeweils unabhängig voneinander Einfachbindung, -CH₂CH₂-, -CH=CH-, -CF₂O-, -OCF₂-, -CH₂O-, -OCH₂-, -COO-, -OCO-, -C₂F₄-, -CF=CF-, -CH=CHCH₂O-,
- p: 1 oder 2, bevorzugt 1,
- q: 0 oder 1, und
- v: 1 bis 6
bedeuten.

In den Verbindungen der Formeln A und B können Z² gleiche oder unterschiedliche Bedeutungen haben. In den Verbindungen der Formel B können Z² und Z^{2'} gleiche oder verschiedene Bedeutungen aufweisen. In den Verbindungen der Formeln A, B und C bedeuten R^{2A}, R^{2B} und R^{2C} jeweils vorzugsweise Alkyl mit 1-6 C-Atomen, insbesondere CH₃, C₂H₅, n-C₃H₇, n-C₄H₉, n-C₅H₁₁.

In den Verbindungen der Formeln A und B bedeuten L¹, L², L³ und L⁴ vorzugsweise L¹ = L² = F und L³ = L⁴ = F, ferner L¹ = F und L² = Cl, L¹ = Cl und L² = F, L³ = F und L⁴ = Cl, L³ = Cl und L⁴ = F. Z² und Z^{2'} bedeuten in den Formeln A und B vorzugsweise jeweils unabhängig voneinander eine Einfachbindung, ferner eine -C₂H₄-Brücke.

Sofern in der Formel B Z² = -C₂H₄- ist, ist Z^{2'} vorzugsweise eine Einfachbindung bzw. falls Z^{2'} = -C₂H₄- bedeutet, ist Z² vorzugsweise eine Einfachbindung. In den Verbindungen der Formeln A und B bedeutet (O)CᵥH₂ᵥ₊₁ vorzugsweise OCᵥH_{2v+1,} ferner CᵥH_{2v+1.} In den Verbindungen der Formel C bedeutet (O)CᵥH₂ᵥ₊₁ vorzugsweise CᵥH₂ᵥ₊₁. In den Verbindungen der Formel C bedeuten L³ und L⁴ vorzugsweise jeweils F.

Bevorzugte Verbindungen der Formeln A, B und C sind beispielsweise: 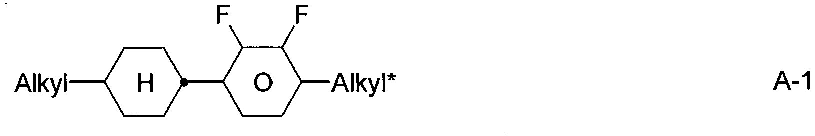 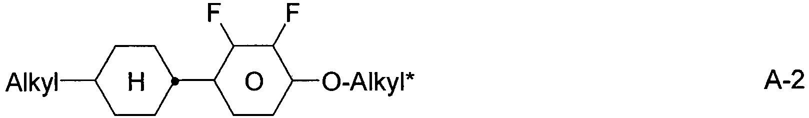 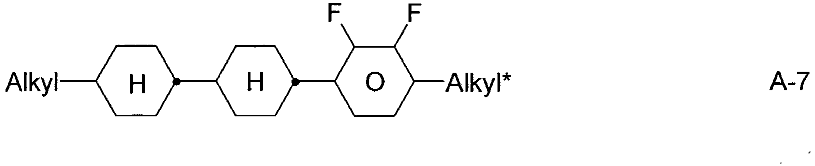 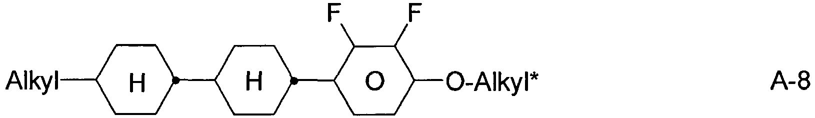 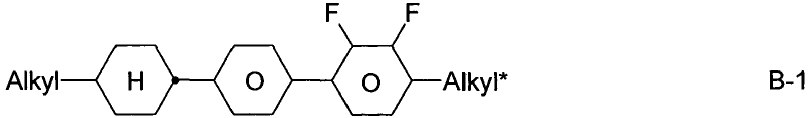 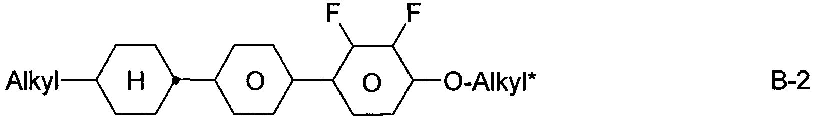 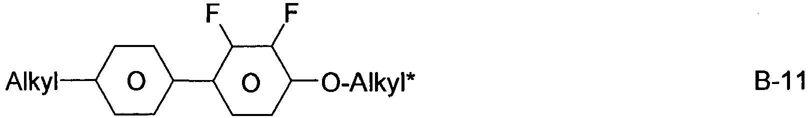 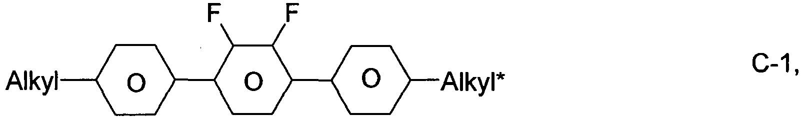 worin Alkyl und Alkyl* jeweils unabhängig voneinander einen geradkettigen Alkylrest mit 1-6 C-Atomen bedeuten.

Das FK-Medium weist vorzugsweise ein Δε von -1,5 bis -8,0, insbesondere von -2,5 bis -6,0 auf.

Die Werte der Doppelbrechung Δn in der Flüssigkristallmischung liegen in der Regel zwischen 0,07 und 0,16, vorzugsweise zwischen 0,08 und 0,12. Die Rotationsviskosität γ₁ bei 20°C vor der Polymerisation ist vorzugsweise ≤ 165 mPa·s, insbesondere ≤ 140 mPa·s.

Im Folgenden werden bevorzugte Ausführungsformen für das erfindungsgemäße flüssigkristalline Medium mit negativer oder positiver dielektrischer Anisotropie angeführt:
LC-Medium, welches zusätzlich eine oder mehrere Verbindungen der Formel II und/oder III enthält: 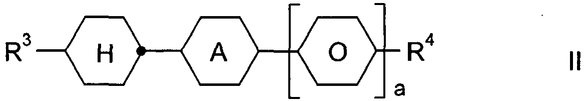 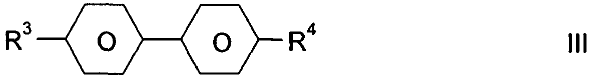 worin
- Ring A: 1,4-Phenylen oder trans-1,4-Cyclohexylen bedeutet,
- a: 0 oder 1 ist,
- R³: jeweils unabhängig voneinander Alkyl mit 1 bis 9 C-Atomen oder Alkenyl mit 2 bis 9 C-Atomen bedeutet, vorzugsweise Alkenyl mit 2 bis 9 C-Atomen, und
- R⁴: jeweils unabhängig voneinander einen unsubstituierten oder halogenierten Alkylrest mit 1 bis 12 C-Atomen, wobei auch eine oder zwei nicht benachbarte CH₂-Gruppen durch -O-, -CH=CH-, -CH=CF-, -(CO)-, -O(CO)- oder -(CO)O- so ersetzt sein können, dass O-Atome nicht direkt miteinander verknüpft sind, und vorzugsweise Alkyl mit 1 bis 12 C-Atomen oder Alkenyl mit 2 bis 9 C-Atomen bedeutet.

Die Verbindungen der Formel II sind vorzugsweise ausgewählt aus der Gruppe bestehend aus folgenden Formeln: 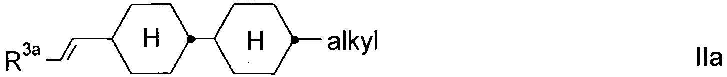 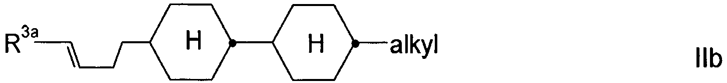 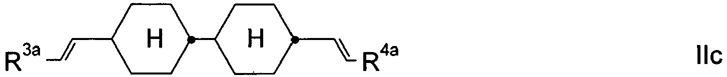 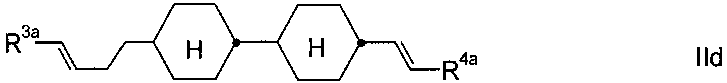 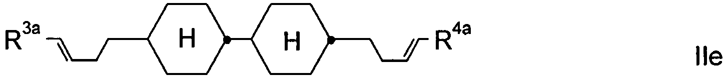 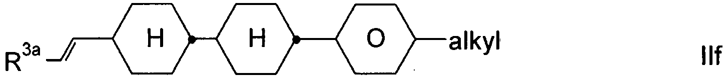 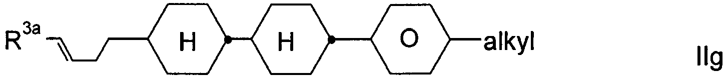 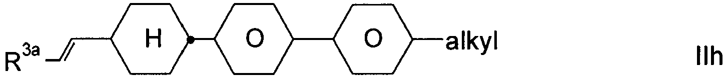 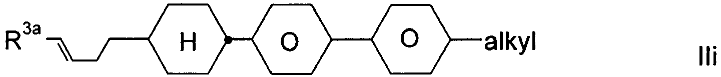 worin R^{3a} und R^{4a} jeweils unabhängig voneinander H, CH₃, C₂H₅ oder C₃H₇ bedeuten, und "alkyl" eine geradkettige Alkylgruppe mit 1 bis 8, vorzugsweise 1, 2, 3, 4 oder 5 C-Atomen bedeutet. Besonders bevorzugt sind Verbindungen der Formel IIa und IIf, insbesondere solche, worin R^{3a} H oder CH₃,
vorzugsweise H, bedeutet, und Verbindungen der Formel IIc, insbesondere solche, worin R^{3a} und R^{4a} H, CH₃ oder C₂H₅ bedeuten.

Im Folgenden werden bevorzugte Ausführungsformen für das erfindungsgemäße flüssigkristalline Medium mit positiver dielektrischer Anisotropie angeführt:
Das FK-Medium enthält bevorzugt eine oder mehrere Verbindungen der Formeln IV und V: 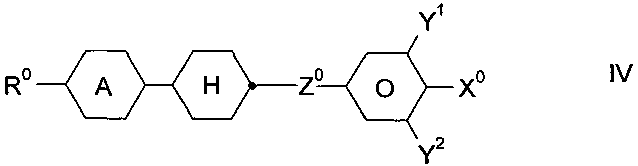 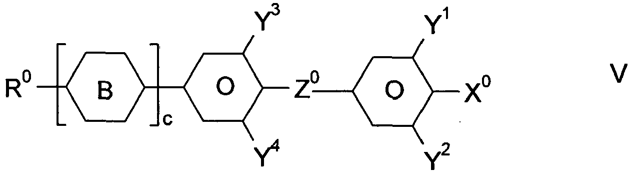 worin
- R⁰: Alkyl- or Alkoxyrest mit 1 to 15 C Atomen, worin optional zusätzlich eine oder mehrere CH₂ Gruppen in diesen Resten, unabhängig voneinander, durch -C≡C-, -CF₂O-, -CH=CH-, 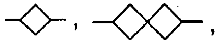 -O-, -(CO)O- or -O(CO)- so substituiert sind, dass O-Atome nicht direkt miteinander verknüpft sind, und in denen zusätzlich ein oder mehrere H-Atome optional durch Halogen ersetzt sein können,
- Ring A: 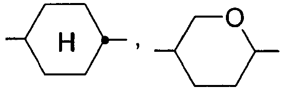 oder 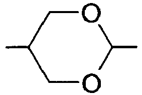
- Ring B: unabhängig voneinander 1,4-Phenylen, optional substituiert durch ein oder zwei F oder Cl, 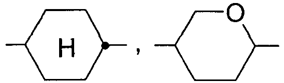 oder 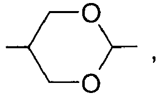
- X⁰: F, Cl, CN, SF₅, SCN, NCS, eine halogenierte Alkylgruppe, eine halogenierte Alkenylgruppe, eine halogenierte Alkoxygruppe oder eine halogenierte Alkenyloxygruppe, jeweils mit bis zu 6 C-Atomen,
- Y¹⁻⁴: jeweils unabhängig voneinander H or F,
- Z⁰: -CF₂O-, -(CO)O- oder eine Einfachbindung, und
- c: 0, 1 oder 2, bevorzugt 1 oder 2. 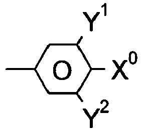 bedeutet bevorzugt 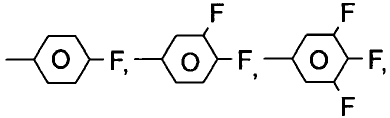 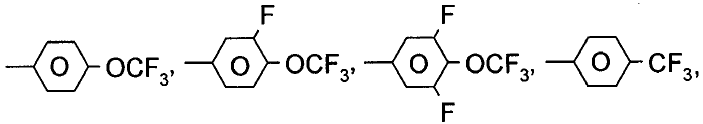 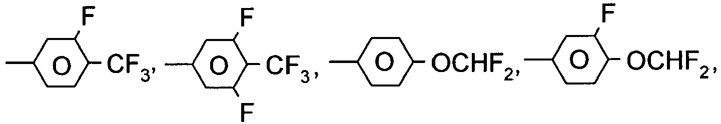 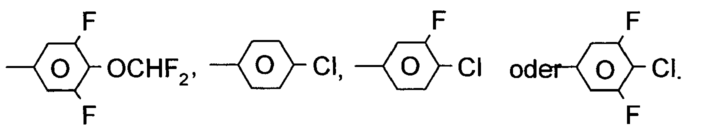
- R⁰: bedeutet bevorzugt geradkettiges Alkyl oder Alkenyl mit 2 bis 7 C-Atomen;
- X⁰: bedeutet bevorzugt F, OCF₃, Cl oder CF₃, insbesondere F.

Die nematische Phase des dielektrisch negativen oder positiven FK-Mediums gemäß der Erfindung hat bevorzugt eine nematische Phasen in einem Temperaturbereich von 10°C oder weniger bis 60 °C oder mehr, besonders bevorzugt von 0 oder weniger bis 70°C oder mehr.

Im Rahmen der vorliegenden Anmeldung sind die beiden Formeln für substituierte Benzolringe 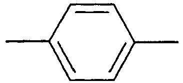 und 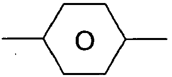 gleichbedeutend. 1,4-substituiertes Cyclohexan wir durch 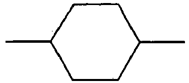 oder 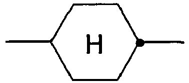 wiedergegeben, welches vorzugweise 1,4-trans-konfiguriert ist.

In der vorliegenden Anmeldung und in den folgenden Beispielen sind die Strukturen der Flüssigkristallverbindungen durch Akronyme angegeben, wobei die Transformation in chemische Formeln gemäß folgender Tabellen A und B erfolgt. Alle Reste CₙH₂ₙ₊₁ und CₘH₂ₘ₊₁ sind geradkettige Alkylreste mit n bzw. m C-Atomen; n, m, z und k sind ganze Zahlen und bedeuten vorzugsweise 1, 2, 3, 4, 5, 6, 7, 8, 9, 10, 11 oder 12. Die Codierung gemäß Tabelle B versteht sich von selbst. In Tabelle A ist nur das Akronym für den Grundkörper angegeben. Im Einzelfall folgt getrennt von Akronym für den Grundkörper mit einem Strich ein Code für die Substituenten R^{1*}, R^{2*}, L^{1*} und L^{2*}:

| Code für R^{1*}, R^{2*}, L^{1*}, L^{2*}, L^{3*} | R^{1*} | R^{2*} | L^{1*} | L^{2*} |
|---|---|---|---|---|
| nm | CₙH₂ₙ₊₁ | CₘH₂ₘ₊₁ | H | H |
| nOm | CₙH₂ₙ₊₁ | OCₘH₂ₘ₊₁ | H | H |
| nO.m | OCₙH₂ₙ₊₁ | CₘH₂ₘ₊₁ | H | H |
| n | CₙH₂ₙ₊₁ | CN | H | H |
| nN.F | CₙH₂ₙ₊₁ | CN | F | H |
| nN.F.F | CₙH₂ₙ₊₁ | CN | F | F |
| nF | CₙH₂ₙ₊₁ | F | H | H |
| nCl | CₙH₂ₙ₊₁ | Cl | H | H |
| nOF | OCₙH₂ₙ₊₁ | F | H | H |
| nF.F | CₙH₂ₙ₊₁ | F | F | H |
| nF.F.F | CₙH₂ₙ₊₁ | F | F | F |
| nOCF₃ | CₙH₂ₙ₊₁ | OCF₃ | H | H |
| nOCF₃.F | CₙH₂ₙ₊₁ | OCF₃ | F | H |
| n-Vm | CₙH₂ₙ₊₁ | -CH=CH-CₘH₂ₘ₊₁ | H | H |
| nV-Vm | CₙH₂ₙ₊₁-CH=CH- | -CH=CH-CₘH₂ₘ₊₁ | H | H |

Bevorzugte Mischungskomponenten finden sich in den Tabellen A und B.

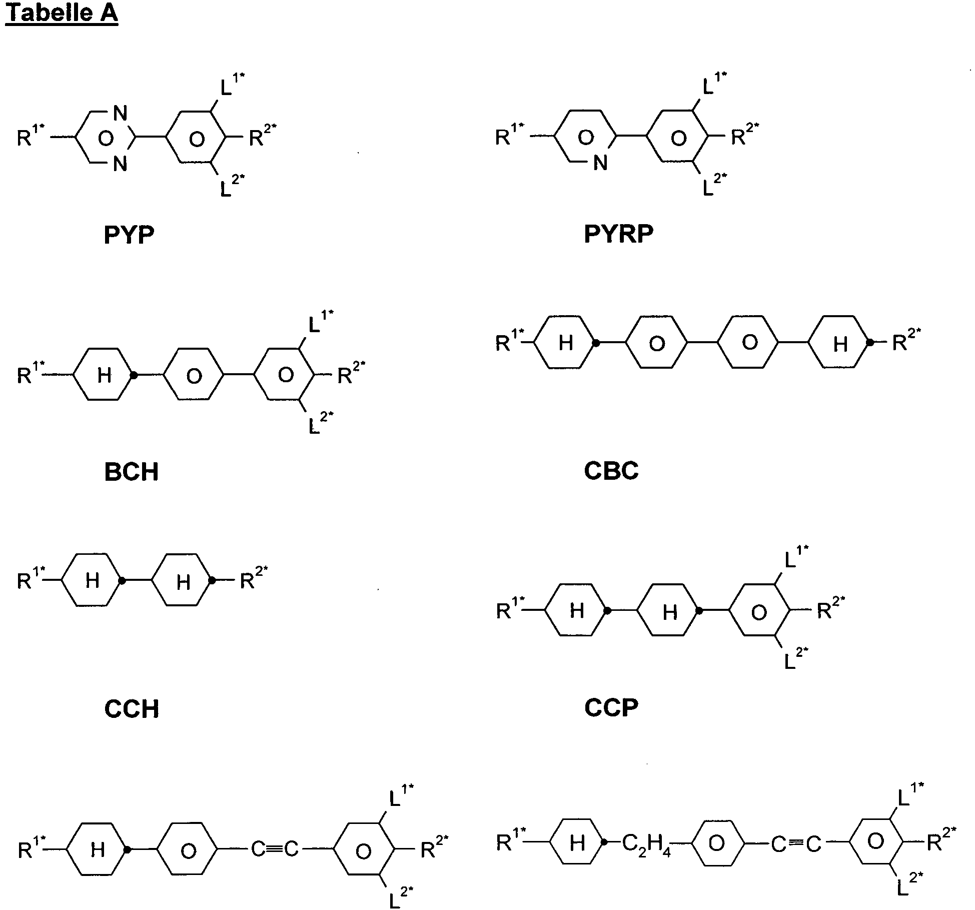

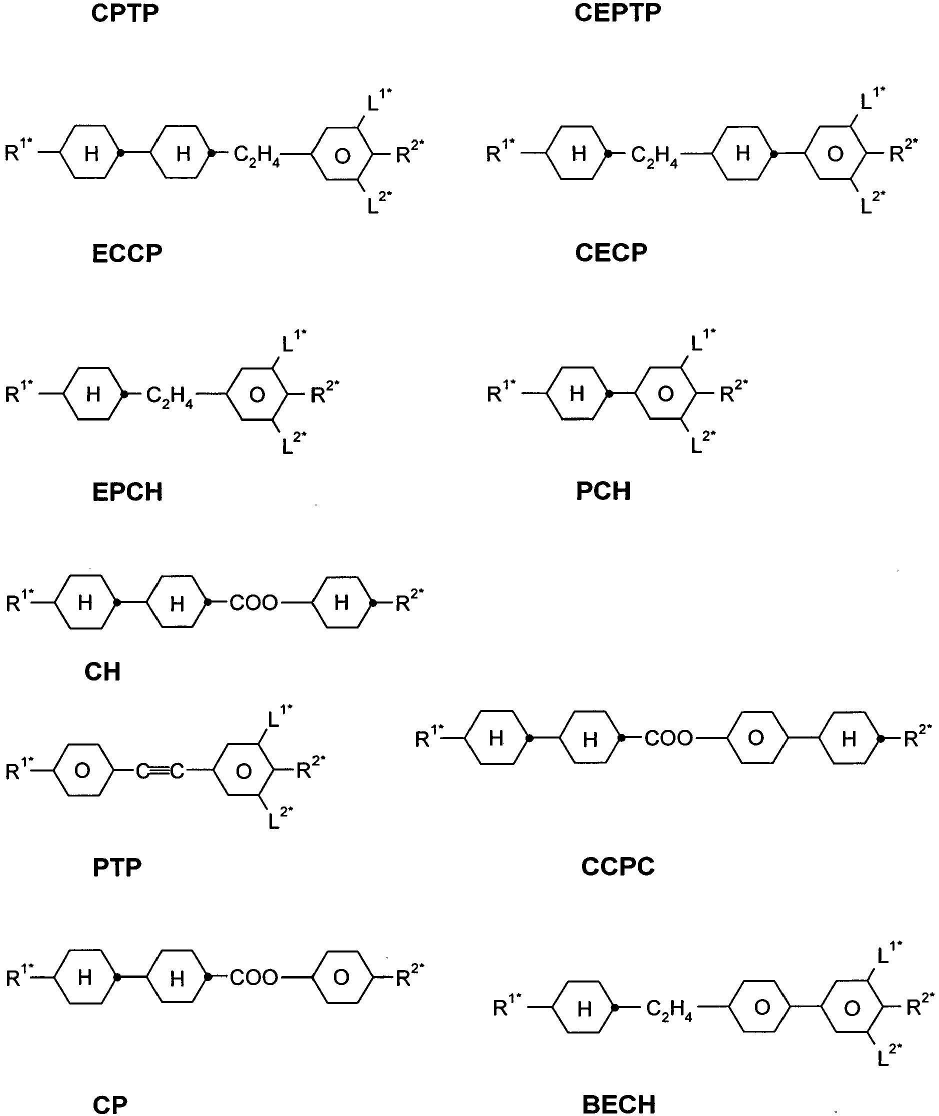

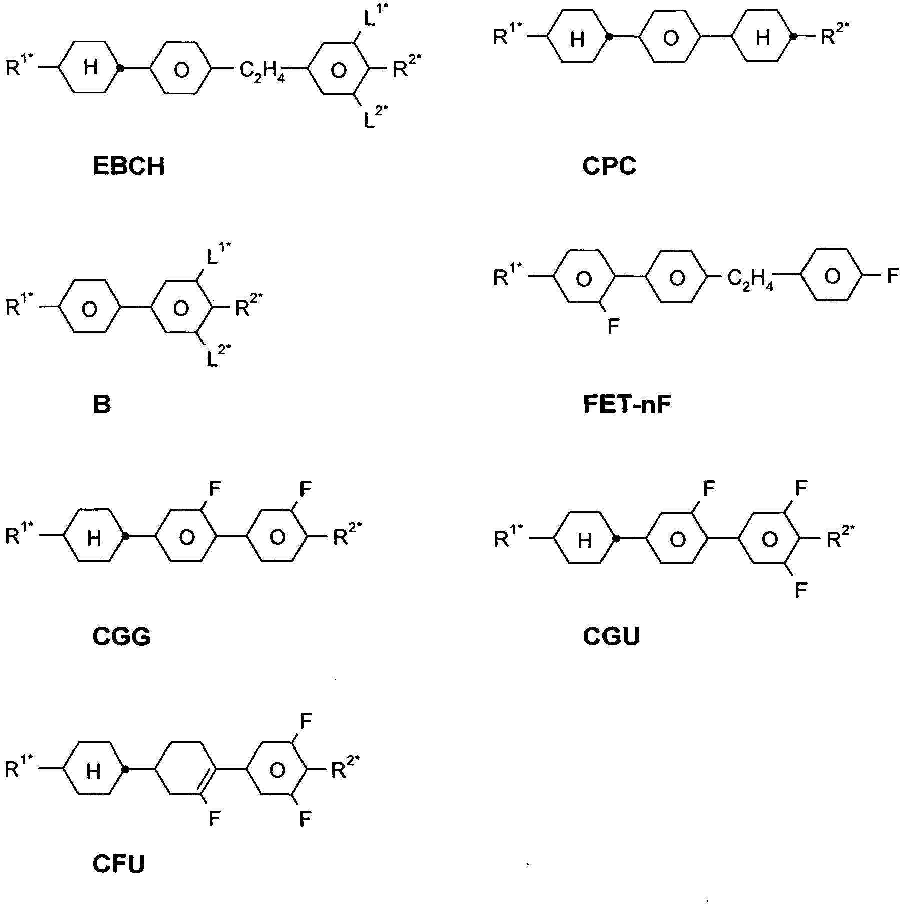

**Tabelle B**

| n, m, z bedeuten unabhängig voneinander vorzugsweise 1, 2, 3, 4, 5 oder 6. | |
|---|---|
| 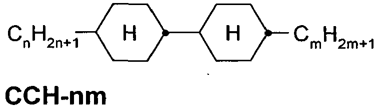 | 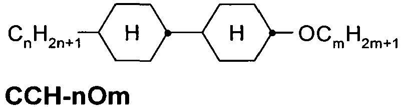 |
| 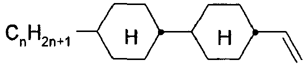 | 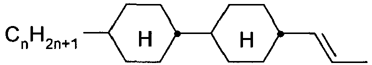 |
| 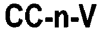 | 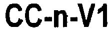 |
| 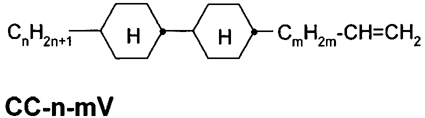 | 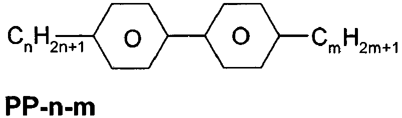 |
| 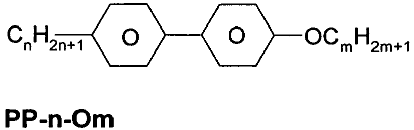 | 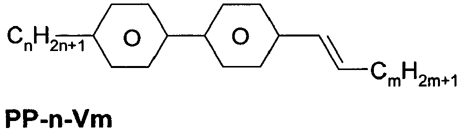 |
| 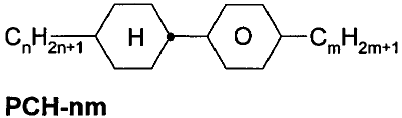 | 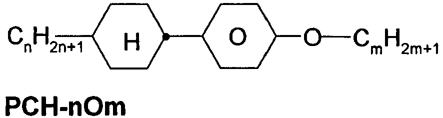 |
| 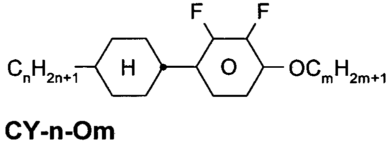 | 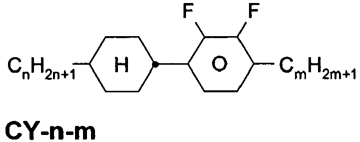 |
| 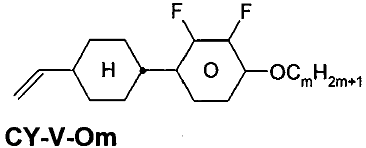 | 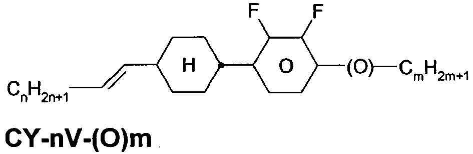 |
| 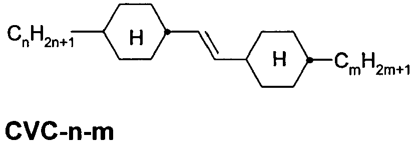 | 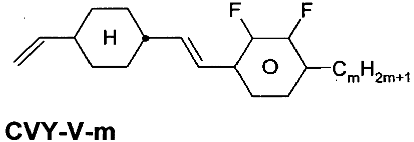 |
| 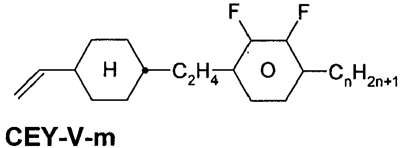 | 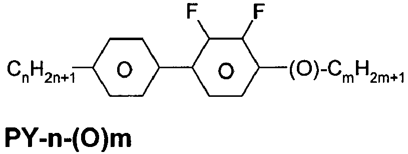 |
| 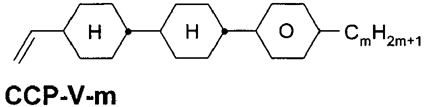 | 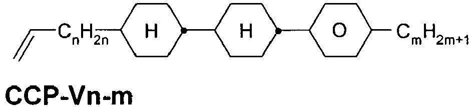 |
| 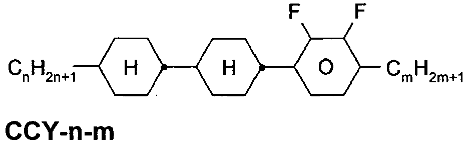 | 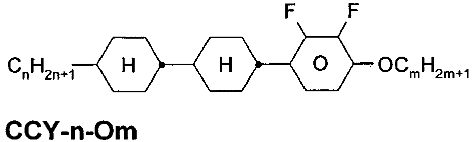 |
| 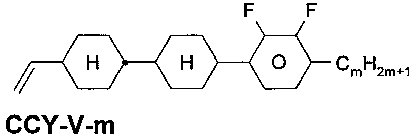 | 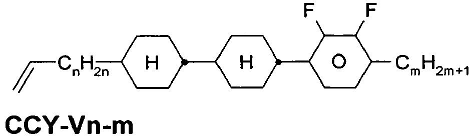 |
| 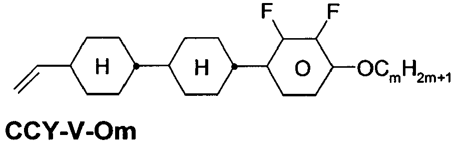 | 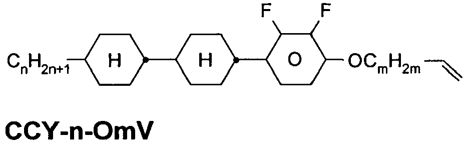 |
| 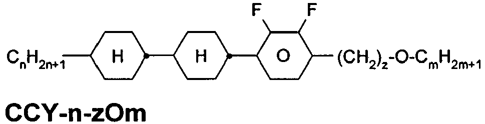 | 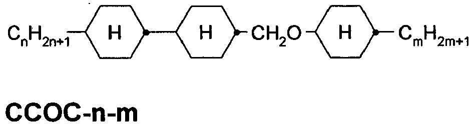 |
| 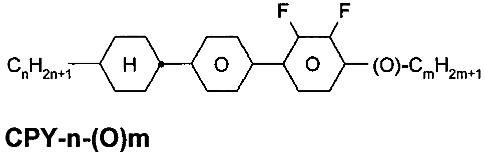 | 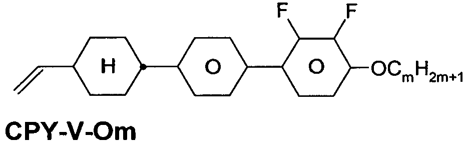 |
| 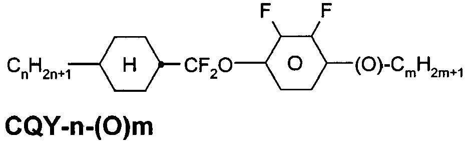 | 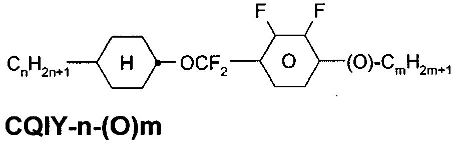 |
| 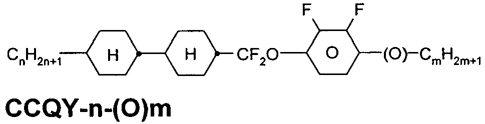 | 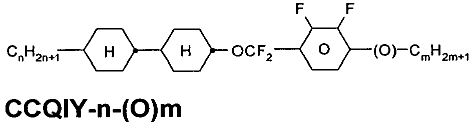 |
| 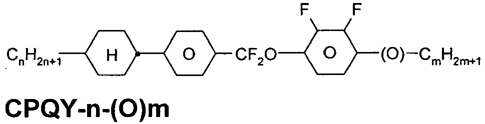 | 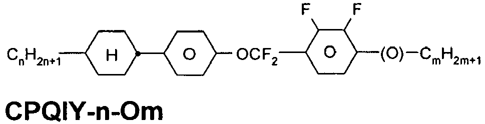 |
| 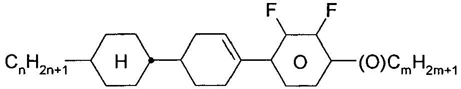 | 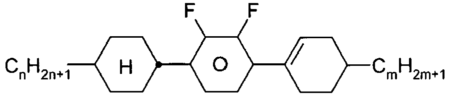 |
| 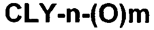 | 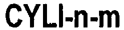 |
| 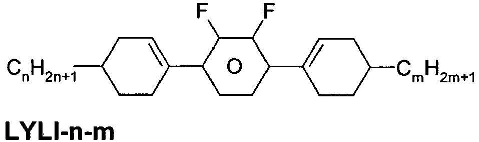 | 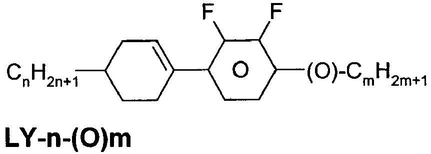 |
| 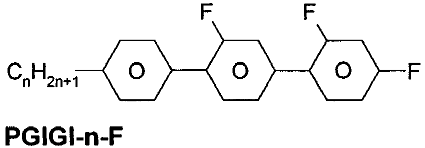 | 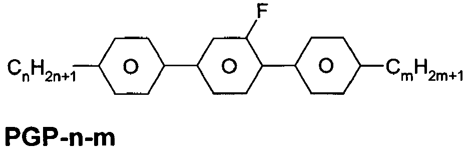 |
| 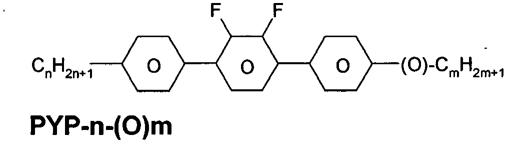 | 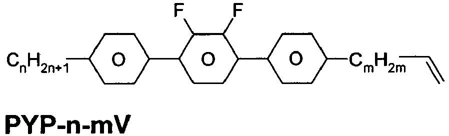 |
| 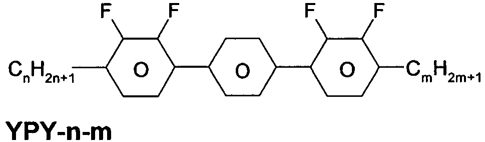 | 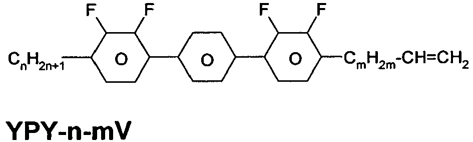 |
| 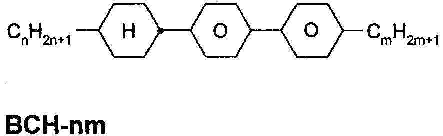 | 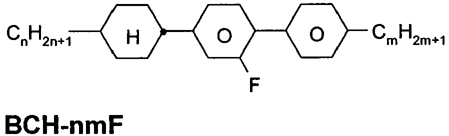 |
| 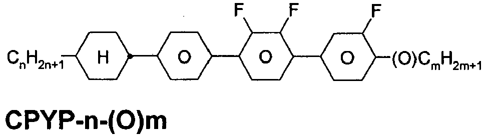 | 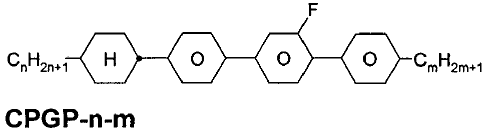 |
| 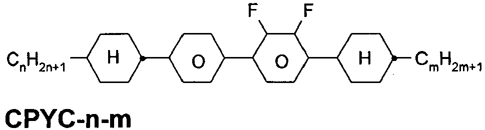 | 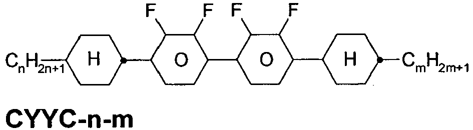 |
| 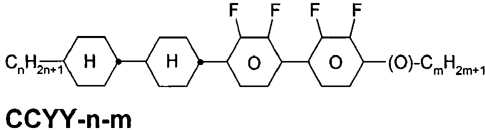 | 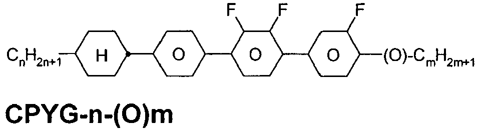 |
| 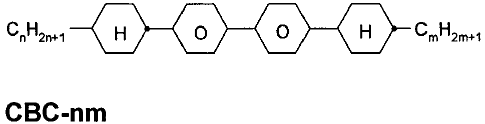 | 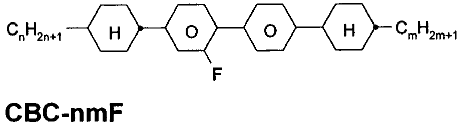 |
| 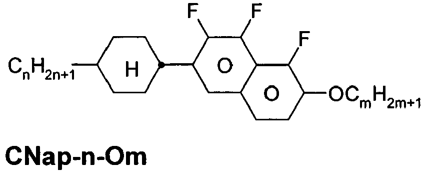 | 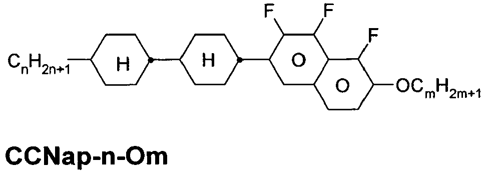 |
| 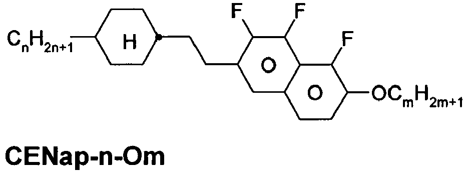 | 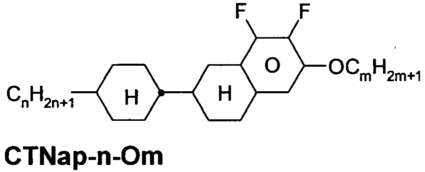 |
| 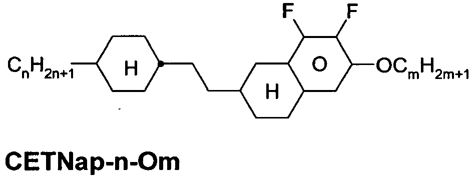 | 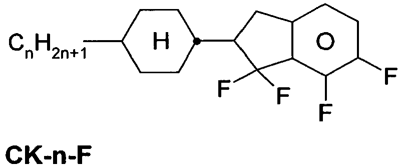 |
| 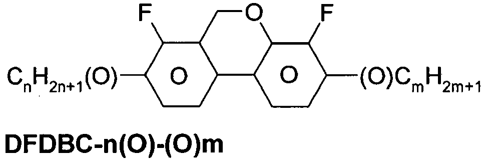 | 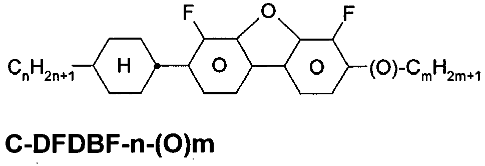 |
| 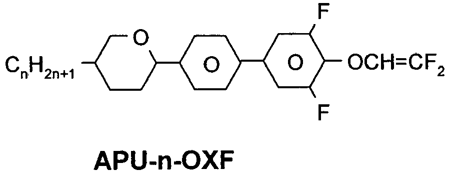 | 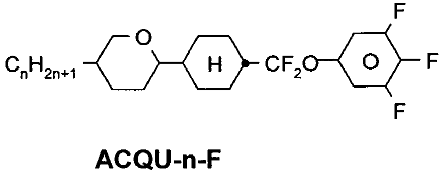 |
| 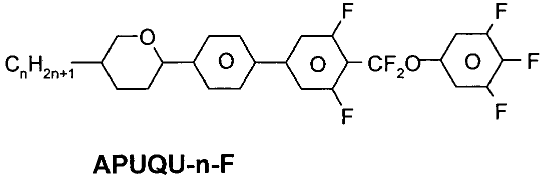 | |
| 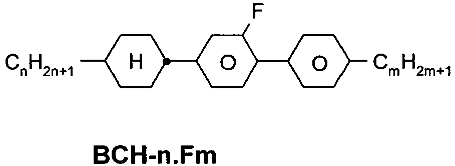 | 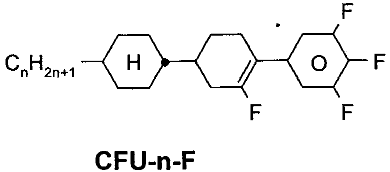 |
| 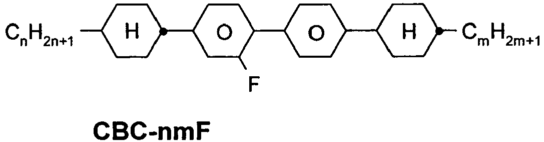 | |
| 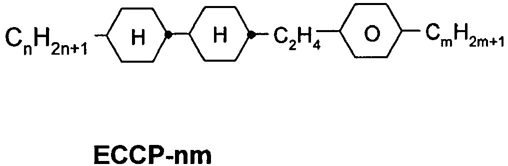 | 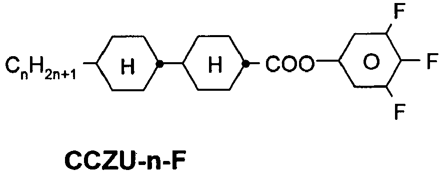 |
| 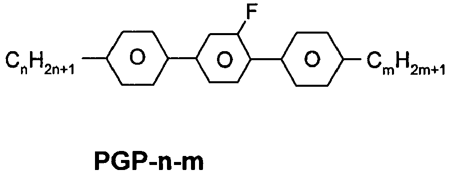 | 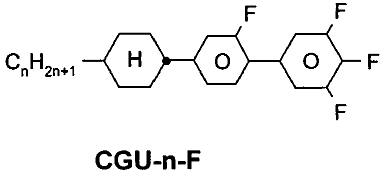 |
| 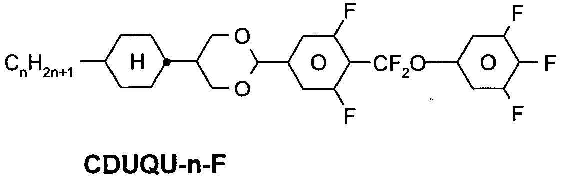 | |
| 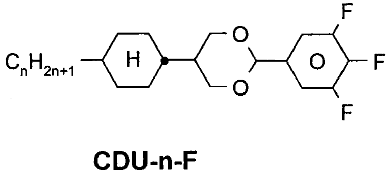 | 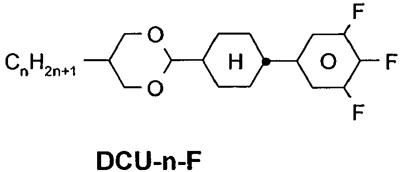 |
| 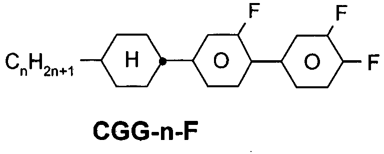 | 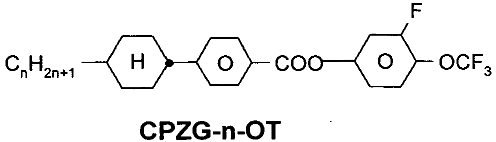 |
| 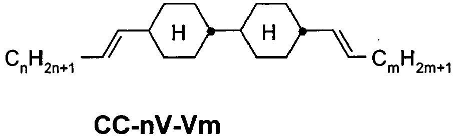 | |
| 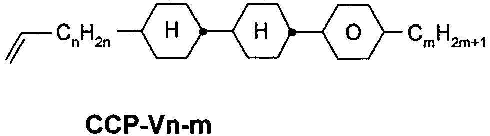 | 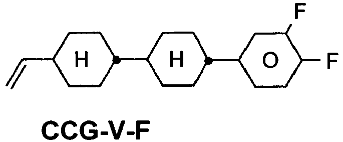 |
| 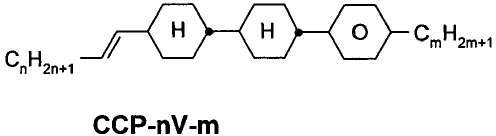 | |
| 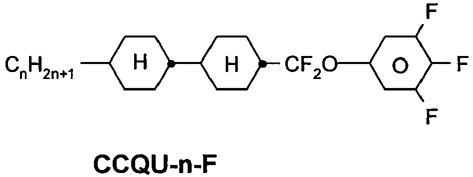 | 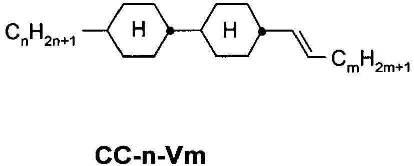 |
| 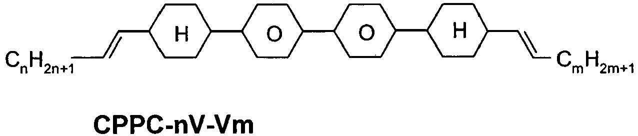 | |
| 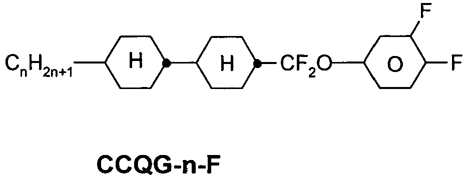 | 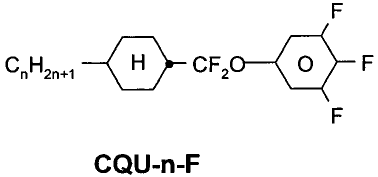 |
| 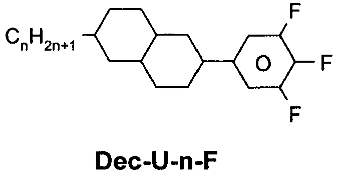 | 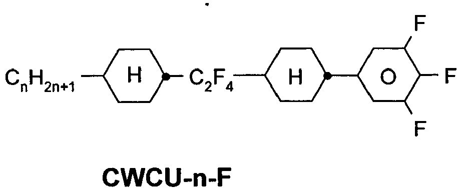 |
| 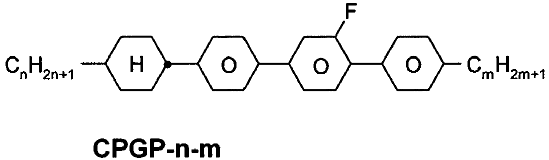 | |
| 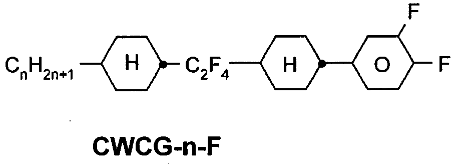 | |
| 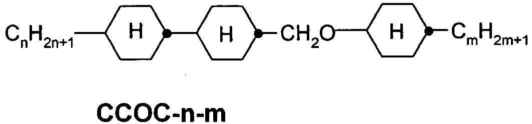 | |
| 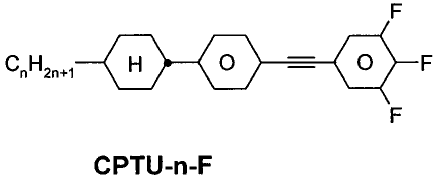 | 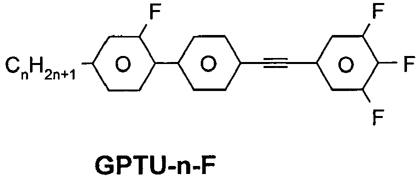 |
| 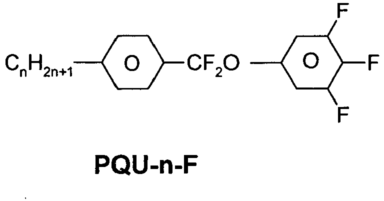 | 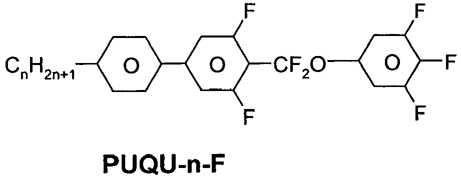 |
| 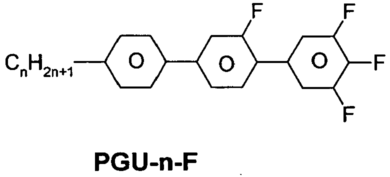 | 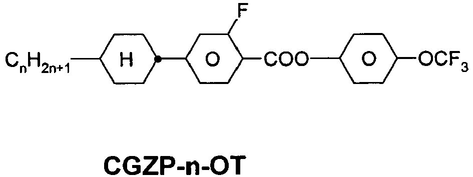 |
| 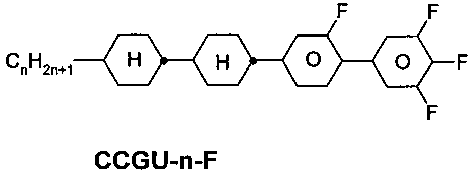 | 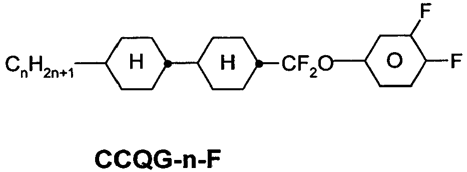 |
| 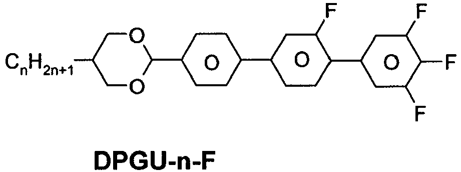 | 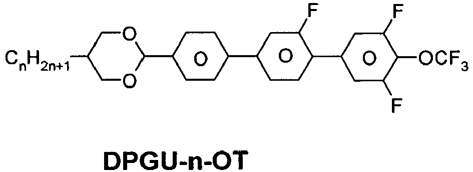 |
| 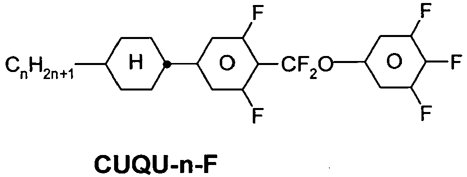 | |
| 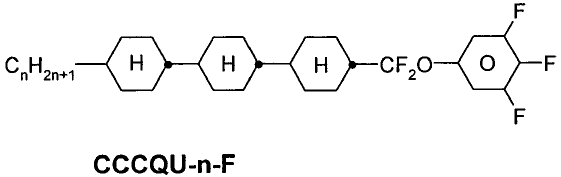 | |
| 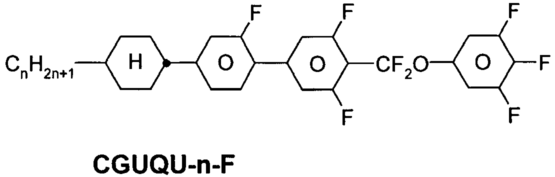 | |
| 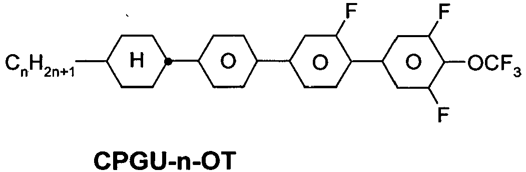 | |
| 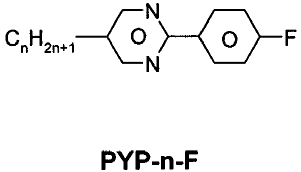 | 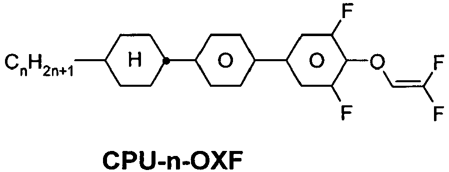 |
| 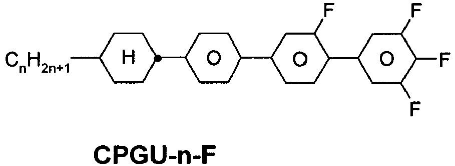 | 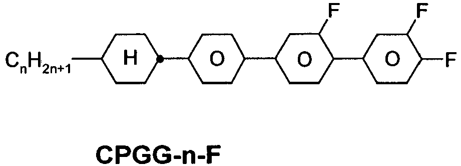 |
| 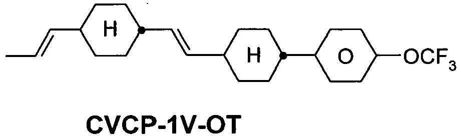 | 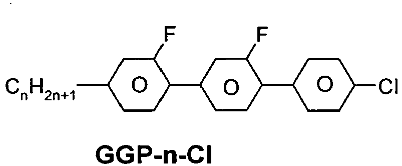 |
| 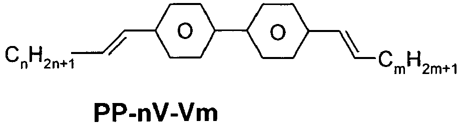 | 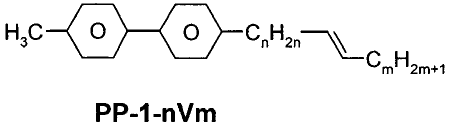 |
| 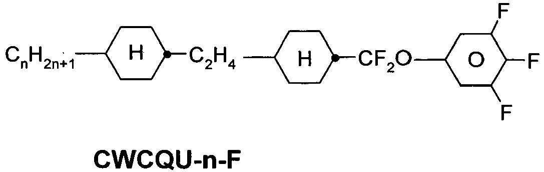 | |
| 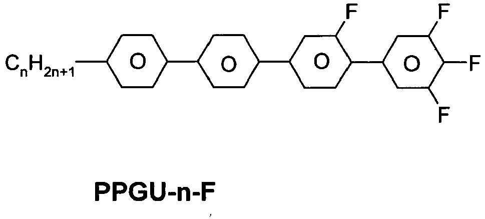 | |
| 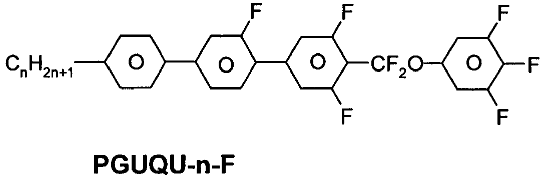 | |
| 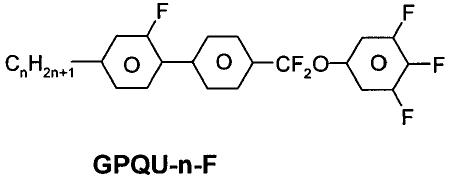 | 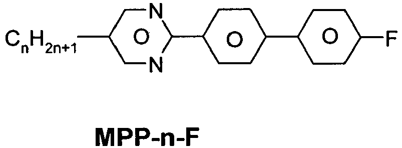 |
| 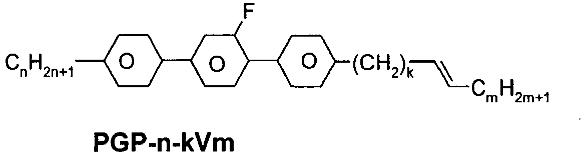 | |
| 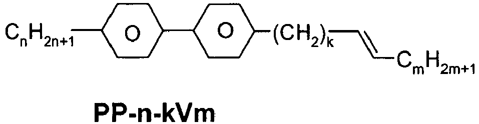 | |
| 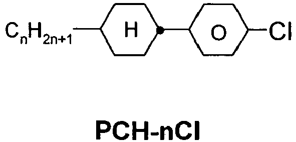 | 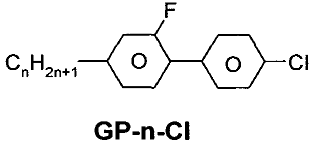 |
| 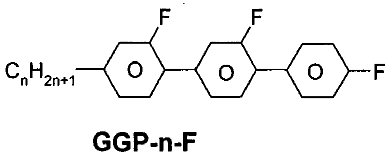 | 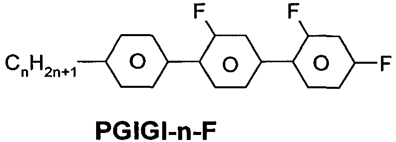 |
| 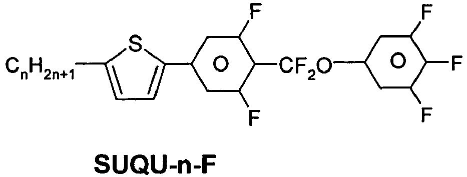 | |
| 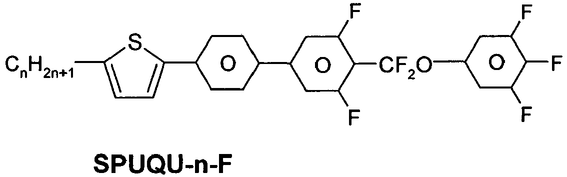 | |

In einer bevorzugten Ausführungsform der vorliegenden Erfindung enthalten die erfindungsgemäßen LC-Medien eine oder mehrere Verbindungen ausgewählt aus der Gruppe bestehend aus Verbindungen der Tabelle A und B.

**Tabelle C**

| In der Tabelle C werden mögliche chirale Dotierstoffe angegeben, die den erfindungsgemäßen FK-Medien zugesetzt werden können. | |
|---|---|
| 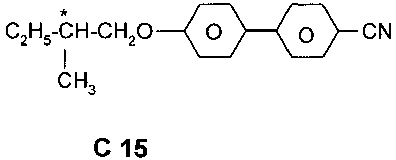 | 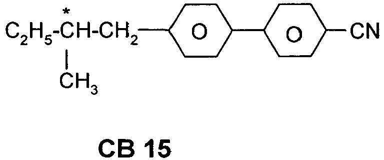 |
| 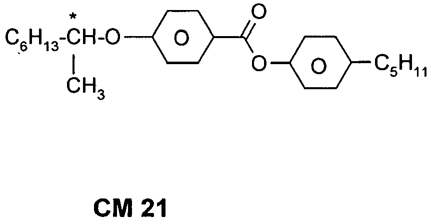 | 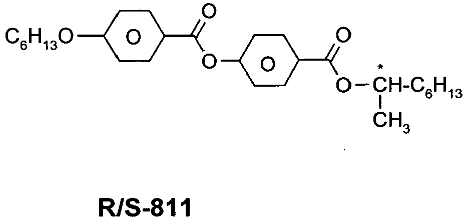 |
| 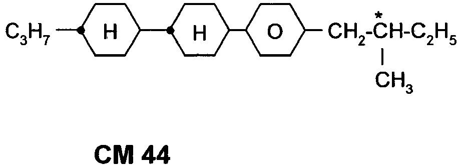 | 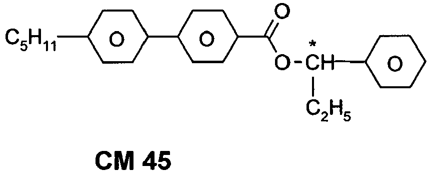 |
| 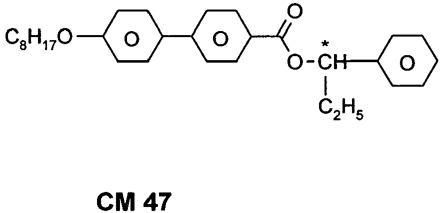 | 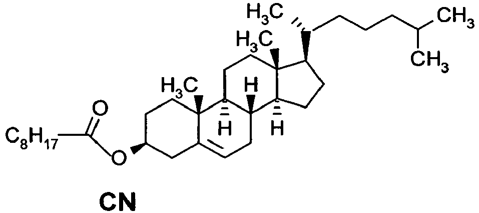 |
| 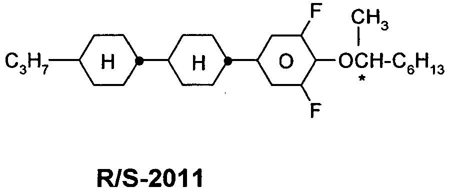 | 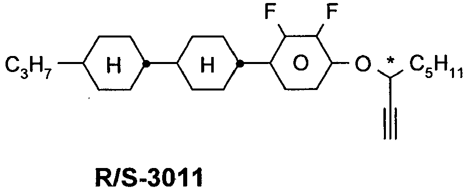 |
| 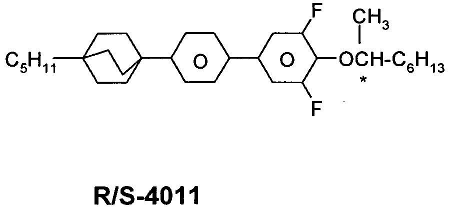 | 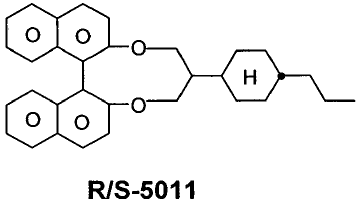 |
| 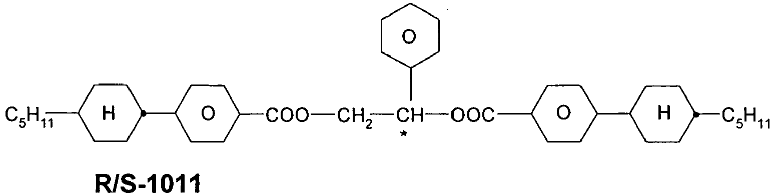 | |

Optional enthalten die FK-Medien 0 bis 10 Gew.-%, insbesondere 0,01 bis 5 Gew.-%, besonders bevorzugt 0,1 bis 3 Gew.-% an Dotierstoffen, vorzugsweise ausgewählt aus der Gruppe bestehend aus Verbindungen der Tabelle C.

**Tabelle D**

| In der Tabelle D werden mögliche Stabilisatoren angegeben, die den erfindungsgemäßen FK-Medien zugesetzt werden können. (n bedeutet hier eine ganze Zahl von 1 bis 12, vorzugsweise 1, 2, 3, 4, 5, 6, 7 oder 8, endständige Methylgruppen sind nicht gezeigt). | |
|---|---|
| 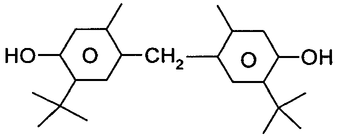 | 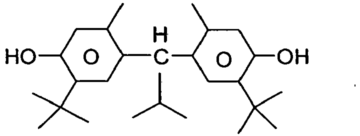 |
| 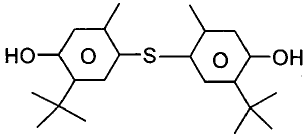 | 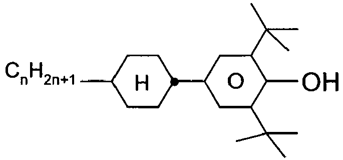 |
| 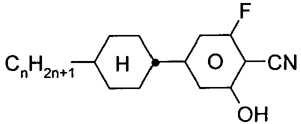 | 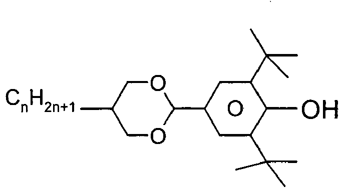 |
| 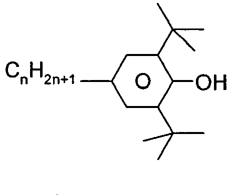 | 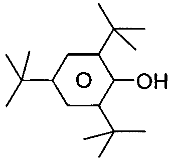 |
| 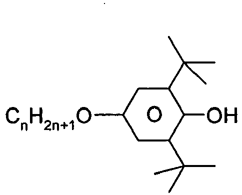 | 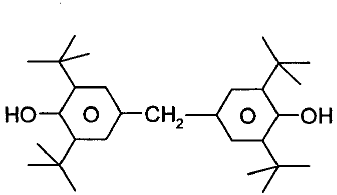 |
| 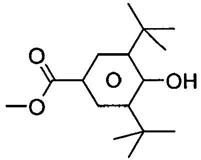 | 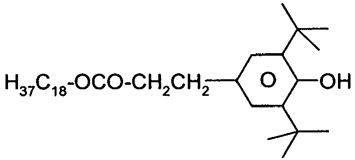 |
| 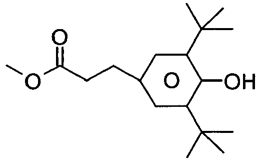 | 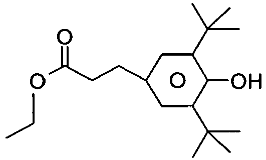 |
| 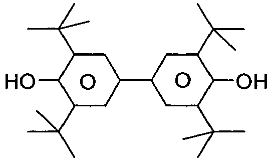 | 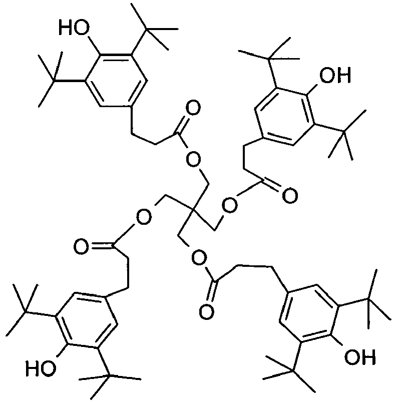 |
| 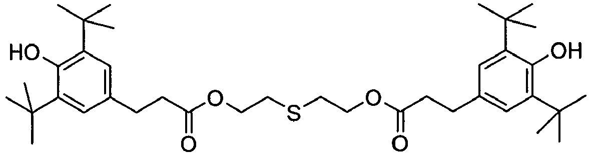 | |
| 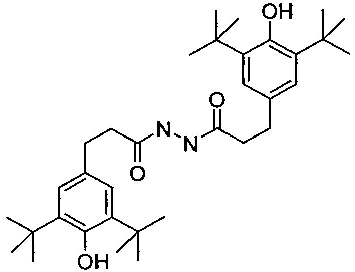 | 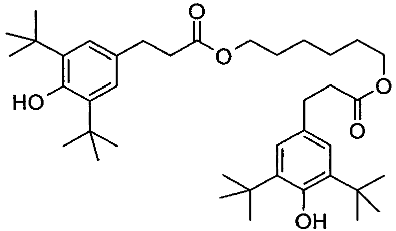 |
| 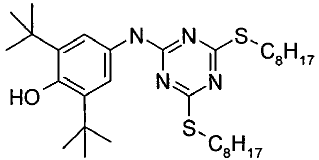 | 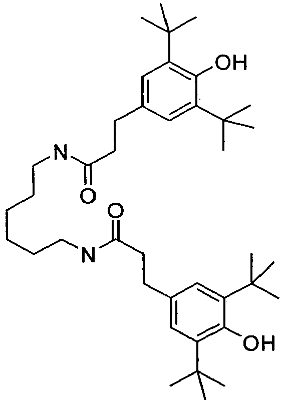 |
| 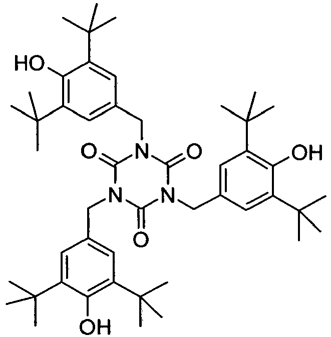 | 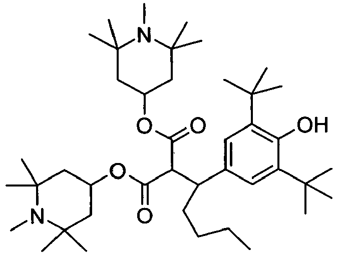 |
| 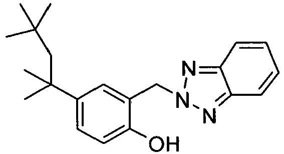 | 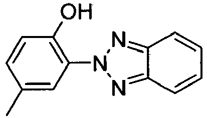 |
| 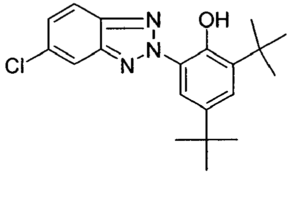 | 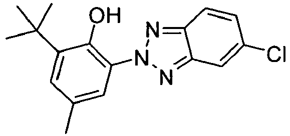 |
| 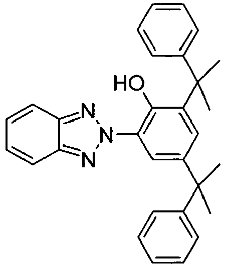 | 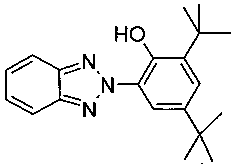 |
| 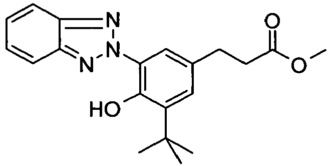 | 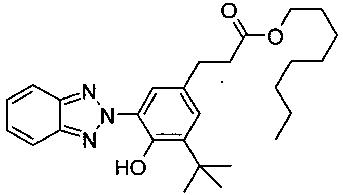 |
| 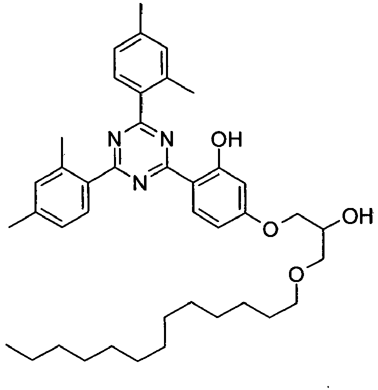 | 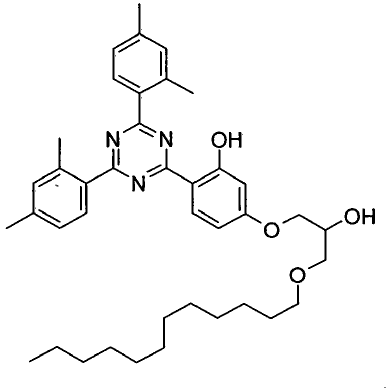 |
| 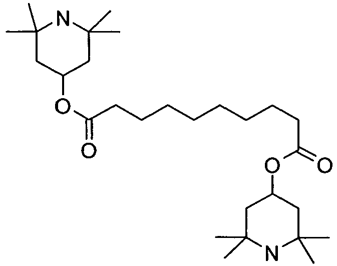 | 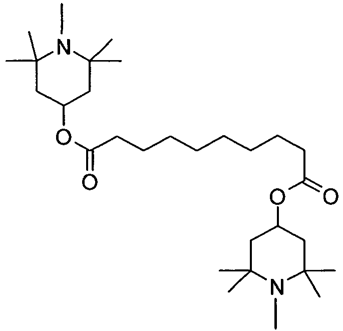 |

Vorzugsweise enthalten die FK-Medien 0 bis 10 Gew.-%, insbesondere 1 ppm bis 5 Gew.-%, besonders bevorzugt 1ppm bis 1 Gew.-% an Stabilisatoren. Vorzugsweise enthalten die FK-Medien einen oder mehrere Stabilisatoren ausgewählt aus der Gruppe bestehend aus Verbindungen der Tabelle D.

**Tabelle E**

| In der Tabelle E sind Beispielverbindungen zusammengestellt, die in den FK-Medien gemäß der vorliegenden Erfindung vorzugsweise als polymerisierbare Verbindungen verwendet werden können. |
|---|
| 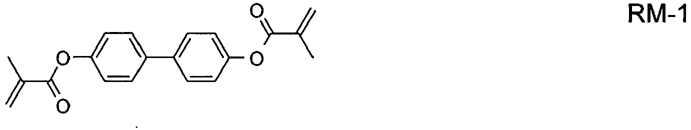 |
| 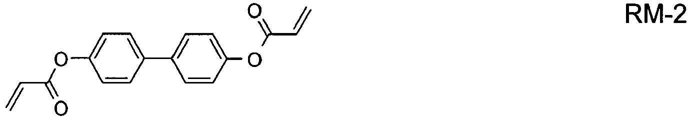 |
| 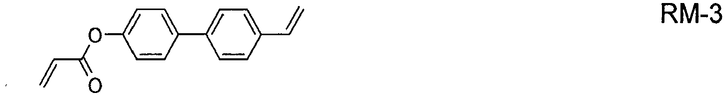 |
| 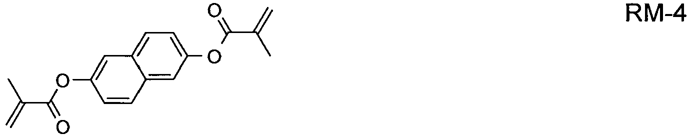 |
| 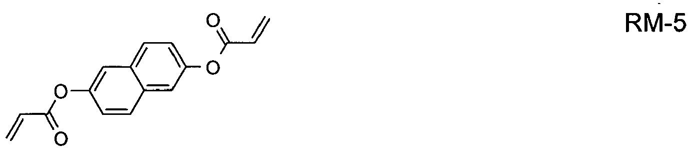 |
| 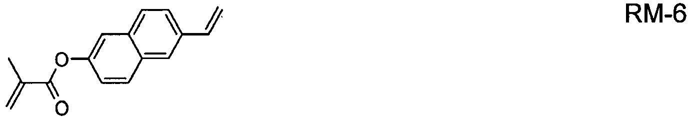 |
| 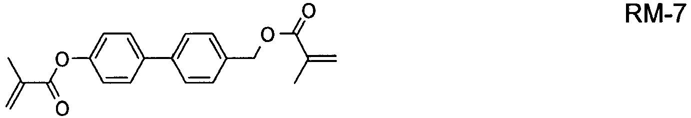 |
| 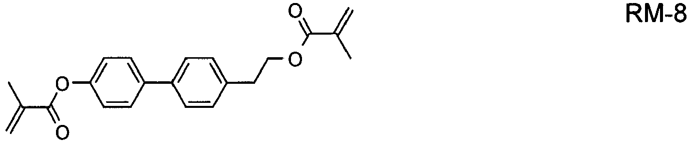 |
| 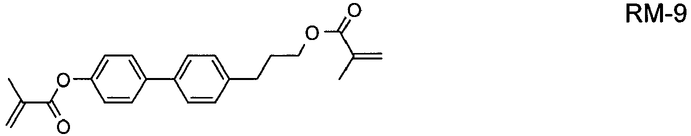 |
| 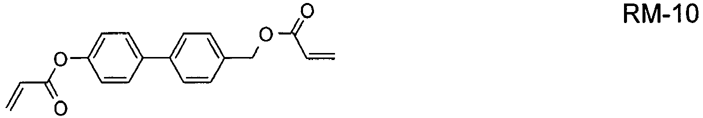 |
| 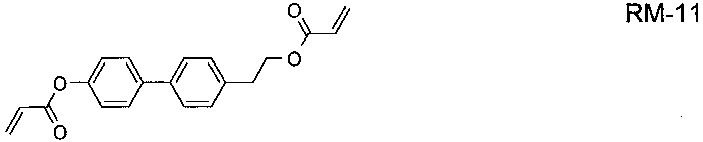 |
| 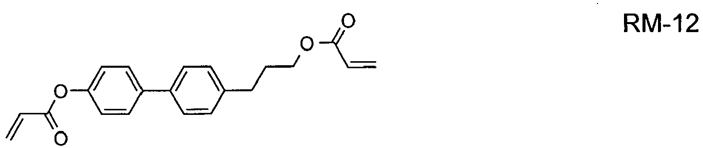 |
| 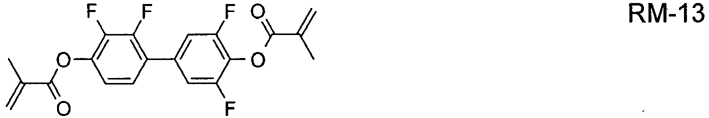 |
| 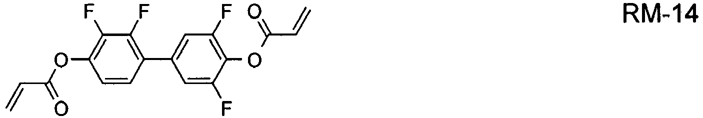 |
| 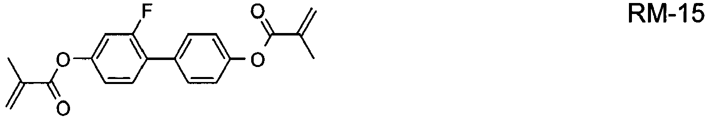 |
| 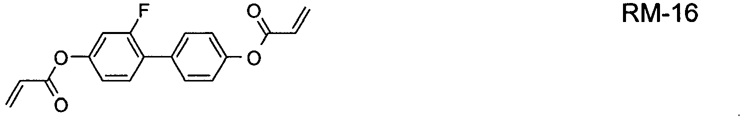 |
| 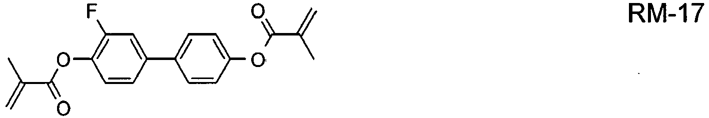 |
| 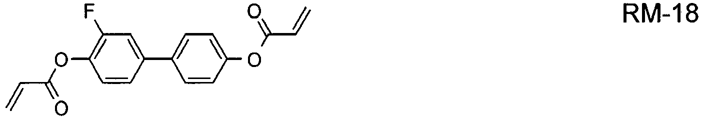 |
| 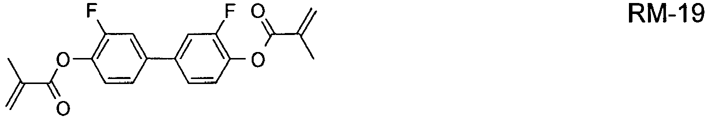 |
| 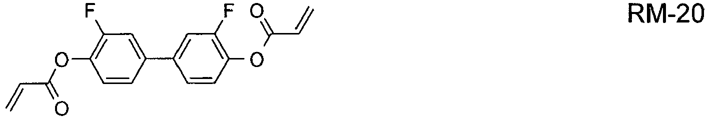 |
| 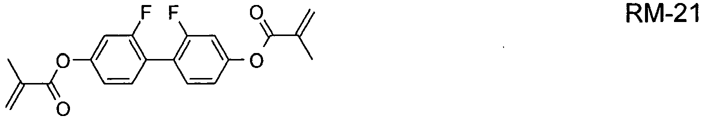 |
| 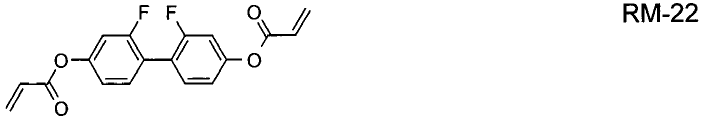 |
| 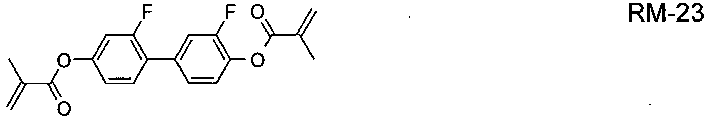 |
| 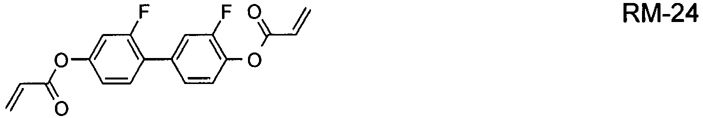 |
| 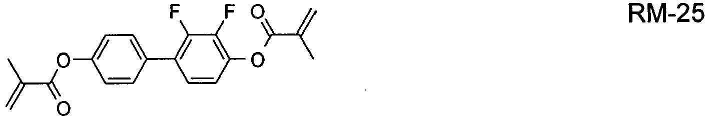 |
| 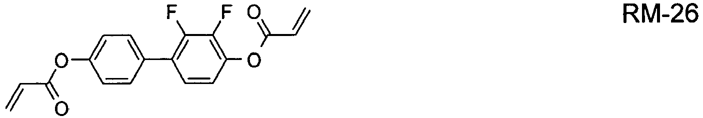 |
| 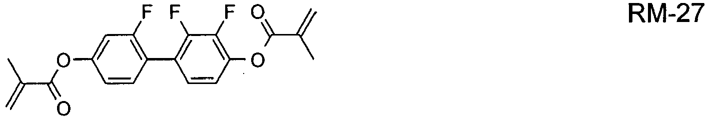 |
| 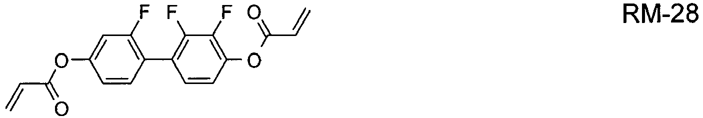 |
| 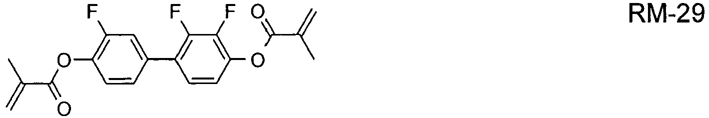 |
| 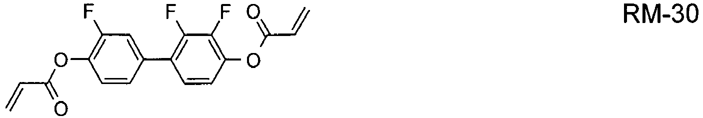 |
| 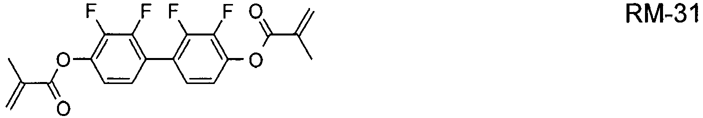 |
| 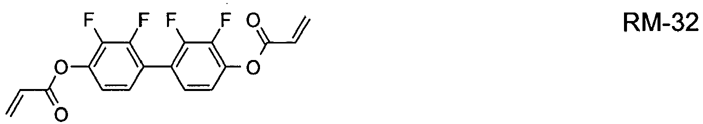 |
| 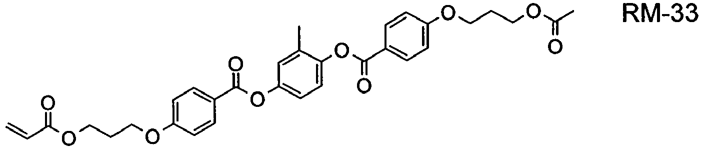 |
| 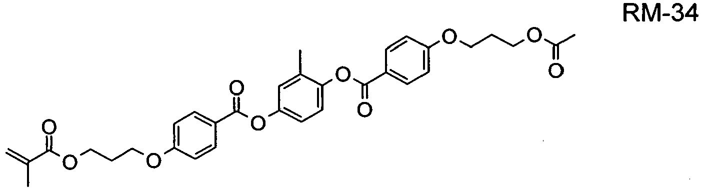 |
| 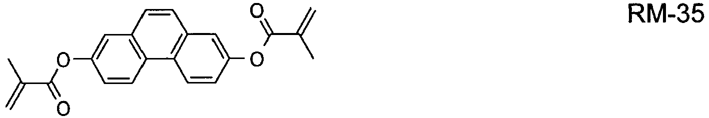 |
| 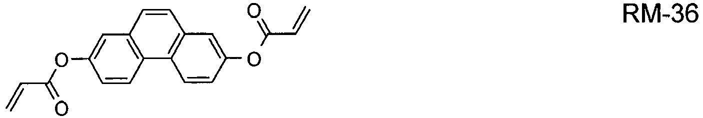 |
| 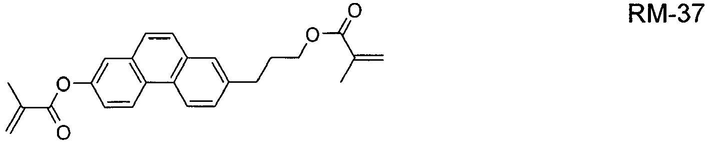 |
| 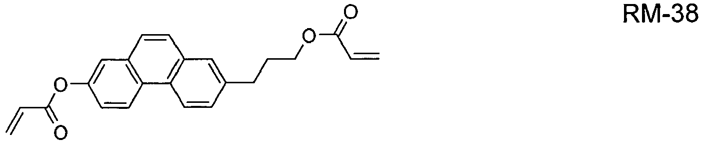 |
| 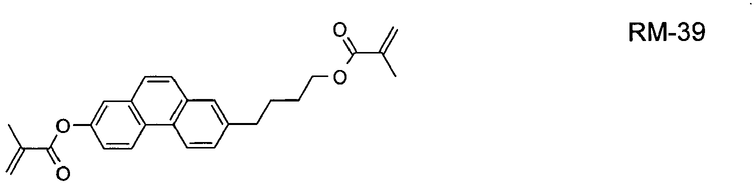 |
| 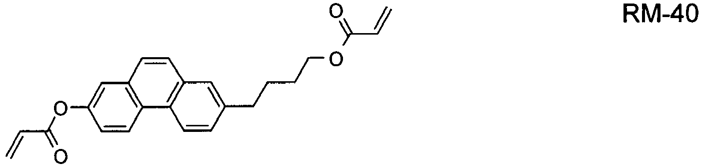 |
| 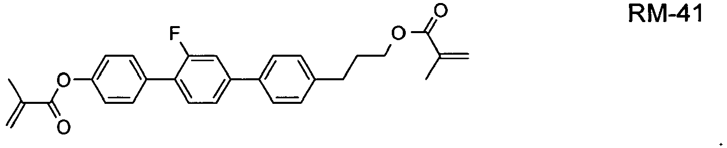 |
| 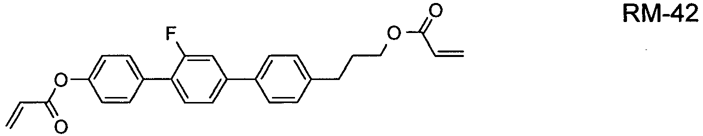 |
| 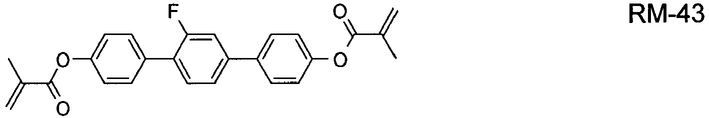 |
| 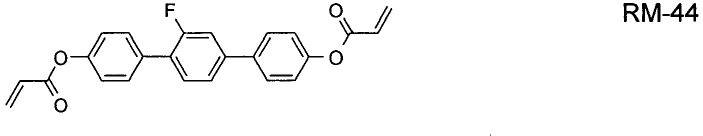 |
| 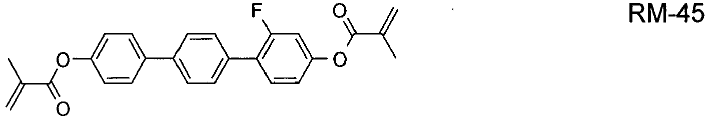 |
| 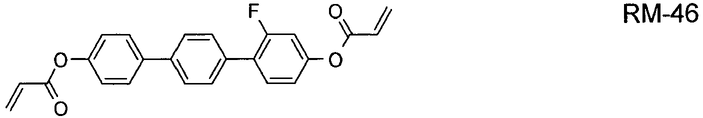 |
| 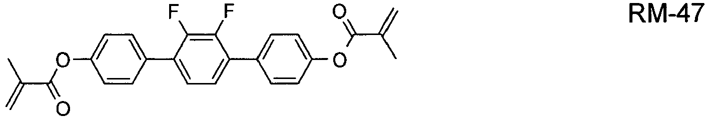 |
| 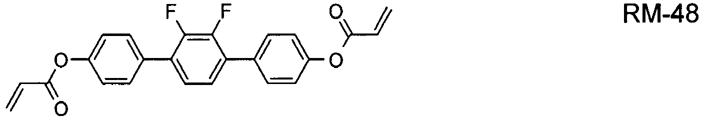 |
| 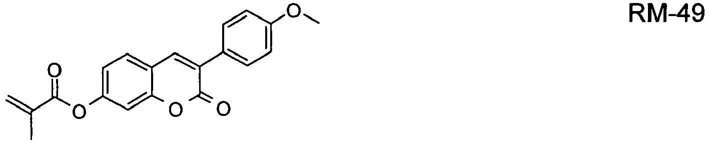 |
| 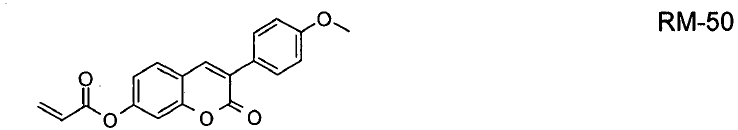 |
| 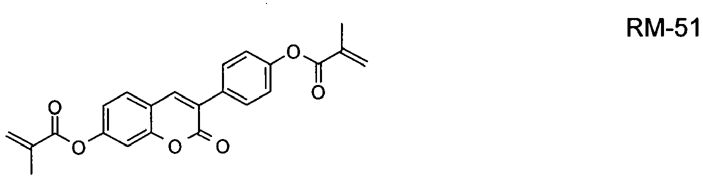 |
| 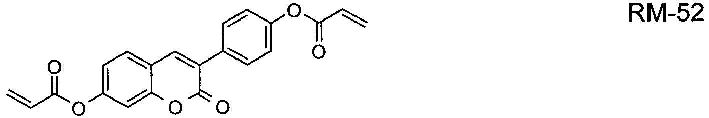 |
| 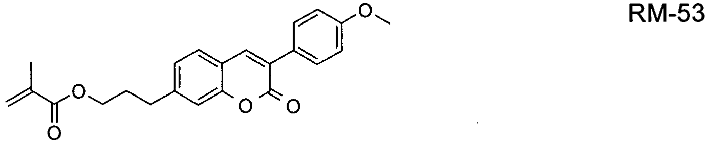 |
| 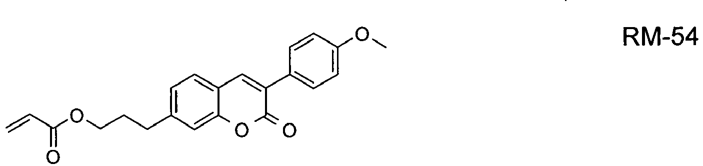 |
| 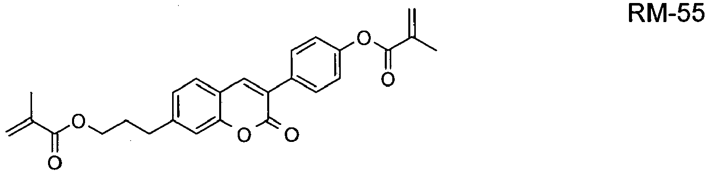 |
| 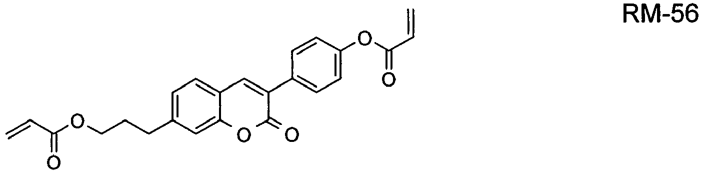 |
| 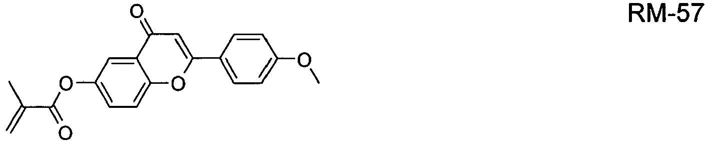 |
| 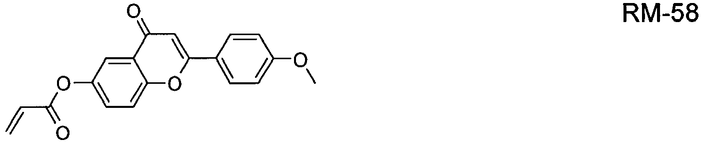 |
| 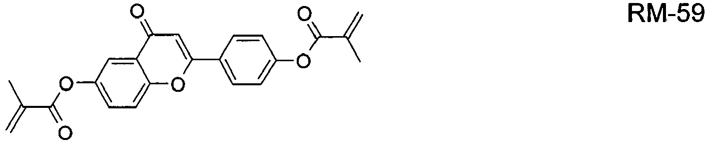 |
| 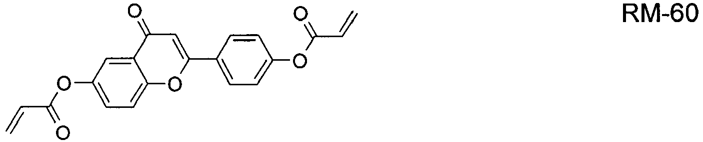 |
| 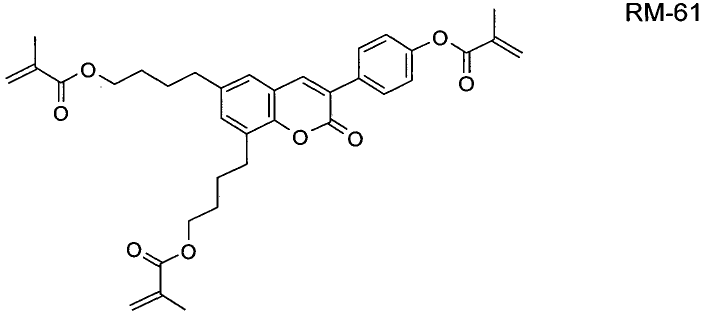 |
| 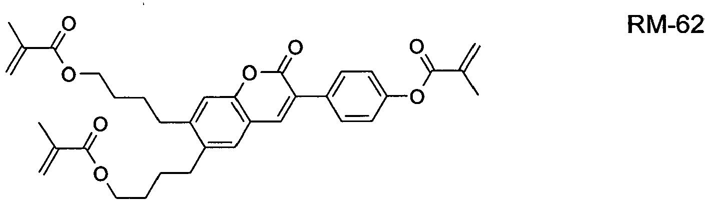 |
| 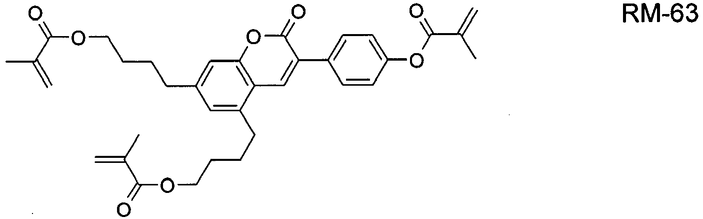 |
| 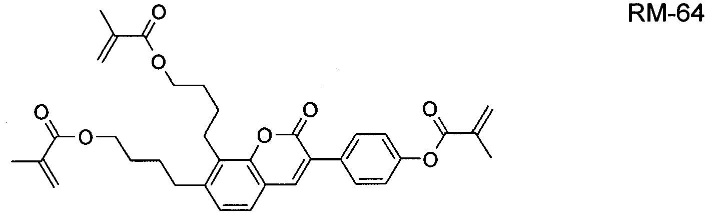 |
| 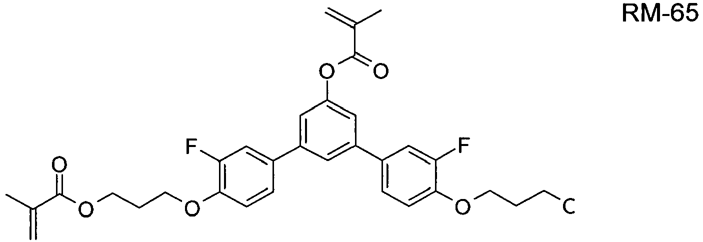 |
| 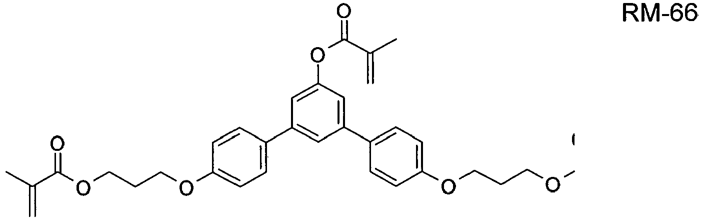 |
| 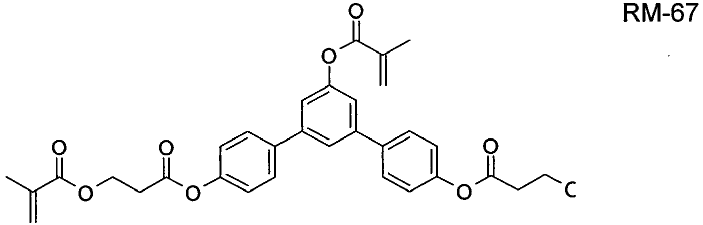 |
| 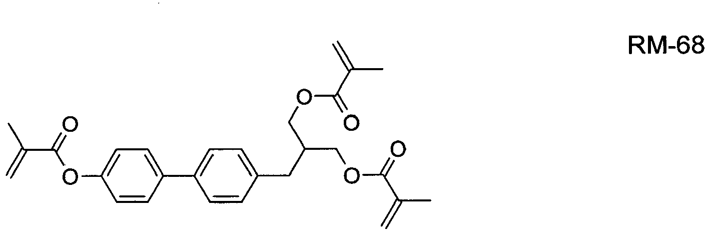 |
| 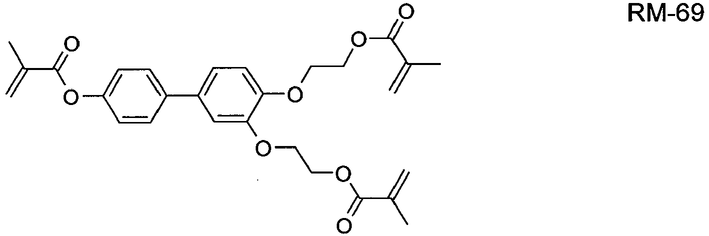 |
| 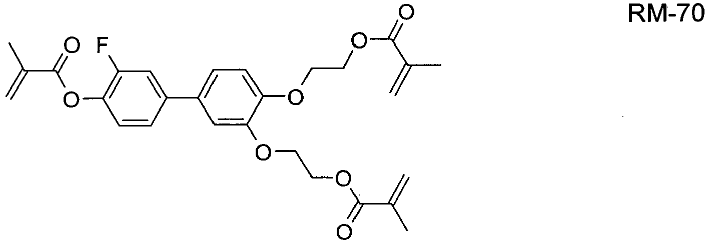 |
| 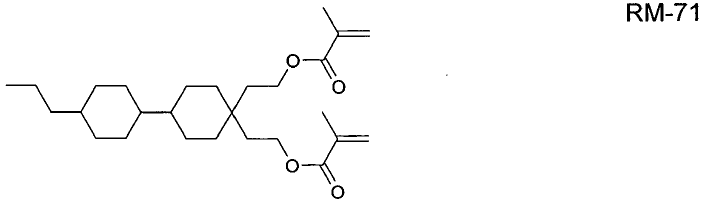 |
| 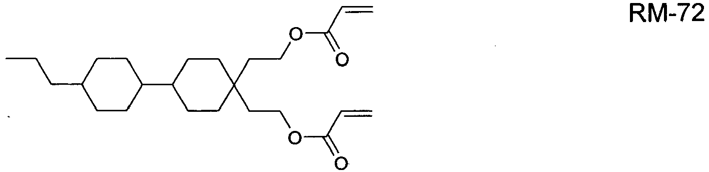 |
| 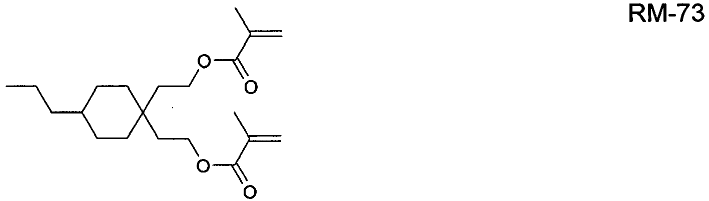 |
| 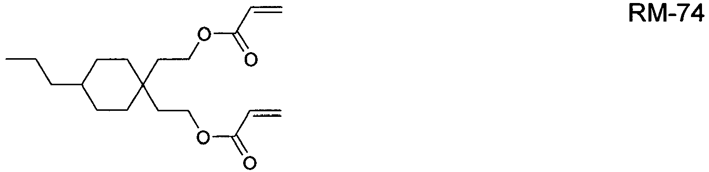 |
| 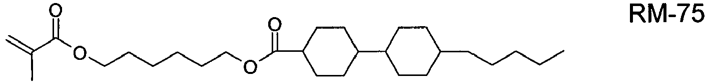 |
| 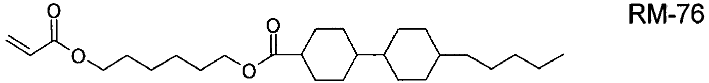 |
| 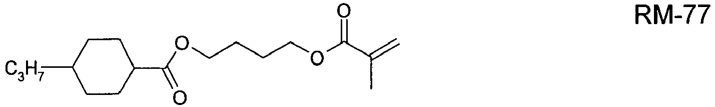 |
| 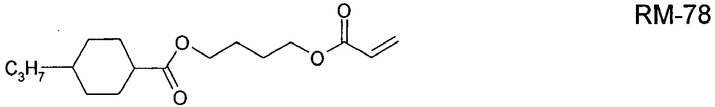 |
| 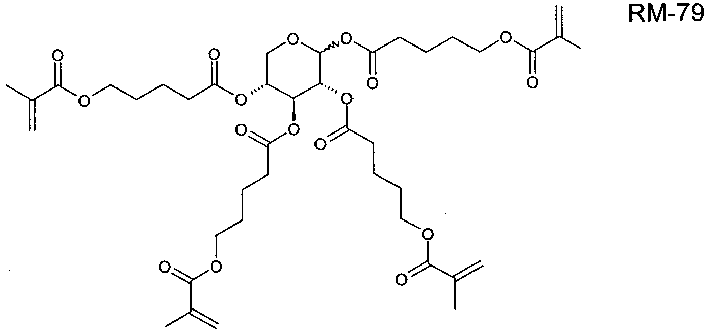 |
| 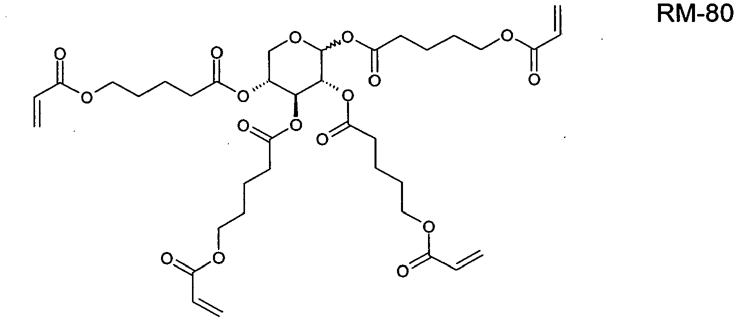 |
| 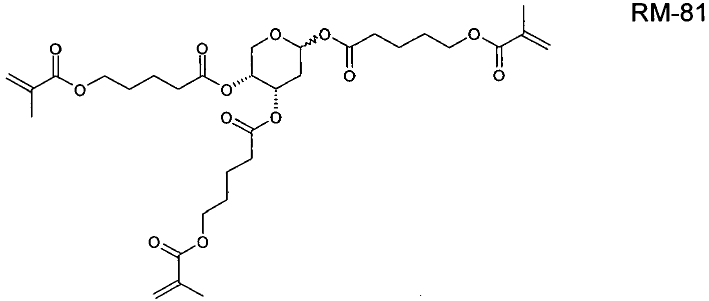 |
| 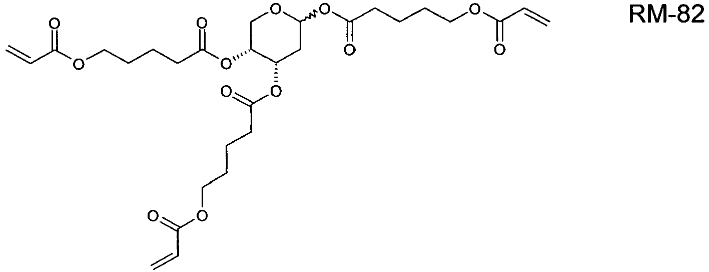 |
| 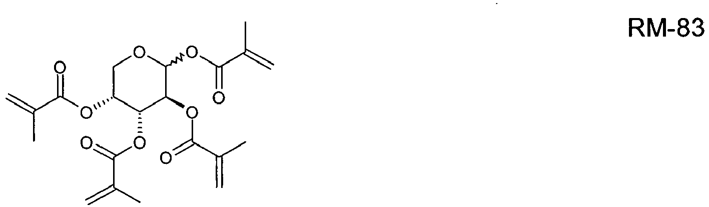 |
| 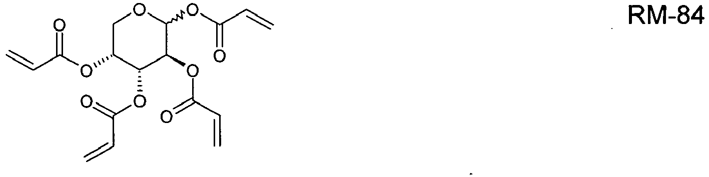 |

In einer bevorzugten Ausführungsform der vorliegenden Erfindung enthalten die mesogenen Medien eine oder mehrere Verbindungen ausgewählt aus der Gruppe der Verbindungen der Tabelle E.

**Tabelle F**

| In der Tabelle F sind Beispielverbindungen zusammengestellt, die in den FK-Medien gemäß der vorliegenden Erfindung vorzugsweise als nicht polymerisierbare Selbstorientierungsadditive eingesetzt werden können. |
|---|
| 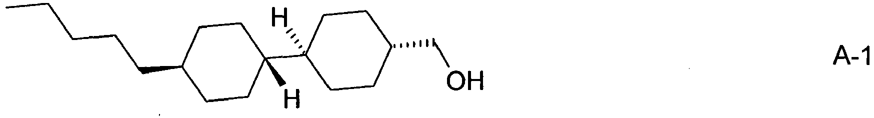 |
| 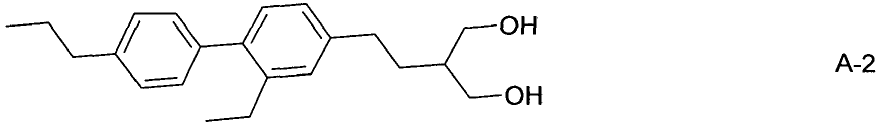 |
| 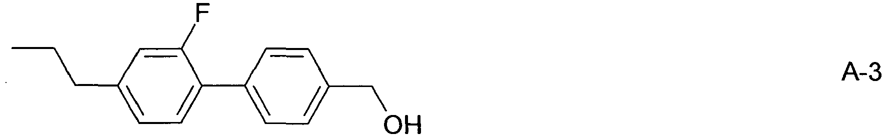 |
| 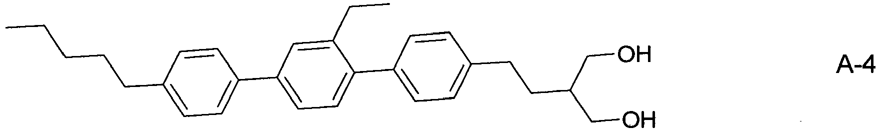 |
| 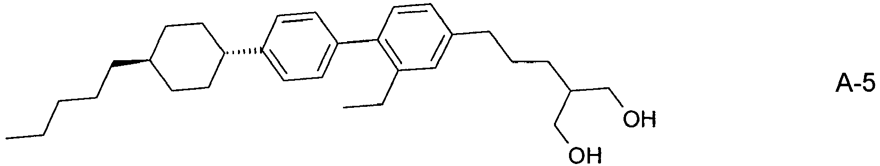 |
| 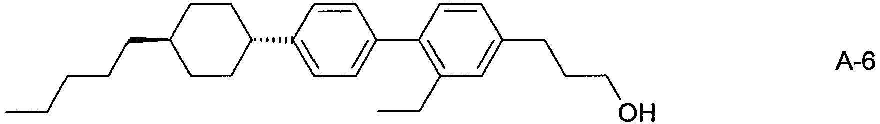 |
| 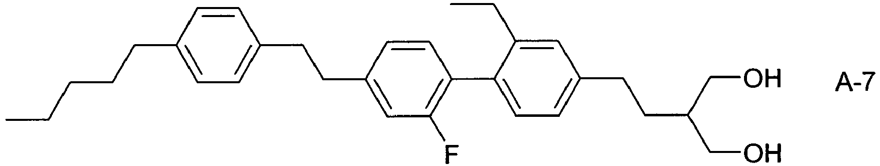 |
| 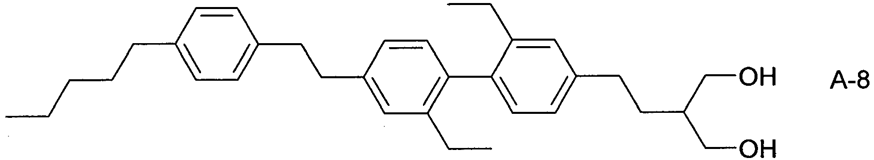 |

In der vorliegenden Anmeldung bedeutet der Begriff "Verbindungen", auch geschrieben als "Verbindung(en)", sofern nicht explizit anders angegeben, sowohl eine als auch mehrere Verbindungen. Umgekehrt schließt der Begriff "Verbindung" generell auch mehrere Verbindungen ein, sofern dies laut Definition möglich und nicht anders angegeben ist. Gleiches gilt für die Begriffe FK-Medien und FK-Medium. Der Begriff "Komponente" umfasst jeweils eine oder mehrere Stoffe, Verbindungen und/oder Teilchen.

Außerdem werden folgende Abkürzungen und Symbole verwendet:
- nₑ: außerordentlicher Brechungsindex bei 20°C und 589 nm,
- nₒ: ordentlicher Brechungsindex bei 20°C und 589 nm,
- Δn: optische Anisotropie bei 20°C und 589 nm,
- ε⊥: dielektrische Permittivität senkrecht zum Direktor bei 20°C und 1 kHz,
- ε||: dielektrische Permittivität parallel zum Direktor bei 20°C und 1 kHz,
- Δε: dielektrische Anisotropie bei 20°C und 1 kHz,
- Kp., T(N,I): Klärpunkt [°C],
- γ₁: Rotationsviskosität bei 20°C [mPa·s],
- K₁: elastische Konstante, "splay"-Deformation bei 20°C [pN],
- K₂: elastische Konstante, "twist"-Deformation bei 20°C [pN],
- K₃: elastische Konstante, "bend"-Deformation bei 20°C [pN],
- V₀: Kapazitive Schwelle (Freedericks Schwelle) bei 20°C [V].

Soweit nicht explizit anders vermerkt, sind in der vorliegenden Anmeldung alle Konzentrationen in Gewichtsprozent angegeben und beziehen sich auf die entsprechende Gesamtmischung, enthaltend alle festen oder flüssigkristallinen Komponenten, ohne Lösungsmittel.

Alle physikalischen Eigenschaften werden und wurden nach "Merck Liquid Crystals, Physical Properties of Liquid Crystals", Status Nov. 1997, Merck KGaA, Deutschland bestimmt und gelten für eine Temperatur von 20°C und Δn wird bei 589 nm und Δε bei 1 kHz bestimmt, sofern nicht jeweils explizit anders angegeben.

Die polymerisierbaren Verbindungen werden in der Anzeige bzw. Testzelle durch Bestrahlung mit UVA-Licht (üblicherweise 365nm) einer definierten Intensität für eine vorgegebene Zeit polymerisiert, wobei optional gleichzeitig eine Spannung an die Anzeige angelegt wird (üblicherweise 10 bis 30 V Wechselstrom, 1 kHz). In den Beispielen wird, falls nicht anders angegeben, eine Quecksilberdampflampe mit 100 mW/cm² verwendet, die Intensität wird mit einem Standard-UV-Meter (Fabrikat Ushio UNI meter) gemessen, der mit einem Bandpassfilter bei 320 nm (optional 340 nm) ausgerüstet ist.

Die folgenden Beispiele erläutern die vorliegende Erfindung, ohne sie in irgendeiner Weise beschränken zu sollen. Aus den physikalischen Eigenschaften wird dem Fachmann jedoch deutlich, welche Eigenschaften zu erzielen sind und in welchen Bereichen sie modifizierbar sind. Insbesondere ist also die Kombination der verschiedenen Eigenschaften, die vorzugsweise erreicht werden können, für den Fachmann gut definiert.

Weitere Kombinationen der Ausführungsformen und Varianten der Erfindung gemäß der Beschreibung ergeben sich auch aus den Ansprüchen.

### Beispiele

Die eingesetzten Verbindungen, soweit nicht kommerziell erhältlich, werden nach Standard-Laborvorschriften synthetisiert. Die FK-Medien stammen von der Merck KGaA, Deutschland.

### A) Synthesebeispiele

### Beispiel 1

### Synthese von 2-Methyl-acrylic acid 2-[2'-ethyl-4-(2-hydroxy-ethoxy)-4"-pentyl-[1,1';4',1"]terphenyl-3-yl]-ethyl ester 1

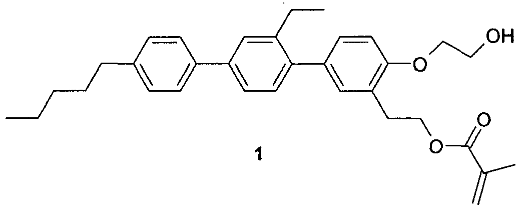

### 1) Synthese von 4'-Bromo-2'-ethyl-biphenyl-4-ol A

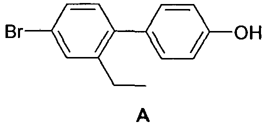

110.3 g (1.04 mol) Na₂CO₃ werden mit 223 ml Wasser versetzt und es werden 154 g (0.49 mol) 4-Brom-2-Ethyl-1-lodbenzol, 75.1 g (0.54 mol) 4-Hydroxyphenylboronsäure und 850 ml 1,4-Dioxan zugesetzt und die Mischung entgast. Es wird mit 14.5 g (19.8 mmol) Bis(1,1-Diphenyl-phosphinoferocen-Palladium(ll)-Chlorid versetzt und für 18 h bei 80°C gerührt. Nach vollständiger Umsetzung (Dünschschichtchromatographiekontrolle mit Heptan / Essigester 1:1) wird das Reaktionsgemisch auf Raumtemperatur abgekühlt mit Wasser und Methyl-Tertbutylether verdünnt und mit 2 N HCl auf pH 1-2 angesäuert. Die Phasen werden getrennt und die Wasserphase mit Methyl-Tertbutylether extrahiert und die vereinigten organischen Phasen über Na₂SO₄ getrocknet, filtriert und unter Vakuum eingeengt. Das erhaltene Rohprodukt wird mit Heptan / Essigester (8:2) über Kieselgel gefrittet und man erhält 96 g des Produktes **A** als ein braunes Öl.

### 2) Synthese von 2'-Ethyt-4"-pentyl-[1,1';4',1"]terphenyl-4-ol B

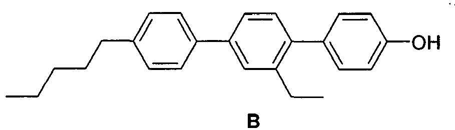

102 g (514 mmol) 4-Pentylphenylboronsäure und 135 g (467 mmol) Bromid **A** werden in einem Gemisch aus 743 ml Toluol, 270 ml Ethanol und 350 ml 2 N Na₂CO₂ gelöst und entgast. Es wird mit 8.1 g (7.0 mmol) Tetrakis(Triphenylphosphin)Palladium versetzt und für 18 h refluxiert. nach vollständiger Reaktion wird das Reaktionsgemisch auf Raumtemperatur abgekühlt, die Wasserphase abgetrennt, die organische Phase mit Methyl-Tertbutylether (MTB-Ether) gewaschen und die vereinigten organischen Phasen über Na₂SO₄ getrocknet, filtriert und unter Vakuum eingeengt. Das Rohprodukt wird mit Dichlormethan über Kieselgel gefrittet und die Produktfraktionen aus Heptan umkristallisiert und man erhält 76.9 g des Produktes als farblose Kristalle.
¹H NMR (500 MHz, DMSO-d6)
δ = 0.89 ppm (t, 6.88 Hz, 3H, CH₃), 1.08 (t, 7.51 Hz, 3H, CH₃), 1.31 (m_{c}, 4H, CH₂), 1.61 (q, 7.58 Hz, 2H, CH₂), 2.62 (q. überlagert mit t, 4H, CH₂ benzylisch), 6.83 (d, 8.5 Hz, 2H, arom-H), 7.13 (d, 8.5 Hz, 2H, arom-H), 7.17 (d, 7.9 Hz, 1H, arom-H), 7.28 (d, 8.2 Hz, 2H, arom-H), 7.46 (dd, 7.93, 1.97 Hz, 1H, arom.-H), 7.54 (d, 1.88 Hz, 1H, arom.-H), 7.59 (d, 8.17 Hz, 2H, arom.-H), 9.44 (s, 1H, arom.-OH).

### 3) Synthese von 3-Bromo-2'-ethyl-4"-pentyl-[1,1';4',1"]terphenyl-4-ol C

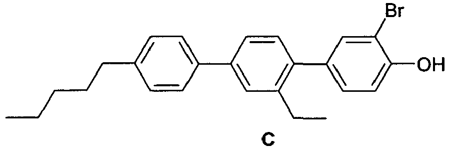

30.0 g (85.9 mmol) Alkohol **B** wird in 1100 ml Dichlormethan gelöst und auf - 48°C gekühlt und bei dieser Temperatur mit 5.28 ml (103 mmol) Brom in 1100 ml Dichlormethan langsam innerhalb von 40 min versetzt. Es wird bei dieser Temperatur für 1 h nachgerührt und via Dünnschichtchromatographiekontrolle kontrolliert (Toluol). Das überschüssige Brom wird mit gesättigter NaHSO₃-Lösung reduziert und die Phasen werden getrennt. Die wässrige Phase wird mit Dichlormethan extrahiert und die vereinigten organischen Phasen werden über Na₂SO₄ getrocknet und unter Vakuum eingeengt. Das Rohprodukt wird mit Toluol über Kieselgel gefrittet und man erhält 35.3g des Produktes als weißen Feststoff.
¹H NMR (500 MHz, CDCl₃)
δ = 0.91 ppm (t, 6.99 Hz, 3H, CH₃), 1.15 (t, 7.53 Hz, 3H, CH₃), 1.36 (m_{c}, 4H, CH₂), 1.66 (m_{c}, 2H, CH₂), 2.65 (m_{c}, 4H, CH₂ benzylisch), 5.5 (s, 1H, arom-OH), 7.06 (d, 8.3 Hz, 1H, arom-H), 7.20 (dd, 8.28, 2.07 Hz überlagert mit d 7.85 Hz, 2H, arom-H), 7.26 (d, 8.1 Hz, 2H, arom-H), 7.43 (dd, 7.87, 1.87 Hz, 2H, arom-H), 7.46 (d, 2.01 Hz, 1H, arom.-H), 7.503 (d, 1.71 Hz, 1H, arom.-H), 7.54 (d, 8.1 Hz, 2H, arom.-H.

### 4) Synthese von [2-(3-Bromo-2'-ethyl-4"-pentyl-[1,1';4',1"]terphenyl-4-yloxy)-ethoxy]-tert-butyl-dimethyl-silane D

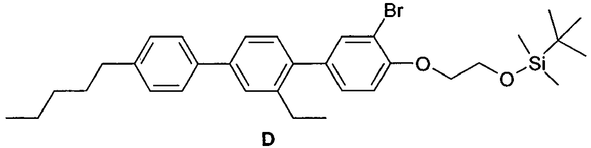

2.9 g (71.7 mmol) NaH (60%ige Suspension in Paraffinöl) wurden in 93 ml Dimethylformamid (DMF) vorgelegt und unter Rühren auf 2°C gekühlt und mit einer Lösung aus Alkohol **C** in DMF langsam versetzt so dass die Temperatur 12°C nicht übersteigt. Nach vollständiger Zugabe wurde auf Raumtemperatur (RT) ansteigen gelassen und 2 h nachgerührt (gelbliche Lösung). Es wurde nun mit 17.2 g (71.7 mmol) (2-Bromoethoxy)-tert-Butyldimethylsilan gelöst in DMF langsam versetzt und für 18 h bei 50°C gerührt. Die Reaktionslösung wird vorsichtig auf Eiswasser gegeben und mit MTB-Ether extrahiert. Die vereinigten organischen Phasen werden mit Wasser gewaschen, über Na₂SO₄ getrocknet, filtriert und unter Vakuum eingeengt. Das erhaltene Rohprodukt wird mit Toluol über Kieselgel gefrittet und die Produktfraktionen unter Vakuum eingeengt. Man erhält 27.9 g des gewünschten Produktes. MS (El): 582.4 [M⁺]
¹H NMR (500 MHz, CDCl₃)
δ = 0.00 ppm (s, 6H, Si-CH₃), 0.78 (s, 12H, Si-C(CH₃)₃), 1.01 (t, 7.52 Hz, CH₃), 1.23 (m_{c}, 4H, CH₂), 1.52 (m_{c}, 2H, CH₂), 2.51 (m_{c}, 4H, CH₂ benzylisch), 3.91 (t, 5.24 Hz, 2H, CH₂O), 4.02 (t, 5.24 Hz, 2H CH₂O), 6.84 (d, 8.45 Hz, 1H, arom-H), 7.08 (dd, 8.37, 2.33 Hz überlagert mit d 7.66 Hz, 2H, arom-H), 7.12 (d, 8.2 Hz, 2H, arom-H), 7.29 (dd, 7.86, 1.9 Hz, 2H, arom-H) 7.36 (d, 1.79 Hz, 1H, arom.-H), 7.41 (d, 8.12 Hz überlagert mit d, 2.15 Hz, 3H, arom.-H).

### 5) Synthese von 2-{4-[2-(tert-Butyl-dimethyl-silanyloxy)-ethoxy]-2'-ethyl -4"-pentyl-[1,1';4',1"]terphenyl-3-yl}-ethanol E

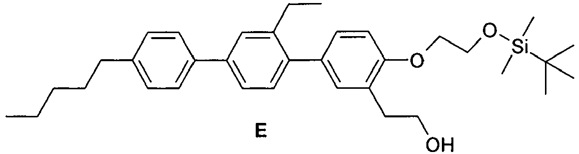

8.5 g (14 mmol) von Bromid **D** werden in 41 ml Tetrahydrofuran (THF) gelöst und auf-78°C gekühlt und langsam mit 10.6 ml (17 mmol) Butyllithium (1.6 molare Lösung in THF) versetzt. anschließend wird mit 6.23 ml (16 mmol) Ethylenoxid (2.5-3.3 molar in THF) versetzt und für 30 min. nachgerührt. Es wird nun bei -78°C langsam mit 2.13 ml (17 mmol) Bortrifluorid-Diethylether Komplex in 10 ml gekühltem THF versetzt (exotherm) und für 2h bei dieser Temperatur gerührt. Die Reaktionslösung wird anschließend innerhalb von 2 h auf Raumtemperatur (RT) erwärmen gelassen und auf Eiswasser gegossen. Es wird mit MTB-Ether extrahiert und die organische Phase über Na₂SO₄ getrocknet, filtriert und unter Vakuum eingeengt. Das erhaltene Rohprodukt wird über Kieselgel mit Heptan / Essigester (H / EE) 9:1 und anschließend mit H / EE (4:1) gereinigt und die Produktfraktionen unter Vakuum eingeengt. Man erhält 3.61g des Produktes als Öl.
MS (El): 546.4 [M⁺]
¹H NMR (500 MHz, CDCl₃)
δ = 0.00 ppm (s, 6H, Si-CH₃), 0.81 (s, 12H, Si-C(CH₃)₃), 1.03 (t, 7.53 Hz, CH₃), 1.24 (m_{c}, 4H, CH₂), 1.54 (m_{c}, 2H, CH₂), 1.73(t, 6.25 Hz, 1H, OH), 2.54 (m_{c}, 4H, CH₂ benzylisch), 2.85 (t, 6.3 Hz, 2H, CH₂-O), 3.76 (q, 6.15 Hz, 2H, CH2-OH) 3.88 (t, 5.18 Hz, 2H, CH₂O), 3.99 (t, 5.18 Hz, 2H CH₂O), 6.81 (d, 8.26 Hz, 1H, arom-H), 7.01-7.08 (m 2H, arom-H), 7.10-7.16 (d überlagert mit Singulett, 3H, arom-H), 7.30 (dd, 7.86, 1.92 Hz, 2H, arom-H), 7.38 (d, 1.8 Hz, 1H, arom.-H), 7.42 (d, 8.14, 2H, arom.-H).

### 6) Synthese von 2-Methyl-acrylic acid 2-{4-[2-(tert-butyl-dimethyl-silanyloxy)-ethoxy]-2'-ethyl-4"-pentyl-[1,1';4',1"]terphenyl-3-yl}-ethyl ester F

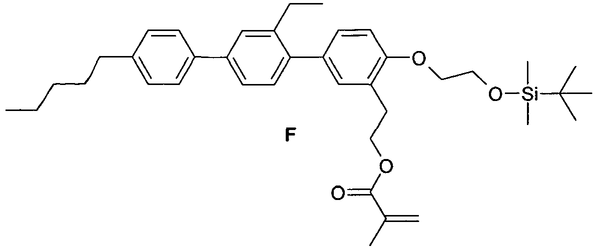

8.50 g (15.5 mmol) an Alkohol **E,** 1.84 ml (21.8 mmol) Methacrylsäure und 0.19 g (1.55 mmol) 4-(Dimethylamino)-pyridin werden in 100 ml Dichlormethan gelöst und auf 5°C gekühlt. Es wird langsam mit 3.37 g (21.8 mmol) 4-N-(3-Dimethylaminopropyl)-N'-ethylcarbodiimidhydrochlorid gelöst in 40 ml Dichlormethan versetzt und für 72 h bei Raumtemperatur gerührt. Das Reaktionsgemisch wird mit Dichlormethan verdünnt und über Kieselgel filtriert und die Produktfraktionen unter Vakuum bei max. 30°C eingeengt. Man erhält 7.5 g des Produktes als klares Öl.
MS (El): 614.5 [M⁺]
¹H NMR (500 MHz, CDCl₃)
δ = 0.00 ppm (s, 6H, Si-CH₃), 0.81 (s, 12H, Si-C(CH₃)₃), 1.02(t, 7.49 Hz, CH₃), 1.24 (m_{c}, 4H, CH₂), 1.55 (m_{c}, 2H, CH₂), 1.79 (s, 3H, CH₃), 2.53 (m_{c}, 4H, CH₂ benzylisch), 2.95 (t, 6.89 Hz, 2H, CH₂-O), 3.89 (t, 5.11 Hz, 2H, CH₂O), 3.99 (t, 5.14 Hz, 2H CH₂O), 4.28 (t, 6.94, 2H, CH₂-O), 5.39 (s, 1H, Olefin-H), 5.95, (s, 1H, Olefin-H), 6.8 (d, 8.24 Hz, 1H, arom-H), 7.03-7.06 (m 2H, arom-H), 7.10 (d, 7.86 Hz, 1H, arom-H), 7.14 (d, 8.76 Hz, 2H, arom-H), 7.30 (dd, 7.86, 1.82 Hz, 2H, arom-H), 7.38 (d, 1.63 Hz, 1H, arom.-H), 7.43 (d, 8.07, 2H, arom.-H).

### 7) Synthese von 2-Methyl-acrylic acid 2-[2'-ethyl-4-(2-hydroxy-ethoxy)-4"-pentyl-[1,1';4',1 "]terphenyl-3-yl]-ethyl ester G

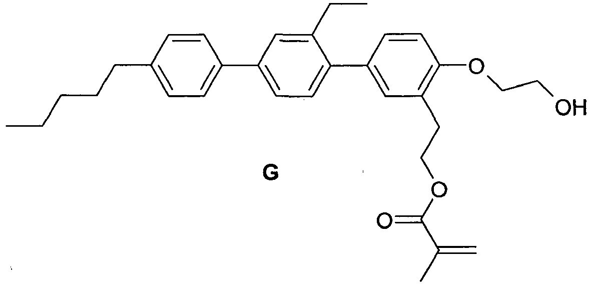

7.60 g (12.2 mmol) von Verbindung **F** werden in 150 ml THF gelöst und auf 2°C gekühlt. Es wird nun langsam mit 7.01 ml (14.0-mmol) HCl (2 N) versetzt und 1 h bei 2-4°C gerührt. Anschließend wird die Reaktionslösung innerhalb von 3 h auf RT erwärmen gelassen und vorsichtig mit NaHCO₃-Lösung auf pH 7 eingestellt. Es wird mit MTB-Ether extrahiert und die organischen Phasen über Na₂SO₄ getrocknet und unter Vakuum eingeengt. Das Rohprodukt wird mit Heptan / Ethylacetat (1:1) an Kieselgel gereinigt und die Produktfraktionen vereinigt und zweimal aus Acetonitril (1:4) bei -20°C umkristallisiert. Das erhaltene Produkt wurde bei 60°C an einer Kugelrohrdestillationsapparatur getrocknet (Entfernen von Acetonitril). Man erhält 3.2g des Produktes als weißen Feststoff.
Phasen: Tg -16 K 58 I
MS (EI) 500.3 [M⁺]
¹H NMR (500 MHz, CDCl₃)
δ = 0.91 ppm (t, 6.88 Hz, CH₃), 1.14 (t, 7.52Hz, 3H, CH₃), 1.37 (m_{c}, 4H, CH₂), 1.67 (m, 2H, CH₂), 1.04 (s, 3H, CH₃), 2.65 (m_{c}, 4H, CH₂ benzylisch), 3.04 (t, 7.74 Hz, 2H, CH₂-O), 3.19 (t, 6.81 Hz, 1H, OH), 4.03 (m_{c}, 2H, CH₂O), 4.15 (t, 4.02 Hz, 2H CH₂O), 4.42 (t, 7.5 Hz, 2H, CH₂-O), 5.56 (s, 1H, Olefin-H), 6.12, (s, 1H, Olefin-H), 6.91 (d, 8.32 Hz, 1H, arom-H), 7.30-7.13 (m 5H (überlagert mit CHCl₃), arom-H), 7.42 (dd, 7.87, 1.91 Hz, 1H, arom-H), 7.506 (d, 1.76 Hz, 1H, arom-H), 7.54 (d, 8.15 Hz, 2H, arom-H).

### Beispiel 2

### Synthese von 2-Methyl-acrylic acid 2'-ethyl-4"-(2-hydroxy-ethyl)-6"-(2-methyl-acryloytoxyl-4-pentyl-[1,1';4',1"]terphenyl-3"-yl ester 2

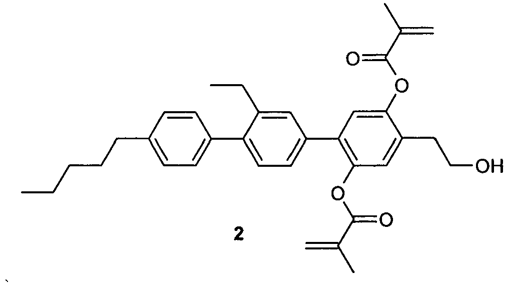

### 1) Synthese von 4-Bromo-2-ethyl-4'-pentyl-biphenyl A2

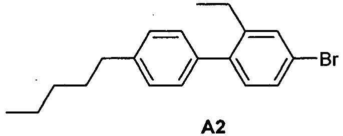

Es werden 45.0 g (234 mmol) 4-Pentylphenylboronsäure, 70.0 g (225 mmol) 4-Bromo-2-ethyl-1-lodbenzol, in einem Gemisch aus 300 ml Toluol, 200 ml Ethanol und 200 ml Na₂CO₃ Lösung (2 molar) gelöst und mit Argon inertisiert. Anschließend wird mit 8.00 g (6.92 mmol) Tetrakis(triphenylphosphin)-palladium(0) versetzt und das Reaktionsgemisch für 18 h refluxiert. Nach vollständigem Umsatz wird auf Raumtemperatur abkühlen gelassen und mit Wasser versetzt, die Phasen getrennt, die organische Phase mit Wasser gewaschen und über Na₂SO₄ getrocknet, filtriert und unter Vakuum eingeengt. Das Rohprodukt (orangenes Öl) wird mit Heptan über Kieselgel filtriert und man erhält 56.2 g des Produktes als farbloses Öl.
¹H NMR (500 MHz, CDCl₃)
δ = 0.91 ppm (t, 6.97Hz. 3H, CH₃), 1.09 (t, 7.58 Hz, 3H. CH₃), 1.36 (m_{c}, 4H, CH₂), 1.66, (m_{c}, 2H, CH₂), 2.56 (q, 7.55Hz, 2H, benz.-CH₂), 2.64 (dd, 7.71 Hz, 2H, benz.-CH₂), 7.05 (d, 8.15Hz, 1H, arom.-H), 7.16 (d, 8.21 Hz, 2H, arom.-H), 7.21 (d, 8.14 Hz, 2H, arom.-H), 7.3 (dd, 8.14, 2.12Hz, 1H, arom.-H), 7.42 (d, 1H, 2.08Hz, 1H, benz.-H), 7.24 (d, 8.2Hz, 2H, arom.-H), 7.27 (d, 8.2Hz, 2H, arom.-H), 7.35 (dd, 7.87, 1.71 Hz, 1H, arom.-H), 7.42 (d, 1.53 Hz, 1H, arom.-H)

### 2) Synthese 2-Ethyl-4'-pentyl-biphenyl-4-boronsäure B2

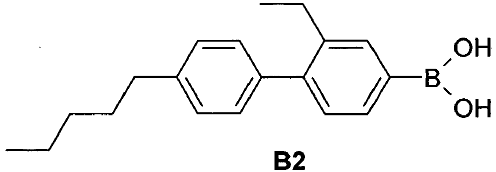

Es werden 65.0 g (196mmol) Bromid **A2** in 475 ml Tetrahydrofuran (THF) gelöst und auf -78°C gekühlt und tropfenweise mit 128.8 ml (206 mmol, 1.6 Molar in n-Hexan) n-Butyllithium versetzt. Das Reaktionsgemisch wird für 60 min bei -78°C nachgerührt und bei dieser Temperatur mit 24.5 ml (216 mmol) Trimethylborat tropfenweise versetzt. Es wird eine Stunde bei dieser Temperatur nachgerührt dann langsam auf 0°C auftauen gelassen und bei 0°C vorsichtig mit 2 N Salzsäure sauer gestellt, kurz nachgerührt und die Phasen getrennt. Die wässrige Phase wird mit MTB-Ether extrahiert und die vereinigten organischen Phasen mit gesättigter Natriumchloridlösung gewaschen, über Natriumsulfat getrocknet, filtriert und eingeengt. Das Rohprodukt wurde zuerst mittels Dichlormethan und dann mit MTB-Ether über Kieselgel filtriert und unter Vakuum eingeengt. Man erhält 43.7 g des Produktes als smektischen Feststoff.

### 3) Synthese von 2-(4-Bromo-2,5-dimethoxy-phenyl)-ethanol C2

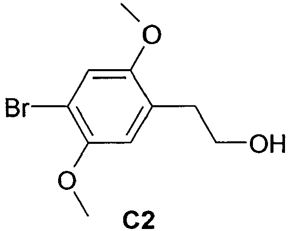

10.0 g (33.8 mmol) 1,4-Dibromo-2,5-dimethoxybenzol wird in 300 ml THF gelöst und auf -78°C gekühlt und tropfenweise mit 23.0 ml (36.8 mmol, 1.6-molar in n-Hexan) n-Butyllithium versetzt und für 5 min. nachgerührt. Es wird nun mit 1.70 g (38.6 mmol) Ethylenoxid in 20 ml auf 2°C gekühlten THF zu der Reaktionsmischung zulaufen gelassen. Bei -78 °C wird nun vorsichtig tropfenweise mit 5.00 ml (39.8 mmol) Bortrifluorid-Diethylether-Komplex versetzt und für 15 min. Bei dieser Temperatur wird weiter gerührt. Nach Reaktionskontrolle mittels Dünnschichtchromatographie wurde die Reaktion in der Kälte mit 5.0 ml Isopropanol gequencht, auf 0°C auftauen gelassen, vorsichtig mit Wasser und mit MTB-Ether versetzt und nachgerührt. Die Phasen werden getrennt, die Wasserphase mit MTB-Ether extrahiert, die organischen Phasen vereinigt, mit gesättigter Natriumchloridlösung gewaschen und über Natriumsulfat getrocknet und unter Vakuum eingeengt. Das Rohprodukt wird mit Dichlormethan / MTB-Ether (9:1) über Kieselgel filtriert und man erhält 5.8 g des Produktes als leicht gelbes Öl.

### 4) Synthese von 2-(2'-Ethyl-2",5"-dimethoxy-4-pentyl-1,1';4',1"]terphenyl-4"-ethanol D2

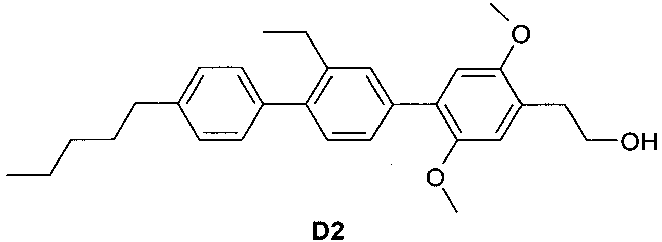

23.0 g (25 Gew.-% in Toluol, 19.4 mmol) von Alkohol **C2** und 5.70 g (18.7 mmol, 85%ig) an **B2** werden in einem Gemisch aus 200 ml Toluol, 100 ml Ethanol und 40 ml (1 mol/L, 40 mmol) Na₂CO₃ gelöst und mittels Argon-Einleitung entgast. Es wird nun mit 100mg (0.87 mmol) Tetrakis-(triphenylphosphin)palladium (0) versetzt und für 60 min refluxiert. Es wird auf Raumtemperatur abgekühlt und mit Wasser versetzt. Die Phasen werden getrennt, die organische Phase mit Wasser gewaschen, über Natriumsulfat getrocknet, filtriert und unter Vakuum eingeengt. Das Rohprodukt wird mit einem Gemisch aus Dichlormethan und MTB-Ether (95:5) über Kieselgel filtriert und unter Vakuum eingeengt. Man erhält 6.0 g des Produktes als hellbraunes Öl.
¹H NMR (500 MHz, DMSO-d₆)
δ = 0.89 ppm (t, 6.8 Hz, 3H, CH₃), 1.06 (t, 7.54Hz, 3H, CH₃), 1.33 (m_{c}, 4H, CH₂), 1.63 (quin., 7.51 Hz, 2H, CH₂), 2.67-2.54 (m, 4H, benz.-CH₂), 2.77 (t, 7.25Hz, 2H, benz.-CH₂), 3.60 (dt, 7.21, 5.49 Hz, 2H, CH₂C*H*₂OH), 3.72 (s, 3H, OCH₃), 3.79 (s, 3H, OCH₃), 4.62 (t, 5.36 Hz, 1H, OH), 6.90 (s, 1H, arom-H), 6.95 (s, 1H, arom.-H), 7.15 (d, 7.86 Hz, 1H, arom.-H).

### 5) Synthese von 2'-Ethyl-4"-(2-hydroxy-ethyl)-4-pentyl-[1,1';4',1 "]terphenyl-2",5"-diol E2

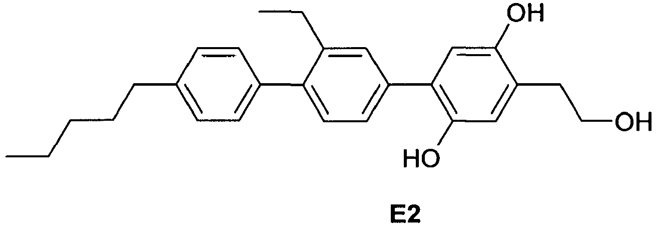

4.70 g (10.9 mmol) von Alkohol **D2** werden in 50 ml Dichlormethan gelöst und auf -28°C gekühlt. Es wird vorsichtig mit 2.3 ml (24.2 mmol) Bortribromid versetzt und für 3 h bei -25 °C gerührt. Nach beendeter Reaktion wird das Reaktionsgemisch unter Rühren auf Eiswasser gegeben und mit 2 N Natronlauge vorsichtig neutralisiert. Die Phasen werden getrennt, die Wasserphase mit Dichlormethan extrahiert und die vereinigten organischen Phasen mit Wasser gewaschen und über Natriumsulfat getrocknet, filtriert und eingeengt. Das Rohprodukt (oranges Öl) wird zuerst mit Dichlormethan und MTB-Ether (9:1) und dann mit (3:1) über Kieselgel filtriert und die Produktfraktionen unter Vakuum eingeengt. Das anfallende Produkt wird aus Toluol bei 5 °C umkristallisiert und man erhält 1.7 g des Produktes als farblose Kristalle.
¹H NMR (500 MHz, DMSO-d₆)
δ = 0.89 ppm (t, 6.83 Hz, 3H, CH₃), 1.07 (t, 7.55Hz, 3H, CH₃), 1.34 (m_{c}, 4H, CH₂), 1.64 (quin., 7.3 Hz, 2H, CH₂), 2.71-2.55 (m, 6H, benz.-CH₂), 3.58 (dt, 7.0, 5.01 Hz, 2H, CH₂C*H*₂OH), 4.70, (t, 5.07 Hz, CH₂O*H*), 6.68 (s, 1H, arom-H), 6.74 (s, 1H, arom.-H), 7.15 (d, 7.89 Hz, arom.-H), 7.25 (d, 8.26 Hz, 2H, arom.-H), 7.28 (d, 8.26 Hz, 2H, arom.-H), 7.37 (dd, 7.9, 1.8 Hz, 1H, arom.-H), 7.43 (d, 1.60 Hz, 1H, arom.-H), 8.67 (s, 2H, arom.-OH).

### 6) Synthese von 4"-[2-(tert-Butyl-dimethyl-silanyloxy)-ethyl]-2'-ethyl-4-pentyl-[1,1';4',1"]terphenyl-2",5"-diol F2

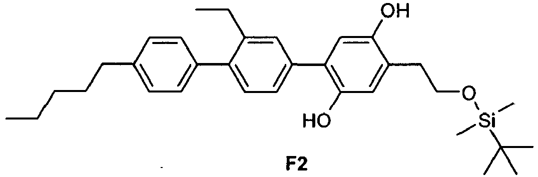

1.20 g (2.96 mmol) von Alkohol **E2** und 0.214 ml (3.23 mmol) Imidazol werden in 9.0 ml THF gelöst und auf 2°C gekühlt und anschließend mit 490 mg (3.25 mmol) tert-Butylchlorodimethylsilane gelöst in 4 ml THF innerhalb von 30 min tropfenweise versetzt und für 60 min bei dieser Temperatur gerührt. Das Reaktionsgemisch wird mit Ammonium-chloridlösung versetzt und mit MTB-Ether extrahiert. Die organische Phase wird abgetrennt und über Natriumsulfat getrocknet, filtriert und unter Vakuum eingeengt. Man erhält ein oranges Öl was mit Toluol und Toluol und Ethylacetat (98:2) über Kieselgel gefiltert wird. Man erhält 1.0 g des Produktes als gelbes Öl.
¹H NMR (500 MHz, CDCl₃)
δ = 0.00 ppm (s, 6H, Si(CH₃)₂), 0.82 (s, 12H, SiC(CH₃)₃),1.02 (t, 7.56Hz, 3H, CH₃), 1.26 (m_{c}, 4H, CH₂), 1.57 (m_{c}, 2H, CH₂), 2.55 (m_{c}, 4H, benz.-CH), 2.78 (t, 4.98Hz, 2H, C*H*₂CH₂OSi), 3.85 (t, 5.1 Hz, 2H, C*H*₂OSi), 4.82 (s, 1H, arom.-OH), 6.59 (s, 1H, arom.-H), 6.79 (s, 1H, arom.-H) 7.13 (2xd(überlagert) 4H, arom.-H), 7.18 (d, 7.78Hz, 1H, arom.-H), 7.21 (dd, 7.78, 1.7Hz, 1H, arom.-H), 7.29, (d, 1.4Hz, 1H, arom.-H), 7.82 (s, 1H, arom.-OH).

### 7) Synthese von 2-Methyl-acrylic acid 4"-[2-(tert-butyl-dimethyl-silanyloxy)-ethyl]-2'-ethyl-6"-(2-methyl-acryloyloxy)-4-pentyl-[1,1';4',1"]terphenyl-3"-yl ester G2

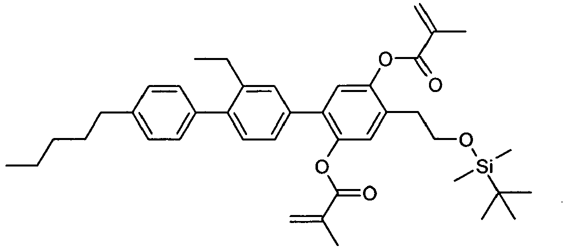

2.30 g (4.43 mmol) an Phenol **F2,** 1.0 ml (11.8 mmol) Methacrylsäure und 30.0 mg (0.25 mmol) 4-(Dimethylamino)-pyridin werden in 25 ml Dichlormethan gelöst und auf 1°C gekühlt. Es wird nun tropfenweise mit 1.80 g (11.6 mmol) 1-(3-Dimethylaminopropyl)-3-ethylcarbodiimid (EDC) gelöst in 20 ml Dichlormethan bei 1-4°C versetzt und anschließen für 18 h bei Raumtemperatur (RT) gerührt. Es wurde anschließend nochmals mit 0.4 ml Methacrylsäure und 0.6 g EDC bei RT versetzt und für weitere 18 h bei RT gerührt. Die Reaktionslösung wurde nun direkt über eine 100 ml Kieselgelfritte mit Dichlormethan filtriert und unter Vakuum eingeengt. Man erhält 3.3 g des gelben Rohproduktes als teilkristallinen Feststoff, der in 10 ml Heptan/Ethylacetat (EE) (95:5) gelöst und von ungelösten Bestandteilen abfiltriert wird. Anschließend wir an 120 g Kieselgel mit Heptan / EE (95:5) filtriert. Man erhält 2.4 g des Produktes als gelbes Öl.
¹H NMR (500 MHz, CDCl₃)
δ = 0.00 ppm (s, 6H, Si(CH₃)₂), 0.86 (s, 12H, SiC(CH₃)₃),1.06 (t, 7.55Hz, 3H, CH₃), 1.35 (m_{c}, 4H, CH₂), 1.65 (m_{c}, 2H, CH₂), 1.93 (s, 3H, CH₃), 2.07 (s, 3H, CH₃), 2.58 (q, 7.52, 2H, benz.-CH₂), 2.63 (t, 7.91, 2H, benz.-CH₂), 2.78 (t, 7.23 Hz, 2H, C*H*₂CH₂OSi), 3.79 (t, 7.26 Hz, 2H, CH₂OSi), 5.62 (s, 1H, olefin.-H), 5.77 (s, 1H, olefin.-H), 6.18 (s, 1H, olefin.-H), 6.37 (s, 1H, olefin.-H), 7.12 (s, 1H, arom.-H), 7.16 (d, 7.86 Hz, 1H, arom.-H), 7.18 (s, 1H, arom.-H), 7.19, (s, 4H, arom.-H), 7.24 (dd, (überlagert mit CHCl₃, 1H, arom.-H), 7.32, (d, 1.39 Hz, 1H, arom.-H).

### 8) Synthese von 2-Methyl-acrylic acid 2'-ethyl-4"-(2-hydroxy-ethyl)-6"-(2-methyl-acryₗoyloxy)-4-pentyl-[1,1';4',1 "]terphenyl-3"-yl ester 2

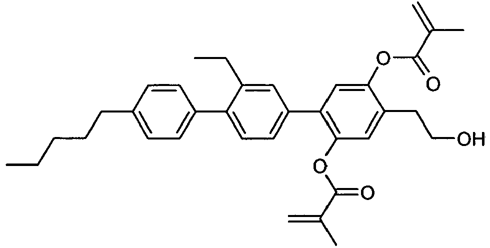

2.20 g (3.36 mmol) von Verbindung **G2** werden in 50 ml THF gelöst und auf 2 °C gekühlt. Es wird nun langsam, tropfenweise mit 2.00 ml (4.00 mmol) Salzsäure (2N) versetzt und 3h bis auf Raumtemperatur (RT) gerührt. Es wird nun unter Kühlung mit Natriumhydrogencarbonatlösung neutralisiert, mit Wasser und MTB-Ether versetzt. Die Phasen werden getrennt und die Wasserphase mit MTB-Ether nachextrahiert. Die vereinigten organischen Phasen werden mit Wasser gewaschen, über Natriumsulfat getrocknet, filtriert und unter Vakuum eingeengt. Man erhält das Rohprodukt als gelbes Öl was über 200 g Kieselgel mit Dichlormethan / MTB-Ether (98:2) filtriert wird. Das erhaltene Produkt (farbloses Öl) wird unter Vakuum eingeengt und dann bei 60 °C und 0.09 mbar) getrocknet bis kein Lösungsmittel mehr entweicht. Man erhält das Produkt (700 mg) als farbloses, zähes Harz.
¹H NMR (500 MHz, CDCl₃)
δ = 0.92 (t, 6.63Hz, 3H, CH₃), 1.08 (t, 7.54Hz, 3H, CH₃), 1.37 (m_{c}, 4H, CH₂), 1.67 (m_{c}, 3H, CH₂, OH), 1.94 (s, 3H, CH₃), 2.09 (s, 3H, CH₃), 2.60 (q, 7.53 Hz, 2H, benz.-CH₂), 2.70 (t, 7.9 Hz, 2H, benz.-H), 2.85, (t, 6.4 Hz, 2H, C*H*₂CH₂OH), 3.87 (q., 6.24 Hz, 2H, C*H*₂OH), 5.66 (s, 1H, olefin.-H), 5.79 (s, 1H, olefin.-H), 6.21 (s, 1H, olefin.-H), 6.39 (s, 1H, olefin.-H), 7.17 (s, 1H, arom.-H), 7.19 (d, 7.87 Hz, 1 H, arom.-H), 7.21, 7.22 (2 x S (überlagert) 5H, arom.-H), 7.26 (dd (überlagert mit CHCl₃), 1H, arom.-H), 7.33 (d, 1.59 Hz, 1H, arom.-H).

### Beispiel 3

### Synthese von 2-{5-[2-ethyl-4-(4-pentylphenyl)phenyl]-2-[4-hydroxy-3-(hydroxymethyl)butoxy]phenyl}ethyl 2-methylprop-2-enoate 4

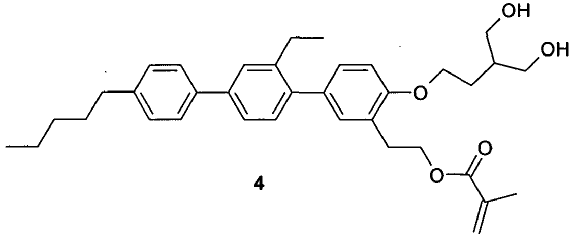

### 1) Synthese von 4'-Bromo-2'-ethyl-biphenyl-4-ol A

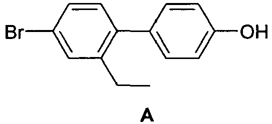

110.3 g (1.04 mol) Na₂CO₃ werden mit 223 ml Wasser versetzt und es werden 154 g (0.49 mol) 4-Brom-2-Ethyl-1-lodbenzol, 75.1 g (0.54 mol) 4-Hydroxyphenolboronsäure und 850 ml 1,4-Dioxan zugesetzt und die Mischung entgast. Es wird mit 14.5 g (19.8 mmol) Bis(1,1-Diphenyl-phosphinoferocen-Palladium(ll)-Chlorid versetzt und für 18 h bei 80°C gerührt. Nach vollständiger Umsetzung (Dünnschichtchromatographiekontrolle mit Heptan / Essigester 1:1) wird das Reaktionsgemisch auf Raumtemperatur abgekühlt mit Wasser und Methyl-tert-butylether verdünnt und mit 2 N HCl auf pH 1-2 angesäuert. Die Phasen werden getrennt und die Wasserphase mit Methyl-tert-butylether extrahiert und die vereinigten organischen Phasen über Na₂SO₄ getrocknet, filtriert und unter Vakuum eingeengt. Das erhaltene Rohprodukt wird mit Heptan / Essigester (8:2) über Kieselgel gefrittet und man erhält 96g des Produktes **A** als ein braunes Öl.

### 2) Synthese von 2'-Ethyl-4"-pentyl-[1,1';4',1"]terphenyl-4-ol B

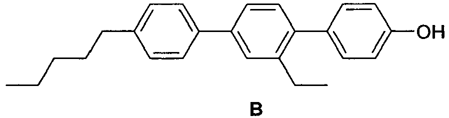

102 g (514 mmol) 4-Pentyl-1-Benzolboronsäure und 135 g (467 mmol) Bromid **A** werden in einem Gemisch aus 743 ml Toluol, 270 ml Ethanol und 350 ml 2 N Na₂CO₂ gelöst und entgast. Es wird mit 8.1 g (7.0 mmol) Tetrakis(Triphenylphosphin)Palladium versetzt und für 18 h refluxiert. Nach vollständiger Reaktion wird das Reaktionsgemisch auf Raumtemperatur abgekühlt, die Wasserphase abgetrennt, die organische Phase mit Methyl-tert-butylether (MTB-Ether) gewaschen und die vereinigten organischen Phasen über Na₂SO₄ getrocknet, filtriert und unter Vakuum eingeengt. Das Rohprodukt wird mit Dichlormethan über Kieselgel gefrittet und die Produktfraktionen aus Heptan umkristallisiert und man erhält 76.9 g des Produktes als farblose Kristalle.
¹H NMR (500 MHz, DMSO-d6)
δ = 0.89 ppm (t, 6.88 Hz, 3H, CH₃), 1.08 (t, 7.51 Hz, 3H, CH₃), 1.31 (m_{c}, 4H, CH₂), 1.61 (q, 7.58 Hz, 2H, CH₂), 2.62 (q. überlagert mit t, 4H, CH₂ benzylisch), 6.83 (d, 8.5 Hz, 2H, arom-H), 7.13 (d, 8.5 Hz, 2H, arom-H), 7.17 (d, 7.9 Hz, 1H, arom-H), 7.28 (d, 8.2 Hz, 2H, arom-H), 7.46 (dd, 7.93, 1.97 Hz, 1H, arom.-H), 7.54 (d, 1.88 Hz, 1H, arom.-H), 7.59 (d, 8.17 Hz, 2H, arom.-H), 9.44 (s, 1H, arom.-OH).

### 3) Synthese von 3-Bromo-2'-ethyl-4"-pentyl-[1,1';4',1"]terphenyl-4-ol C

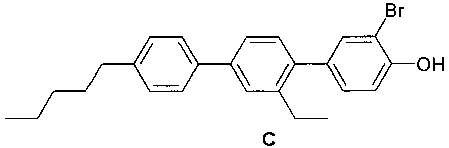

30.0 g (85.9 mmol) Alkohol **B** wird in 1100 ml Dichlormethan gelöst und auf -48°C gekühlt und bei dieser Temperatur mit 5.28 ml (103 mmol) Brom in 1100 ml Dichlormethan langsam innerhalb von 40 min versetzt. Es wird bei dieser Temperatur für 1 h nachgerührt und via Dünnschichtchromatographiekontrolle kontrolliert (Toluol). Das überschüssige Brom wird mit gesättigter NaHSO₃-Lösung reduziert und die Phasen werden getrennt. Die wässrige Phase wird mit Dichlormethan extrahiert und die vereinigten organischen Phasen werden über Na₂SO₄ getrocknet und unter Vakuum eingeengt. Das Rohprodukt wird mit Toluol über Kieselgel gefrittet und man erhält 35.3 g des Produktes als weißen Feststoff.
¹H NMR (500 MHz, CDCl₃)
δ = 0.91 ppm (t, 6.99 Hz, 3H, CH₃), 1.15 (t, 7.53 Hz, 3H, CH₃), 1.36 (m_{c}, 4H, CH₂), 1.66 (m_{c}, 2H, CH₂), 2.65 (m_{c}, 4H, CH₂ benzylisch), 5.5 (s, 1H, arom-OH), 7.06 (d, 8.3 Hz, 1H, arom-H), 7.20 (dd, 8.28, 2.07 Hz überlagert mit d 7.85 Hz, 2H, arom-H), 7.26 (d, 8.1 Hz, 2H, arom-H), 7.43 (dd, 7.87, 1.87 Hz, 2H, arom-H), 7.46 (d, 2.01 Hz, 1H, arom.-H), 7.503 (d, 1.71 Hz, 1H, arom.-H), 7.54 (d, 8.1 Hz, 2H, arom.-H.

### 4) Synthese von 6-(2-{2-bromo-4-[2-ethyl-4-(4-pentylphenyl)phenyl]-phenoxy}ethyl)-2,2,3,3,9,9,10,10-octamethyI-4,8-dioxa-3,9-disilaundecane D

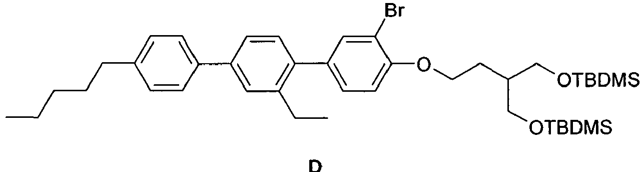

10.0 g (24.0 mmol) Bromid **C,** 8.64 g (25.0 mmol) 4-[(tert-butyldimethylsilyl)oxy]-3-{[(tert-butyldimethylsilyl)oxy]-methyl}butan-1-ol **K und** 7.03 g (26.81 mmol) Triphenylphosphin werden in 76.5 ml Tetrahydrofuran (THF) gelöst. Die Reaktionslösung wird nun mit 5.46 ml (27.9 mmol) Diisopropylazodicarboxylat tropfenweise bei Raumtemperatur (RT) versetzt. Die dabei entstehende klare und leicht gelbe Reaktionslösung wird nun für 20 h bei RT gerührt. Das Reaktionsgemisch wird nun unter Vakuum eingeengt und über Kieselgel mit Heptan / Dichlormethan filtriert. Man erhält 17.45 g des gewünschten Produkts.
¹H NMR (500 MHz, CDCl₃)
δ = 0.00 ppm (s, 12H Si(CH₃)₂), 0.854 (m_{c}, 21H, 2 X Si(C(CH₃)₃), CH₃), 1.09 (t, 7.5 Hz, 3H, CH₃), 1.31 (m_{c}, 4H), 1.61 (m_{c}, 2H, CH₂), 1.83 (q, 6.58 Hz, 2H, CH₂-benz.), 1.91 (sept., 5.64 Hz, 1H, CH₂C*H₁*(CH₂OTBDMS)₂), 2.59 (m_{c}, 4H, 2X CH₂), 3.62 (m_{c}, 4H, CH2OTBDMS), 4.12 (t, 6.49 Hz, OCH2), 6.87 (d, 8.43 Hz, 1H, arom.-H), 7.15 (dd _{(überlagert)}, 7.83, 2.54 Hz,1H, arom.-H), 7.16 (d, 7.83 Hz, 1H, arom.-H), 7.21 (d, 7.25 Hz, 2H, arom.-H), 7.37 (dd, 7.86, 1.84 Hz, 1H, arom.-H), 7.44 (d, 1.68 Hz, 1H, arom.-H), 7.47 (d_{(überlagert)}, 1.90 Hz, 1H, arom.-H), 7.49 (d_{(überlagert)}, 8.22 Hz, 2H, arom.-H).

### 5) Synthese von 2-(2-{4-[(tert-butyldimethylsilyl)oxy]-3-{[(tert-butyldimethylsilyl)oxy]methyl}butoxy}-5-[2-ethyl-4-(4-pentylphenyl)-phenyl]phenyl)ethanol E

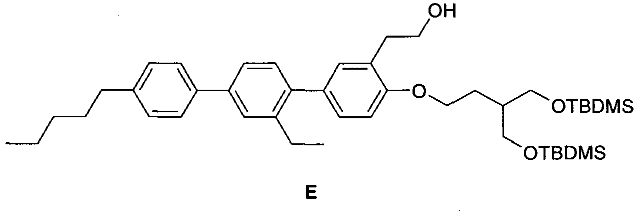

17.5 g (23.0 mmol) Bromid D werden in 65.0 ml Tetrahydrofuran (THF) gelöst und auf -70°C gekühlt und bei dieser Temperatur tropfenweise mit 17.1 ml (27.0 mmol) Butyllithium (1.6 M Lösung in Hexan) versetzt. Es wird nun mit einer Lösung von 8.70 ml (25.0 mmol) Ethylenoxid in 10.0 ml gekühlten (-25°C) THF zügig versetzt. Das Reaktionsgemisch wird für 45 Minuten bei -70°C gerührt und anschließend vorsichtig mit einer -25°C kalten Lösung von 3.45 ml (27.0 mmol) Bortrifluorid in THF tropfenweise versetzt. Die Reaktionsmischung wird nun bei -70°C für 3 h gerührt mit 20 ml MTB-Ether verdünnt und innerhalb von 2 h auf Raumtemperatur kommen gelassen. Es wird nun vorsichtig auf Eiswasser gegossen und mit MTB-Ether extrahiert. Die vereinigten org. Phasen werden mit gesättigter Natriumchloridlösung gewaschen, über Natriumsulfat getrocknet, filtriert und eingeengt. Das erhaltene Rohprodukt wird über Kieselgel mit Heptan / Ethylacetat (9:1 dann 4:1) filtriert und die Produktfraktionen unter Vakuum eingeengt. Man erhält 7.5 g des Produkts mit einer Reinheit von 99.4 % nach HPLC.

### 6) Synthese von 2-(2-{4-[(tert-butyldimethylsilyl)oxy]-3-{[(tert-butyldimethylsilyl)oxy]methyl}butoxy}-5-[2-ethyl-4-(4-pentylphenyl)-phenyl]phenyl)ethyl 2-methylprop-2-enoate F

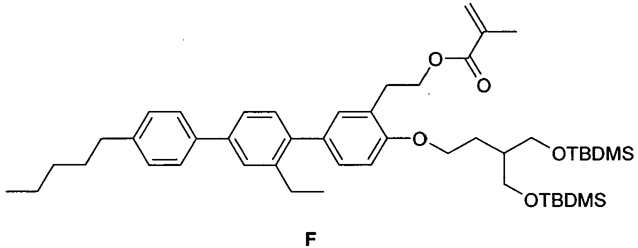

17.2 g (24.0 mmol) Alkohol **E,** 4.50 ml (53.1 mmol) Methacrylsäure (stabilisiert) und 0.33 g (2.71 mmol) 4-(Dimethylamino)-pyridin werden bei Raumtemperatur in 150 ml Dichlormethan (DCM) gelöst und auf 2°C gekühlt. Es wird nun mit 9.20 ml (53.3 mmol) 1-(3-Dimethylaminopropyl)-3-ethyl-carbodiimid als Lösung in 50 ml Dichlormethan bei 2-5°C zugetropft und für 20 h bei Raumtemperatur gerührt. Die Reaktionslösung wird nun direkt mit DCM über Kieselgel filtriert und man erhält 15.5 g des Produkts mit 99.6%iger Reinheit (HPLC).

### 7) Synthese von 2-{5-[2-ethyl-4-(4-pentylphenyl)phenyl]-2-[4-hydroxy-3-(hydroxymethyl)butoxy]phenyl}ethyl 2-methylprop-2-enoate G

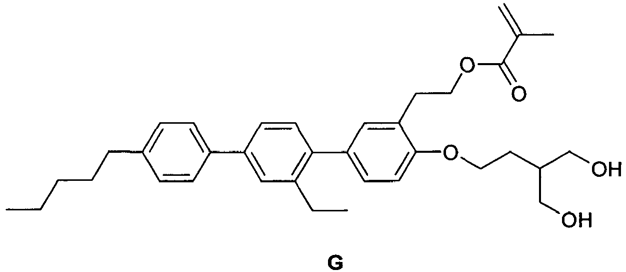

15.5 g (19.6 mmol) von Ester **F** werden in 225 ml Tetrahydrofuran (THF) gelöst und auf 2°C gekühlt und langsam 23.5 ml (47.0 mmol) HCl (2 mol/l) zugetropft. Es wird anschließend für 3 h bei Raumtemperatur nachgerührt und das Reaktionsgemisch vorsichtig mit gesättigter Natriumhydrogencarbonatlösung neutralisiert. Das Reaktionsprodukt wird mit MTB-Ether extrahiert und die vereinigten organischen Phasen werden mit Wasser gewaschen und über Natriumsulfat getrocknet, filtriert und bei 30°C unter Vakuum eingeengt. Das Rohprodukt wird an Kieselgel mit Heptan / Ethylacetat (2:1, 1:1 und zuletzt mit 1:2) filtriert und die Produktfraktionen unter Vakuum bei 30°C eingeengt. Man erhält 10.9g eines farblosen Feststoffes, der in 200 ml Pentan und 105 ml MTB-Ether unter Rückfluss gelöst und anschließend mit Aceton / Trockeneis kristallisiert wird. Nach Trocknung im Vakuum bei Raumtemperatur erhält man 9.0 g des gewünschten Produkts als farblosen Feststoff mit 99.8% Reinheit (HPLC).
Phasenverhalten
Tg = -18°C / K (Schmelzpunk) = 72 °C / I (Isotrop)
¹H NMR (500 MHz, CDCl₃)
δ = 0.95 ppm (t, 6.9 Hz, 3H, CH₃), 1.17 (t, 7.56 Hz, 3H, CH3), 1.39 (m_{c}, 4H), 1.70 (quin. 7.33 Hz, 2H, CH₂), 1.92 (q, 6.35 Hz, 2H, CH₂ benz.), 1.95 (s, 3H, CH₃), 2.17 (m_{c}, 1H,), 2.48 (s_{(breit)}, 2H, 2 X OH), 2.68 (m_{c}, 4H), 3.08 (t, 7.25 Hz, 2H), 3.82 (dd, 10.69 ,6.84 Hz 2H CH₂ HOC*Hₐ₂*CH), 3.93 (dd,10.77,3.99 Hz, 2H, HOC*H_{b2}*CH), 4.15 (t, 5.95 Hz, 2H, CH₂), 4.44 (t, 7.26 Hz, 2H, CH₂), 5.57 (s, 1H,), 6.11 (s, 1H), 6.93 (d, 8.27 Hz, 1H, arom-H), 7.19 (d, 2.05 Hz, 1H, arom-H), 7.21 (dd, 8.23, 2.28 Hz, 1H, arom.-H), 7.29 (d, 7.98 Hz, 2H, arom.-H) 7.45, (dd, 8.07, 2.02 Hz, 1H, arom.-H), 7.53 (d, 1.68 Hz, 1H, arom.-H), 7.58 (8.09 Hz, 2H, arom.-H).

### 8) Synthese von 1,3-diethyl 2-[2-(benzyloxy)ethyl]propanedioate H

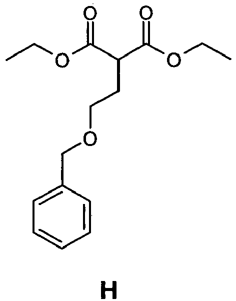

240.0 ml (0.628 mol) Natriummethylat (20%ige Lösung in Ethanol) werden in 300 ml Ethanol vorgelegt und auf 81°C erhitzt. Es wird nun 180.0 ml (1.180 mol) Diethylmalonat zügig innerhalb von 10 Minuten (min.) zugegeben und direkt im Anschluss innerhalb von 15 min mit 100.0 g (0.451 mol) 2-Bromoethoxymethylbenzol versetzt. Das Reaktionsgemisch wird für 4 h unter Rückfluss gerührt, anschließend auf Raumtemperatur (RT) abgekühlt und auf eine Mischung aus Eiswasser und MTB-Ether gegossen. Es wir vorsichtig mit 25%iger Salzsäure auf pH 4 bis 5 eingestellt und die organische Phase abgetrennt. Die Wasserphase wird mehrfach mit MTB-Ether extrahiert. Die vereinigten organischen Phasen werden mit Wasser gewaschen und über Natriumsulfat getrocknet, filtriert und eingeengt. Man erhält 223.6 g einer orangenen Flüssigkeit von der das überschüssige Diethylmalonat bei 100-150°C Badtemperatur (70-77°C Kopftemperatur) und 5 mbar Vakuum via Destillation abgetrennt wird. Das erhaltene Rohprodukt (133.2 g orangene Flüssigkeit) wird mit Dichlormethan / MTB-Ether (8:2) über 2L Kieselgel filtriert und man erhält das Produkt als gelbe Flüssigkeit.

### 9) Synthese von 2-[2-(benzyloxy)ethyl]propan-1,3-diol I

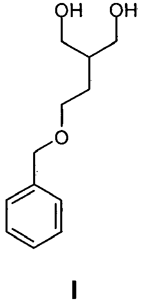

170.0 ml (340 mmol) Lithiumaluminiumhydrid Lösung (2 Molar in THF) werden vorgelegt und unter Kühlung (bis maximal 50°C Reaktionstemperatur) mit einer Lösung von 66.5 g (225.9 mmol) Ester **H** in 350.0 ml Tetrahydrofuran (THF) versetzt. Das Reaktions-gemisch wird anschließend für 5 h bei 66°C gerührt. Das Reaktionsgemisch wird auf Raumtemperatur (RT) abgekühlt und vorsichtig tropfenweise mit 100 ml Ethylacetat versetzt. Es wird nun vorsichtig mit 20 ml Wasser und mit einer heißen Lösung von 27.8 ml (377.4 mmol) Natriumcarbonat-Decahydrat (Emprove®) in 30 ml Wasser versetzt und für 15 min gerührt. Der farblose Niederschlag wird abgesaugt und großzügig mit THF gewaschen. Das Filtrat wird eingeengt und man erhält 45.4 g des Produktes als farbloses, leicht trübes Öl, welches an 1.2 Liter Kieselgel mit Ethylacetat (EE) und EE / Methanol (95:5 und 9:1) filtriert wird. Die Produktfraktionen werden eingeengt und man erhält 23.8 g des Produktes als farbloses Öl.
¹H NMR (500 MHz, CDCl₃)
δ = 1.74 ppm (q, 6.38 Hz, 2H CH₂C*H₂*CH₁), 1.91 (sept., 5.17 Hz, 1H, CH₂C*H₁*(CH₂OTBDMS)₂), 2.46 (s_{(breit)}, 1H, 2 X OH), 3.61 (t, 5.77 Hz, 2H, CH₂OC*H₂*CH₂), 3.72 (dd, 10.9, 5.86 Hz, 2H,3.76 CH₁C*H₂*OTBDMS), (dd, 4.71,10.9 Hz, 2H, CH₁C*H₂*OTBDMS), 4.55 (s, 2H, CH₂-benzyl.), 7.41-7.30 (m, 5H, arom.-H).

### 10) Synthese von 6-[2-(benzyloxy)ethyl]-2,2,3,3,9,9,10,10- octamethyl-4,8-dioxa-3,9-disilaundecane J

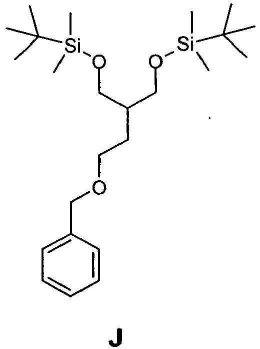

53.7 g (255.39 mmol) Diol **I** und 3.0 g (24.56 mmol) 4-(Dimethylamino)-pyridin werden in 600 ml Dichlormethan gelöst und auf 5°C gekühlt. Es wird nun mit 110.0 ml (0.79 mmol) Triethylamin versetzt und anschließend tropfenweise mit einer Lösung aus 100.0 g (0.66 mol) tert-Butyldimethylchlorsilan in 400 ml Dichlormethan (DCM) bei 2-7°C versetzt und für 20 h bei Raumtemperatur gerührt. Die ausgefallenen Ammoniumsalze werden abgesaugt, mit DCM gewaschen und die organische Phase wird mit gesättigter Natriumchloridlösung und Wasser gewaschen, über Natriumsulfat getrocknet, filtriert und eingeengt. Man erhält das Rohprodukt (130.1 g) als orangenes Öl was mit Toluol an 2 l Kieselgel filtriert wird und erhält nach einengen der Produktfraktionen 113.2 g des Produktes als leicht gelbes Öl.

### 11) Synthese von 4-[(tert-butyldimethylsilyl)oxy]-3-{[(tert-butyldimethylsilyl)oxy]methyl}butan-1-ol

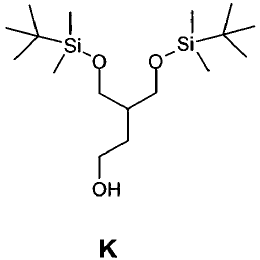

60.0 g (110.8 mmol) **J** wurden in 600 ml Ethylacetat gelöst und mit 30.0 g Pd-C (basisch, 50% Wasser) versetzt und unter Wasserstoffatmosphäre (1 bar, 50°C) für 24 h debenzyliert. Das Reaktionsgemisch (50% Produkt) wird abgesaugt und mit 15.0 g Pd-C (basisch, 50% Wasser) erneut unter Wasserstoffatmosphäre (1 bar, 50°C) für weitere 40 h debenzyliert. Das Reaktionsgemisch wird bei Raumtemperatur filtriert und eingeengt. Man erhält das Rohprodukt (50.0 g) als farbloses Öl, welches über 1 l Kieselgel mit Pentan / MTB-Ether (9:1 bis 7:3) filtriert wird. Man erhält 41.6 g des Produkts als farbloses Öl.
¹H NMR (500 MHz, CDCl₃)
δ = 0.00 ppm (2, 12H, 2 X Si(CH₃)₂), 0.83 (s, 18H, 2 X Si(C(CH₃)₃), 1.53 (q, 6.21 Hz, 2H, CH₂C*H₂*CH₁), 1.74 (sept. 6.08 Hz, 1H, CH₂C*H₁*(CH₂OTBDMS)₂), 3.16 (s_{(breit)}, 1H, OH), 3.47 (dd,10.02, 6.26 Hz, 2H, CH₁C*H₂*OTBDMS), 3.57 (dd, 10.02, 5.72, 2H, CH₁C*H₂*OTBDMS), 3.62 (q_{(breit)}, 5.37 Hz, 2H C*H₂*OH).

### Beispiel 4

### Synthese von 3-{5-[2-Ethyl-4-(4-pentylphenyl)phenyl]-2-(3-hydroxy-propoxy)-3-{3-[(2-methylprop-2-enoyl)oxy]propyl}phenyl}propyl 2-methylprop-2-enoat 13

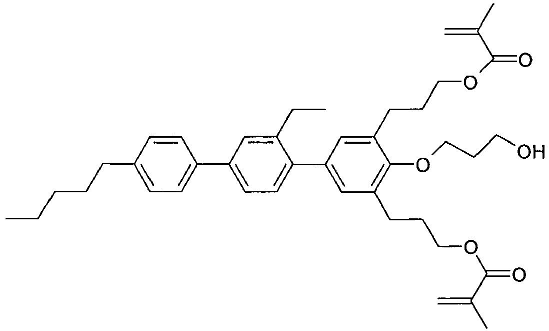

### 1) Synthese von 2,6-dibromo-4-[2-ethyl-4-(4-entylphenyl)phenyl]phenol A13

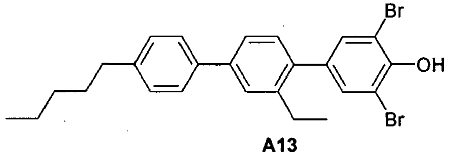

20.6 g (59.80 mmol) 2'-Ethyl-4"-pentyl-[1,1';4',1"]terphenyl-4-ol **B** werden in 150 ml Dichlormethan (DCM) vorgelegt und tropfenweise mit 1.50 ml (10.67 mmol) Diisopropylamin versetzt. Die Reaktionslösung wird mit einem Trockeneis/Aceton-Bad auf-5°C gekühlt und anschließend tropfenweise mit einer Lösung von 21.6 g (121.4 mmol) N-Bromsuccinimid in 300 ml DCM versetzt. Die Reaktionslösung wird für 18 h bei Raumtemperatur (RT) gerührt, mit 2 M HCl angesäuert, mit Wasser versetzt und die Phasen getrennt. Die wässrige Phase wird mit DCM extrahiert, über Natriumsulfat getrocknet, filtriert und unter Vakuum eingeengt. Das Rohprodukt wird mit Toluol/Heptan (1:1 + 1% Triethylamin) über 600 g Kieselgel filtriert. Die Produktfraktionen werden vereinigt und nach einengen aus Heptan bei -30°C umkristallisiert. Man erhält das Produkt als zähes Öl mit 15.1 g Ausbeute und 99.1% Reinheit (Gaschromatographie).

### 2) Synthese von tert-butyl(2,6-dibromo-4-[2-ethyl-4-(4-pentylphenyl)phenyl]phenoxy)dimethylsilan B13

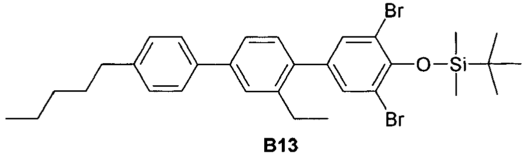

10.6 g (20.32 mmol) Bromid **A13** werden in 150 ml Dichlormethan (DCM) vorgelegt und mit 2.90 g (42.6 mmol) Imidazol versetzt und für 30 min bei Raumtemperatur (RT) gerührt. Es wird nun mit einer Lösung von 4.00 g (26.54 mmol) tert-Butyldimethylchlorsilan in 20 ml DCM tropfenweise versetzt und bei RT für weitere 18 h gerührt. Das Reaktionsgemisch wird unter Vakuum eingeengt und in Ethylacetat (EE) gelöst, mit Wasser versetzt und nach Rühren die Phasen getrennt. Die wässrige Phase wird mit EE extrahiert und die vereinigten organischen Phasen mit gesättigter Natriumchloridlösung gewaschen, über Natriumsulfat getrocknet und unter Vakuum eingeengt. Das erhaltene Rohprodukt wird mit Heptan über 400 ml Kieselgel filtriert und die Produktfraktionen vereinigt und unter Vakuum eingeengt. Man erhält 6.6 g des Produkts als farbloses Öl.
MS (EI): 616.3 [M⁺]
¹H NMR (500 MHz, CDCl₃)
δ = 0.38 ppm (s, 6 H, Si(CH₃)₂), 0.88 (t, 6.6 Hz, 3H, CH₃), 1.06 (s, 9 H, Si(C(CH₃)₃)), 1.13 (t, 8.06 Hz, 3H, CH₃), 1.38-1.27 (m, 4H, CH₂), 1.63 (quin., 7.7 Hz, 2H, CH₂), 2.66 - 2.59 (m, 4H, CH₂), 7.17 (d, 7.15 Hz, 1H, arom.-H), 7.23 (d, 7.62 Hz, 2H, arom.-H), 7.39 (dd, 7.86, 1.89 Hz, 1H, arom.-H), 7.44 (s, 2H, arom.-H), 7.462 (d, 1.75 Hz, 1H, arom.-H), 7.50 (d, 8.13 Hz, 2H, arom.-H).

### 3) Synthese von 4-[2-ethyl-4-(4-pentylphenyl)phenyl]-2,6-bis(3-hydroxypropyl)phenol C13

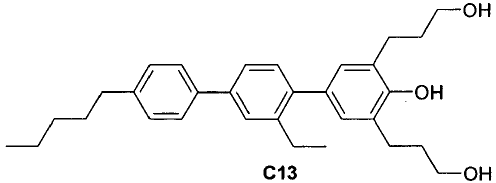

2.90 g (27.4 mmol) Natriumcarbonat 100.0 mg (0.56 mmol) Palladium (II)-Chlorid, 180.0 mg (0.39 mmol) 2-Dicyclohexylphosphino-2',6'-di-isopropoxy-1,1'-biphenyl werden in 30 ml Wasser vorgelegt und mit einer Lösung von 15.6 g (25.9 mmol) Bromid **B13** und 4.10 g (28.9 mmol) 2-Butoxy-1,2-oxaborolane in 135 ml Tetrahydrofuran (THF) versetzt. Es wird mit 120 µL (0.87 mmol) Triethylamin versetzt, für 20 Minuten (min.) mit Stickstoff entgast und anschließend für 18 h unter Rückfluss gerührt. Das Reaktionsgemisch wird auf Raumtemperatur abgekühlt und mit Wasser und MTB-Ether versetzt. Nach Rühren der Reaktionslösung werden die Phasen getrennt, die wässrige Phase mit MTB-Ether extrahiert und die vereinigten organischen Phasen mit gesättigter Natriumchloridlösung gewaschen, mit Natriumsulfat getrocknet, filtriert und unter Vakuum eingeengt. Das Rohprodukt wird mit Toluol / Ethylacetat (1:1) an 350 ml Kieselgel filtriert und die Produktfraktionen vereinigt und unter Vakuum eingeengt.
¹H NMR (500 MHz, DMSO-d6)
δ = 0.89 ppm (t, 7.08 Hz, 3H, CH₃), 1.05 (t, 7.92 Hz, 3H, CH₃), 1.33 (m_{c}, 4H, CH₂), 1.62 (quint, 7.29 Hz, 2H, CH₂), 1.73 (quint, 6.73 Hz, 2H, CH₂), 2.69-2.58 (m, 8H, benzyl-CH₂), 3.45 (q, 6.42 Hz, 4H, CH₂), 4.52 (t, 5.04 Hz, 2H, OH), 6.89 (s, 2H, arom.-H), 7.2 (d, 7.9 Hz, 1H, arom.-H), 7.29 (d, 8.98 Hz, 2H, arom.-H), 7.46 (dd, 7.92, 1.90 Hz, 1H, arom.-H), 7.54 (d, 1.78 Hz, 1H, arom.-H), 7.59 (d, 8.12 Hz, 2H, arom.-H), 8.25 (s, 1H, arom.-OH).

### 4) Synthese von 3-(2-{3-[(tert-butyldimethylsilyl)oxy]propoxy}-5-[2-ethyl-4-(4-pentylphenyl)phenyl]-3-(3-hydroxypropyl)phenyl)propan-1-ol D13

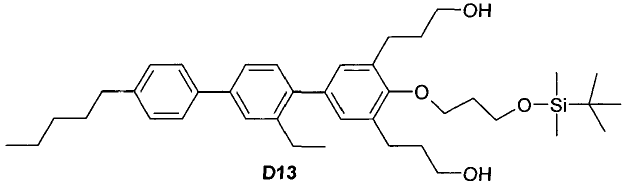

2.9 g (6.0 mmol) tris-Alkohol **C13,** 2.40 g (9.0 mmol) (3-bromopropoxy)-(tert-butyl)dimethylsilane, 1.70 g (12.3 mmol) Kaliumcarbonat werden zu 20 ml N,N-Dimethylformamid gegeben und bei 80°C für 6 h gerührt. Das Reaktionsgemisch wird auf Raumtemperatur abgekühlt, mit Wasser und MTB-Ether versetzt und nach Rühren die Phasen getrennt. Die wässrige Phase wird mit MTB-Ether extrahiert und die vereinigten organischen Phasen mit gesättigte Natriuchloridlösung gewaschen, über Natriumsulfat getrocknet, filtriert und unter Vakuum eingeengt. Das erhaltene Rohprodukt wird mit Toluol / Ethylacetat (4:1) über 50 ml Kieselgel filtriert und die Produktfraktionen vereinigt und unter Vakuum eingeengt.
¹H NMR (500 MHz, CDCl₃)
δ = 0.00 ppm (s, 6H, Si(CH₃)₂), 0.81 (s, 9H, Si(C(CH₃)₃)), 1.03 (t, 6.6 Hz, 3H, CH₃), 1.30 - 1.19 (m, 4H, CH₂), 1.58 - 1.49 (m, 2H, CH₂), 1.67 (quint., 5.5 Hz, 4H, CH₂), 1.88 (quint., 6.23 Hz, 2H, CH₂), 2.61 - 2.50 (m, 8H, CH₂), 3.37 (q, 6.41 Hz, 4H, CH₂), 3.76 (t, 6.2 Hz, 2H, CH₂), 3.79 (t, 5.69 Hz, 2H, CH₂), 4.33 (t, 5.5 Hz, 2H, OH), 6.92 (s, 2H, arom.-H), 7.14 (d, 7.89 Hz, 1H, arom.-H), 7.21 (d, 8.26 Hz, 2H, arom.-H), 7.39 (dd, 7.93, 1.76 Hz, 1H, arom.-H), 7.48 (d, 1.64 Hz, 1H, arom.-H), 7.52 (d, 8.08 Hz, 2H, arom.-H).

### 5) Synthese von 3-(2-{3-[(tert-butyldimethylsilyl)oxy]propoxy}-5-[2-ethyl-4-(4-pentylphenyl)phenyl]-3-{3-[(2-methylprop-2-enoyl)oxy]propyl}phenyl)propyl 2-methylprop-2-enoat E13

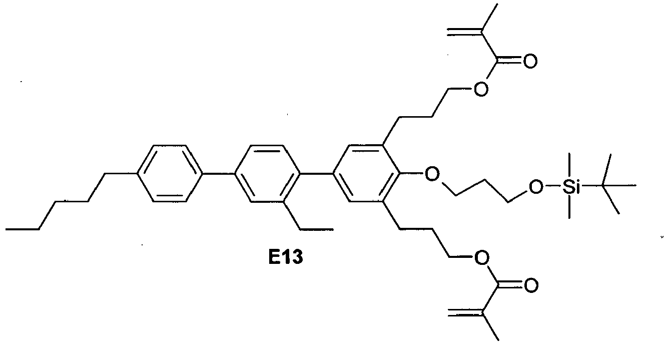

2.5 g (4.0 mmol) bis-Alkohol **D13**, 1.40 ml (16.5 mmol) Methacrylsäure (stabilisiert mit Hydrochinonmonomethylether) und 55.0 mg (0.45 mmol) 4-(Dimethylamino)-pyridin werden in 25 ml Dichlormethan (DCM) gelöst und auf 2°C gekühlt. Es wird nun eine Lösung aus 2.48 ml (16.52 mmol) 1-(3-Dimethylaminopropyl)-3-ethylcarbodiimid in 25 ml DCM bei 2-5°C tropfenweise zugegeben und für weitere 18 h gerührt. Das Reaktionsgemisch wird direkt über 100 ml Kieselgel mit DCM filtriert und die Produktfraktionen vereinigt. Das erhaltene Rohprodukt wird mit DCM / Heptan (4:1) an 200 ml Kieselgel und 20 ml Alox basisch filtriert und die Produktfraktionen unter Vakuum eingeengt.

### 6) Synthese von 3-{5-[2-ethyl-4-(4-pentylphenyl)phenyl]-2-(3-hydroxypropoxy)-3-{3-[(2-methylprop-2-enoyl)oxy]propyl}phenyl}propyl 2-methylprop-2-enoate 13

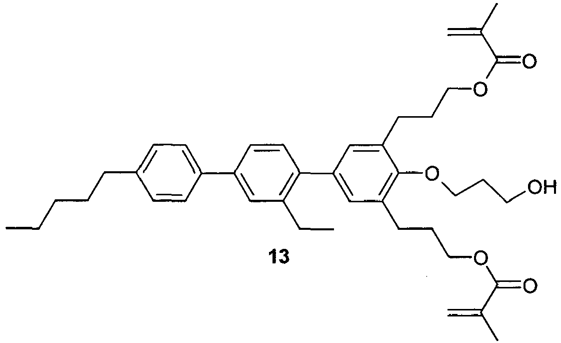

3.1 g (4.0 mmol) Ester **E13** wird in 40 ml Tetrahydrofuran (THF) vorgelegt und auf 2°C gekühlt. Es wird nun langsam mit 2.40 ml (4.80 mmol) Salzsäure (2 N) versetzt und anschließend für 4 h bei Raumtemperatur (RT) gerührt. Nach vollständiger Umsetzung wird das Reaktionsgemisch vorsichtig mit Natriumhydrogen-carbonat neutralisiert und mit MTB-Ether versetzt und gerührt. Die organische Phase wird abgetrennt, die Wasserphase mit MTB-Ether extrahiert, die organischen Phasen vereinigt, mit Wasser gewaschen, über Natriumsulfat getrocknet, filtriert und unter Vakuum bei maximal 30°C eingeengt. Das erhaltene Rohprodukt (viskoses Öl) wird mit Heptan / Ethylacetat (2:1) über 150 ml Kieselgel filtriert und die Produktfraktionen unter Vakuum bei maximal 30°C eingeengt. Das erhaltene Produkt (hochviskoses Öl) wird bei Raumtemperatur am Ölpumpenvakuum (10⁻² mbar) für 72 h getrocknet.
Schmelzpunkt: hochviskoses Öl bei Raumtemperatur.
Tg (Glaspunkt) -39°C
MS (EI): 654.5 [M⁺]
¹H NMR (500 MHz, CDCl₃)
δ = 0.94 ppm (t, 7.02 Hz, 3H, CH₃), 1.18 (t, 7.56 Hz, 3H, CH₃), 1.44 - 1.36 (m, 4H, CH₂), 1.57 (s_{(breit)}, 1H, OH), 1.69 (quint., 8.25 Hz, 2H, CH₂), 1.98 (s, 6H, CH₃), 2.14-2.04 (m, 6H, CH₂), 2.67 (q, 7.49 Hz, 4H, CH₂), 2.81 (t, 7.72 Hz, 4H, CH₂), 3.97 (t_{(breit)}, 5.77 Hz, 2H, CH₂), 4.03 (t, 5.94 Hz, 2H, CH₂), 4.26 (t, 6.47 Hz, 4H, CH₂), 5.58 (t, 1.58 Hz, 1H), 6.13 (s, 1H), 7.06 (s, 2H, arom.-H), 7.26 (d, 7.87 Hz, 1H, arom.-H), 7.29 (d, 2H, arom.-H), 7.46 (dd, 7.87, 1.9 Hz, 1H, arom.-H), 7.53 (d, 1.78 Hz, 1H, arom.-H), 7.57 (d, 8.12 Hz, 2H, arom.-H).

### Beispiele 5 bis 165

Analog zu Beispiel 1 bis 3, sowie den Schemata 1 bis 3 werden die folgenden Verbindungen hergestellt.

| Beispiel | Struktur |
|---|---|
| 5. | 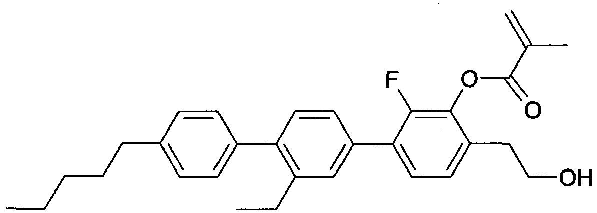 |
| 6. | 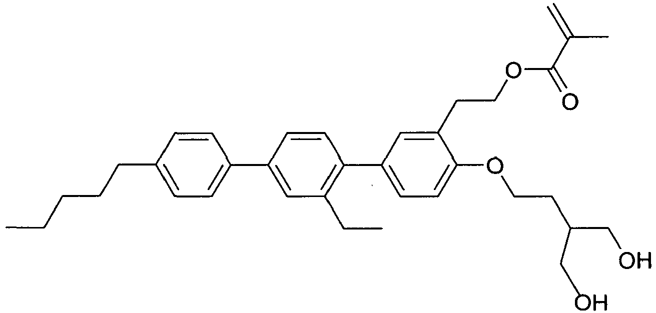 |
| 7. | 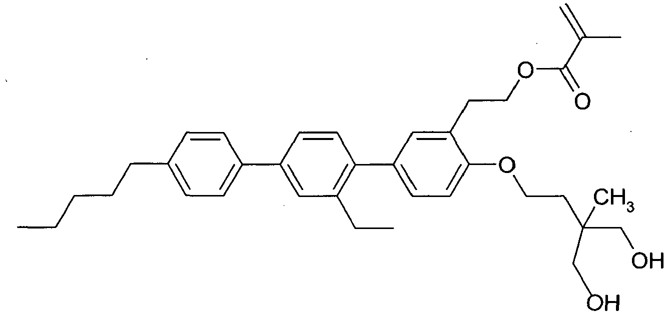 |
| 8. | 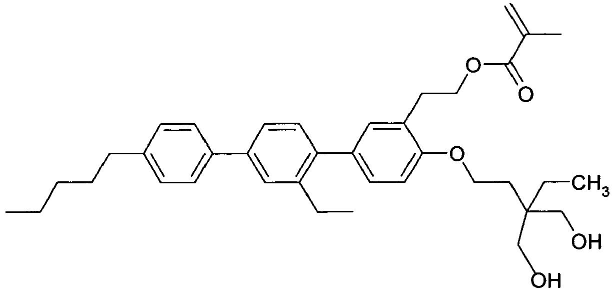 |
| 9. | 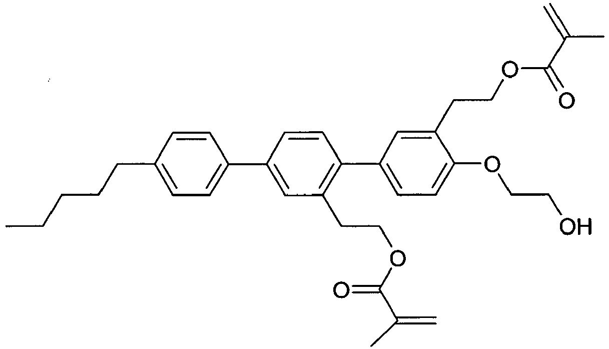 |
| 10. | 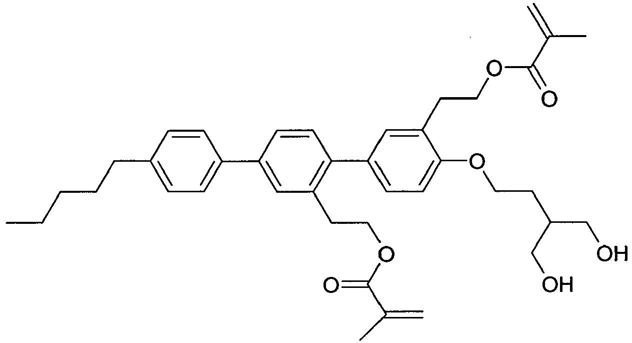 |
| 11. | 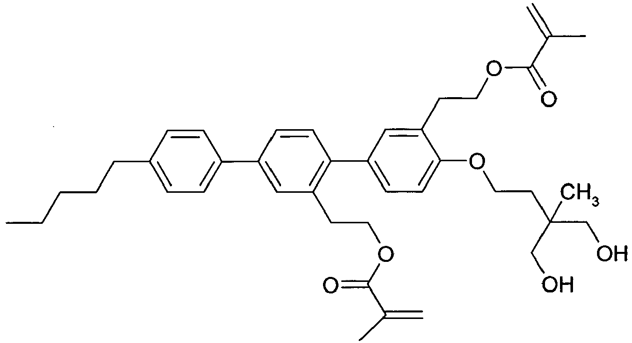 |
| 12. | 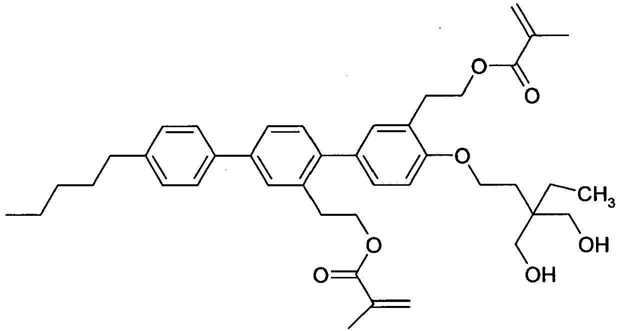 |
| 13. | 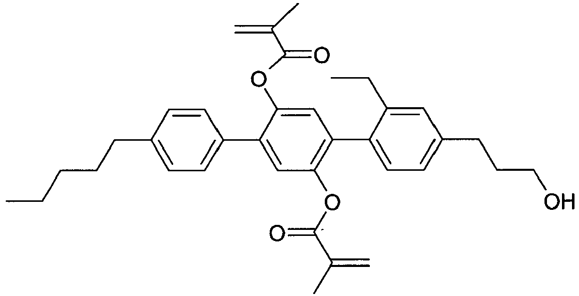 |
| 14. | 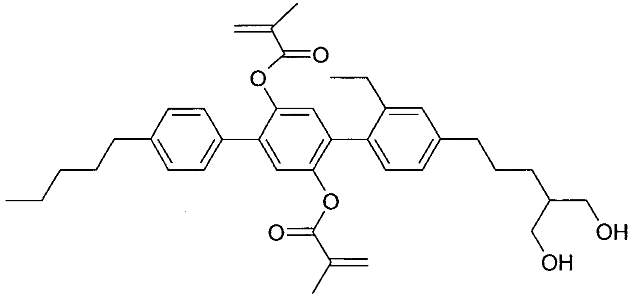 |
| 15. | 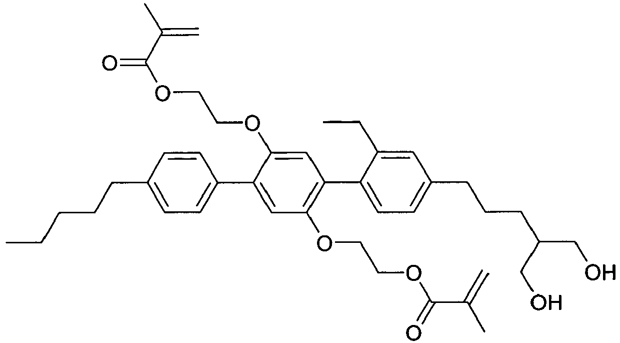 |
| 16. | 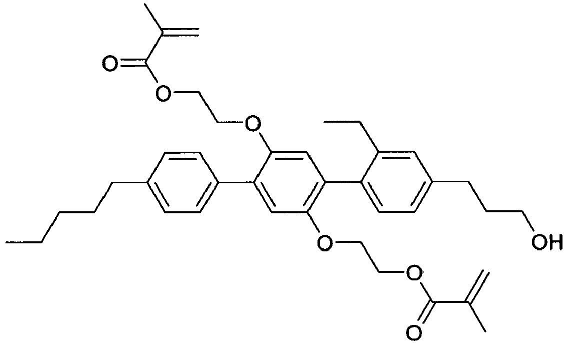 |
| 17. | 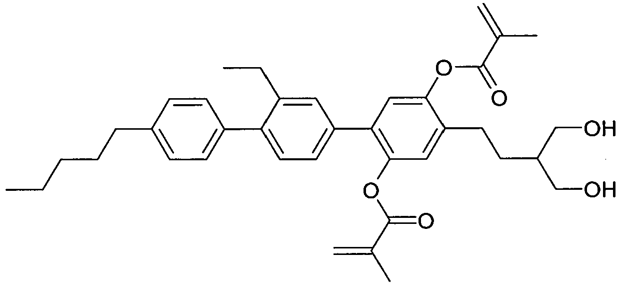 |
| 18. | 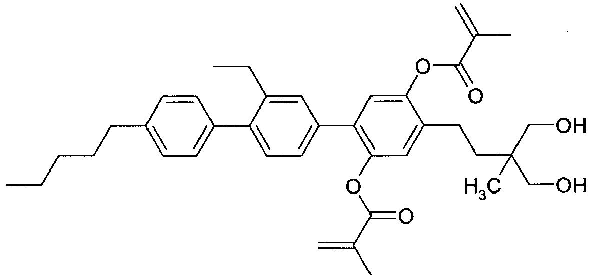 |
| 19. | 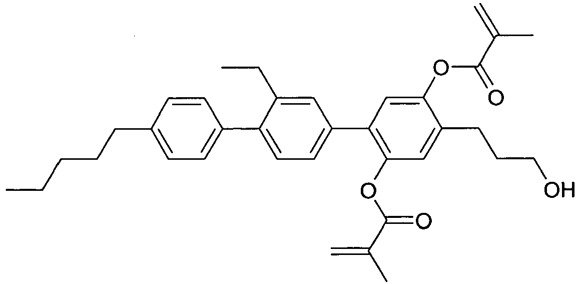 |
| 20. | 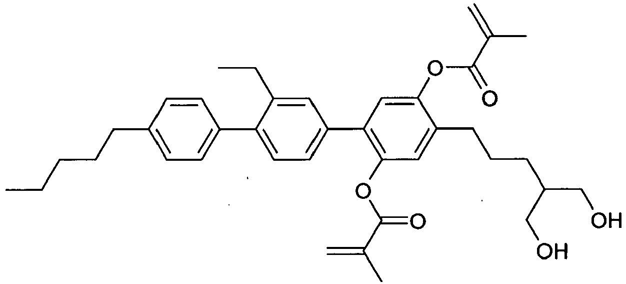 |
| 21. | 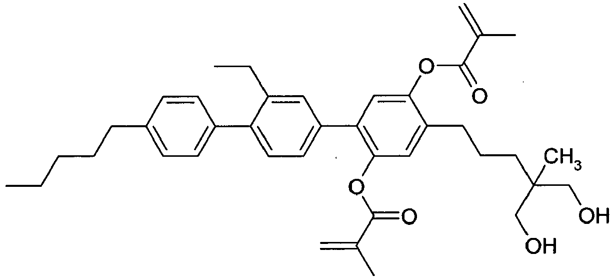 |
| 22. | 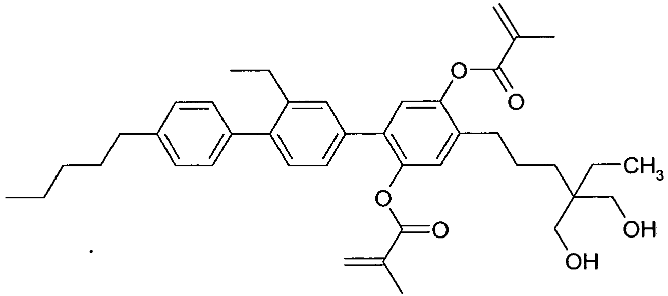 |
| 23. | 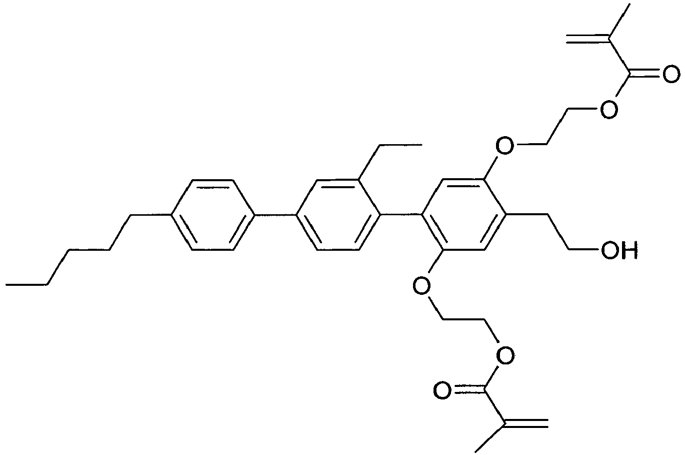 |
| 24. | 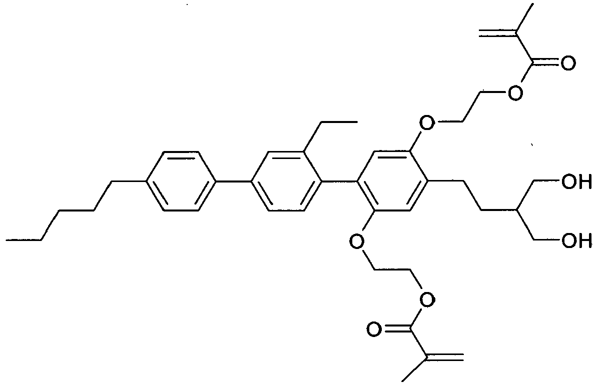 |
| 25. | 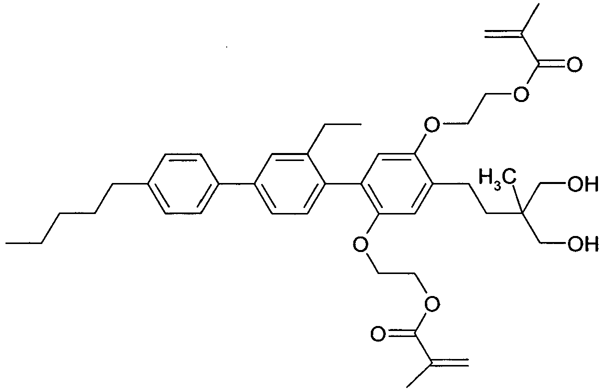 |
| 26. | 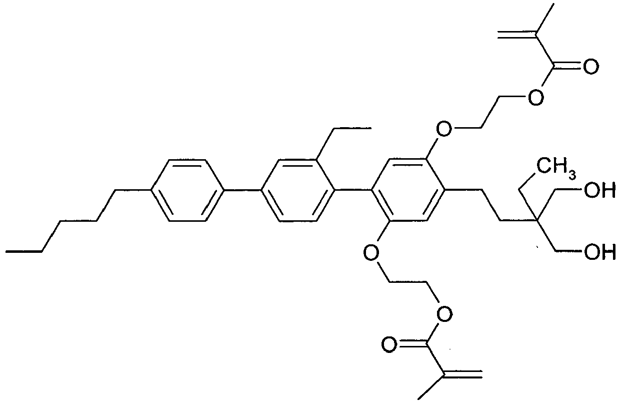 |
| 27. | 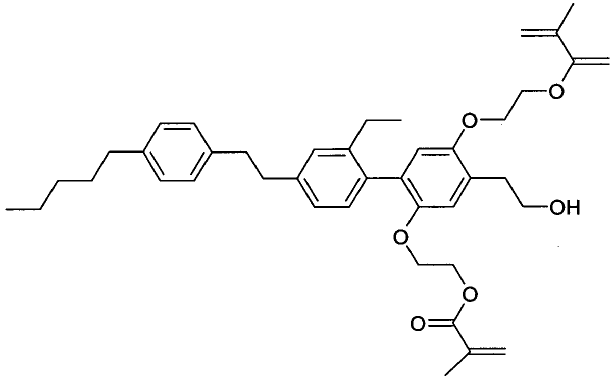 |
| 28. | 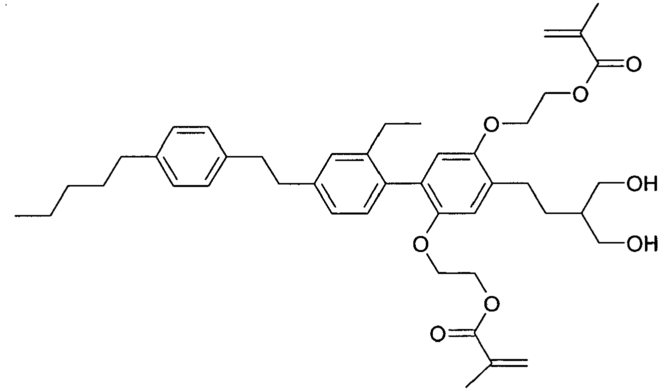 |
| 29. | 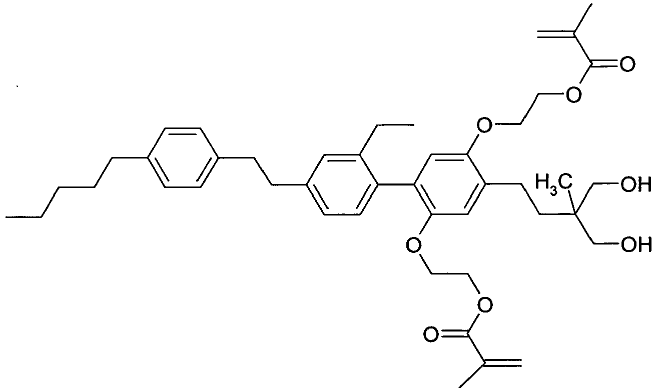 |
| 30. | 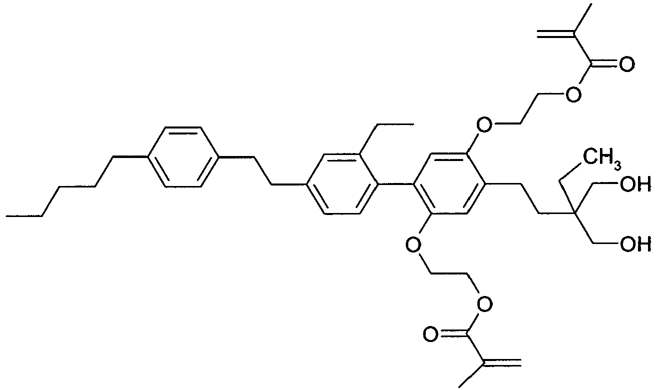 |
| 31. | 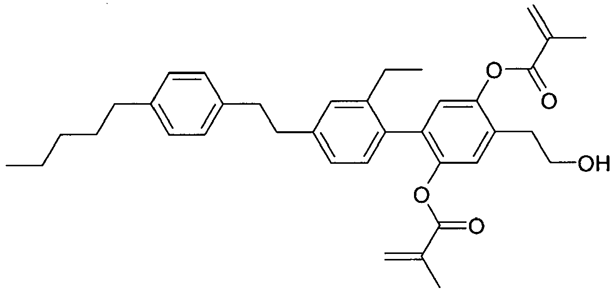 |
| 32. | 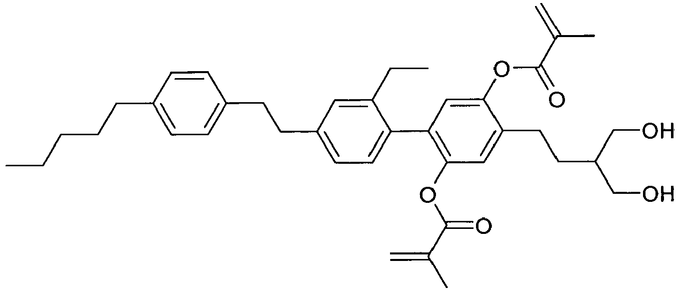 |
| 33. | 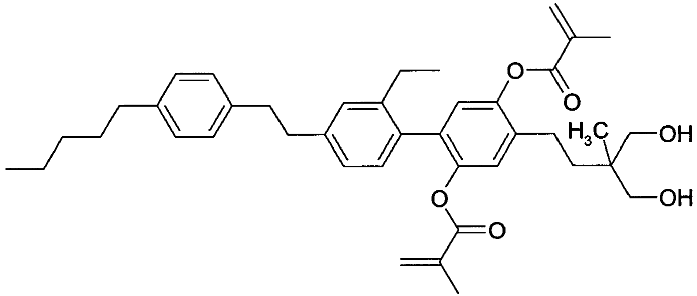 |
| 34. | 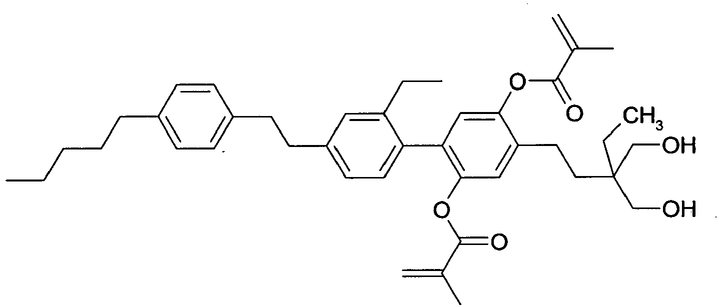 |
| 35. | 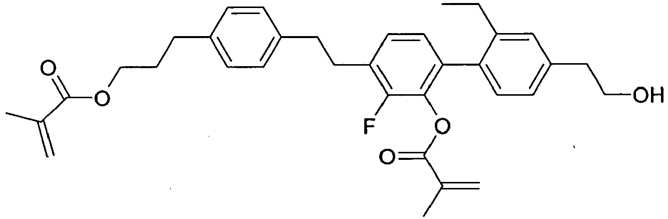 |
| 36. | 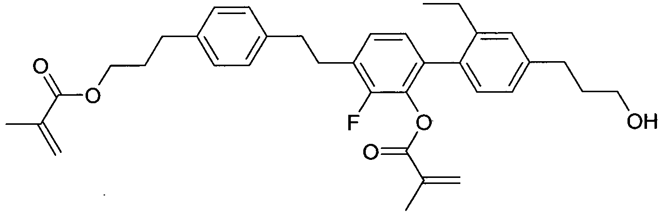 |
| 37. | 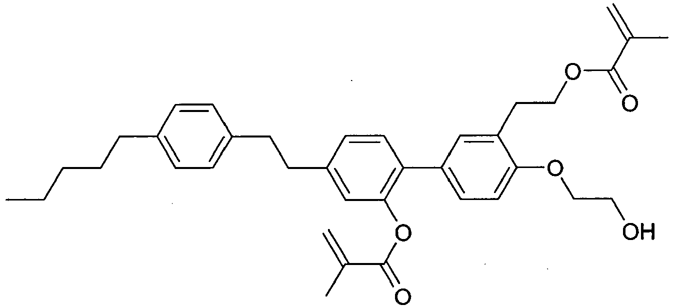 |
| 38. | 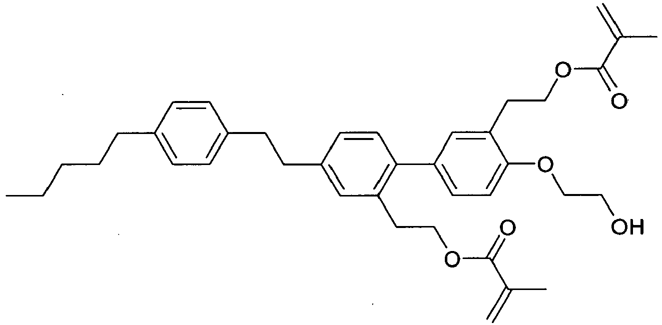 |
| 39. | 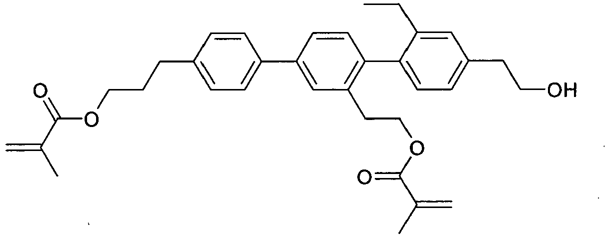 |
| 40. | 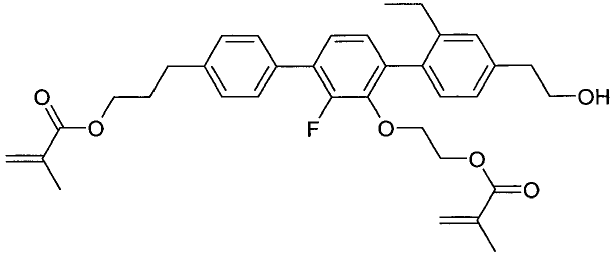 |
| 41. | 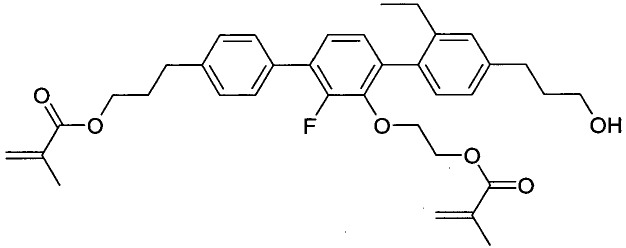 |
| 42. | 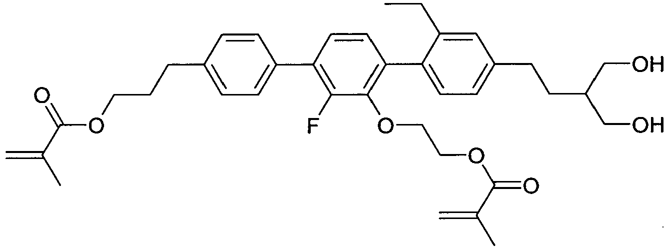 |
| 43. | 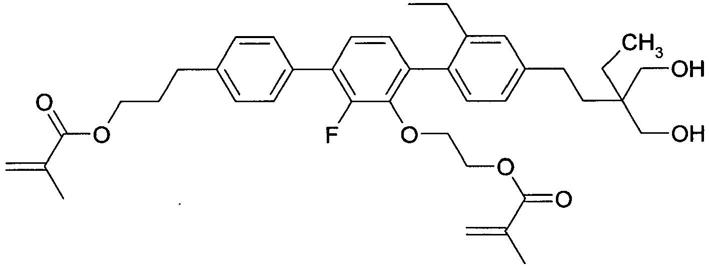 |
| 44. | 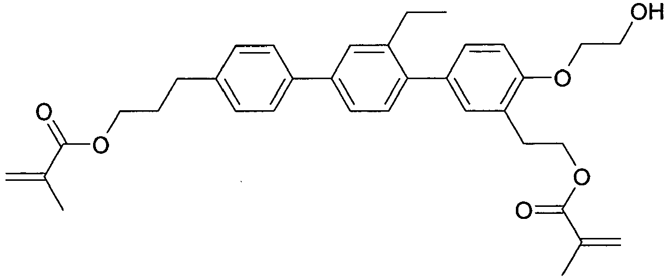 |
| 45. | 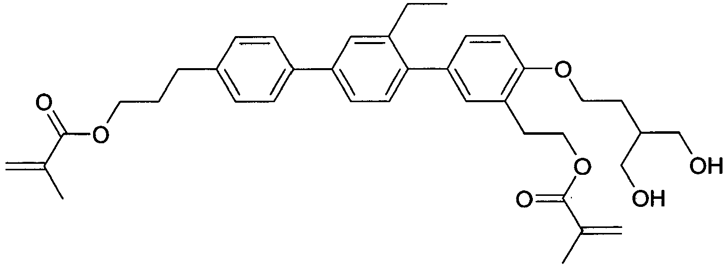 |
| 46. | 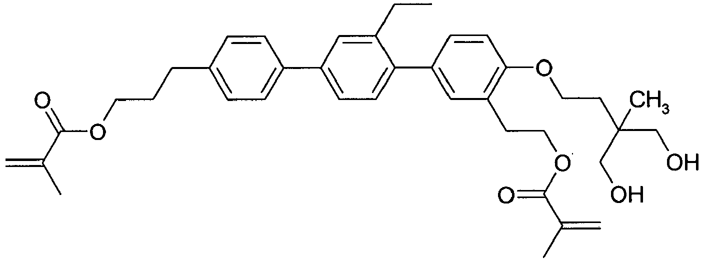 |
| 47. | 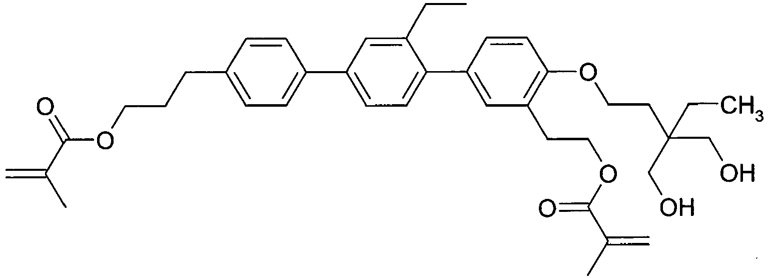 |
| 48. | 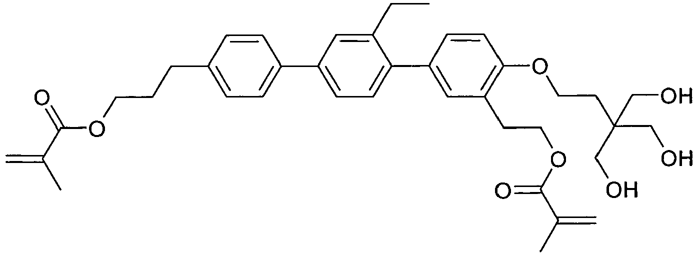 |
| 49. | 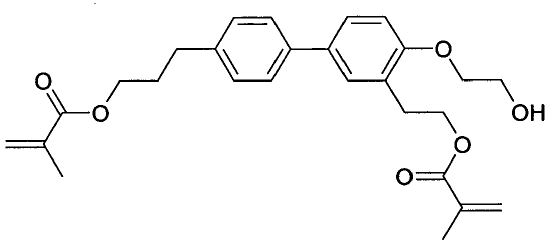 |
| 50. | 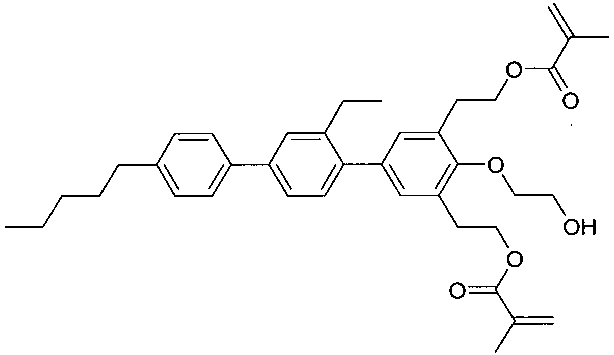 |
| 51. | 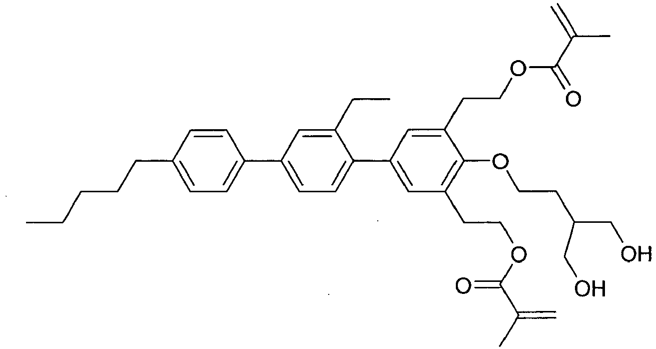 |
| 52. | 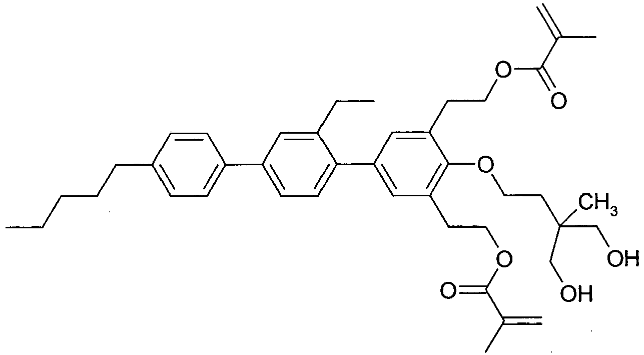 |
| 53. | 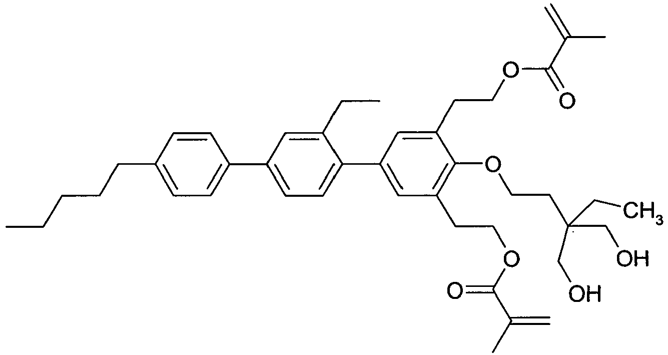 |
| 54. | 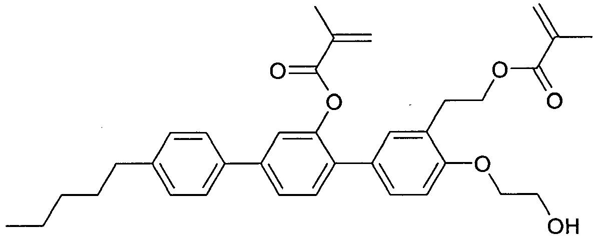 |
| 55. | 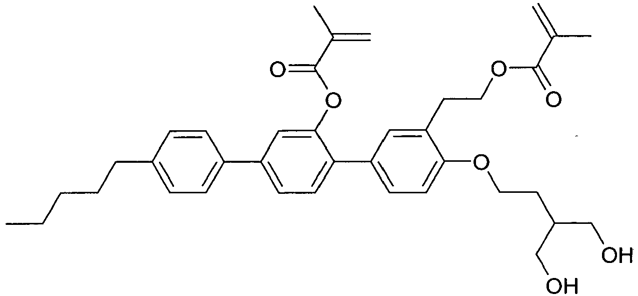 |
| 56. | 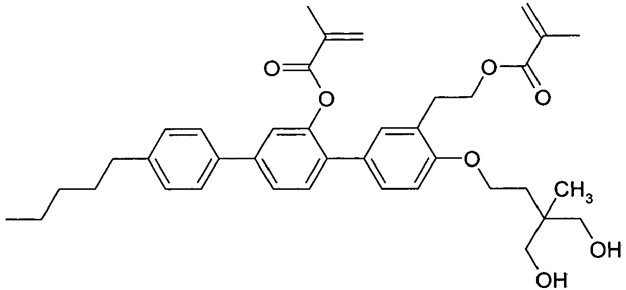 |
| 57. | 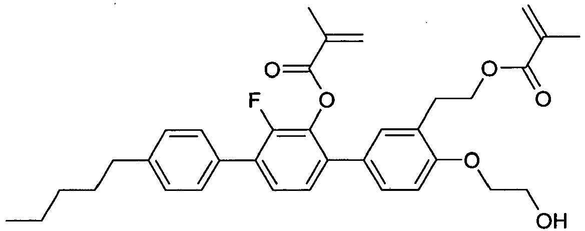 |
| 58. | 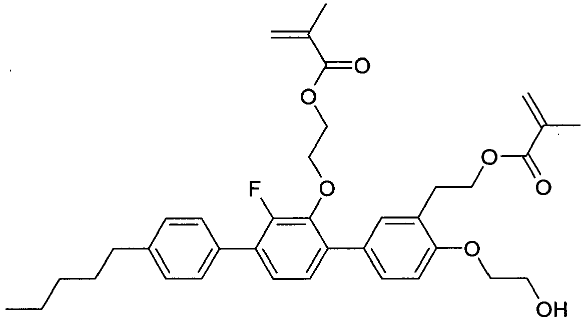 |
| 59. | 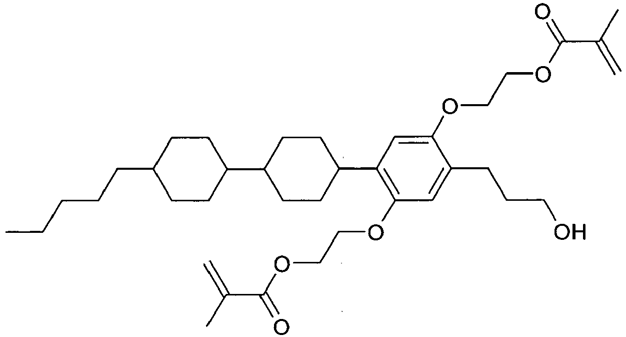 |
| 60. | 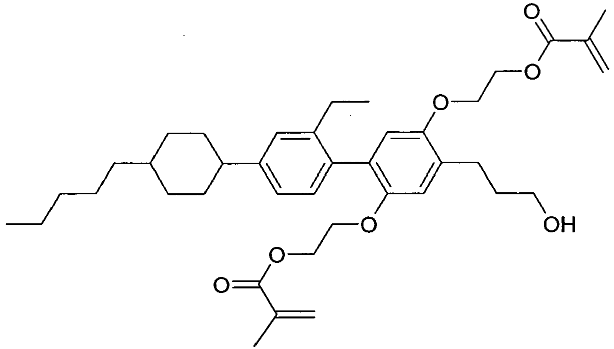 |
| 61. | 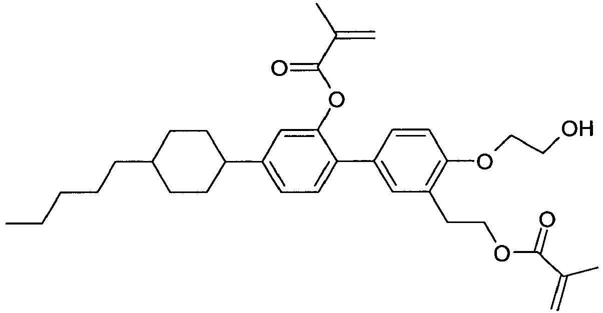 |
| 62. | 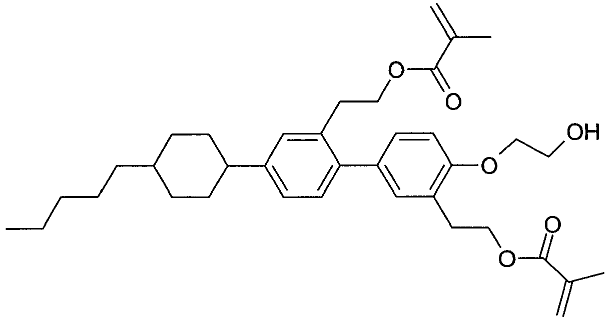 |
| 63. | 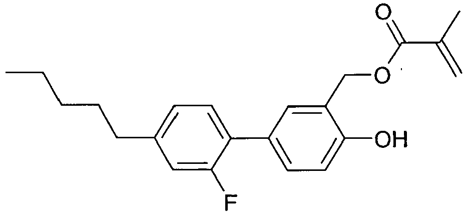 |
| 64. | 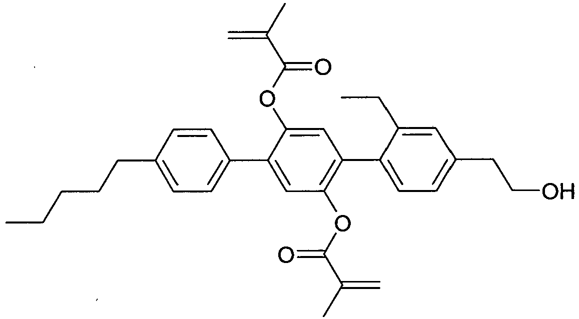 |
| 65. | 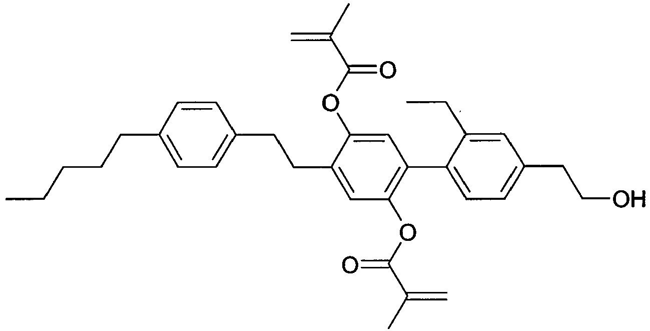 |
| 66. | 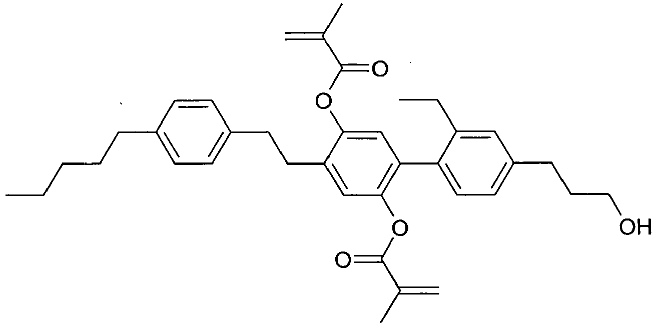 |
| 67. | 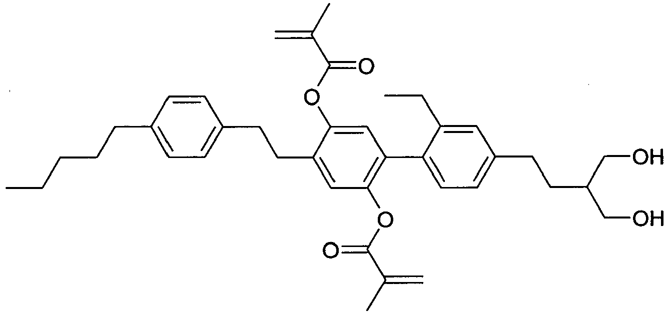 |
| 68. | 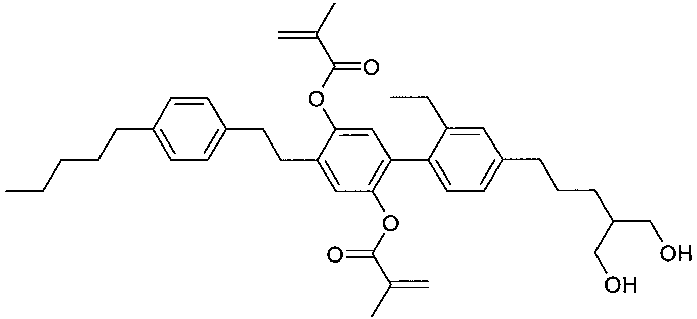 |
| 69. | 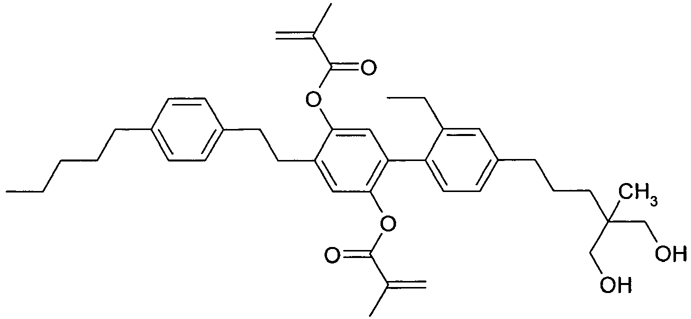 |
| 70. | 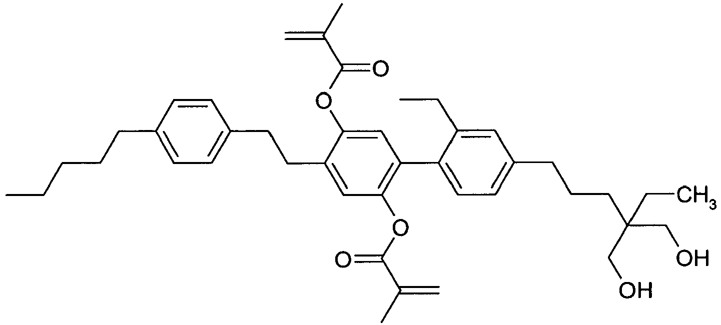 |
| 71. | 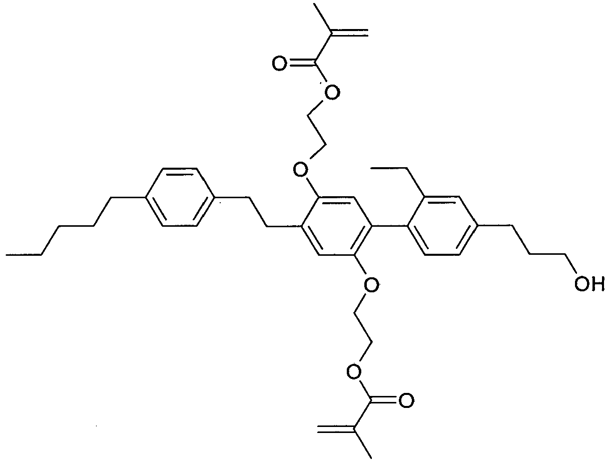 |
| 72. | 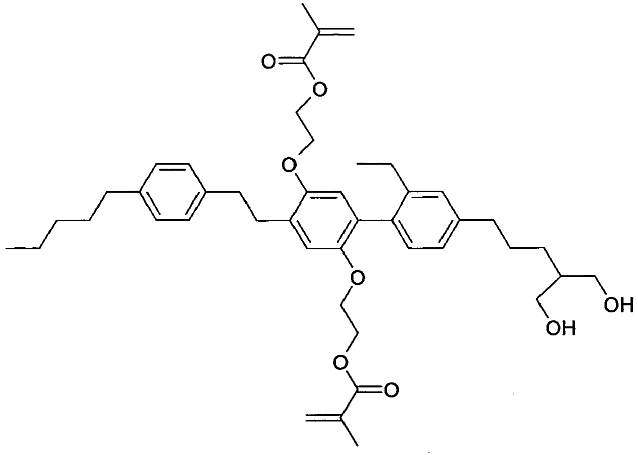 |
| 73. | 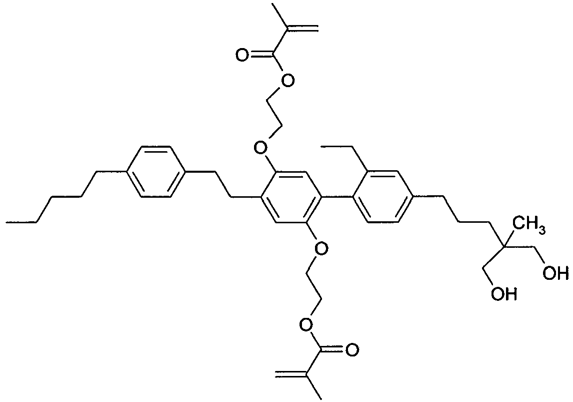 |
| 74. | 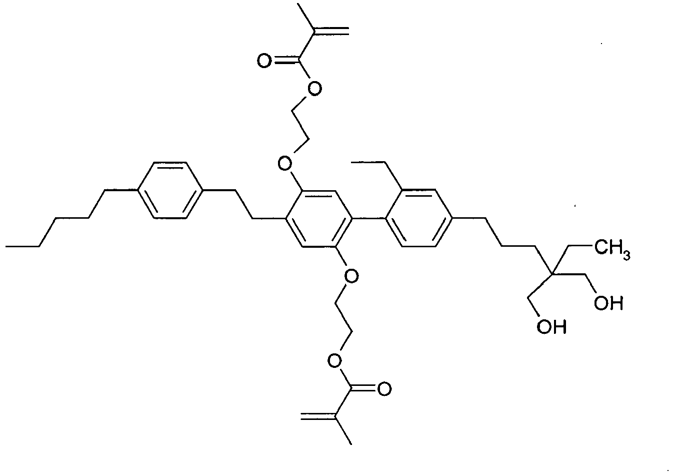 |
| 75. | 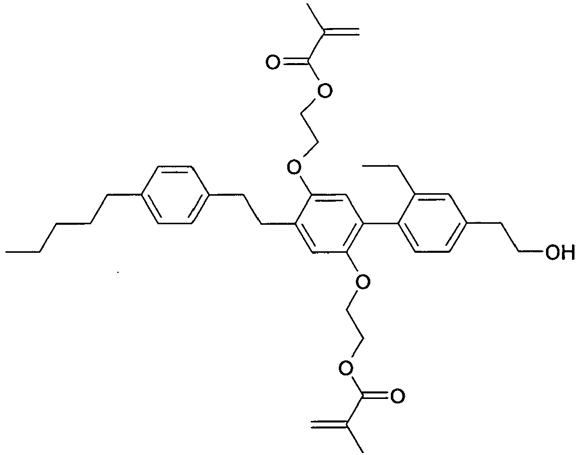 |
| 76. | 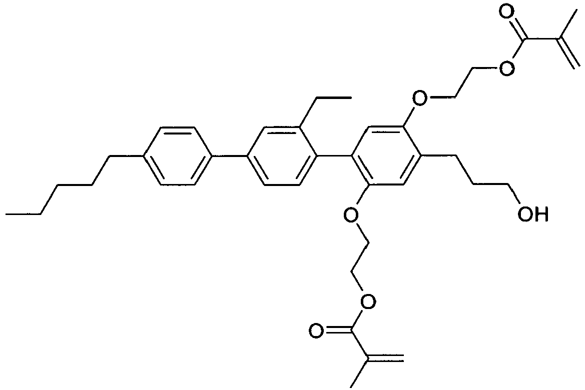 |
| 77. | 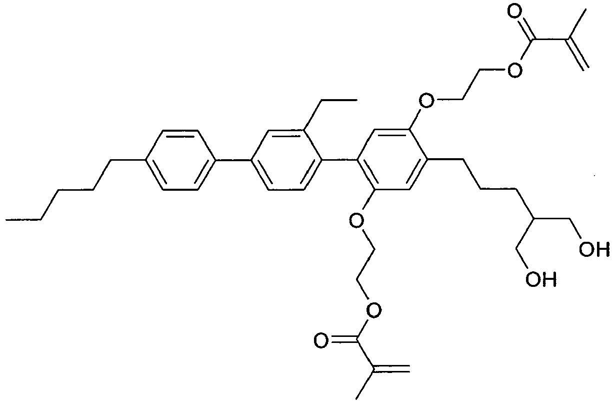 |
| 78. | 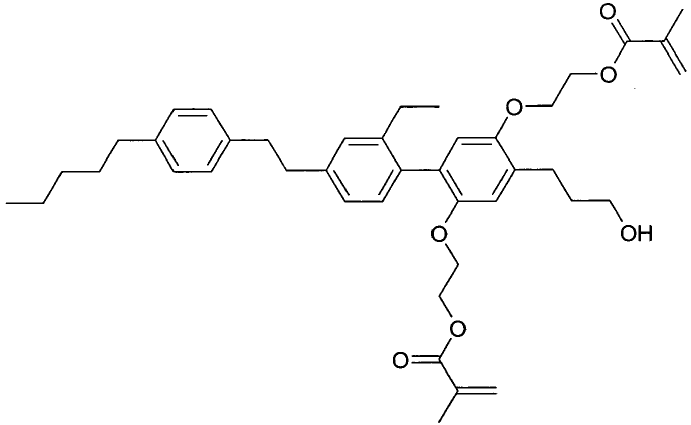 |
| 79. | 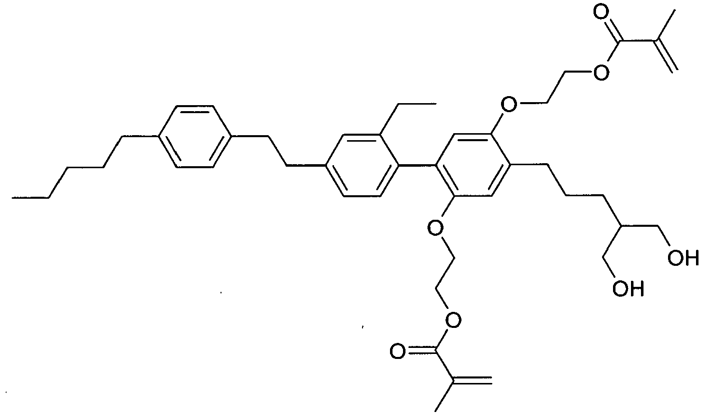 |
| 80. | 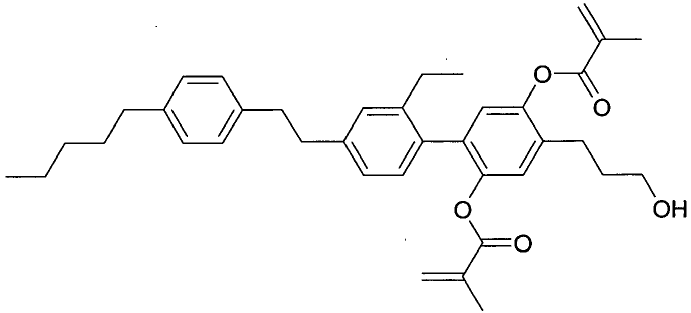 |
| 81. | 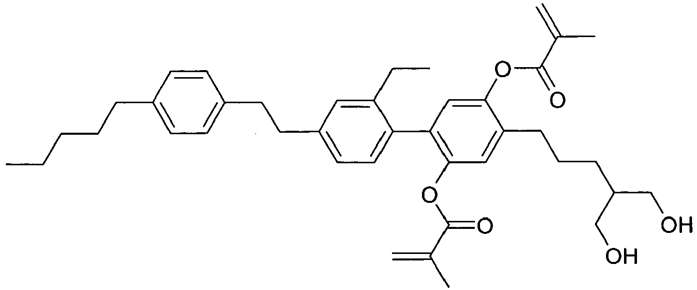 |
| 82. | 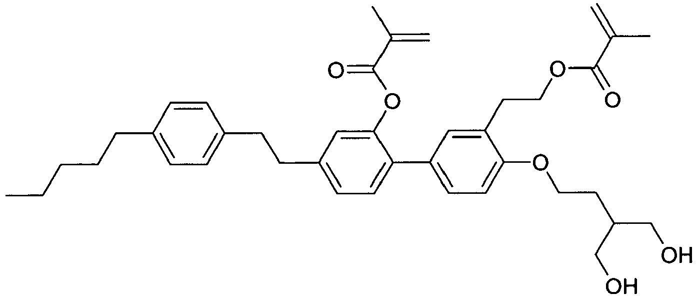 |
| 83. | 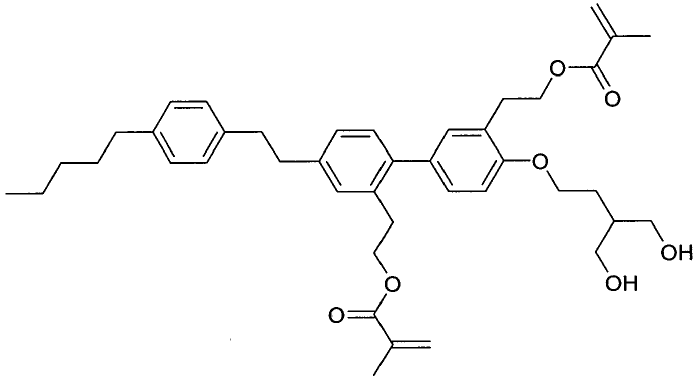 |
| 84. | 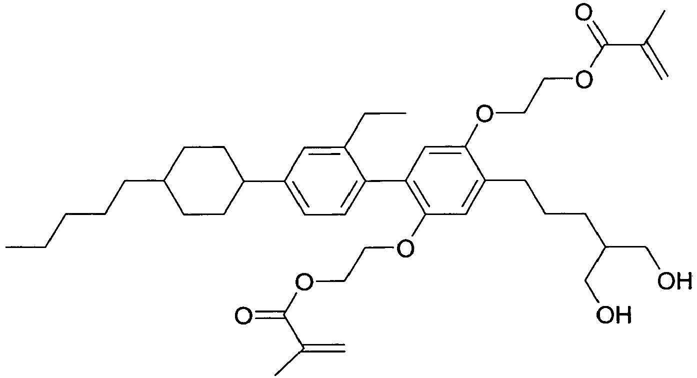 |
| 85. | 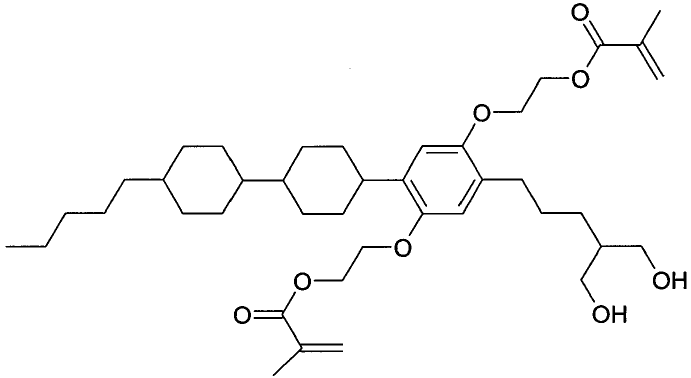 |
| 86. | 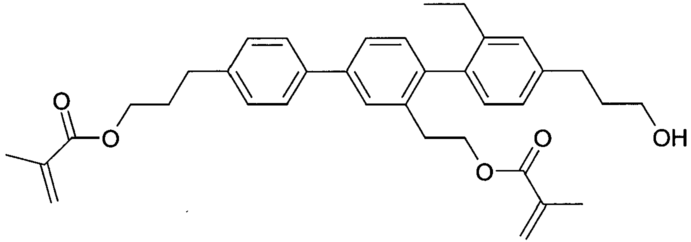 |
| 87. | 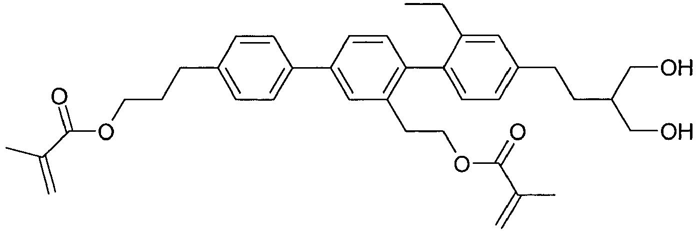 |
| 88. | 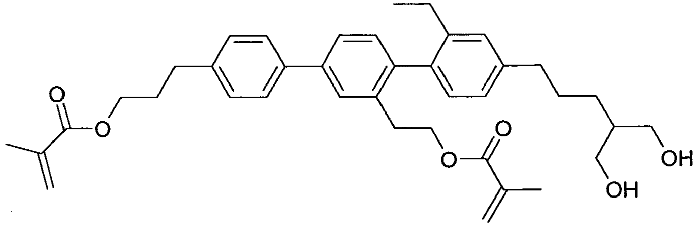 |
| 89. | 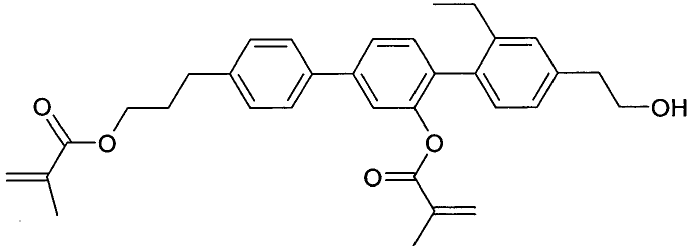 |
| 90. | 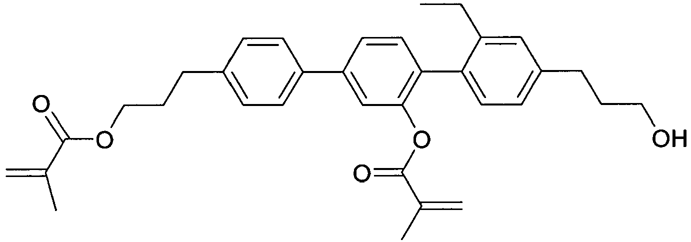 |
| 91. | 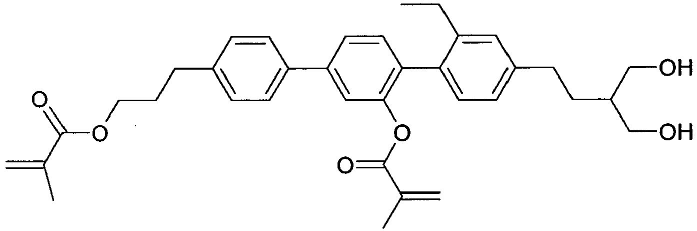 |
| 92. | 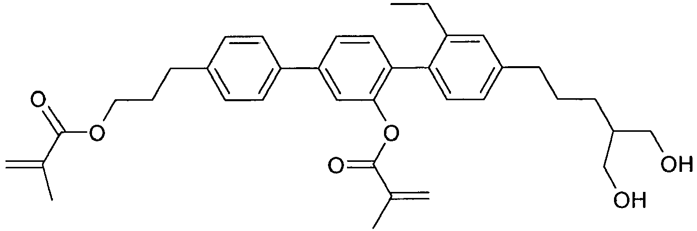 |
| 93. | 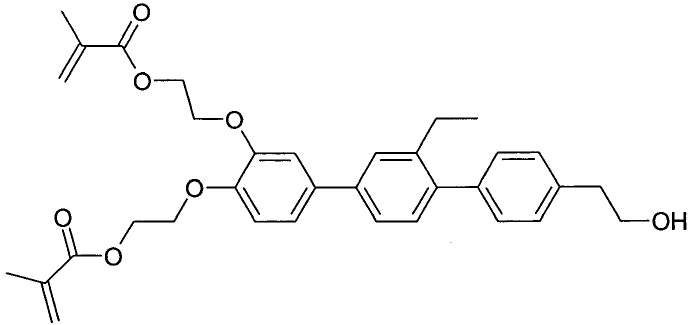 |
| 94. | 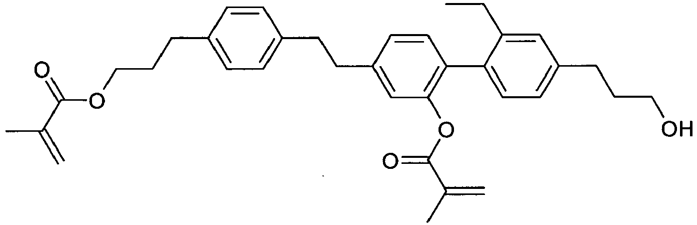 |
| 95. | 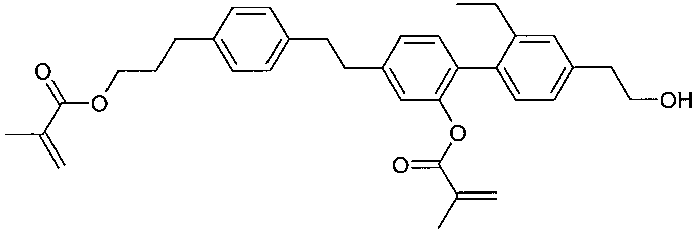 |
| 96. | 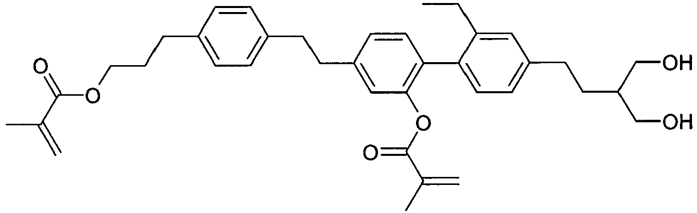 |
| 97. | 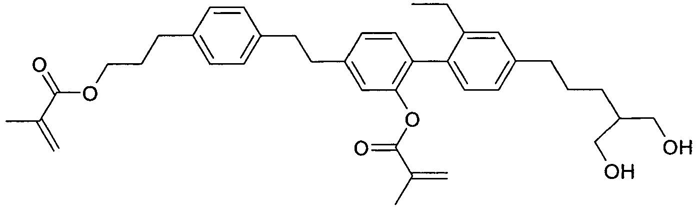 |
| 98. | 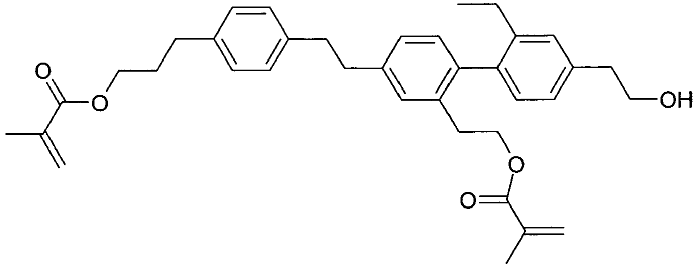 |
| 99. | 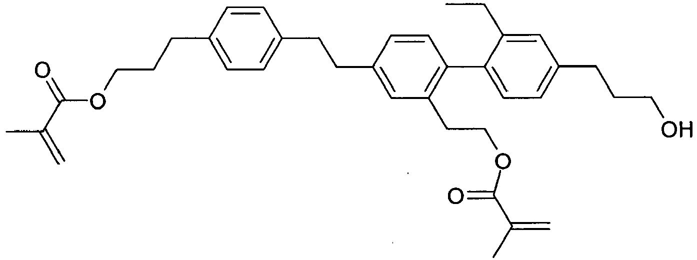 |
| 100. | 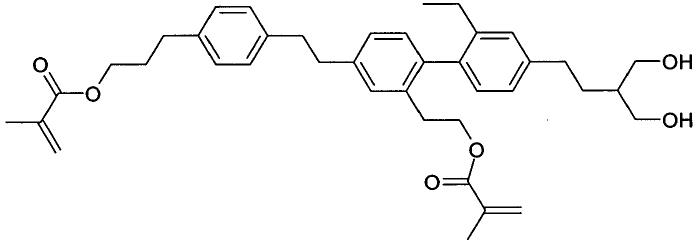 |
| 101. | 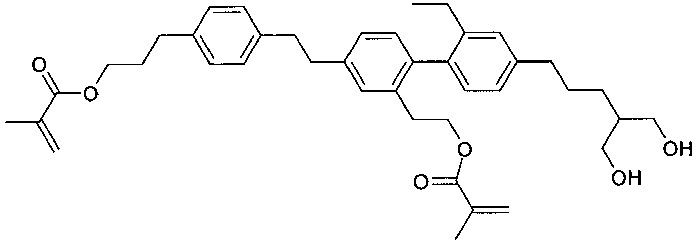 |
| 102. | 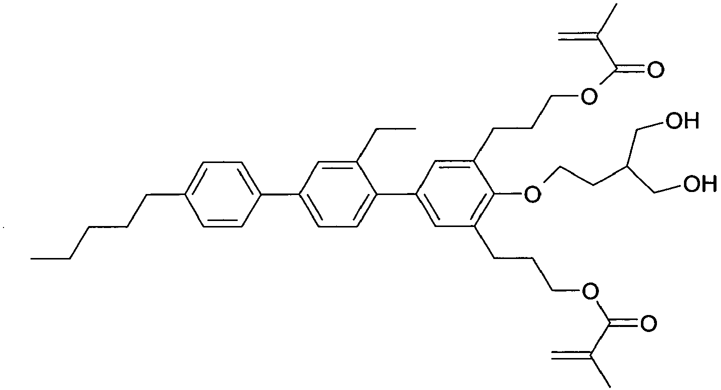 |
| 103. | 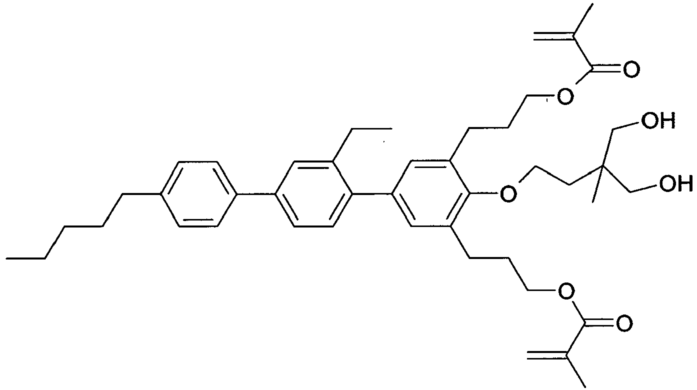 |
| 104. | 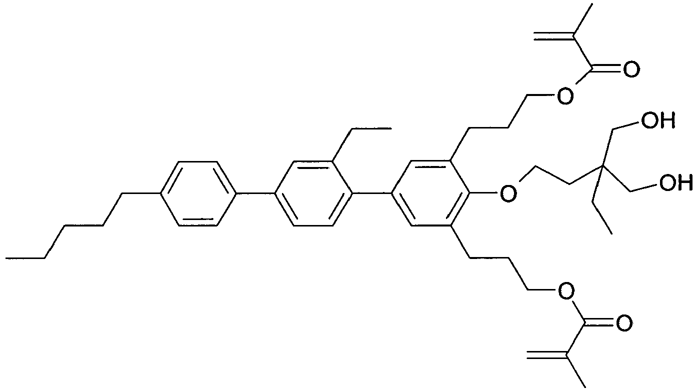 |
| 105. | 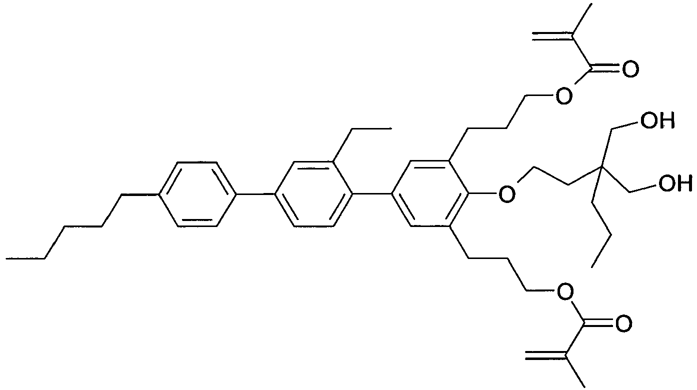 |
| 106. | 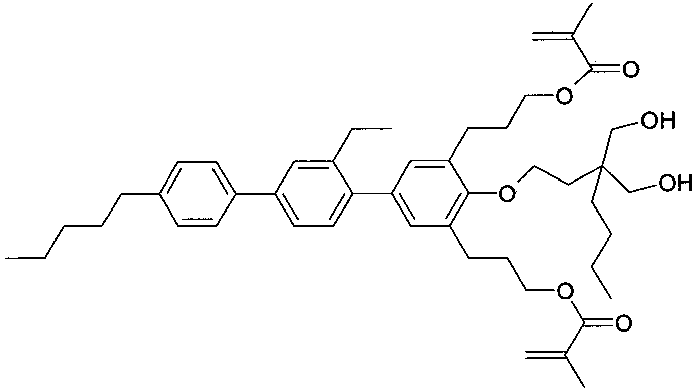 |
| 107. | 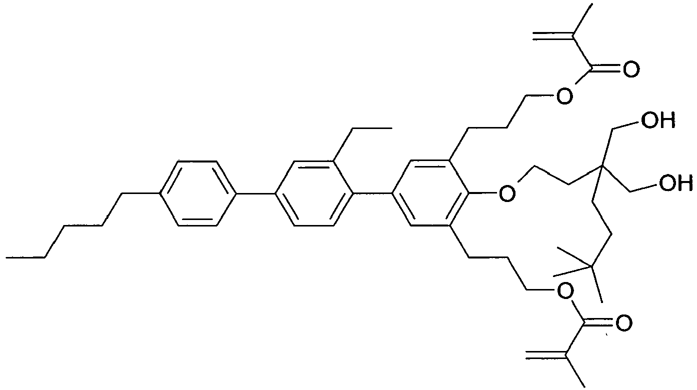 |
| 108. | 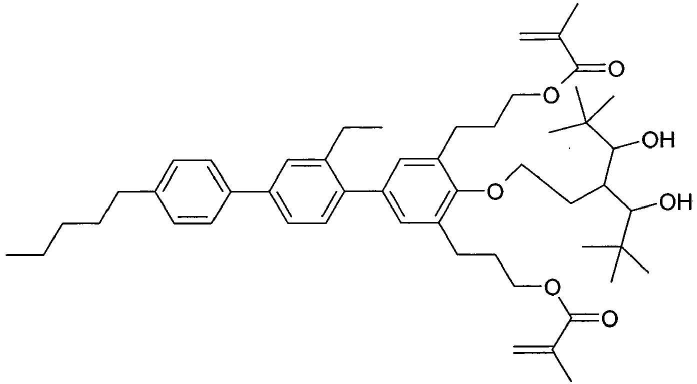 |
| 109. | 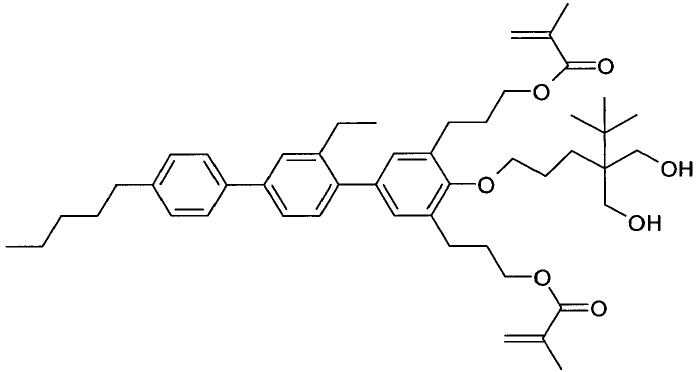 |
| 110. | 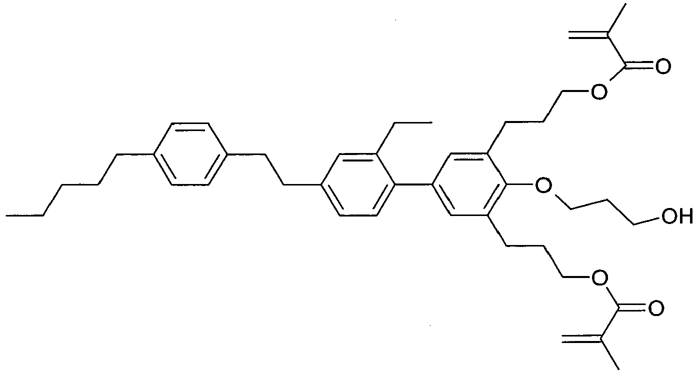 |
| 111. | 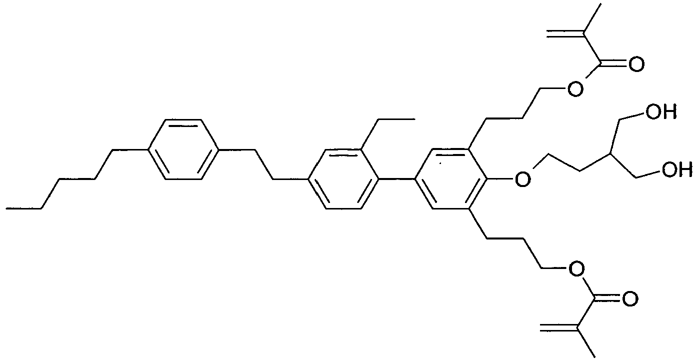 |
| 112. | 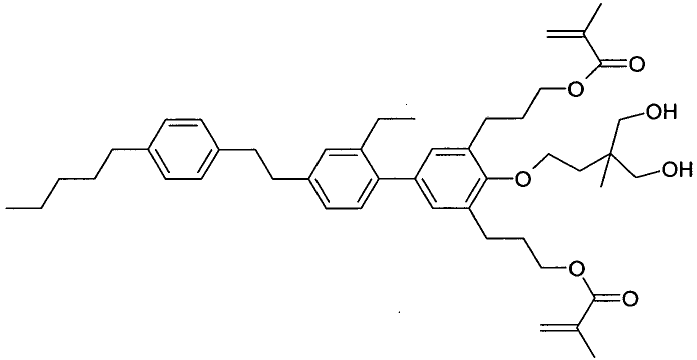 |
| 113. | 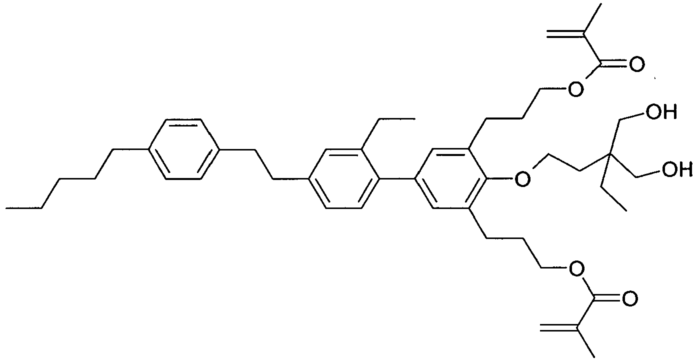 |
| 114. | 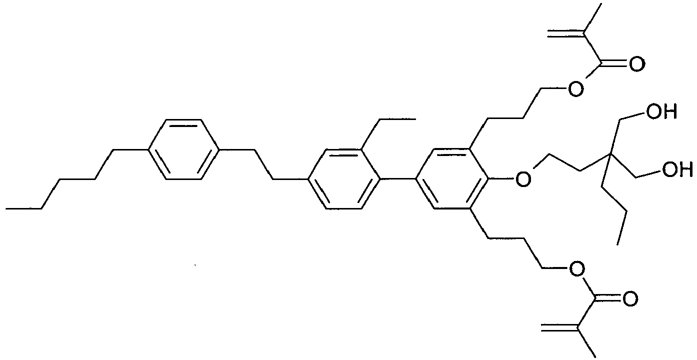 |
| 115. | 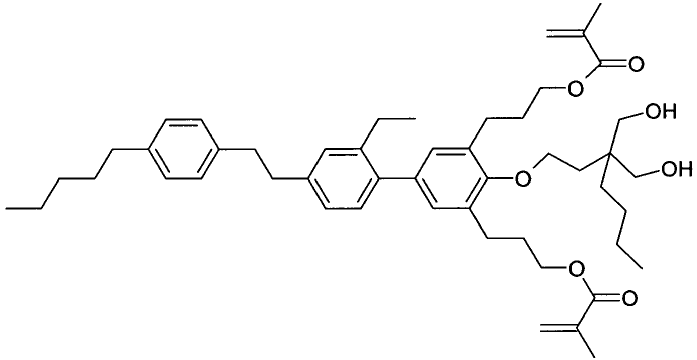 |
| 116. | 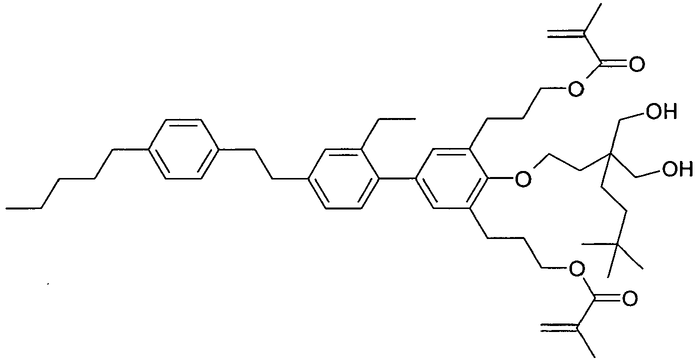 |
| 117. | 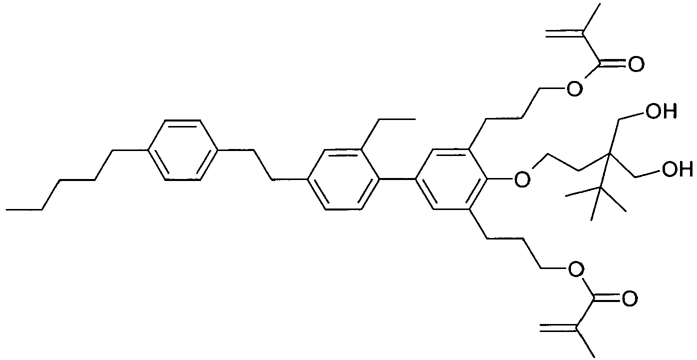 |
| 118. | 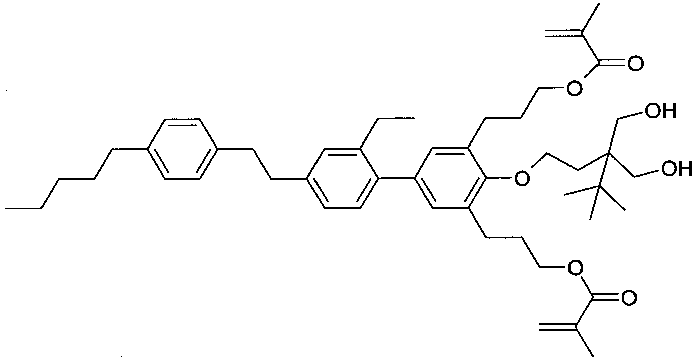 |
| 119. | 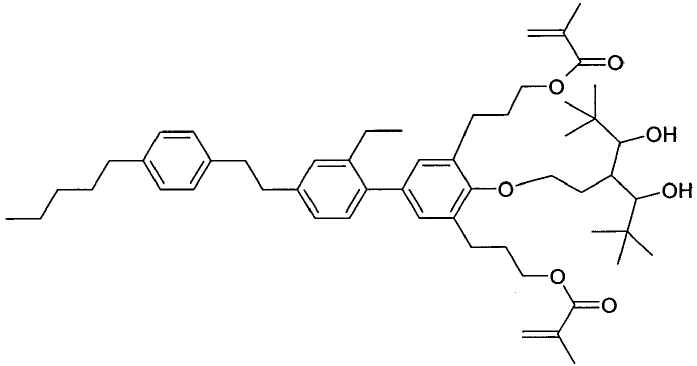 |
| 120. | 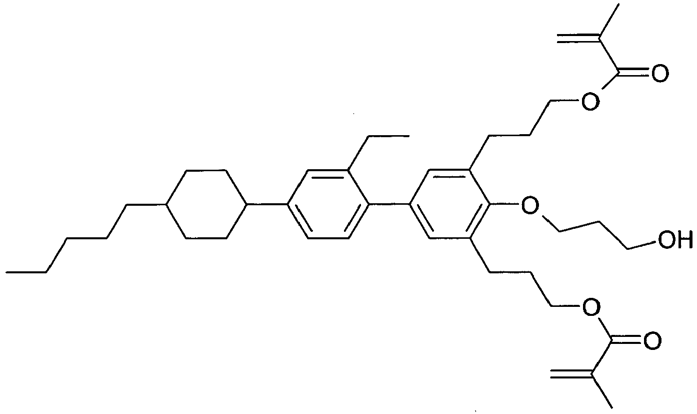 |
| 121. | 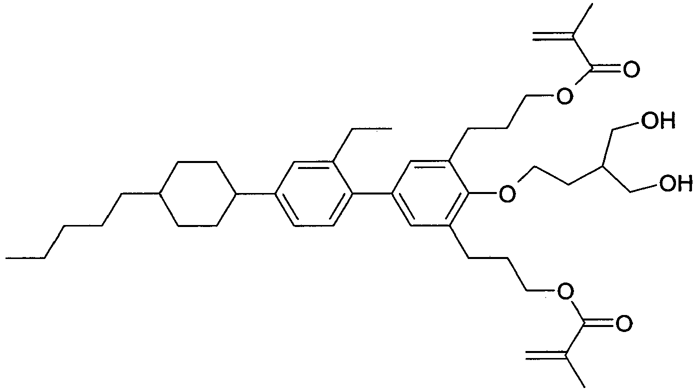 |
| 122. | 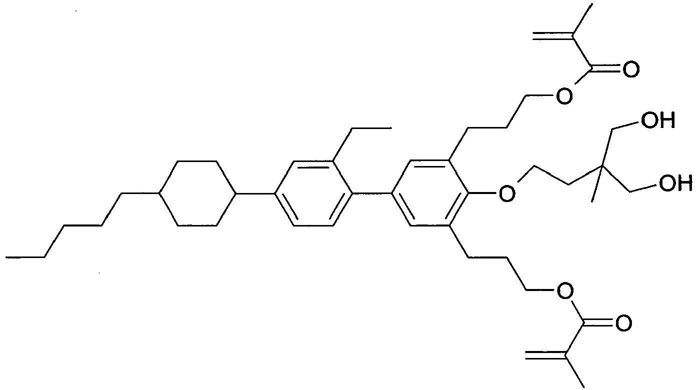 |
| 123. | 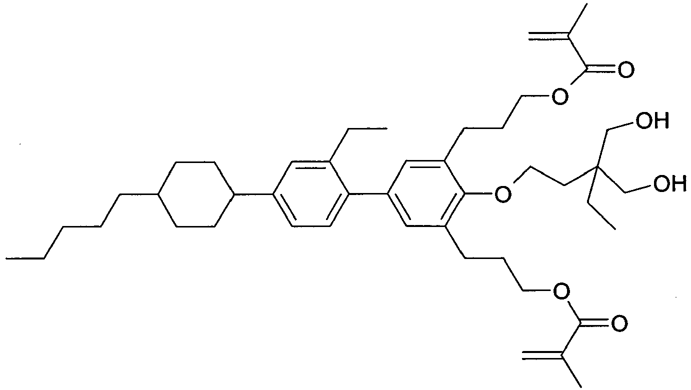 |
| 124. | 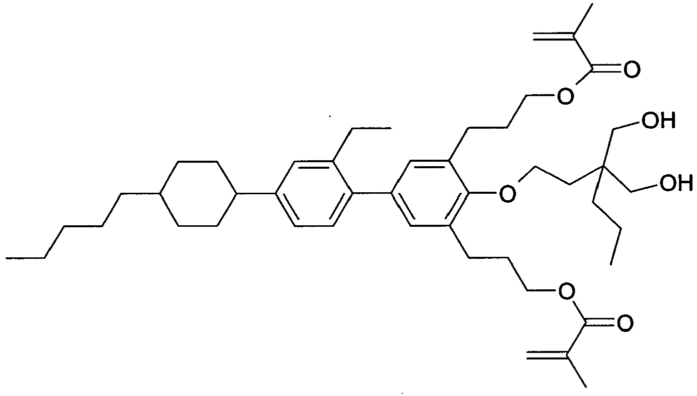 |
| 125. | 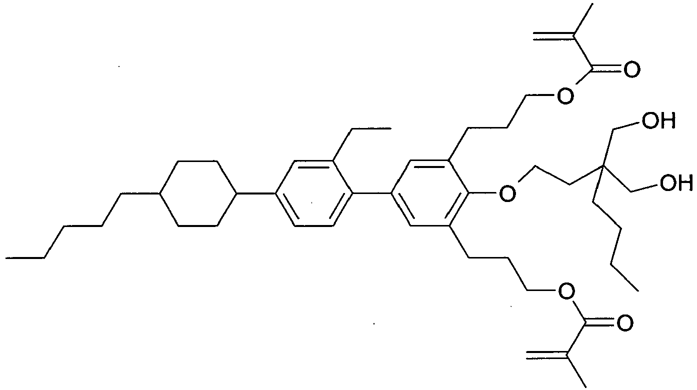 |
| 126. | 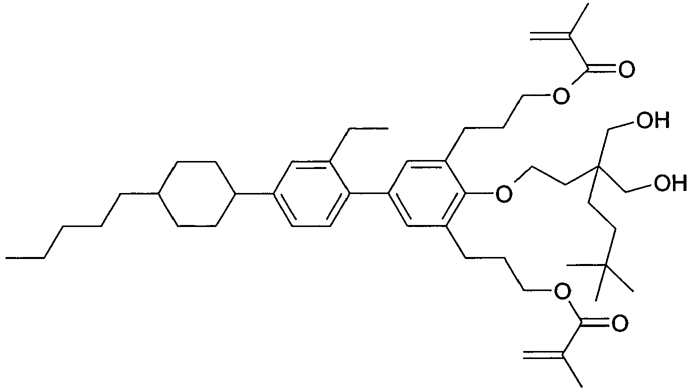 |
| 127. | 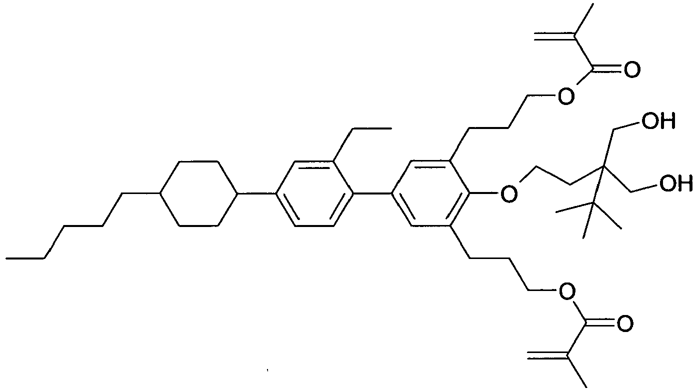 |
| 128. | 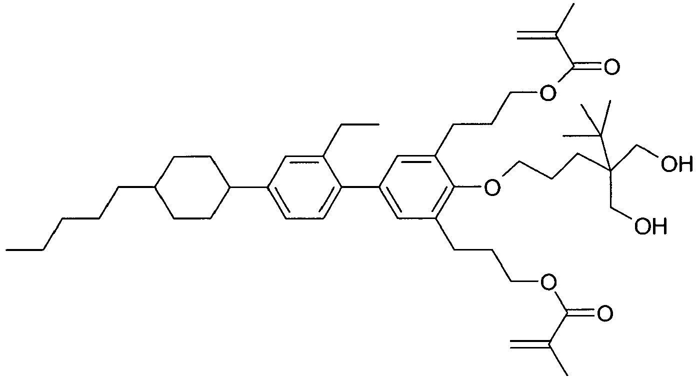 |
| 129. | 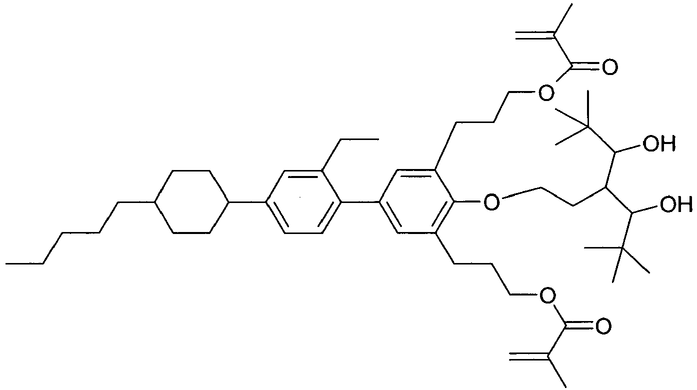 |
| 130. | 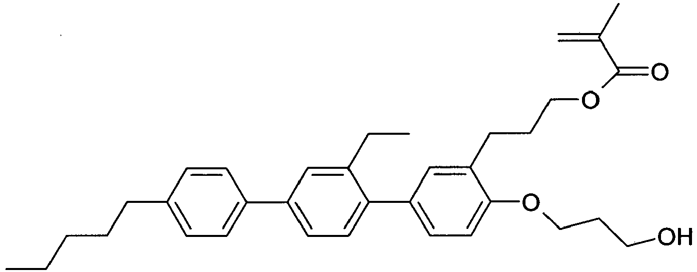 |
| 131. | 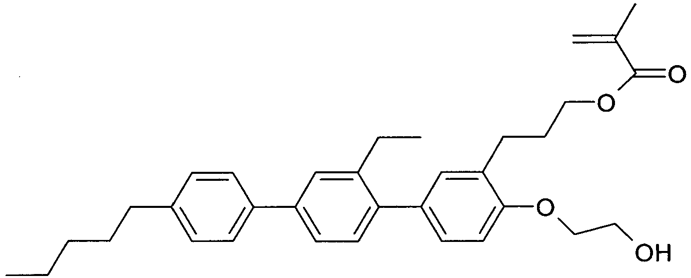 |
| 132. | 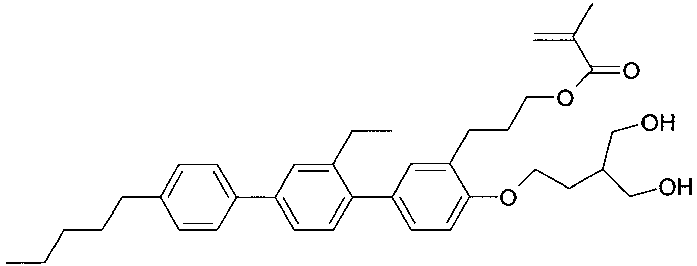 |
| 133. | 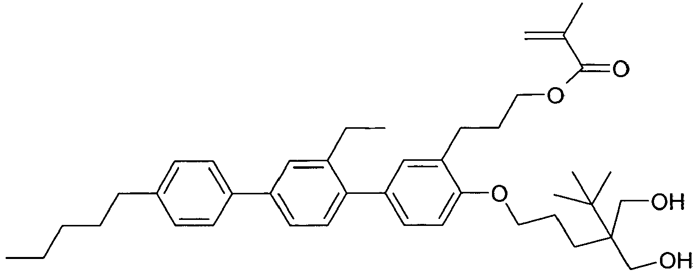 |
| 134. | 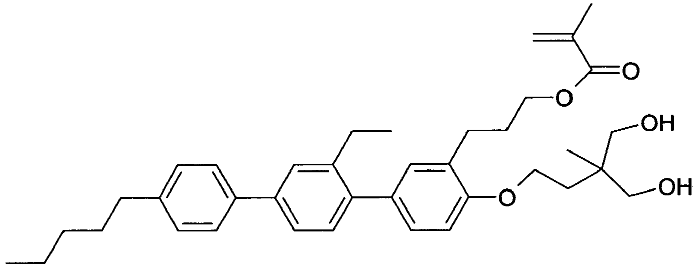 |
| 135. | 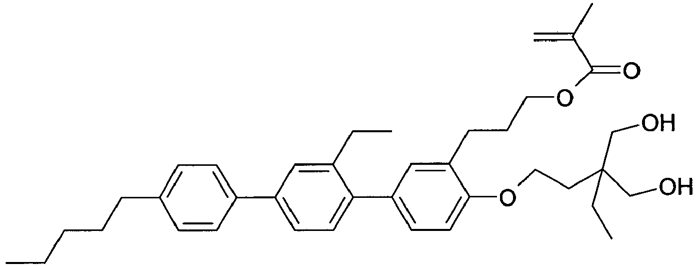 |
| 136. | 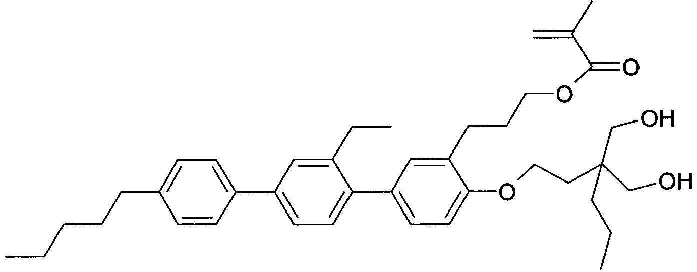 |
| 137. | 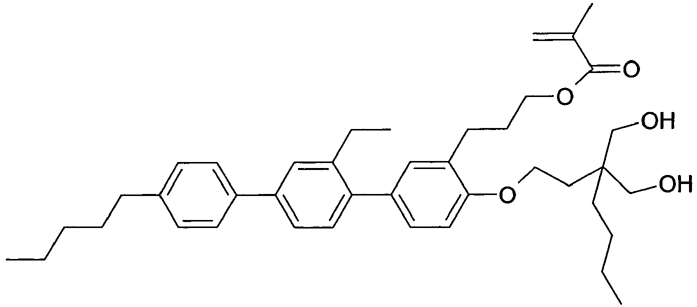 |
| 138. | 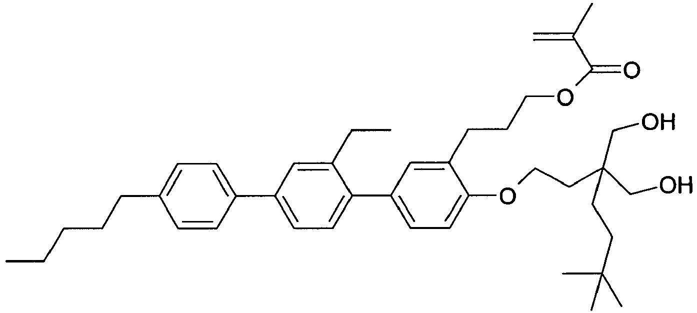 |
| 139. | 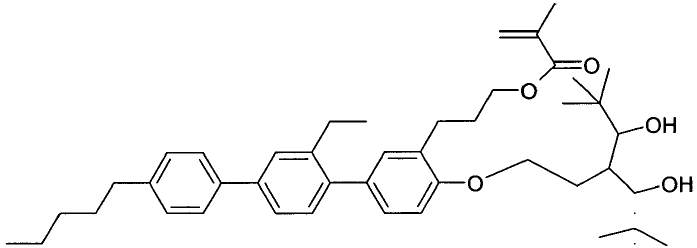 |
| 140. | 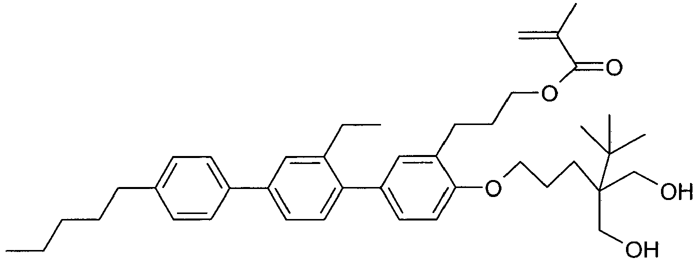 |
| 141. | 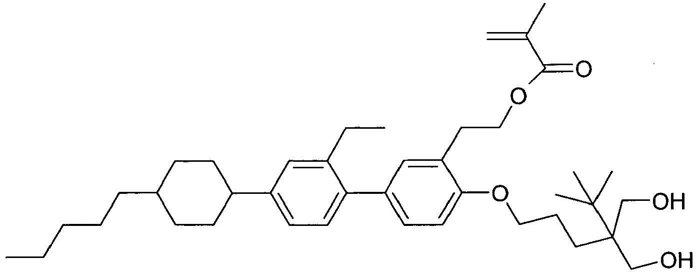 |
| 142. | 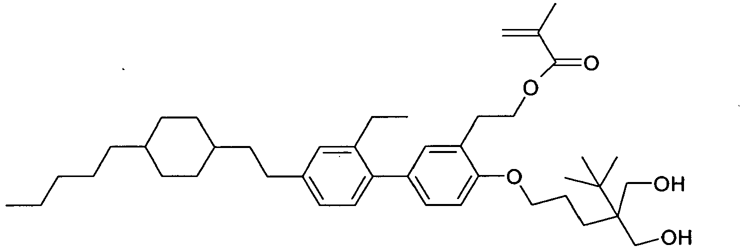 |
| 143. | 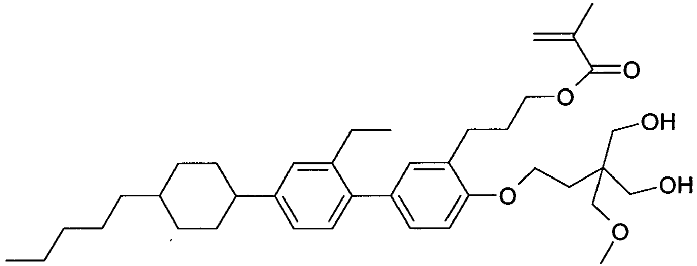 |
| 144. | 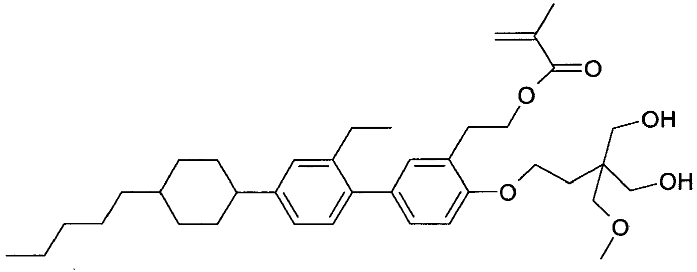 |
| 145. | 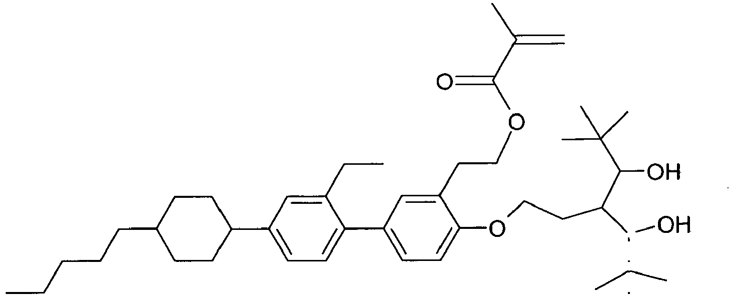 |
| 146. | 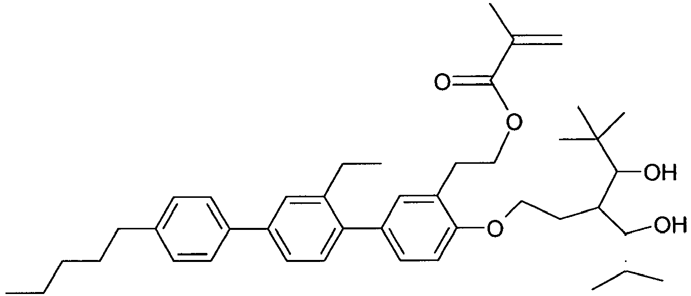 |
| 147. | 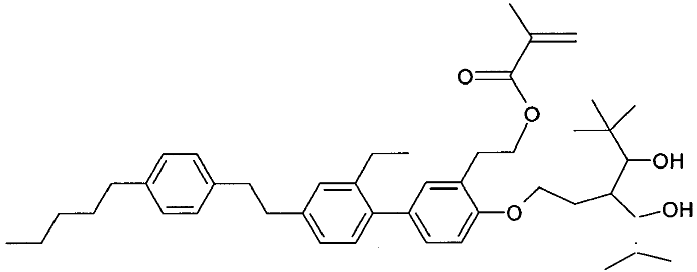 |
| 148. | 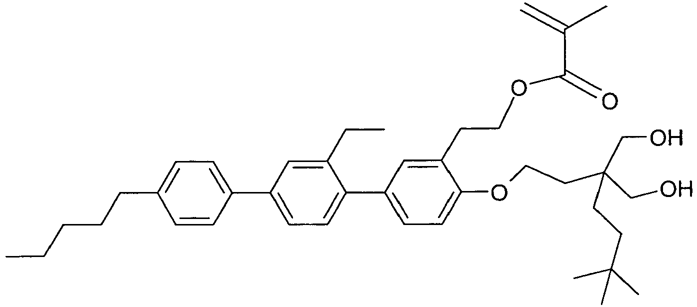 |
| 149. | 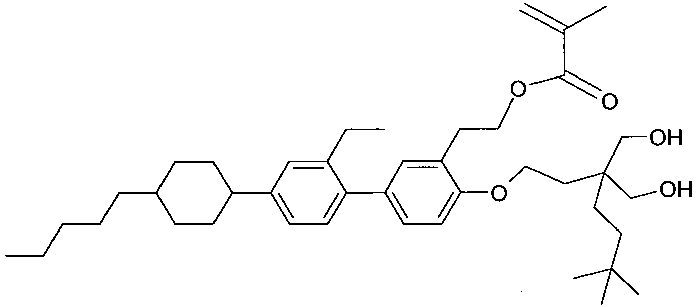 |
| 150. | 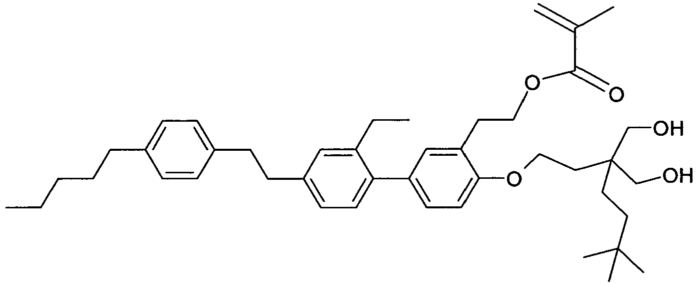 |
| 151. | 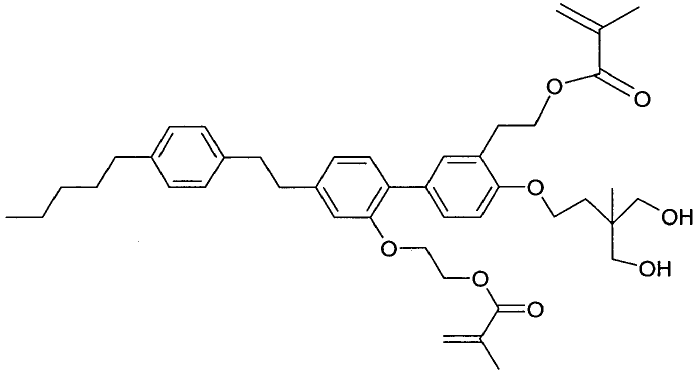 |
| 152. | 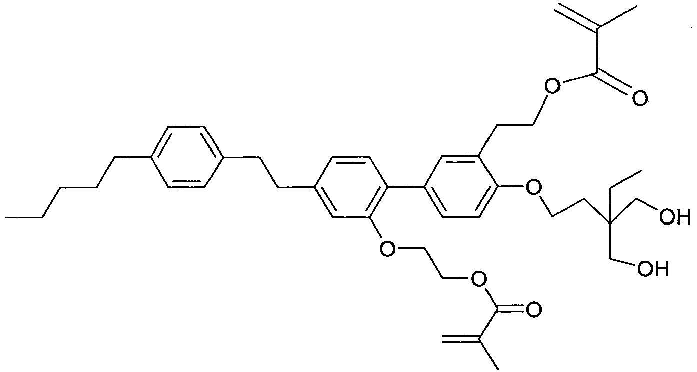 |
| 153**.** | 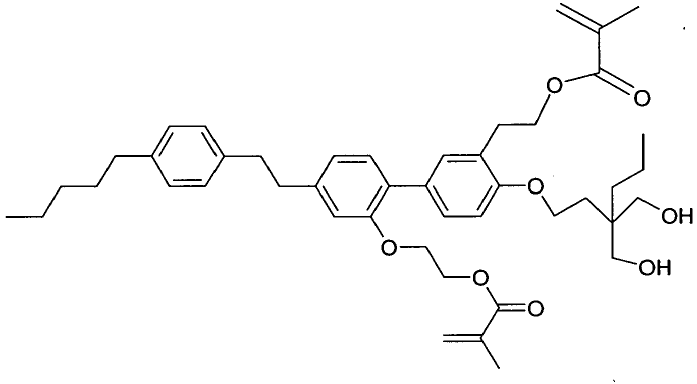 |
| 154. | 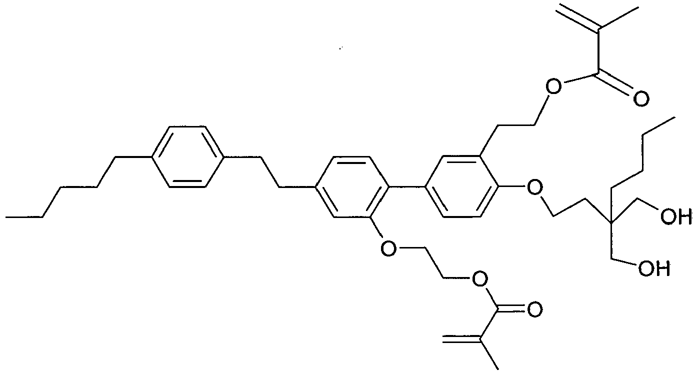 |
| 155. | 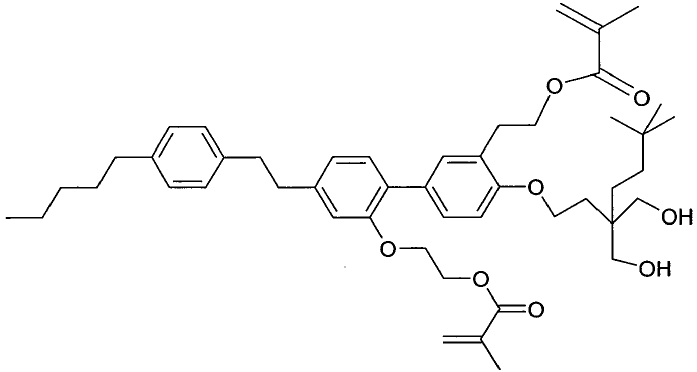 |
| 156. | 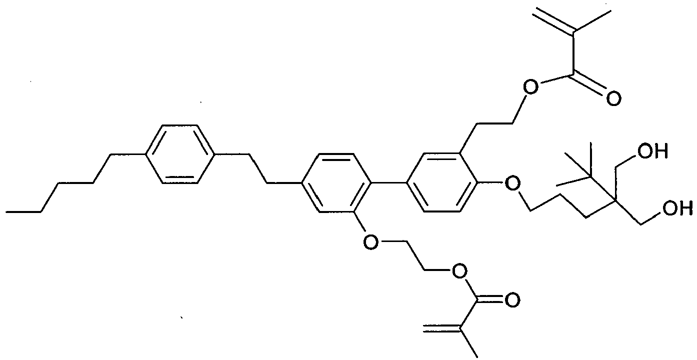 |
| 157. | 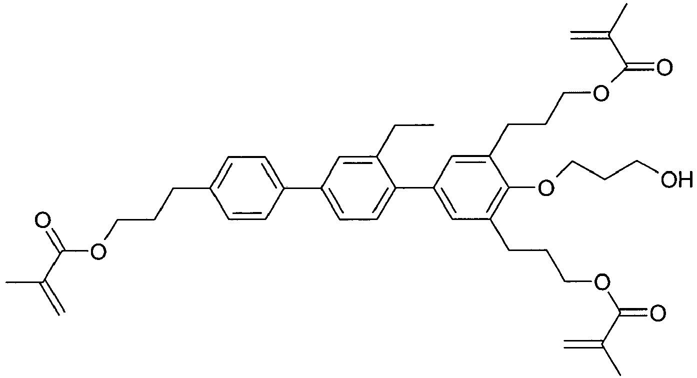 |
| 158. | 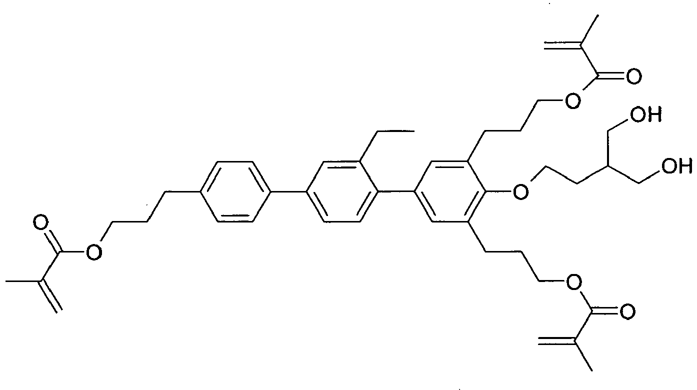 |
| 159. | 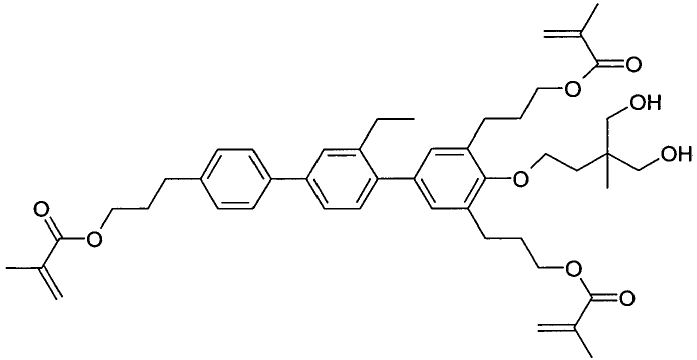 |
| 160. | 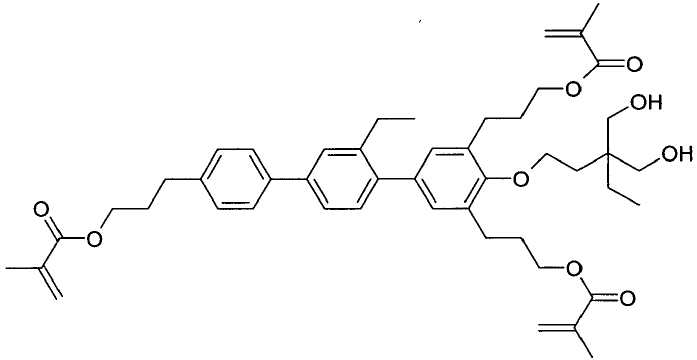 |
| 161. | 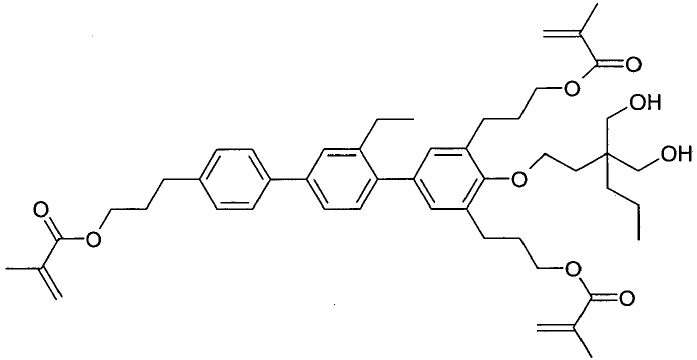 |
| 162. | 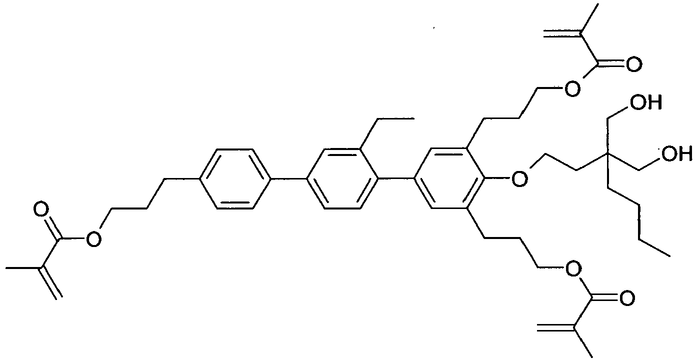 |
| 163. | 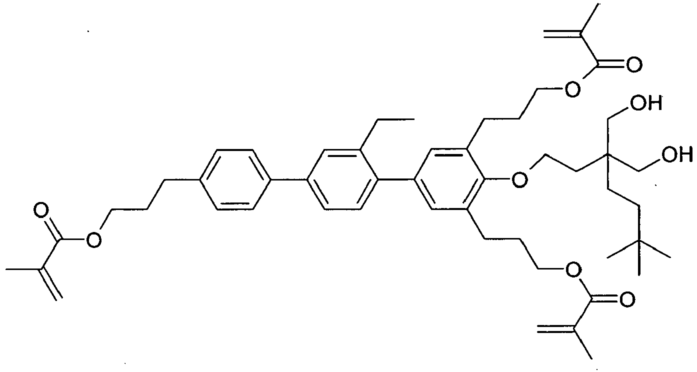 |
| 164**.** | 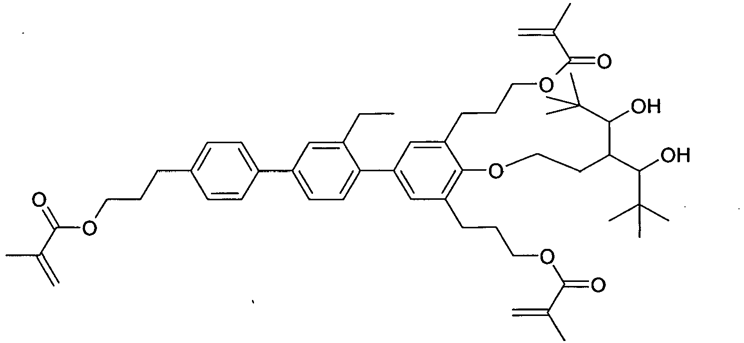 |
| 165. | 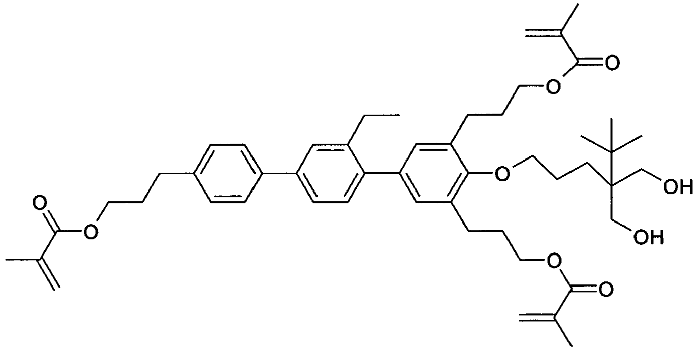 |

### B) Mischungsbeispiele

Zur Herstellung von erfindungsgemäßen FK-Medien werden die folgenden flüssigkristallinen Mischungen bestehend aus niedermolekularen Komponenten in den angegebenen prozentualen Gewichtsanteilen verwendet.

### H1: Nematische Hostmischung (Δε < 0)

| | | | |
|---|---|---|---|
| CY-3-O2 | 15.50 % | Clearing point [°C]: | 75.1 |
| CCY-3-O3 | 8.00 % | Δn [589 nm, 20°C]: | 0.098 |
| CCY-4-O2 | 10.00 % | Δε [1 kHz, 20°C]: | -3.0 |
| CPY-2-O2 | 5.50 % | ε_{∥} [1 kHz, 20°C]: | 3.4 |
| CPY-3-O2 | 11.50 % | ε_{⊥} [1 kHz, 20°C]: | 6.4 |
| CCH-34 | 9.25 % | K₁ [pN, 20°C]: | 13.1 |
| CCH-23 | 24.50 % | K₃ [pN, 20°C]: | 13.3 |
| PYP-2-3 | 8.75 % | γ₁ [mPa·s, 20°C]: | 113 |
| PCH-301 | 7.00 % | V₀ [20°C, V]: | 2.22 |

### H2: Nematische Hostmischung (Δε < 0)

| | | | |
|---|---|---|---|
| CY-3-O4 | 14.00 % | Clearing point [°C]: | 80.0 |
| CCY-3-O2 | 9.00 % | Δn [589 nm, 20°C]: | 0.090 |
| CCY-3-O3 | 9.00 % | Δε [1 kHz, 20°C]: | -3.3 |
| CPY-2-O2 | 10.00 % | ε_{∥}[1 kHz, 20°C]: | 3.4 |
| CPY-3-O2 | 10.00 % | ε_{⊥} [1 kHz, 20°C]: | 6.7 |
| CCY-3-1 | 8.00 % | K₁ [pN, 20°C]: | 15.1 |
| CCH-34 | 9.00 % | K₃ [pN, 20°C]: | 14.6 |
| CCH-35 | 6.00 % | γ₁ [mPa·s, 20°C]: | 140 |
| PCH-53 | 10.00 % | V₀ [20°C, V]: | 2.23 |
| CCH-301 | 6.00 % | | |
| CCH-303 | 9.00 % | | |

### H3: Nematische Hostmischung Δε < 0)

| | | | |
|---|---|---|---|
| CC-3-V1 | 9.00 % | Clearing point [°C]: | 74.7 |
| CCH-23 | 18.00 % | Δn [589 nm, 20°C]: | 0.098 |
| CCH-34 | 3.00 % | Δε [1 kHz, 20°C]: | -3.4 |
| CCH-35 | 7.00 % | ε_{∥} [1 kHz, 20°C]: | 3.5 |
| CCP-3-1 | 5.50 % | ε_{⊥} [1 kHz, 20°C]: | 6.9 |
| CCY-3-O2 | 11.50 % | K₁ [pN, 20°C]: | 14.9 |
| CPY-2-O2 | 8.00 % | K₃ [pN, 20°C]: | 15.9 |
| CPY-3-O2 | 11.00 % | y₁ [mPa·s, 20°C]: | 108 |
| CY-3-O2 | 15.50 % | V₀ [20°C, V]: | 2.28 |
| PY-3-O2 | 11.50 % | | |

### H4: Nematische Hostmischung (Δε < 0)

| | | | |
|---|---|---|---|
| CC-3-V | 37.50 % | Clearing point [°C]: | 74.8 |
| CC-3-V1 | 2.00% | Δn [589 nm, 20°C]: | 0.099 |
| CCY-4-O2 | 14.50 % | Δε [1 kHz, 20°C]: | -2.9 |
| CPY-2-O2 | 10.50 % | ε_{∥}[1 kHz, 20°C]: | 3.7 |
| CPY-3-O2 | 9.50 % | ε_{⊥} [1 kHz, 20°C]: | 6.6 |
| CY-3-O2 | 15.00 % | K₁ [pN, 20°C]: | 12.2 |
| CY-3-O4 | 4.50 % | K₃ [pN, 20°C]: | 13.4 |
| PYP-2-4 | 5.50 % | γ₁ [mPa·s, 20°C]: | 92 |
| PPGU-3-F | 1.00 % | V₀ [20°C, V]: | 2.28 |

### H5: Nematische Hostmischung (Δε < 0)

| | | | |
|---|---|---|---|
| CCH-23 | 20.00 % | Clearing point [°C]: | 74.8 |
| CCH-301 | 6.00 % | Δn [589 nm, 20°C]: | 0.105 |
| CCH-34 | 6.00 % | Δε [1 kHz, 20°C]: | -3.2 |
| CCP-3-1 | 3.00 % | ε_{∥} [1 kHz, 20°C]: | 3.5 |
| CCY-3-O2 | 11.00 % | ε_{⊥} [1 kHz, 20°C]: | 6.8 |
| CPY-2-O2 | 12.00 % | K₁ [pN, 20°C]: | 12.7 |
| CPY-3-O2 | 11.00 % | K₃ [pN, 20°C]: | 13.6 |
| CY-3-O2 | 14.00 % | γ₁ [mPa·s, 20°C]: | 120 |
| CY-3-O4 | 4.00 % | V₀ [20°C, V]: | 2.16 |
| PCH-301 | 4.00 % | | |
| PYP-2-3 | 9.00 % | | |

### H6: Nematische Hostmischung (Δε < 0)

| | | | |
|---|---|---|---|
| CC-4-V | 17.00 % | Clearing point [°C]: | 106.1 |
| CCP-V-1 | 15.00 % | Δn [589 nm, 20°C]: | 0.120 |
| CCPC-33 | 2.50 % | Δε [1 kHz, 20°C]: | -3.6 |
| CCY-3-O2 | 4.00 % | ε_{∥} [1 kHz, 20°C]: | 3.5 |
| CCY-3-O3 | 5.00 % | ε_{⊥} [1 kHz, 20°C]: | 7.0 |
| CCY-4-O2 | 5.00 % | K₁ [pN, 20°C]: | 16.8 |
| CLY-3-O2 | 3.50 % | K₃ [pN, 20°C]: | 17.3 |
| CLY-3-O3 | 2.00 % | γ₁ [mPa·s, 20°C]: | 207 |
| CPY-2-O2 | 8.00 % | V₀ [20°C, V]: | 2.33 |
| CPY-3-O2 | 10.00 % | | |
| CY-3-O4 | 17.00 % | | |
| PYP-2-3 | 11.00% | | |

### H7: Nematische Hostmischung (Δε < 0)

| | | | |
|---|---|---|---|
| CY-3-O2 | 15.00 % | Clearing point [°C]: | 75.5 |
| CCY-4-O2 | 9.50 % | Δn [589 nm, 20°C]: | 0.108 |
| CCY-5-O2 | 5.00 % | Δε [1 kHz, 20°C]: | -3.0 |
| CPY-2-O2 | 9.00 % | ε_{∥} [1 kHz, 20°C]: | 3.5 |
| CPY-3-O2 | 9.00 % | ε_{⊥} [1 kHz, 20°C]: | 6.5 |
| CCH-34 | 9.00 % | K₁ [pN, 20°C]: | 12.9 |
| CCH-23 | 22.00 % | K₃ [pN, 20°C]: | 13.0 |
| PYP-2-3 | 7.00 % | γ₁ [mPa·s, 20°C]: | 115 |
| PYP-2-4 | 7.50 % | V₀ [20°C, V]: | 2.20 |
| PCH-301 | 7.00 % | | |

### H8: Nematische Hostmischung (Δε < 0)

| | | | |
|---|---|---|---|
| CY-3-O2 | 15.00 % | Clearing point [°C]: | 74.7 |
| CY-5-O2 | 6.50 % | Δn [589 nm, 20°C]: | 0.108 |
| CCY-3-O2 | 11.00 % | Aε [1 kHz, 20°C]: | -3.0 |
| CPY-2-O2 | 5.50 % | ε_{∥} [1 kHz, 20°C]: | 3.6 |
| CPY-3-O2 | 10.50 % | ε_{⊥} [1 kHz, 20°C]: | 6.6 |
| CC-3-V | 28.50 % | K₁ [pN, 20°C]: | 12.9 |
| CC-3-V1 | 10.00 % | K₃ [pN, 20°C]: | 15.7 |
| PYP-2-3 | 12.50 % | γ₁ [mPa·s, 20°C]: | 97 |
| PPGU-3-F | 0.50 % | V₀ [20°C, V]: | 2.42 |

### H9: Nematische Hostmischung (Δε < 0)

| | | | |
|---|---|---|---|
| CCH-35 | 9.50% | Clearing point [°C]: | 79.1 |
| CCH-501 | 5.00% | Δn [589 nm, 20°C]: | 0.091 |
| CCY-2-1 | 9.50% | Δε [1 kHz, 20°C]: | -3.6 |
| CCY-3-1 | 10.50 % | ε_{∥} [1 kHz, 20°C]: | 3.5 |
| CCY-3-O2 | 10.50 % | ε_{⊥} [1 kHz, 20°C]: | 7.1 |
| CCY-5-O2 | 9.50 % | K₁ [pN, 20°C]: | 14.6 |
| CPY-2-O2 | 12.00 % | K₃ [pN, 20°C]: | 14.5 |
| CY-3-O4 | 9.00 % | γ₁ [mPa·s, 20°C]: | 178 |
| CY-5-O4 | 11.00 % | V₀ [20°C, V]: | 2.12 |
| PCH-53 | 13.50 % | | |

### H10: Nematische Hostmischung (Δε < 0)

| | | | |
|---|---|---|---|
| BCH-32 | 4.00 % | Clearing point [°C]: | 74.8 |
| CC-3-V1 | 8.00 % | Δn [589 nm, 20°C]: | 0.106 |
| CCH-23 | 13.00 % | Δε [1 kHz, 20°C]: | -3.5 |
| CCH-34 | 7.00 % | ε_{∥}[1 kHz, 20°C]: | 3.6 |
| CCH-35 | 7.00% | ε_{⊥} [1 kHz, 20°C]: | 7.1 |
| CCY-3-O2 | 13.00 % | K₁ [pN, 20°C]: | 14.8 |
| CPY-2-O2 | 7.00 % | K₃ [pN, 20°C]: | 15.8 |
| CPY-3-O2 | 12.00 % | γ₁ [mPa·s, 20°C]: | 115 |
| CY-3-O2 | 12.00 % | V₀ [20°C, V]: | 2.23 |
| PCH-301 | 2.00 % | | |
| PY-3-O2 | 15.00 % | | |

### H11: Nematische Hostmischung (Δε < 0)

| | | | |
|---|---|---|---|
| CY-3-O4 | 22.00 % | Clearing point [°C]: | 86.9 |
| CY-5-O4 | 12.00 % | Δn [589 nm, 20°C]: | 0.111 |
| CCY-3-O2 | 6.00 % | Δε [1 kHz, 20°C]: | -4.9 |
| CCY-3-O3 | 6.00 % | ε_{∥} [1 kHz, 20°C]: | 3.8 |
| CCY-4-O2 | 6.00 % | ε_{⊥} [1 kHz, 20°C]: | 8.7 |
| CPY-2-O2 | 10.00 % | K₁ [pN, 20°C]: | 14.9 |
| CPY-3-O2 | 10.00 % | K₃ [pN, 20°C]: | 15.9 |
| PYP-2-3 | 7.00 % | γ₁ [mPa·s, 20°C]: | 222 |
| CC-3-V1 | 7.00 % | V₀ [20°C, V]: | 1.91 |
| CC-5-V | 10.00 % | | |
| CCPC-33 | 2.00 % | | |
| CCPC-35 | 2.00 % | | |

### H12: Nematische Hostmischung (Δε < 0)

| | | | |
|---|---|---|---|
| CY-3-O4 | 12.00 % | Clearing point [°C]: | 86.0 |
| CY-5-O2 | 10.00 % | Δn [589 nm, 20°C]: | 0.110 |
| CY-5-O4 | 8.00 % | Δε [1 kHz, 20°C]: | -5.0 |
| CCY-3-O2 | 8.00 % | ε_{∥}[1 kHz, 20°C]: | 3.8 |
| CCY-4-O2 | 7.00 % | ε_{⊥} [1 kHz, 20°C]: | 8.8 |
| CCY-5-O2 | 6.00 % | K₁ [pN, 20°C]: | 14.7 |
| CCY-2-1 | 8.00 % | K₃ [pN, 20°C]: | 16.0 |
| CCY-3-1 | 7.00 % | γ₁ [mPa·s, 20°C]: | 250 |
| CPY-3-O2 | 9.00 % | V₀ [20°C, V]: | 1.90 |
| CPY-3-O2 | 9.00 % | | |
| BCH-32 PCH-53 | 6.00 % 10.00% | | |

### H13: Nematische Hostmischung (Δε < 0)

| | | | |
|---|---|---|---|
| CC-3-V1 | 10.25 % | Clearing point [°C]: | 74.7 |
| CCH-23 | 18.50 % | Δn [589 nm, 20°C]: | 0.103 |
| CCH-35 | 6.75 % | Δε [1 kHz, 20°C]: | -3.1 |
| CCP-3-1 | 6.00 % | ε_{∥}[1 kHz, 20°C]: | 3.4 |
| CCY-3-1 | 2.50 % | ε_{⊥} [1 kHz, 20°C]: | 6.4 |
| CCY-3-O2 | 12.00 % | K₁ [pN, 20°C]: | 15.4 |
| CPY-2-O2 | 6.00 % | K₃ [pN, 20°C]: | 16.8 |
| CPY-3-O2 | 9.75 % | γ₁ [mPa·s, 20°C]: | 104 |
| CY-3-O2 | 11.50 % | V₀ [20°C, V]: | 2.46 |
| PP-1-2V1 | 3.75 % | | |
| PY-3-O2 | 13.00 % | | |

### H14: Nematische Hostmischung (Δε < 0)

| | | | |
|---|---|---|---|
| CC-3-V | 27.50 % | Clearing point [°C]: | 74.7 |
| CC-3-V1 | 10.00 % | Δn [589 nm, 20°C]: | 0.104 |
| CCH-35 | 8.00 % | Δε [1 kHz, 20°C]: | -3.0 |
| CCY-3-O2 | 9.25 % | ε_{∥} [1 kHz, 20°C]: | 3.4 |
| C LY-3-O2 | 10.00 % | ε_{⊥} [1 kHz, 20°C]: | 6.4 |
| CPY-3-O2 | 11.75 % | K₁ [pN, 20°C]: | 15.3 |
| PY-3-O2 | 14.00 % | K₃ [pN, 20°C]: | 16.2 |
| PY-4-O2 | 9.00 % | γ₁ [mPa·s, 20°C]: | 88 |
| PYP-2-4 | 0.50 % | V₀ [20°C, V]: | 2.44 |

### H15: Nematische Hostmischung (Δε > 0)

| | | | |
|---|---|---|---|
| CC-4-V | 10.00 % | Clearing point [°C]: | 77.0 |
| CC-5-V | 13.50 % | Δn [589 nm, 20°C]: | 0.113 |
| PGU-3-F | 6.50 % | Δε [1 kHz, 20°C]: | 19.2 |
| ACQU-2-F | 10.00 % | ε_{∥} [1 kHz, 20°C]: | 23.8 |
| ACQU-3-F | 12.00 % | ε_{⊥} [1 kHz, 20°C]: | 4.6 |
| PUQU-3-F | 11.00 % | K₁ [pN, 20°C]: | 11.5 |
| CCP-V-1 | 12.00 % | K₃ [pN, 20°C]: | 11.1 |
| APUQU-2-F | 6.00 % | γ₁ [mPa·s, 20°C]: | 122 |
| APUQU-3-F | 7.00 % | V₀ [20°C, V]: | 0.81 |
| PGUQU-3-F | 8.00 % | | |
| CPGU-3-OT | 4.00 % | | |

### H16: Nematische Hostmischung (Δε > 0)

| | | | |
|---|---|---|---|
| PGU-2-F | 3.50 % | Clearing point [°C]: | 77.0 |
| PGU-3-F | 7.00 % | Δn [589 nm, 20°C]: | 0.105 |
| CC-3-V1 | 15.00 % | Δε [1 kHz, 20°C]: | 7.2 |
| CC-4-V | 18.00 % | ε_{∥} [1 kHz, 20°C]: | 10.3 |
| CC-5-V | 20.00 % | ε_{⊥} [1 kHz, 20°C]: | 3.1 |
| CCP-V-1 | 6.00 % | K₁ [pN, 20°C]: | 15.3 |
| APUQU-3-F | 15.00 % | K₃ [pN, 20°C]: | 13.5 |
| PUQU-3-F | 5.50 % | γ₁ [mPa·s, 20°C]: | 63 |
| PGP-2-4 | 3.00 % | V₀ [20°C, V]: | 1.53 |
| BCH-32 | 7.00 % | | |

### H17: Nematische Hostmischung (Δε > 0)

| | | | |
|---|---|---|---|
| APUQU-2-F | 6.00 % | Clearing point [°C]: | 74.0 |
| APUQU-3-F | 12.00 % | Δn [589 nm, 20°C]: | 0.120 |
| PUQU-3-F | 18.00 % | Δε [1 kHz, 20°C]: | 17.4 |
| CPGU-3-OT | 9.00 % | ε_{∥}[1 kHz, 20°C]: | 22.0 |
| CCGU-3-F | 3.00 % | ε_{⊥} [1 kHz, 20°C]: | 4.5 |
| BCH-3F.F.F | 14.00 % | K₁ [pN, 20°C]: | 10.1 |
| CCQU-3-F | 10.00 % | K₃ [pN, 20°C]: | 10.8 |
| CC-3-V | 25.00 % | γ₁ [mPa·s, 20°C]: | 111 |
| PGP-2-2V | 3.00 % | V₀ [20°C, V]: | 0.80 |

### H18: Nematische Hostmischung (Δε > 0)

| | | | |
|---|---|---|---|
| PUQU-3-F | 15.00 % | Clearing point [°C]: | 74.3 |
| APUQU-2-F | 5.00 % | Δn [589 nm, 20°C]: | 0.120 |
| APUQU-3-F | 12.00 % | Δε [1 kHz, 20°C]: | 14.9 |
| CCQU-3-F | 11.00 % | ε_{∥} [1 kHz, 20°C]: | 19.1 |
| CCQU-5-F | 1.50 % | ε_{⊥} [1 kHz, 20°C]: | 4.3 |
| CPGU-3-OT | 5.00 % | K₁ [pN, 20°C]: | 11.2 |
| CCP-30CF3 | 4.50 % | K₃ [pN, 20°C]: | 10.8 |
| CGU-3-F | 10.00 % | γ₁ [mPa·s, 20°C]: | 98 |
| PGP-2-3 | 1.50 % | V₀ [20°C, V]: | 0.91 |
| PGP-2-2V | 8.00 % | | |
| CC-3-V | 26.50 % | | |

### H19: Nematische Hostmischung (Δε > 0)

| | | | |
|---|---|---|---|
| CCQU-3-F | 9.00 % | Clearing point [°C]: | 94.5 |
| CCQU-5-F | 9.00 % | Δn [589 nm, 20°C]: | 0.121 |
| PUQU-3-F | 16.00 % | Δε [1 kHz, 20°C]: | 20.4 |
| APUQU-2-F | 8.00 % | ε_{∥} [1 kHz, 20°C]: | 24.7 |
| APUQU-3-F | 9.00 % | ε_{⊥} [1 kHz, 20°C]: | 4.3 |
| PGUQU-3-F | 8.00 % | K₁ [pN, 20°C]: | 12.1 |
| CPGU-3-OT | 7.00 % | K₃ [pN, 20°C]: | 13.9 |
| CC-4-V | 18.00 % | γ₁ [mPa·s, 20°C]: | 163 |
| CC-5-V | 5.00 % | V₀ [20°C, V]: | 0.81 |
| CCP-V-1 | 6.00 % | | |
| CCPC-33 | 3.00 % | | |
| PPGU-3-F | 2.00 % | | |

### H20: Nematische Hostmischung (Δε > 0)

| | | | |
|---|---|---|---|
| CC-3-V | 28.50 % | Clearing point [°C]: | 85.6 |
| CCP-V1 | 3.00 % | Δn [589 nm, 20°C]: | 0.121 |
| CCPC-33 | 2.00 % | Δε [1 kHz, 20°C]: | 19.5 |
| PGU-2-F | 4.00 % | ε_{∥} [1 kHz, 20°C]: | 23.8 |
| CCQU-3-F | 8.00 % | ε_{⊥} [1 kHz, 20°C]: | 4.3 |
| CCQU-5-F | 6.00 % | K₁ [pN, 20°C]: | 11.6 |
| CCGU-3-F | 3.00 % | K₃ [pN, 20°C]: | 12.7 |
| PUQU-2-F | 2.00 % | γ₁ [mPa·s, 20°C]: | 126 |
| PUQU-3-F | 10.00 % | V₀ [20°C, V]: | 0.81 |
| APUQU-2-F | 6.00 % | | |
| APUQU-3-F | 9.00 % | | |
| PGUQU-3-F | 5.00 % | | |
| PGUQU-4-F | 5.00 % | | |
| PGUQU-5-F | 4.00 % | | |
| CPGU-3-OT | 4.00 % | | |
| PPGU-3-F | 0.50 % | | |

Die folgenden polymerisierbaren Selbstorientierungsadditive werden verwendet:

| polymerisierbares Selbstorientierungsadditiv Nr. | Struktur ggf. Phasenverhalten (T_{g}: Glaspunkt, K: kristallin, I: isoptrope Phase), Übergangstemperaturen in °C |
|---|---|
| **1** | 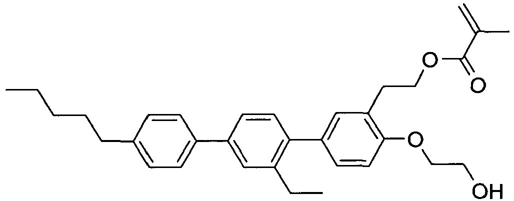 |
| **2** | 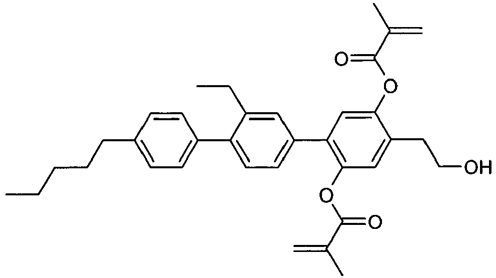 |
| **3** | 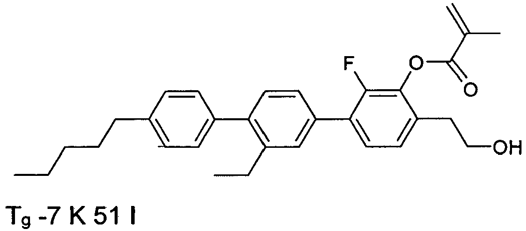 |
| **4** | 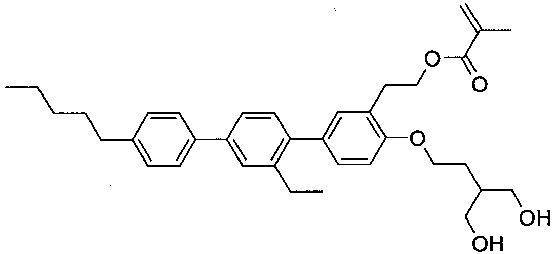 |
| **5** | 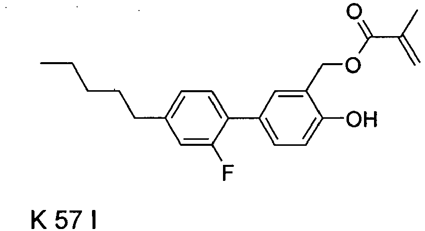 |
| **6** | 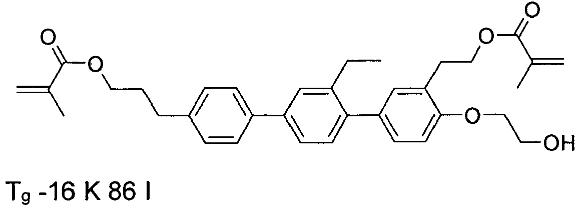 |
| 7 | 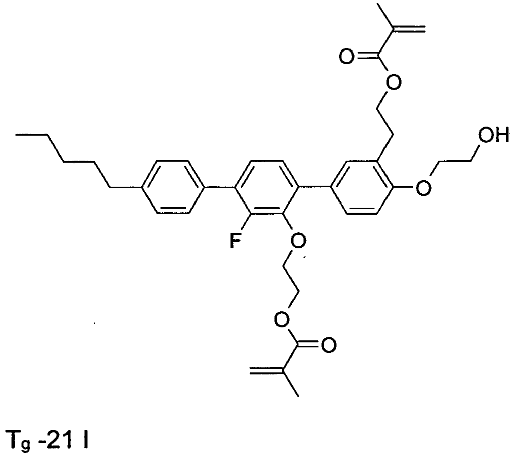 |
| **8** | 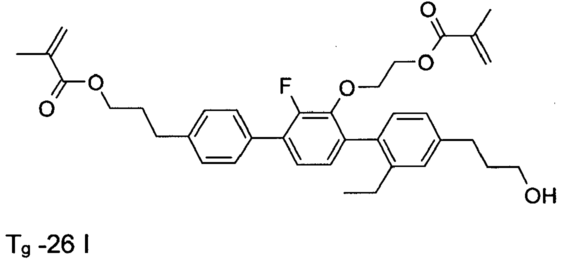 |
| **9** | 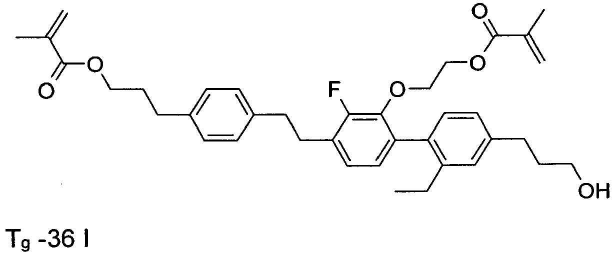 |
| **10** | 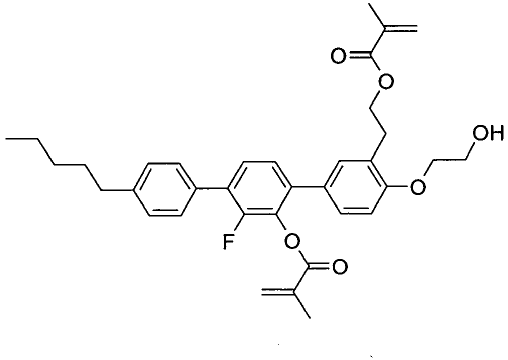 |
| **11** | 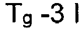 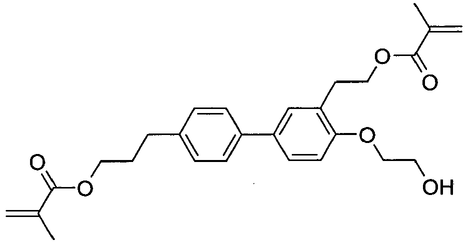 |
| **12** | 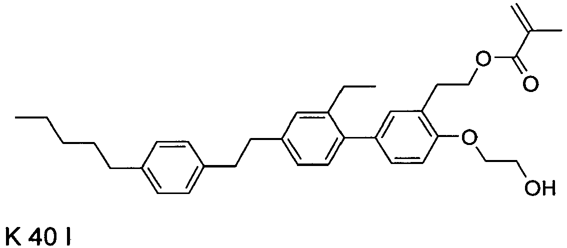 |
| **13** | 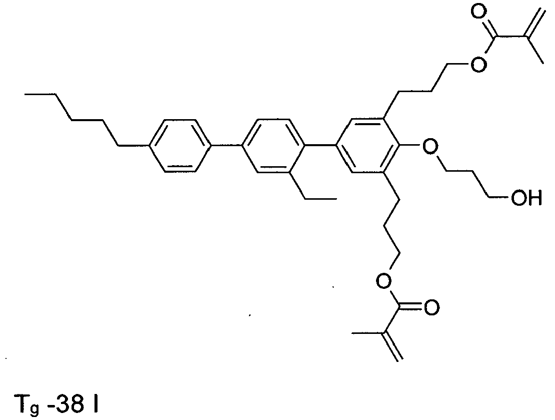 |
| **14** | 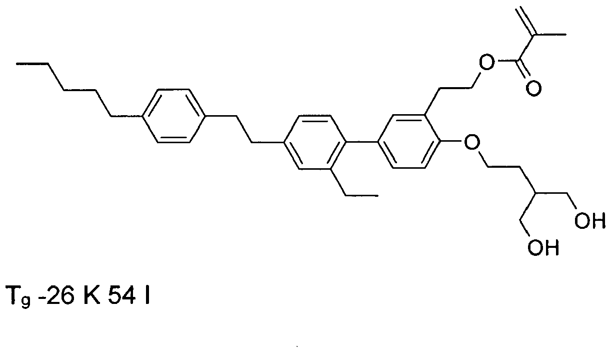 |
| **15** | 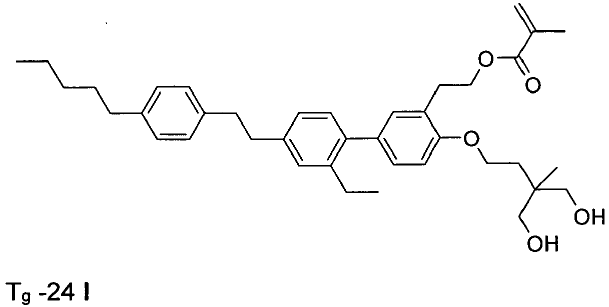 |
| **16** | 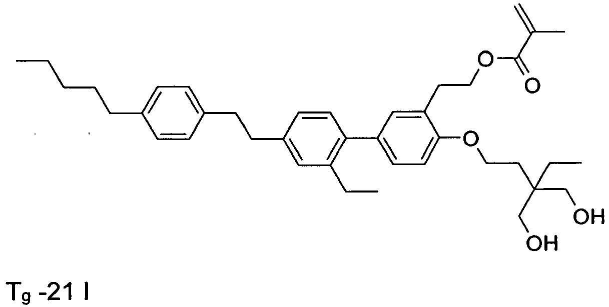 |
| **17** | 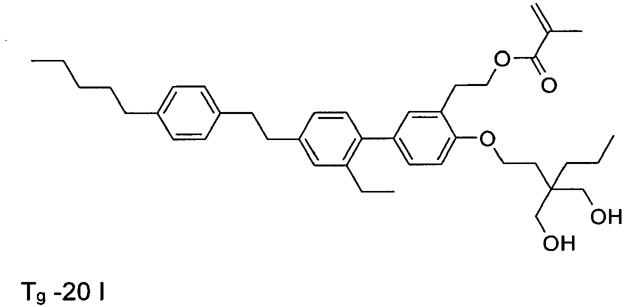 |
| **18** | 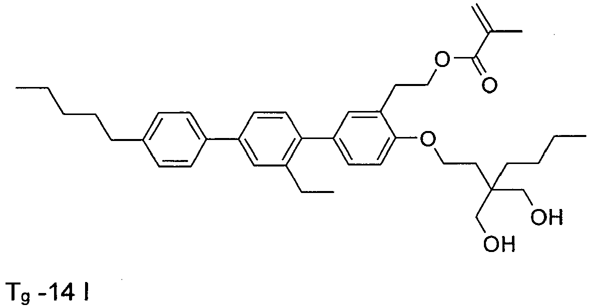 |
| **19** | 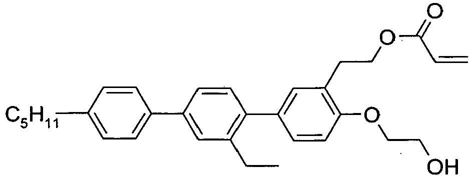 |

Die folgende polymerisierbare Verbindung wird verwendet:

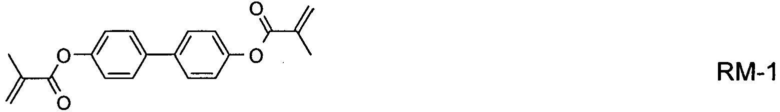

### Mischungsbeispiel 1

Zu einem nematischen FK-Medium **H1** des VA-Typs (Δε < 0) wird das polymerisierbare Selbstorientierungsadditiv 1 (2,0 Gew.%) zugesetzt und homogenisiert.

Verwendung in Testzellen ohne Vororientierungsschicht ('alignment layer'): Die entstandene Mischung wird in eine Testzelle gefüllt (ohne Polyimid-Orientierungsschicht, Schichtdicke d ≈ 4,0 µm, beidseitige ITO-Beschichtung, strukturiertes ITO für Multi-Domänen Schalten, ohne Passivierungsschicht). Das FK-Medium weist eine spontane homöotrope (vertikale) Orientierung zu den Substratoberflächen auf. Diese Orientierung bleibt bis zum Klärpunkt stabil und die entstandene VA-Zelle lässt sich durch Anlegen einer Spannung reversibel schalten.

VA-Orientierungsschichten, die für PM-VA, PVA, MVA und analoge Technologien zum Einsatz kommen, sind mit der Anwendung von Additiven wie dem polymerisierbaren Selbstorientierungsadditiv **1** nicht mehr notwendig.

### Mischungsbeispiel 2

Zu einem nematischen FK-Medium **H15** des VA-IPS-Typs (Δε > 0) wird das polymerisierbare Selbstorientierungsadditiv **1** (2,0 Gew.%) zugesetzt und homogenisiert.

Verwendung in Testzellen ohne Vororientierungsschicht ('alignment layer'): Die entstandene Mischung wird in eine Testzelle gefüllt (ohne Polyimid-Orientierungsschicht, Schichtdicke d ≈ 4 µm, auf einer Substratoberfläche angeordnete ITO-Interdigitalelektroden, Glas auf der gegenüberliegenden Substratoberfläche, ohne Passivierungsschicht). Das FK-Medium weist eine spontane homöotrope (vertikale) Orientierung zu den Substratoberflächen auf. Diese Orientierung bleibt bis zum Klärpunkt stabil und die entstandene VA-IPS-Zelle lässt sich durch Anlegen einer Spannung reversibel schalten.

VA-Orientierungsschichten, die für VA-IPS, HT-VA und analoge Technologien zur Einsatz kommen, sind mit der Anwendung von Additiven wie dem polymerisierbaren Selbstorientierungsadditiv **1** nicht mehr notwendig

### Mischungsbeispiele 3-20

Die polymerisierbaren Selbstorientierungsadditive **2-19** (Gew.% gemäß Tabelle 5) werden analog Mischungsbeispiel 1 zu einem nematischen FK-Medium **H1** (Δε < 0) zugesetzt und homogenisiert. Die entstandenen Mischungen werden in Testzellen ohne Vororientierungsschicht gefüllt. Die FK-Medien weisen eine spontane homöotrope (vertikale) Orientierung zu den Substratoberflächen auf. Diese Orientierung bleibt bis zum Klärpunkt stabil und die entstandenen VA- Zellen lassen sich durch Anlegen einer Spannung reversibel schalten.

### Mischungsbeispiele 21-33

Die polymerisierbaren Selbstorientierungsadditive **2-4, 7, 10, 12-19** (Gew.% gemäß Tabelle 5) werden analog Mischungsbeispiel 2 zu einem nematischen FK-Medium **H15** (Δε > 0) zugesetzt und homogenisiert. Die entstandenen Mischungen werden in Testzellen ohne Vororientierungsschicht gefüllt. Die FK-Medien weisen eine spontane homöotrope (vertikale) Orientierung zu den Substratoberflächen auf. Diese Orientierung bleibt bis zum Klärpunkt stabil und die entstandenen VA-IPS- Zellen lassen sich durch Anlegen einer Spannung reversibel schalten.

### Mischungsbeispiele 34-98

Die polymerisierbaren Selbstorientierungsadditive **1, 4, 13, 18** und **19** (Gew.% gemäß Tabelle 5) werden analog Mischungsbeispiel 1 zu dem nematischen FK-Medien **H2** - **H14** (Δε < 0) zugesetzt und homogenisiert. Die entstandenen Mischungen werden in Testzellen ohne Vororientierungsschicht gefüllt (vgl. Mischungsbeispiel 1). Die FK-Medien weisen eine spontane homöotrope (vertikale) Orientierung zu den Substratoberflächen auf. Diese Orientierung bleibt bis zum Klärpunkt stabil und die entstandene VA-Zellen lassen sich durch Anlegen einer Spannung reversibel schalten.

### Mischungsbeispiele 99-123

Die polymerisierbaren Selbstorientierungsadditive **1, 4, 13, 18** und **19** (Gew.% gemäß Tabelle 5) werden analog Mischungsbeispiel 2 zu dem nematischen FK-Medien **H16** - **H20** (Δε > 0) zugesetzt und homogenisiert. Die entstandenen Mischungen werden in Testzellen ohne Vororientierungsschicht gefüllt. Die FK-Medien weisen eine spontane homöotrope (vertikale) Orientierung zu den Substratoberflächen auf. Diese Orientierung bleibt bis zum Klärpunkt stabil und die entstandenen VA-IPS-Zellen lassen sich durch Anlegen einer Spannung reversibel schalten.

### Mischungsbeispiele 1a, 3a-5a, 8a, 11a, 13a-19a (Polymerisierung der Mischungsbeispiele 1, 3-5, 8, 11, 13-19)

Zu einem nematischen FK-Medium **H1** (Δε < 0) wird jeweils ein polymerisierbares Selbstorientierungsadditiv **1, 2-4, 7, 10, 12-18** (Gew.% gemäß Tabelle 5) zugesetzt und homogenisiert.

Verwendung in Testzellen ohne Vororientierungsschicht ('alignment layer'): Die entstandene Mischungen werden in Testzellen gefüllt (ohne Polyimid-Orientierungsschicht, Schichtdicke d ≈ 4,0 µm, beidseitige ITO-Beschichtung, (strukturiertes ITO für Multi-Domänen Schalten) ohne Passivierungsschicht). Die FK-Medien weisen eine spontane homöotrope (vertikale) Orientierung zu den Substratoberflächen auf. Diese Orientierung bleibt bis zum Klärpunkt stabil und die entstandene VA-Zelle lässt sich durch Anlegen einer Spannung reversibel schalten.

Unter Anlegen einer Spannung größer als die optische Schwellenspannung (z.B. 14 Vpp) werden die VA-Zellen 12 min mit UV-Licht der Intensität 100 mW/cm² bei 20°C und 340 nm Bandpassfilter bestrahlt. Dadurch erfolgt Polymerisation der polymerisierbaren Verbindungen. Die homöotrope Orientierung wird damit zusätzlich stabilisiert, ein 'pre-tilt' wird eingestellt und eine Polymerschicht entsteht (Tabelle 1). Die erhaltenen PSA-VA-Zellen lassen sich bis zum Klärpunkt unter Anlegen einer Spannung reversibel schalten. Die Schaltzeiten sind, im Vergleich zu der nicht polymerisierten Zelle, verkürzt. Die Schwellenspannungen (V₁₀) ändern sich (Tabelle 2). Abhängig von der chemischen Struktur der polymerisierbaren Komponente, kann sich das VHR (Voltage-Holding-Ratio) leicht verbessern (Tabelle 3)

Die Polymerisation kann auch ohne Anlegen einer Spannung durchgeführt werden. Die homöotrope Orientierung wird damit zusätzlich stabilisiert und einen Polymerschicht entsteht, ohne das ein 'pre-tilt' eingestellt wird. Die Polymerschicht wirkt als Schutzschicht und verbessert die Langzeitstabilität der PSA-VA-Zelle

VA-Orientierungsschichten, die für PSA, PS-VA und analoge Technologien zur Einsatz kommen, sind mit der Verwendung von Additiven wie die polymerisierbaren Selbstorientierungsadditive **1 - 4** nicht mehr notwendig.

### Mischungsbeispiele 1b, 3b-5b, 8b, 11b, 13b-19b (Polymerstabilisierung der Mischungsbeispiele 1a. 3a-5a, 8a, 11a, 13a-19a)

Zu einem nematischen FK-Medium **H1** (Δε < 0) werden eine polymerisierbare Verbindung (**RM-1,** 0,3 Gew.%) und ein polymerisierbares Selbstorientierungsadditiv **1, 2-4, 7, 10, 12-18** (Gew.% gemäß Tabelle 5) zugesetzt und homogenisiert.

Verwendung in Testzellen ohne Vororientierungsschicht ('alignment layer'): Die entstandene Mischungen werden in Testzellen gefüllt (ohne Polyimid-Orientierungsschicht, Schichtdicke d ≈ 4,0 µm, beidseitige ITO-Beschichtung, (strukturiertes ITO für Multi-Domänen Schalten) ohne Passivierungsschicht). Die FK-Medien weisen eine spontane homöotrope (vertikale) Orientierung zu den Substratoberflächen auf. Diese Orientierung bleibt bis zum Klärpunkt stabil und die entstandene VA-Zelle lässt sich durch Anlegen einer Spannung reversibel schalten.

Unter Anlegen einer Spannung größer als die optische Schwellenspannung (z.B. 14 Vpp) werden die VA-Zellen 12 min mit UV-Licht der Intensität 100 mW/cm² bei 20°C und 340 nm Bandpassfilter bestrahlt. Dadurch erfolgt Polymerisation der polymerisierbaren Verbindungen. Die homöotrope Orientierung wird damit zusätzlich stabilisiert, ein 'pre-tilt' wird eingestellt und eine Polymerschicht entsteht (Tabelle 1). Die erhaltenen PSA-VA-Zellen lassen sich bis zum Klärpunkt unter Anlegen einer Spannung reversibel schalten. Die Schaltzeiten sind, im Vergleich zu der nicht polymerisierten Zelle, verkürzt. Die Schwellenspannungen (V₁₀) ändern sich (Tabelle 2). Abhängig zur chemische Struktur der Polymerisierbaren Komponenten, kann sich das VHR (Voltage-Holding-Ratio) leicht verbessern (Tabelle 4)

Die Polymerisation kann auch ohne Anlegen einer Spannung durchgeführt werden. Die homöotrope Orientierung wird damit zusätzlich stabilisiert und eine Polymerschicht entsteht, ohne dass ein 'pre-tilt' eingestellt wird. Die Polymerschicht wirkt als Schutzschicht und verbessert die Langzeit Stabilität der PSA-VA-Zelle

VA-Orientierungsschichten, die für PSA, PS-VA und analoge Technologien zur Einsatz kommen, sind mit der Verwendung von Additiven wie den polymerisierbaren Selbstorientierungsadditiven **1 - 4** nicht mehr notwendig.

**Tabelle 1: Schichtdicke d und Rauheit Ra der nach UV Bestrahlung entstandenen Polymerschicht. Host H1 in Verbindung mit polymerisierbarem Selbstorientierungsadditiv (PSOA). Testzelle des PSA-Typs. Polymerisationsbedingungen: 0 Vpp, 15 min, 100 mW/cm², 340 nm Bandpassfilter, 40°C. Zellenvorbereitung für AFM Messungen: Die Zellen werden nach der Bestrahlung mit Cyclohexan durchgespült, die Zellensubstrate voneinander getrennt und für die Messungen verwendet (Park oder Veeco, Raumtemperatur).**

| Mischungsbeispiel | PSOA | Weitere polym. Verb. | Ra /nm | d /nm |
|---|---|---|---|---|
| 1a | **1** | | 1.4 | 12 |
| 3a | **2** | | 3.6 | 20 |
| 5a | **4** | | 2.2 | - |
| 6a | **5** | | 2.5 | 46 |
| 1b | **1** | RM-1 | 2.2 | 33 |
| 6b | **5** | RM-1 | 1.4 | 52 |

**Tabelle 2: Schaltzeiten und Schwellenspannungen V₁₀ von VA- und PSA-Zellen. Host H1 in Verbindung mit polymerisierbarem Selbstorientierungsadditiv (PSOA). Polymerisationsbedingungen: UV-1 (340 nm Bandpassfilter, 20°C, 14 Vpp, 2 min, 50 mW/cm²); UV-2 (340 nm Bandpassfilter, 20°C, 0 Vpp, 10 min, 100 mW/cm²).**

| Mischungsbeispiel | PSOA | Weitere polym. Verb. | UV-Bestrah. UV-1 + -2 | Zellen Art | V₁₀ /V | Schaltzeit /ms 0 V→5 V |
|---|---|---|---|---|---|---|
| 1 | **1** | | Nein | VA | 2.50 | 32 |
| 3 | **2** | | Nein | VA | 2.43 | 35 |
| 4 | **3** | | Nein | VA | 2.45 | 33 |
| 5 | **4** | | Nein | VA | 2.51 | 31 |
| 7 | **6** | | Nein | VA | 2.47 | 34 |
| 8 | **7** | | Nein | VA | 2.48 | 31 |
| 10 | **9** | | Nein | VA | 2.42 | 34 |
| 13 | **12** | | Nein | VA | 2.48 | 28 |
| 14 | **13** | | Nein | VA | 2.48 | 34 |
| 15 | **14** | | Nein | VA | 2.50 | 28 |
| 17 | **16** | | Nein | VA | 2.51 | 28 |
| 19 | **18** | | Nein | VA | 2.49 | 31 |
| 1a | **1** | | Ja | PSA | 2.58 | 23 |
| 3a | **2** | | Ja | PSA | 1.57 | 20 |
| 4a | **3** | | Ja | PSA | 2.53 | 16 |
| 5a | **4** | | Ja | PSA | 2.47 | 27 |
| 8a | **7** | | Ja | PSA | 2.53 | 16 |
| 14a | **13** | | Ja | PSA | 2.53 | 29 |
| 1b | **1** | RM-1 | Ja | PSA | 2.64 | 19 |
| 3b | **2** | RM-1 | Ja | PSA | - | - |
| 4b | **3** | RM-1 | Ja | PSA | 2.60 | 17 |
| 5b | **4** | RM-1 | Ja | PSA | 2.57 | 29 |
| 14b | **13** | RM-1 | Ja | PSA | 2.58 | 26 |

**Tabelle 3: VHR (Voltage-Holding-Ratio, 60 Hz, 100°C, 5 min) vor und nach Hitzebelastung (2 h, 120°C). Hostmischung H1 in Verbindung mit polymerisierbarem Selbstorientierungsadditiv (PSOA).**

| | | | | VHR /% | |
|---|---|---|---|---|---|
| Mischungsbeispiel | PSOA | UV-Bestrahl. | Zellen Art | Vor Hitzebelastung | Nach Hitzebelastung |
| H1 | - | Nein | | 99.0 | 99.3 |
| 1 | **1** | Nein | VA | 98.6 | 98.6 |
| 3 | **2** | Nein | VA | 97.9 | 96.0 |
| 4 | **3** | Nein | VA | 97.4 | 98.3 |
| 5 | **4** | Nein | VA | 96.4 | - |
| 8 | **7** | Nein | VA | 96.7 | - |
| 13 | **12** | Nein | VA | 96.4 | 96.9 |
| 14 | **13** | Nein | VA | 96.4 | 92.0 |
| 15 | **14** | Nein | VA | 97.2 | 94.8 |
| 17 | **16** | Nein | VA | 97.7 | 97.8 |
| 19 | **18** | Nein | VA | 97.6 | 97.8 |

**Tabelle 4: VHR (Voltage-Holding-Ratio, 6Hz, 100°C, 5min) vor und nach UV-Bestrahlung. Hostmischung H1 in Verbindung mit polymerisierbarem Selbstorientierungsadditiv (PSOA). Polymerisationsbedingungen: UV-1 (340 nm Bandpassfilter, 20°C, 0 Vpp, 2 min, 50 mW/cm²); UV-2 (340 nm Bandpassfilter, 20°C, 0 Vpp, 10 min, 100 mW/cm²).**

| Mischungsbeispiel | PSOA | Weitere polym. Verb. | UV-Bestrah. UV-1 + -2 | Art der Zellen | Vor UV | Nach UV |
|---|---|---|---|---|---|---|
| H1 | - | | Ja | | 94.1 | 93.1 |
| H1 | - | RM-1 | Ja | | 93.1 | 94.7 |
| 1a | **1** | | Ja | PSA | 92.5 | 85.9 |
| 3a | **2** | | Ja | PSA | 89.6 | 92.8 |
| 1b | **1** | RM-1 | Ja | PSA | 92.6 | 89.9 |
| 3b | **2** | RM-1 | Ja | PSA | 90.6 | 97.4 |
| 5b | **4** | RM-1 | Ja | PSA | 91.3 | 93.2 |

**Tabelle 5: Gewicht % für die Mischungsbeispiele 1-123**

| PSOA | Gew.% |
|---|---|
| **1** | 2.0 |
| **2** | 2.0 |
| **3** | 2.0 |
| **4** | 0.3 |
| **5** | 4.0 |
| **6** | 3.0 |
| **7** | 2.5 |
| **8** | 3.0 |
| **9** | 3.0 |
| **10** | 2.5 |
| **11** | 3.0 |
| **12** | 2.0 |
| **13** | 1.5 |
| **14** | 0.3 |
| **15** | 0.3 |
| **16** | 0.3 |
| **17** | 0.5 |
| **18** | 0.5 |
| **19** | 3.0 |

## Patentansprüche

1. FK-Medium enthaltend eine niedermolekulare, nicht polymerisierbare flüssigkristalline Komponente und eine polymerisierbare oder polymerisierte Komponente umfassend eine oder mehrere polymerisierbare Verbindungen der Formel I, wobei die polymerisierte Komponente durch Polymerisieren der polymerisierbaren Komponente erhältlich ist,
R¹-[A³-Z³]ₘ-[A²]ₖ-[Z²]ₙ-A¹-R^{a} (I)
worin
A¹, A², A³ jeweils unabhängig voneinander eine aromatische, heteroaromatische, alicyclische oder heterocyclische Gruppe, welche auch anellierte Ringe enthalten kann, und welche auch durch eine Gruppe L oder -Sp-P ein- oder mehrfach substituiert sein kann,
L jeweils unabhängig voneinander H, F, Cl, Br, I, -CN, -NO₂, -NCO, -NCS, -OCN, -SCN, -C(=O)N(R⁰)₂, -C(=O)R⁰, optional substituiertes Silyl, optional substituiertes Aryl oder Cycloalkyl mit 3 bis 20 C-Atomen, oder geradkettiges oder verzweigtes Alkyl, Alkoxy, Alkylcarbonyl, Alkoxycarbonyl, Alkylcarbonyloxy oder Alkoxycarbonyloxy mit 1 bis 25 C-Atomen, worin auch ein oder mehrere H-Atome durch F oder Cl ersetzt sein können,
P eine polymerisierbare Gruppe,
Sp eine Abstandsgruppe oder eine Einfachbindung,
Z² jeweils unabhängig voneinander -O-, -S-, -CO-, -CO-O-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₁-, -CF₂CH₂-, -CH₂CF₂-, -(CF₂)ₙ₁-, -CH=CH-, -CF=CF-, -C≡C-, -CH=CH-COO-, -OCO-CH=CH-, -(CR⁰R⁰⁰)ₙ₁-, -CH(-Sp-P)-, -CH₂CH(-Sp-P)-, -CH(-Sp-P)CH(-Sp-P)-,
Z³ jeweils unabhängig voneinander eine Einfachbindung, -O-, -S-, -CO-, -CO-O-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₁-, -CF₂CH₂-, -CH₂CF₂-, -(CF₂)ₙ₁-, -CH=CH-, -CF=CF-, -C≡C-, -CH=CH-COO-, -OCO-CH=CH-, -(CR⁰R⁰⁰)ₙ₁-, -CH(-Sp-P)-, -CH₂CH(-Sp-P)-, -CH(-Sp-P)CH(-Sp-P)-,
n1 1, 2, 3 oder 4,
n 0 oder 1,
m 0, 1, 2, 3, 4, 5 oder 6, und
k 0 oder 1
R⁰ jeweils unabhängig voneinander Alkyl mit 1 bis 12 C-Atomen,
R⁰⁰ jeweils unabhängig voneinander H oder Alkyl mit 1 bis 12 C-Atomen,
R¹ unabhängig voneinander H, Halogen, geradkettiges, verzweigtes oder cyclisches Alkyl mit 1 bis 25 C-Atomen, worin auch eine oder mehrere nicht benachbarte CH₂-Gruppen durch -O-, -S-, -CO-, -CO-O-, -O-CO-, -O-CO-O-so ersetzt sein können, dass O- und/oder S-Atome nicht direkt miteinander verknüpft sind und worin auch ein oder mehrere H-Atome durch F oder Cl, ersetzt sein können, oder eine Gruppe -Sp-P,
R^{a} eine Ankergruppe der Formel 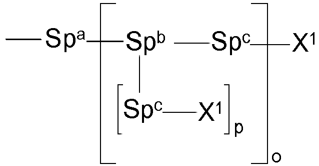 oder 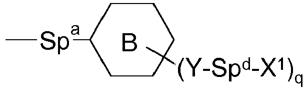
p 1 oder 2,
q 2 oder 3,
B ein substituiertes oder unsubstituiertes Ringsystem oder kondensiertes Ringsystem,
Y unabhängig voneinander -O-, -S-, -C(O)-, -C(O)O-, -OC(O)-, -NR¹¹- oder eine Einfachbindung,
o 0 oder 1,
X¹ unabhängig voneinander H, Alkyl, Fluoralkyl, OH, NH₂, NHR¹¹, NR¹¹₂, OR¹¹, C(O)OH, -CHO, wobei mindestens eine Gruppe X¹ einen Rest ausgewählt aus -OH, -NH₂, NHR¹¹, C(O)OH und -CHO, bedeutet,
R¹¹ Alkyl mit 1 bis 12 C-Atomen,
Sp^{a}, Sp^{c}, Sp^{d} jeweils unabhängig voneinander eine Abstandsgruppe oder eine Einfachbindung, und
Sp^{b} eine tri- oder tetravalente Gruppe
bedeuten,
wobei die Verbindung der Formel I mindestens eine polymerisierbare Gruppe P innerhalb der Gruppen A¹, A², A³, Z² und Z³, wie sie vorhanden sind, enthält.

2. Medium nach Anspruch 1, **dadurch gekennzeichnet, dass** für Formel I
A¹, A², A³ jeweils unabhängig voneinander 1,4-Phenylen, Naphthalin-1,4-diyl oder Naphthalin-2,6-diyl, wobei in diesen Gruppen auch eine oder mehrere CH-Gruppen durch N ersetzt sein können, Cyclohexan-1,4-diyl, worin auch eine oder mehrere nicht-benachbarte CH₂-Gruppen durch O und/oder S ersetzt sein können, 3,3'-Bicyclobutyliden, 1,4-Cyclohexenylen, Bicyclo[1.1,1]pentan-1,3-diyl, Bicyclo[2.2.2]octan-1,4-diyl, Spiro[3.3]heptan-2,6-diyl, Piperidin-1,4-diyl, Decahydronaphthalin-2,6-diyl, 1,2,3,4-Tetrahydronaphthalin-2,6-diyl, Indan-2,5-diyl oder Octahydro-4,7-methano-indan-2,5-diyl, Perhydrocyclopenta[a]phenanthren-3,17-diyl (insbesondere Gonan-3,17-diyl),
wobei alle diese Gruppen unsubstituiert oder durch eine Gruppe L oder -Sp-P ein- oder mehrfach substituiert sein können,
bedeuten.

3. Medium nach Anspruch 1 oder 2, **dadurch gekennzeichnet, dass** die Verbindung der Formel I eine Verbindung der Formel I1 ist, 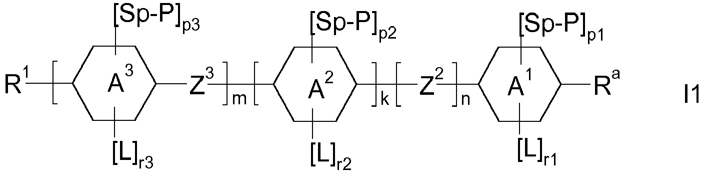 worin
R¹, R^{a}, A¹, A², A³, Z², Z³, L, Sp, P, k, m und n unabhängig wie in Anspruch 1 definiert sind, und
p1, p2, p3 unabhängig 0, 1, 2 oder 3, und
r1, r2, r3 unabhängig 0, 1, 2 oder 3,
bedeuten,
wobei die Verbindung der Formel I1 mindestens eine polymerisierbare Gruppe P innerhalb der Gruppen A¹, A², A³, Z² und Z³, wie sie vorhanden sind, enthält.

4. FK-Medium nach einem oder mehreren der Ansprüche 1 bis 3, **dadurch gekennzeichnet, dass** die Verbindung der Formel I an den Gruppen A¹, A² und A³, wie sie vorhanden sind, insgesamt mindestens eine polymerisierbare Gruppe -Sp-P enthält.

5. FK-Medium nach einem oder mehreren der Ansprüche 1 bis 4, **dadurch gekennzeichnet, dass** die eine oder mehreren Verbindungen der Formel I aus Verbindungen der Formeln IA, IB, IC, ID oder IE ausgewählt sind: 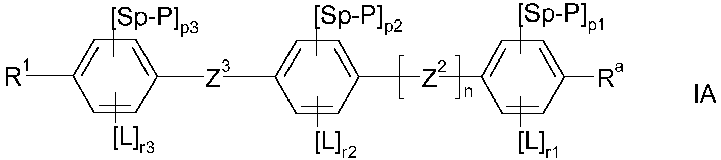 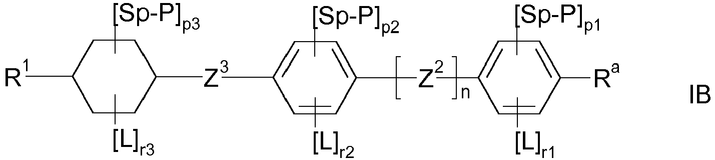 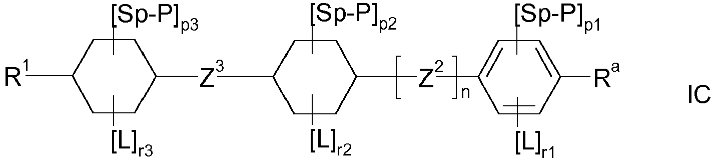 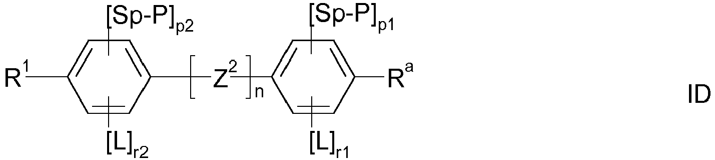 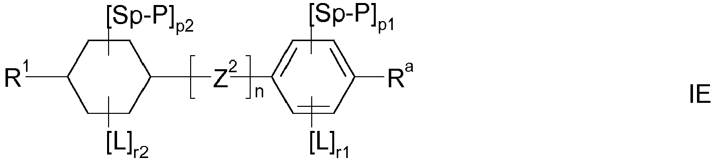
worin R¹, R^{a}, Z², Z³, L, Sp, P und n unabhängig wie in Anspruch 1 definiert sind, und
p1, p2, p3 unabhängig 0, 1, 2 oder 3, und
r1, r2, r3 unabhängig 0, 1, 2 oder 3,
bedeuten,
wobei jede der Verbindungen der Formeln IA, IB, IC, ID oder IE mindestens eine polymerisierbare Gruppe P enthält.

6. FK-Medium nach einem oder mehreren der Ansprüche 3 bis 5, **dadurch gekennzeichnet, dass**
in den Formeln I1, IA, IB und IC r1 + r2 + r3 > 0, und
für Formel ID und IE r1 + r2 > 0 ist und
der Substituent L nicht H bedeutet.

7. FK-Medium nach einem oder mehreren der Ansprüche 1 bis 6, **dadurch gekennzeichnet, dass** die polymerisierbare oder polymerisierte Komponente neben einer oder mehreren Verbindungen der Formel I eine oder mehrere weitere polymerisierbare oder polymerisierte Verbindungen enthält, wobei die polymerisierte Komponente erhältlich ist durch Polymerisation der polymerisierbaren Komponente.

8. FK-Medium nach einem oder mehreren der Ansprüche 1 bis 7, **dadurch gekennzeichnet, dass** es neben einer oder mehreren Verbindungen der Formel I zusätzlich ein oder mehrere nicht polymerisierbare Verbindungen der Formel I' enthält,
R¹-[A³-Z³]ₘ-[A²]ₖ-[Z²]ₙ-A¹-R^{a} I'
worin m, k, n und die Gruppe R^{a} wie für Formel I nach Anspruch 1 definiert sind, und
A¹, A², A³ jeweils unabhängig voneinander eine aromatische, heteroaromatische, alicyclische oder heterocyclische Gruppe, welche auch anellierte Ringe enthalten kann, und welche auch durch eine Gruppe L ein- oder mehrfach substituiert sein kann,
Z² jeweils unabhängig voneinander -O-, -S-, -CO-, -CO-O-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₁-, -CF₂CH₂-, -CH₂CF₂-, -(CF₂)ₙ₁-, -CH=CH-, -CF=CF-, -C≡C-, -CH=CH-COO-, -OCO-CH=CH-, -(CR⁰R⁰⁰)ₙ₁-,
Z³ jeweils unabhängig voneinander eine Einfachbindung, -O-, -S-, -CO-, -CO-O-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₁-, -CF₂CH₂-, -CH₂CF₂-, -(CF₂)ₙ₁-, -CH=CH-, -CF=CF-, -C≡C-, -CH=CH-COO-, -OCO-CH=CH-, -(CR⁰R⁰⁰)ₙ₁-,
n1 1, 2, 3, oder 4,
L jeweils unabhängig voneinander H, F, Cl, Br, I, -CN, -NO₂, -NCO, -NCS, -OCN, -SCN, -C(=O)N(R⁰)₂, -C(=O)R⁰, optional substituiertes Silyl, optional substituiertes Aryl oder Cycloalkyl mit 3 bis 20 C-Atomen, oder geradkettiges oder verzweigtes Alkyl, Alkoxy, Alkylcarbonyl, Alkoxycarbonyl, Alkylcarbonyloxy oder Alkoxycarbonyloxy mit 1 bis 25 C-Atomen, worin auch ein oder mehrere H-Atome durch F oder Cl ersetzt sein können,
R⁰ jeweils unabhängig voneinander Alkyl mit 1 bis 12 C-Atomen,
R⁰⁰ jeweils unabhängig voneinander H oder Alkyl mit 1 bis 12 C-Atomen,
und
R¹ unabhängig voneinander H, Halogen, geradkettiges, verzweigtes oder cyclisches Alkyl mit 1 bis 25 C-Atomen, worin auch eine oder mehrere nicht benachbarte CH₂-Gruppen durch -O-, -S-, -CO-, -CO-O-, -O-CO-, -O-CO-O-so ersetzt sein können, dass O- und/oder S-Atome nicht direkt miteinander verknüpft sind und worin auch ein oder mehrere H-Atome durch F oder Cl, ersetzt sein können,
bedeuten.

9. FK-Medium nach Anspruch 8, **dadurch gekennzeichnet, dass** es eine oder mehrere Verbindungen ausgewählt aus den folgenden Formeln enthält: 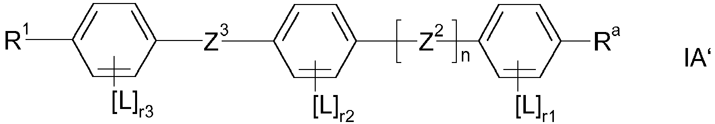 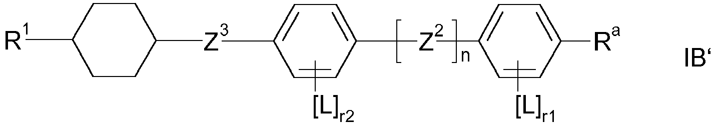 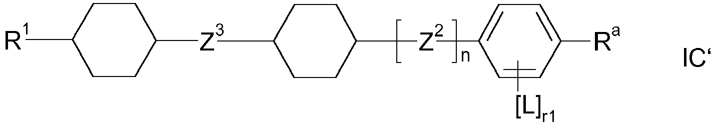 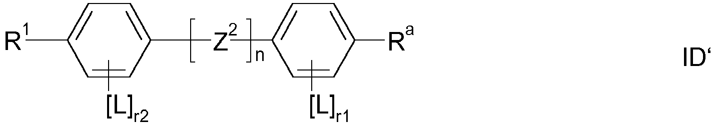 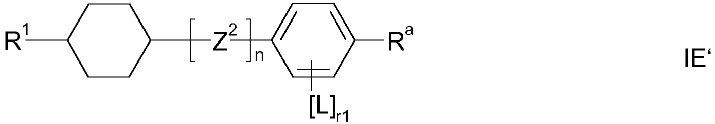
worin R¹, R^{a}, Z², Z³, L, und n unabhängig wie im Anspruch 8 definiert sind, und
r1, r2, r3 unabhängig 0, 1, 2, 3 oder 4 bedeuten.

10. FK-Medium nach einem oder mehreren der Ansprüche 1 bis 9, **dadurch gekennzeichnet, dass** die Verbindung der Formel I eine oder mehrere Verbindungen ausgewählt aus den nachfolgenden Formeln umfasst: 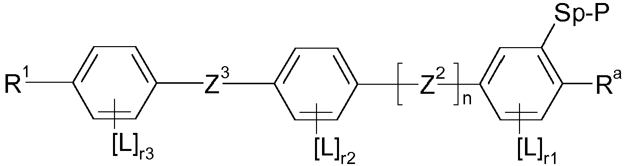 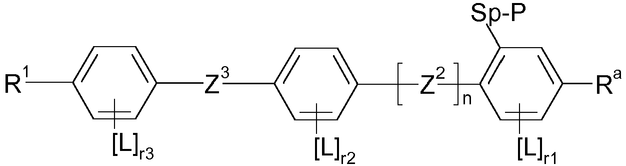 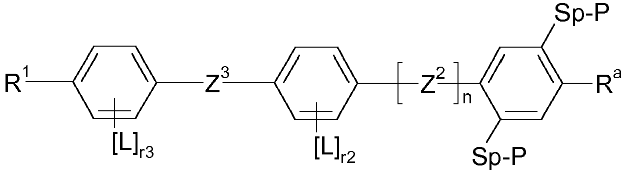 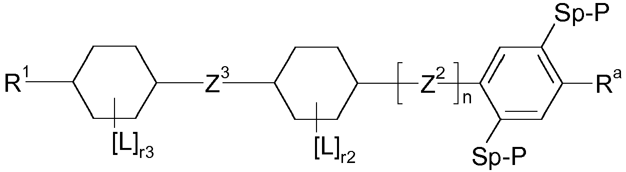 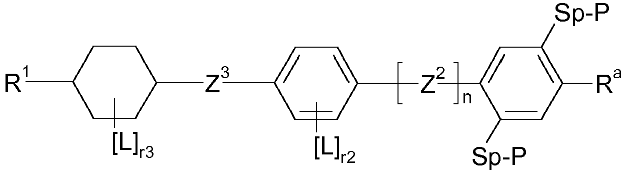 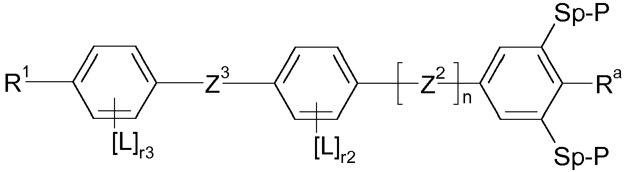 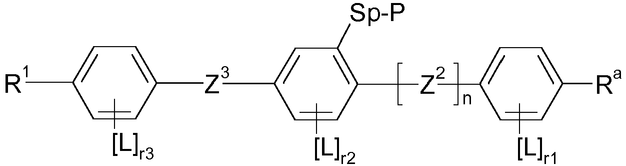 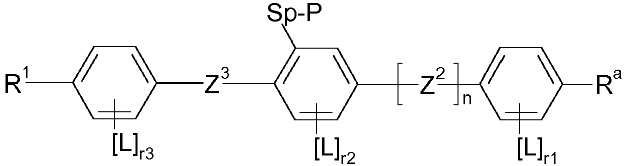 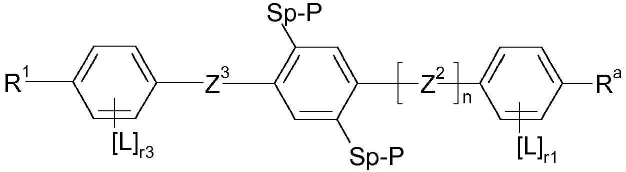 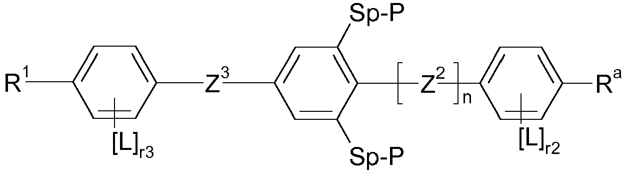 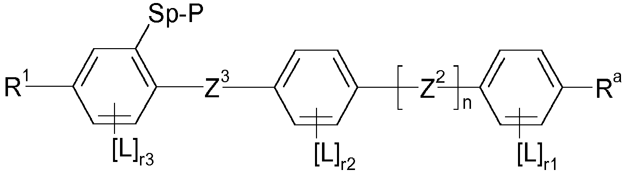 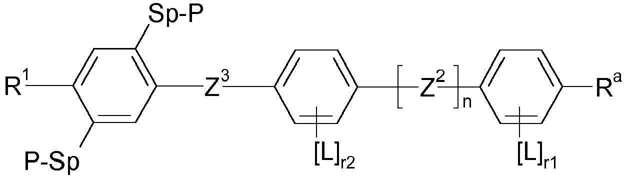 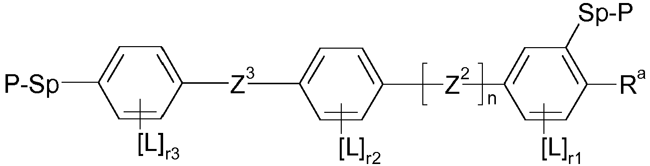 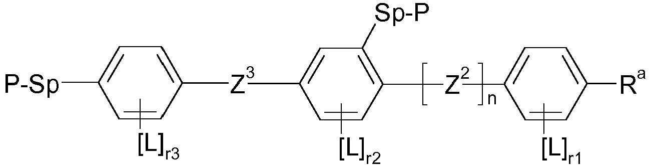 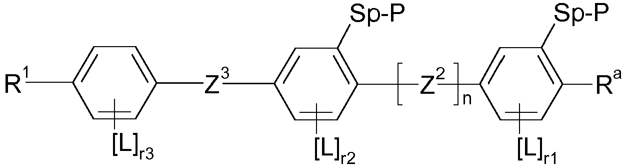 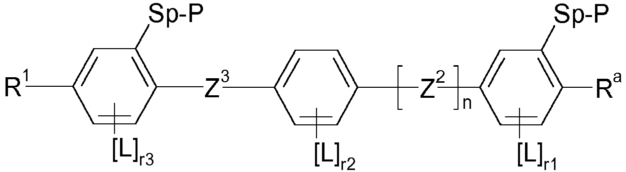
worin L, Sp, P, R^{a} und Z² unabhängig wie im Anspruch 1 definiert sind, und
Z³ eine Einfachbindung oder -CH₂CH₂-,
n 0 oder 1,
p1, p2, p3 unabhängig 0, 1, 2 oder 3,
r1, r2, r3 unabhängig 0, 1, 2 oder 3, und
R¹ H, Halogen, geradkettiges, verzweigtes oder cyclisches Alkyl mit 1 bis 25 C-Atomen, worin auch eine oder mehrere nicht benachbarte CH₂-Gruppen durch, -O-, -S-, -CO-, -CO-O-, -O-CO-, -O-CO-O- so ersetzt sein können, dass O- und/oder S-Atome nicht direkt miteinander verknüpft sind und worin auch ein oder mehrere H-Atome durch F oder Cl, ersetzt sein können,
bedeuten.

11. FK-Medium nach einem oder mehreren der Ansprüche 1 bis 10, **dadurch gekennzeichnet, dass** die Gruppe R^{a} in Formel I eine, zwei oder drei OH-Gruppen umfasst.

12. FK-Medium nach einem oder mehreren der Ansprüche 1 bis 11, **dadurch gekennzeichnet, dass** die Gruppe R^{a} eine Gruppe ausgewählt aus
-Sp^{a}-X¹
oder 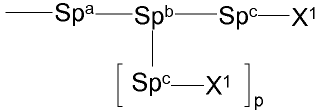 bedeutet,
worin Sp^{a}, Sp^{b}, Sp^{c}, p und X¹ die Bedeutung wie in Anspruch 1 haben.

13. FK-Medium nach einem oder mehreren der Ansprüche 1 bis 12, **dadurch gekennzeichnet, dass**
Sp^{a} eine Gruppe ausgewählt aus den Formeln -CH₂-, -CH₂CH₂-, -OCH₂CH₂-, -CH₂CH₂CH₂-, -OCH₂CH₂CH₂-, -CH₂CH₂CH₂CH₂-, -OCH₂CH₂CH₂CH₂-, -CH₂CH₂OCH₂CH₂- oder -OCH₂CH₂OCH₂CH₂- bedeutet.

14. FK-Medium nach einem oder mehreren der Ansprüche 1 bis 13, **dadurch gekennzeichnet, dass** die Gruppe R^{a} eine Gruppe ausgewählt aus den Teilformeln 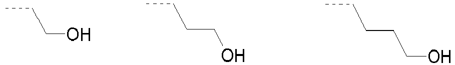 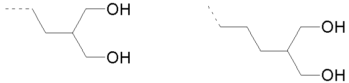 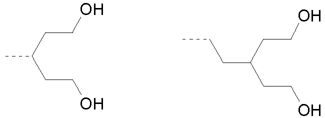 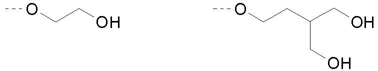 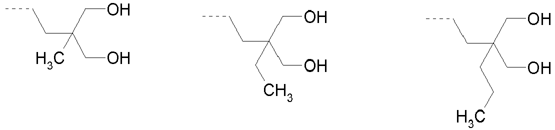 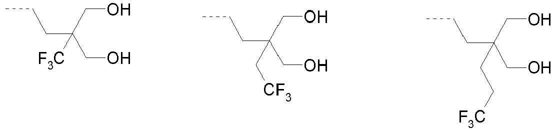 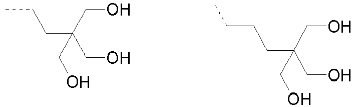 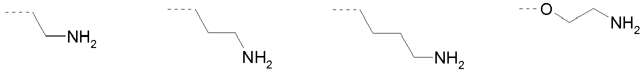 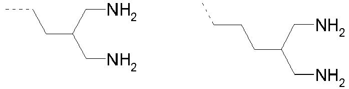 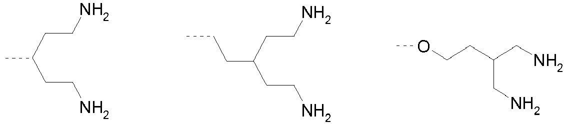 bedeutet.

15. FK-Medium nach einem oder mehreren der Ansprüche 1 bis 14 **dadurch gekennzeichnet, dass** für die Verbindung der Formel I
n = 0
bedeutet.

16. FK-Medium nach einem oder mehreren der Ansprüche 1 bis 15, **dadurch gekennzeichnet, dass** k = 1 ist.

17. FK-Medium nach einem oder mehreren der Ansprüche 1 bis 16 **dadurch gekennzeichnet, dass** für die Verbindung der Formel I die Gruppe P ausgewählt ist aus Vinyloxy, Acrylat, Methacrylat, Fluoroacrylat, Chloroacrylat, Oxetan und Epoxid.

18. FK-Medium nach einem oder mehreren der Ansprüche 1 bis 17, **dadurch gekennzeichnet, dass** es die Verbindungen der Formel I in einer Konzentration von weniger als 10 Gew.-% enthält.

19. FK-Medium nach einem oder mehreren der Ansprüche 1 bis 18, **dadurch gekennzeichnet, dass** es eine oder mehrere polymerisierbare Verbindungen der Formel M oder ein (Co-)Polymer umfassend Verbindungen der Formel M enthält:
P¹-Sp¹-A²-(Z¹-A¹)ₙ-Sp²-P² M
worin die einzelnen Reste folgende Bedeutung besitzen:
P¹, P² jeweils unabhängig eine polymerisierbare Gruppe,
Sp¹, Sp² jeweils unabhängig eine Abstandsgruppe,
A¹, A², jeweils unabhängig voneinander einen Rest ausgewählt aus folgenden Gruppen
a) der Gruppe bestehend aus trans-1,4-Cyclohexylen, 1,4-Cyclohexenylen und 4,4'-Bicyclohexylen, worin auch eine oder mehrere nicht benachbarte CH₂-Gruppen durch -O-und/oder -S- ersetzt sein können und worin auch ein oder mehrere H-Atome durch eine Gruppe L ersetzt sein können, oder ausgewählt aus 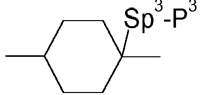
b) der Gruppe bestehend aus 1,4-Phenylen und 1,3-Phenylen, worin auch eine oder zwei CH-Gruppen durch N ersetzt sein können und worin auch ein oder mehrere H-Atome durch eine Gruppe L oder -Sp³-P ersetzt sein können,
c) der Gruppe bestehend aus Tetrahydropyran-2,5-diyl, 1,3-Dioxan-2,5-diyl, Tetrahydrofuran-2,5-diyl, Cyclobut-1,3-diyl, Piperidin-1,4-diyl, Thiophen-2,5-diyl und Selenophen-2,5-diyl, welche auch ein oder mehrfach durch eine Gruppe L substituiert sein können,
d) der Gruppe bestehend aus gesättigten, teilweise ungesättigten oder vollständig ungesättigten, und optional substituierten, polycyclischen Resten mit 5 bis 20 cyclischen C-Atomen, von denen auch eines oder mehrere durch Heteroatome ersetzt sein können, vorzugsweise ausgewählt aus der Gruppe bestehend aus Bicyclo[1.1,1]pentan-1,3-diyl, Bicyclo[2.2.2]octan-1,4-diyl, Spiro[3.3]heptan-2,6-diyl, 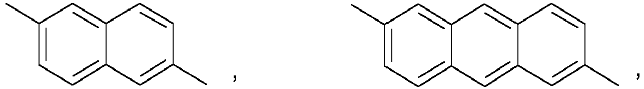 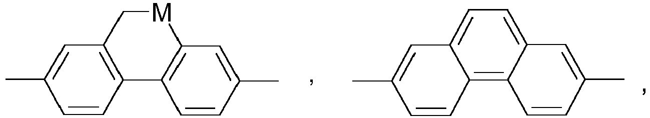 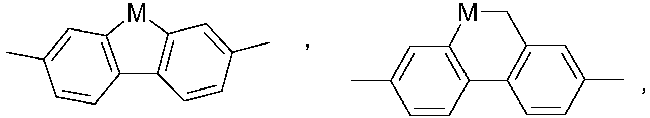 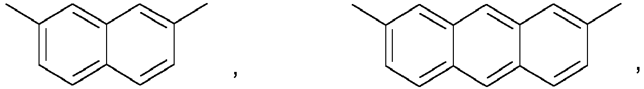 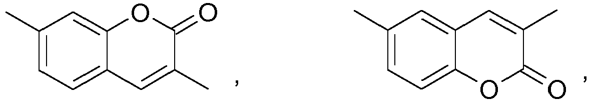 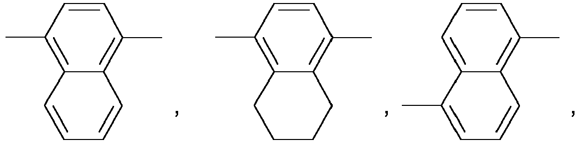 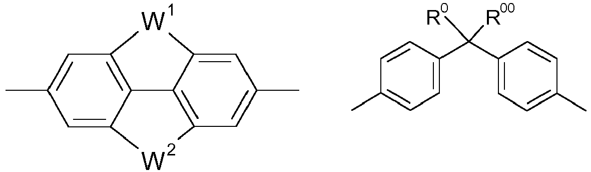 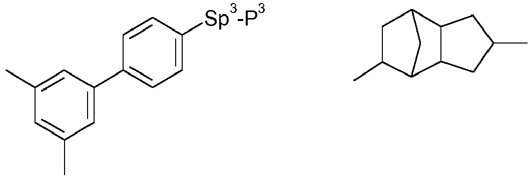 wobei in diesen Resten auch ein oder mehrere H- Atome durch eine Gruppe L oder -Sp³-P ersetzt sein können, und/oder eine oder mehrere Doppelbindungen durch Einfachbindungen ersetzt sein können, und/oder ein oder mehrere CH-Gruppen durch N ersetzt sein können,
P³ eine polymerisierbare Gruppe,
Sp³ eine Abstandsgruppe,
n 0, 1, 2 oder 3,
Z¹ jeweils unabhängig voneinander -CO-O-, -O-CO-, -CH₂O-, -OCH₂-, -CF₂O-, -OCF₂-, oder -(CH₂)ₙ-, wobei n 2, 3 oder 4 ist, -O-, -CO-, -C(R^{c}R^{d})-, -CH₂CF₂-, -CF₂CF₂-, oder eine Einfachbindung,
L bei jedem Auftreten gleich oder verschieden F, Cl, CN, SCN, SF₅ oder geradkettiges oder verzweigtes, jeweils optional fluoriertes, Alkyl, Alkoxy, Alkylcarbonyl, Alkoxycarbonyl, Alkylcarbonyloxy oder Alkoxycarbonyloxy mit 1 bis 12 C-Atomen,
R⁰, R⁰⁰ jeweils unabhängig voneinander H, F oder geradkettiges oder verzweigtes Alkyl mit 1 bis 12 C-Atomen, worin auch ein oder mehrere H-Atome durch F ersetzt sein können,
M -O-, -S-, -CH₂-, -CHY¹- oder -CY¹Y²-,
Y¹, und Y² jeweils unabhängig voneinander eine der oben für R⁰ angegebenen Bedeutungen, Cl oder CN, und vorzugsweise H, F, Cl, CN, OCF₃ oder CF₃,
W¹, W² jeweils unabhängig voneinander -CH₂CH₂-, -CH=CH-, -CH₂-O-, -O-CH₂-, -C(R^{c}R^{d})- oder -O- bedeuten, und
R^{c} und R^{d} jeweils unabhängig voneinander H oder Alkyl mit 1 bis 6 C-Atomen, vorzugsweise H, Methyl oder Ethyl, bedeuten.
wobei eine oder mehrere der Gruppen P¹-Sp¹-, -Sp²-P² und -Sp³-P³ einen Rest R^{aa} bedeuten können, mit der Maßgabe, dass mindestens eine der vorhandenen Gruppen P¹-Sp¹-, -Sp²-P² und -Sp³-P³ nicht R^{aa} bedeutet,
R^{aa} H, F, Cl, CN oder geradkettiges oder verzweigtes Alkyl mit 1 bis 25 C-Atomen, worin auch eine oder mehrere nicht benachbarte CH₂-Gruppen jeweils unabhängig voneinander durch C(R⁰)=C(R⁰⁰)-, -C≡C-, -O-, -S-, -CO-, -CO-O-, -O-CO-, -O-CO-O- so ersetzt sein können, dass O- und/oder S-Atome nicht direkt miteinander verknüpft sind, und worin auch ein oder mehrere H-Atome durch F, Cl, CN oder P¹-Sp¹- ersetzt sein können, wobei die Gruppen -OH, -NH₂, -SH, -NHR, -C(O)OH und -CHO in R^{aa} nicht enthalten sind.

20. FK-Medium nach einem oder mehreren der Ansprüche 1 bis 19, **dadurch gekennzeichnet, dass** die polymerisierbare oder polymerisierte Komponente 0,01 bis 5 Gew.-% einer oder mehrerer Verbindungen der Formel M nach Anspruch 19 und/oder 0,01 bis 10 Gew.-% einer oder mehrerer nicht polymerisierbarer Verbindungen der Formel I' nach Anspruch 8 mit mindestens einer Ankergruppe umfasst.

21. FK-Medium nach einem oder mehreren der Ansprüche 1 bis 20, **dadurch gekennzeichnet, dass** die polymerisierbare oder polymerisierte Komponente eine oder mehreren Verbindungen ausgewählt aus den Verbindungen der folgenden Formeln, umfasst: 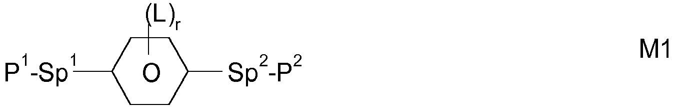 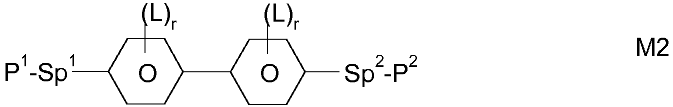 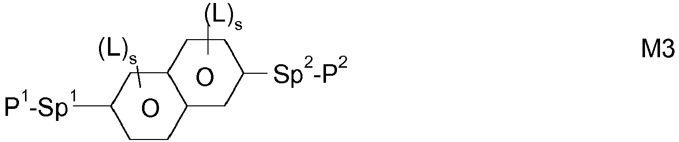 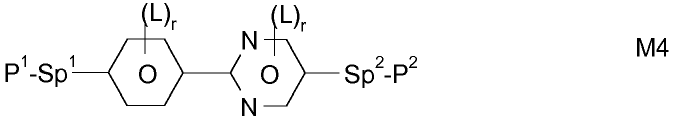 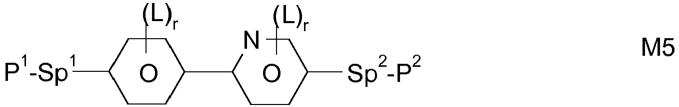 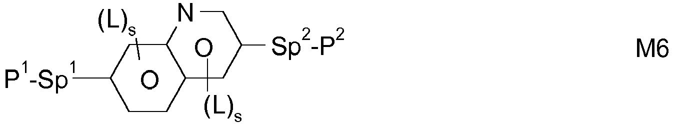 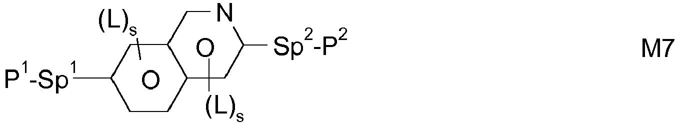 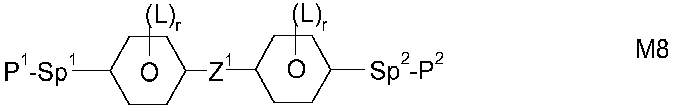 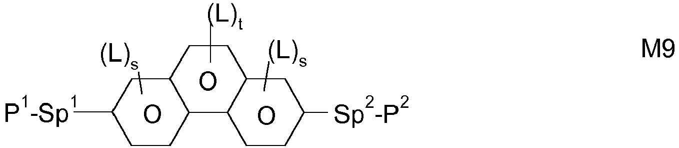 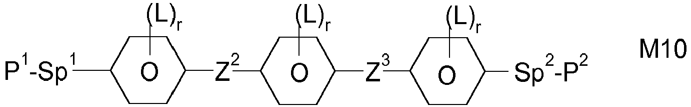 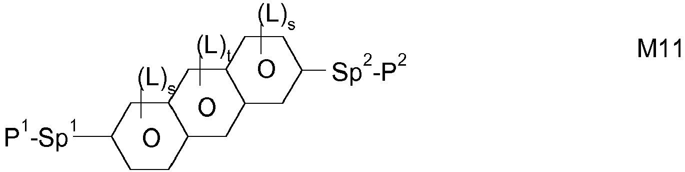 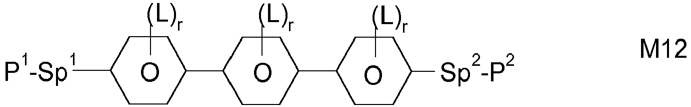 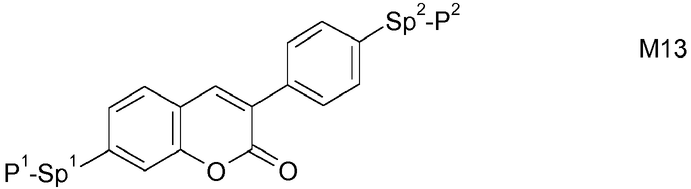 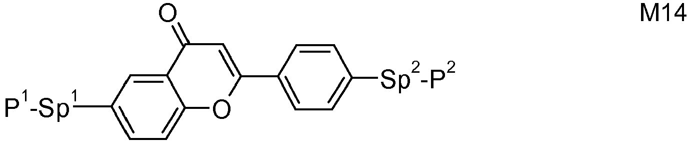 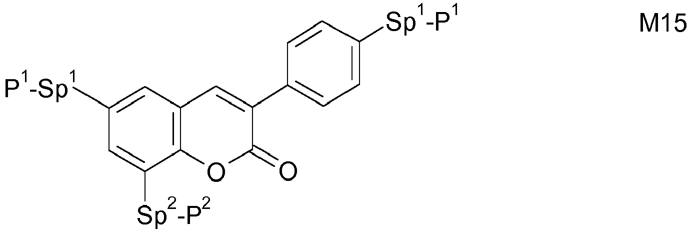 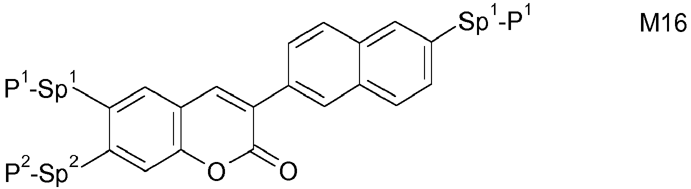 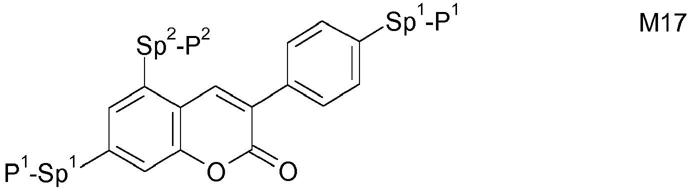 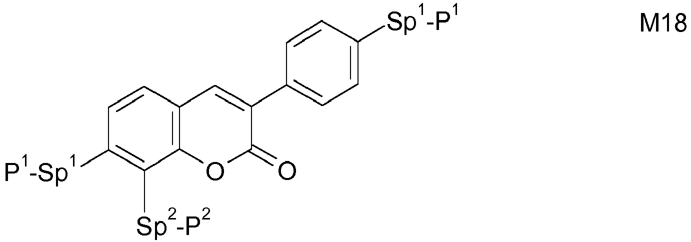 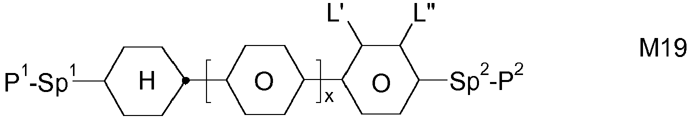 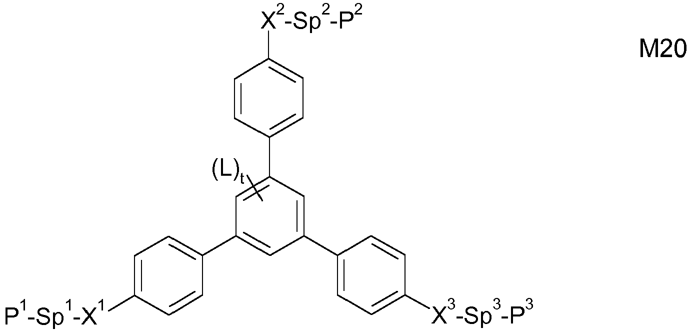 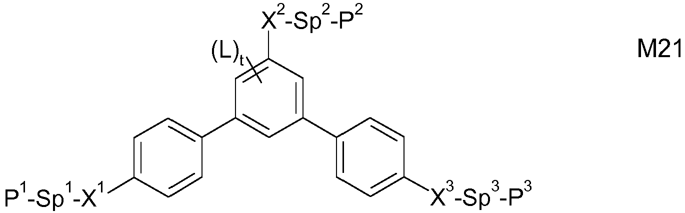 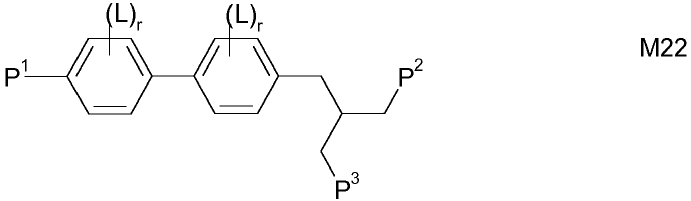 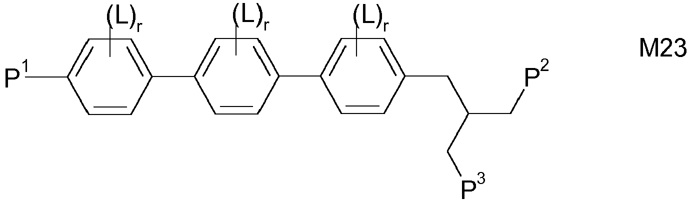 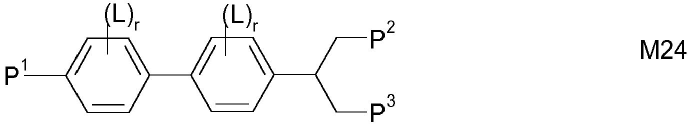 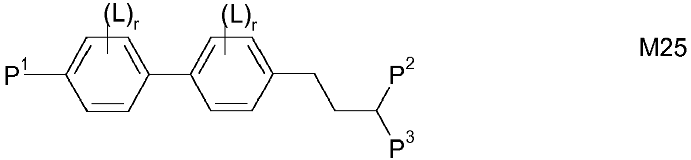 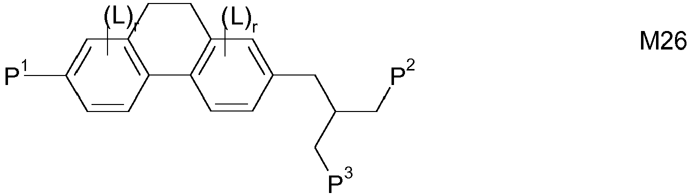 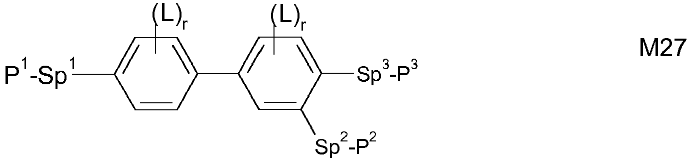 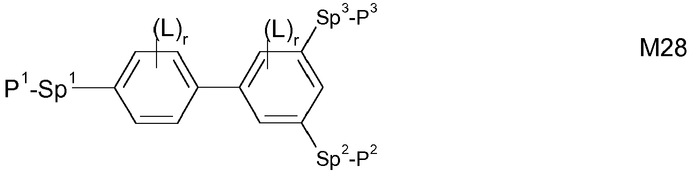 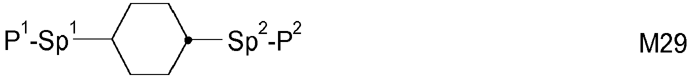 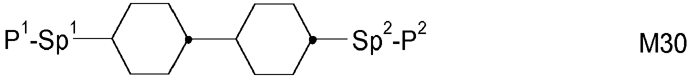 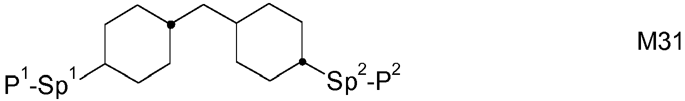 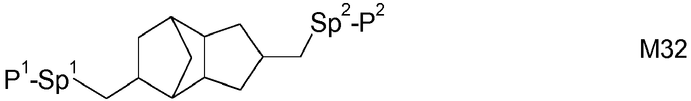 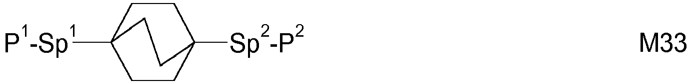 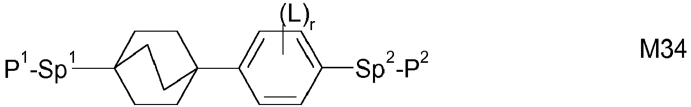 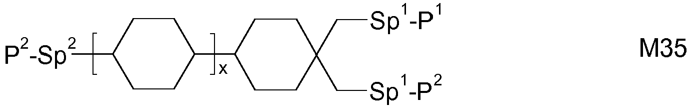 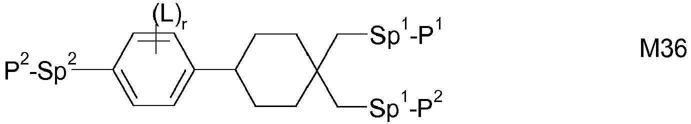 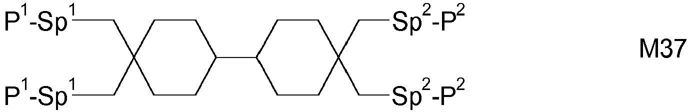 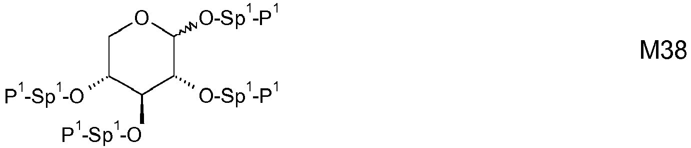 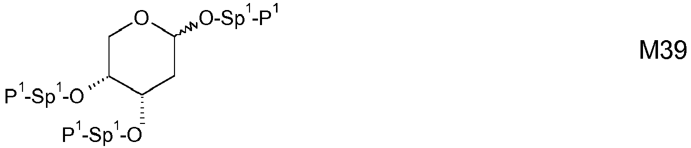 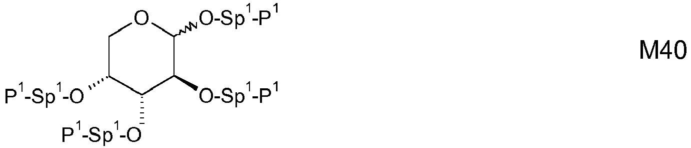 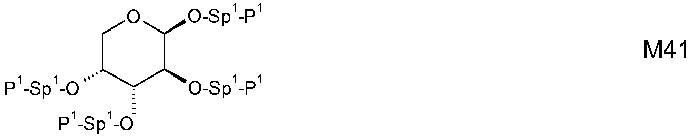 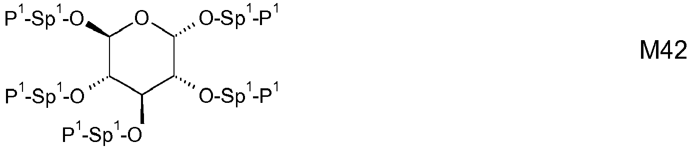 worin die einzelnen Reste folgende Bedeutung besitzen:
P¹,P² und P³ jeweils unabhängig voneinander eine polymerisierbare Gruppe, vorzugsweise mit einer der vor- und nachstehend für P angegebenen Bedeutungen, besonders bevorzugt eine Acrylat-, Methacrylat-, Fluoracrylat-, Oxetan-, Vinyloxy- oder Epoxygruppe,
Sp¹, Sp² und Sp³ jeweils unabhängig voneinander eine Einfachbindung oder eine Abstandsgruppe, vorzugsweise mit einer der vor- und nachstehend für Sp^{a} angegebenen Bedeutungen, und besonders bevorzugt -(CH₂)ₚ₁-, -(CH₂)ₚ₁-O-, -(CH₂)ₚ₁-CO-O- oder -(CH₂)ₚ₁-O-CO-O-, worin p1 eine ganze Zahl von 1 bis 12 ist, und wobei in den letztgenannten Gruppen die Verknüpfung zum benachbarten Ring über das O-Atom erfolgt,
wobei auch einer oder mehrere der Reste P¹-Sp¹-, P²-Sp²- und P³-Sp³- einen Rest R^{aa} bedeuten können, mit der Maßgabe dass mindestens einer der vorhandenen Reste P¹-Sp¹-, P²-Sp²- und P³-Sp³- nicht R^{aa} bedeutet,
R^{aa} H, F, Cl, CN oder geradkettiges oder verzweigtes Alkyl mit 1 bis 25 C-Atomen, worin auch eine oder mehrere nicht benachbarte CH₂-Gruppen jeweils unabhängig voneinander durch C(R⁰)=C(R⁰⁰)-, -C≡C-, -N(R⁰)-, -O-, -S-, -CO-, -CO-O-, -O-CO-, -O-CO-O- so ersetzt sein können, dass O- und/oder S-Atome nicht direkt miteinander verknüpft sind, und worin auch ein oder mehrere H-Atome durch F, Cl, CN oder P¹-Sp¹- ersetzt sein können, wobei -OH, -NH₂, -SH, -NHR, -C(O)OH und -CHO in der Gruppe R^{aa} nicht enthalten sind,
R⁰, R⁰⁰ jeweils unabhängig voneinander und bei jedem Auftreten gleich oder verschieden H oder Alkyl mit 1 bis 12 C-Atomen,
R^{y} und R^{z} jeweils unabhängig voneinander H, F, CH₃ oder CF₃,
X¹, X² und X³ jeweils unabhängig voneinander -CO-O-, O-CO- oder eine Einfachindung,
Z¹ -O-, -CO-, -C(R^{y}R^{z})-,oder -CF₂CF₂-,
Z² und Z³ jeweils unabhängig voneinander -CO-O-, -O-CO-, -CH₂O-, -OCH₂-, -CF₂O-, -OCF₂-, oder -(CH₂)ₙ-, wobei n 2, 3 oder 4 ist,
L bei jedem Auftreten gleich oder verschieden F, Cl, CN, SCN, SF₅ oder geradkettiges oder verzweigtes, optional ein- oder mehrfach fluoriertes, Alkyl, Alkoxy, Alkenyl, Alkinyl, Alkylcarbonyl, Alkoxycarbonyl, Alkylcarbonyloxy oder Alkoxycarbonyloxy mit 1 bis 12 C-Atomen vorzugsweise F,
L' und L" jeweils unabhängig voneinander H, F oder Cl,
r 0, 1, 2, 3 oder 4,
s 0, 1, 2 oder 3,
t 0, 1 oder 2, und
x 0 oder 1.

22. FK-Medium nach einem oder mehreren der Ansprüche 1 bis 23, **dadurch gekennzeichnet, dass** es zusätzlich eine oder mehrere Verbindungen ausgewählt aus der Gruppe der Verbindungen der Formeln A, B und C enthält, 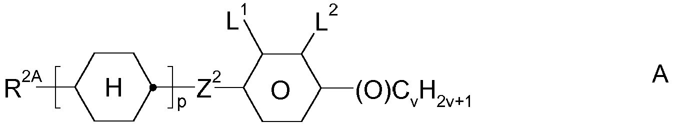 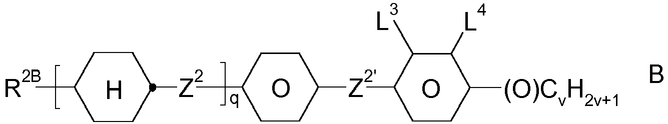 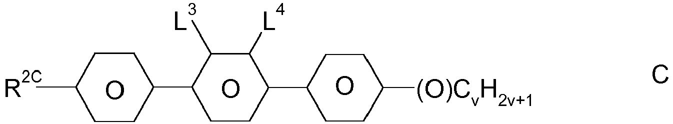 worin
R^{2A}, R^{2B} und R^{2C} jeweils unabhängig voneinander H, einen unsubstituierten, einen einfach durch CN oder CF₃ oder mindestens einfach durch Halogen substituierten Alkylrest mit bis zu 15 C-Atomen, wobei in diesen Resten auch eine oder mehrere CH₂-Gruppen durch -O-, -S-, 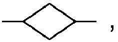 -C≡C-, -CF₂O-, -OCF₂-, -OC-O- oder -O-CO- so ersetzt sein können, dass O-Atome nicht direkt miteinander verknüpft sind,
L¹⁻⁴ jeweils unabhängig voneinander F, Cl, CF₃ oder CHF₂,
Z² und Z^{2'} jeweils unabhängig voneinander Einfachbindung, -CH₂CH₂-, -CH=CH-, -CF₂O-, -OCF₂-, -CH₂O-, -OCH₂-, -COO-, -OCO-, -C₂F₄-, -CF=CF- oder -CH=CHCH₂O-,
p 1 oder 2,
q 0 oder 1, und
v 1 bis 6
bedeuten.

23. FK-Anzeige enthaltend eine FK-Zelle mit zwei Substraten und mindestens zwei Elektroden, wobei mindestens ein Substrat lichtdurchlässig ist und mindestens ein Substrat eine oder zwei Elektroden aufweist, sowie mit einer zwischen den Substraten befindlichen Schicht eines FK-Mediums nach einem oder mehreren der Ansprüche 1 bis 22,
wobei die Verbindung der Formel I geeignet ist, eine homöotrope Ausrichtung des FK-Mediums gegenüber den Substratoberflächen herbeizuführen.

24. FK-Anzeige nach Anspruch 23, **dadurch gekennzeichnet, dass** die Substrate keine Orientierungsschichten zur homöotropen Ausrichtung aufweisen.

25. FK-Anzeige nach Anspruch 23, **dadurch gekennzeichnet, dass** die Substrate ein- oder beidseitig Orientierungsschichten aufweisen.

26. FK-Anzeige nach einem oder mehreren der Ansprüche 23 bis 25 **dadurch gekennzeichnet, dass** es sich um eine VA-Anzeige mit einem FK-Medium mit negativer dielektrischer Anisotropie und auf gegenüberliegenden Substraten angeordneten Elektroden handelt.

27. FK-Anzeige nach einem oder mehreren der Ansprüche 23 bis 25 **dadurch gekennzeichnet, dass** es sich um eine VA-IPS-Anzeige mit einem FK-Medium mit positiver dielektrischer Anisotropie und mindestens auf einem Substrat angeordneten Interdigital-Elektroden handelt.

28. Verfahren zu Herstellung eines FK-Mediums, **dadurch gekennzeichnet, dass** man eine oder mehrere Verbindungen der Formel I nach Anspruch 1 mit einer niedermolekularen flüssigkristallinen Komponente mischt und optional eine oder mehrere polymerisierbare Verbindungen und/oder beliebige Additive zugibt.

29. Verwendung von Verbindungen der Formel I nach einem oder mehreren der Ansprüche 1 bis 5 als Additiv für FK-Medien zur Herbeiführung einer homöotropen Orientierung gegenüber einer das FK-Medium begrenzenden Oberfläche.

30. Verfahren zu Herstellung einer FK-Anzeige enthaltend eine FK-Zelle mit zwei Substraten und mindestens zwei Elektroden, wobei mindestens ein Substrat lichtdurchlässig ist und mindestens ein Substrat eine oder zwei Elektroden aufweist, umfassend die Verfahrensschritte:
- Füllen der Zelle mit einem FK-Medium nach einem oder mehreren der Ansprüche 1 bis 22, wobei sich eine homöotrope Ausrichtung des FK-Mediums gegenüber den Substratoberflächen einstellt, und
- Polymerisieren der polymerisierbaren Komponente(n), optional unter Anlegen einer Spannung an die Zelle oder unter der Wirkung eines elektrischen Feldes, in einem oder mehreren Verfahrensschritten.

## Claims

1. LC medium comprising a low-molecular-weight, non-polymerisable liquid-crystalline component and a polymerisable or polymerised component comprising one or more polymerisable compounds of the formula I, where the polymerised component is obtainable by polymerisation of the polymerisable component,
R¹-[A³-Z³]ₘ-[A²]ₖ-[Z²]ₙ-A¹-R^{a} (I)
in which
A¹, A², A³ in each case, independently of one another, denote an aromatic, heteroaromatic, alicyclic or heterocyclic group, which may also contain fused rings, and which may also be mono- or polysubstituted by a group L or -Sp-P,
L in each case, independently of one another, denotes H, F, Cl, Br, I, -CN, -NO₂, -NCO, -NCS, -OCN, -SCN, -C(=O)N(R⁰)₂, -C(=O)R⁰, optionally substituted silyl, optionally substituted aryl or cycloalkyl having 3 to 20 C atoms, or straight-chain or branched alkyl, alkoxy, alkylcarbonyl, alkoxycarbonyl, alkylcarbonyloxy or alkoxycarbonyloxy having 1 to 25 C atoms, in which, in addition, one or more H atoms may be replaced by F or Cl,
P denotes a polymerisable group,
Sp denotes a spacer group or a single bond,
Z² in each case, independently of one another, denotes -O-, -S-, -CO-, -CO-O-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₁-, -CF₂CH₂-, -CH₂CF₂-, -(CF₂)ₙ₁- , -CH=CH-, -CF=CF-, -C≡C-, -CH=CH-COO-, -OCO-CH=CH-, -(CR⁰R⁰⁰)ₙ₁-, -CH(-Sp-P)-, -CH₂CH(-Sp-P)-, -CH(-Sp-P)CH(-Sp-P)-,
Z³ in each case, independently of one another, denotes a single bond, -O-, -S-, -CO-, -CO-O-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₁-, -CF₂CH₂-, -CH₂CF₂-, -(CF₂)ₙ₁-, -CH=CH-, -CF=CF-, -C≡C-, -CH=CH-COO-, -OCO-CH=CH-, -(CR⁰R⁰⁰)ₙ₁-, -CH(-Sp-P)-, -CH₂CH(-Sp-P)-, -CH(-Sp-P)CH(-Sp-P)-,
n1 denotes 1, 2, 3 or 4,
n denotes 0 or 1,
m denotes 0, 1, 2, 3, 4, 5 or 6,
k denotes 0 or 1,
R⁰ in each case, independently of one another, denotes alkyl having 1 to 12 C atoms,
R⁰⁰ in each case, independently of one another, denotes H or alkyl having 1 to 12 C atoms,
R¹, independently of one another, denotes H, halogen, straight-chain, branched or cyclic alkyl having 1 to 25 C atoms, in which, in addition, one or more non-adjacent CH₂ groups may be replaced by -O-, -S-, -CO-, -CO-O-, -O-CO-, -O-CO-O- in such a way that O and/or S atoms are not linked directly to one another and in which, in addition, one or more H atoms may be replaced by F or Cl, or a group -Sp-P,
R^{a} denotes an anchor group of the formula 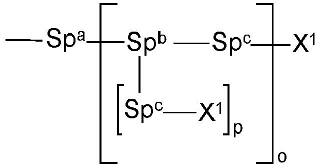 or 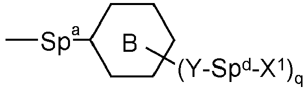
p denotes 1 or 2,
q denotes 2 or 3,
B denotes a substituted or unsubstituted ring system or condensed ring system,
Y, independently of one another, denotes -O-, -S-, -C(O)-, -C(O)O-, -OC(O)-, -NR¹¹- or a single bond,
o denotes 0 or 1,
X¹, independently of one another, denotes H, alkyl, fluoroalkyl, OH, NH₂, NHR¹¹, NR¹¹₂, OR¹¹, C(O)OH, -CHO, where at least one group X¹ denotes a radical selected from -OH, -NH₂, NHR¹¹, C(O)OH and -CHO,
R¹¹ denotes alkyl having 1 to 12 C atoms,
Sp^{a}, Sp^{c}, Sp^{d} in each case, independently of one another, denote a spacer group or a single bond, and
Sp^{b} denotes a tri- or tetravalent group,
where the compound of the formula I contains at least one polymerisable group P within the groups A¹, A², A³, Z² and Z³, as are present.

2. Medium according to Claim 1, **characterised in that**, for formula I,
A¹, A², A³ in each case, independently of one another, denote 1,4-phenylene, naphthalene-1,4-diyl or naphthalene-2,6-diyl, where, in addition, one or more CH groups in these groups may be replaced by N, cyclohexane-1,4-diyl, in which, in addition, one or more non-adjacent CH₂ groups may be replaced by O and/or S, 3,3'-bicyclobutylidene, 1,4-cyclohexenylene, bicyclo[1.1.1]pentane-1,3-diyl, bicyclo[2.2.2]-octane-1,4-diyl, spiro[3.3]heptane-2,6-diyl, piperidine-1,4-diyl, decahydronaphthalene-2,6-diyl, 1,2,3,4-tetrahydronaphthalene-2,6-diyl, indane-2,5-diyl or octahydro-4,7-methanoindane-2,5-diyl, perhydrocyclopenta[a]phenanthrene-3,17-diyl (in particular gonane-3,17-diyl), where all these groups may be unsubstituted or mono- or polysubstituted by a group L or -Sp-P.

3. Medium according to Claim 1 or 2, **characterised in that** the compound of the formula I is a compound of the formula I1, 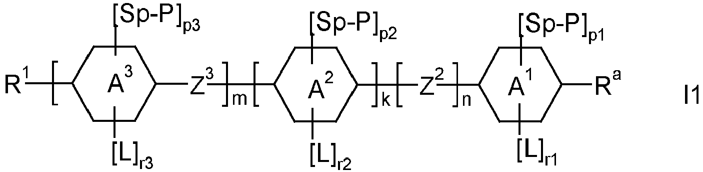 in which
R¹, R^{a}, A¹, A², A³, Z², Z³, L, Sp, P, k, m and n independently are as defined in Claim 1, and
p1, p2, p3 independently denote 0, 1, 2 or 3, and
r1, r2, r3 independently denote 0, 1, 2 or 3,
where the compound of the formula I1 contains at least one polymerisable group P within the groups A¹, A², A³, Z² and Z³, as are present.

4. LC medium according to one or more of Claims 1 to 3, **characterised in that** the compound of the formula I contains in total at least one polymerisable group -Sp-P on the groups A¹, A² and A³, as are present.

5. LC medium according to one or more of Claims 1 to 4, **characterised in that** the one or more compounds of the formula I are selected from compounds of the formulae IA, IB, IC, ID or IE: 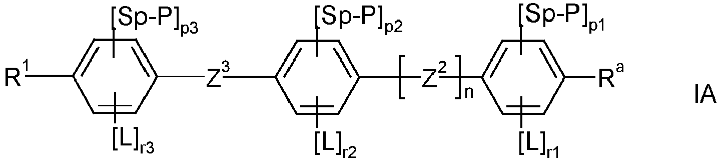 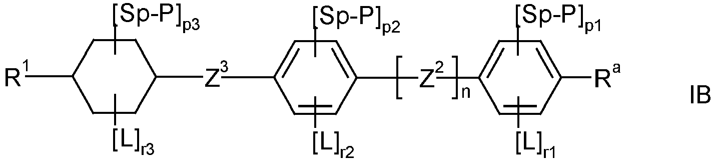 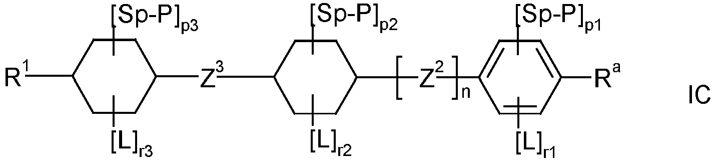 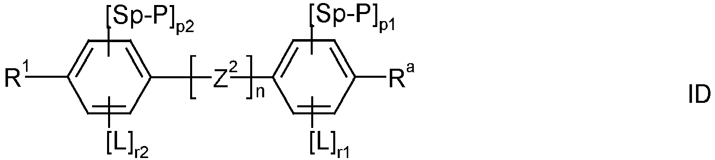 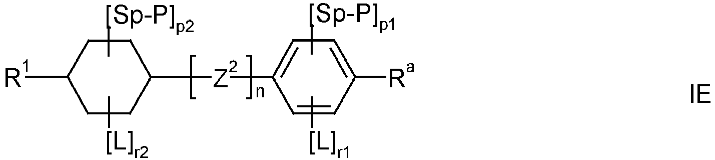
in which R¹, R^{a}, Z², Z³, L, Sp, P and n independently are as defined in Claim 1, and
p1, p2, p3 independently denote 0, 1, 2 or 3, and
r1, r2, r3 independently denote 0, 1, 2 or 3,
where each of the compounds of the formulae IA, IB, IC, ID or IE contains at least one polymerisable group P.

6. LC medium according to one or more of Claims 3 to 5, **characterised in that**
in the formulae 11, IA, IB and IC, r1 + r2 + r3 > 0, and
for formulae ID and IE, r1 + r2 > 0 and
the substituent L does not denote H.

7. LC medium according to one or more of Claims 1 to 6, **characterised in that**, besides one or more compounds of the formula I, the polymerisable or polymerised component comprises one or more further polymerisable or polymerised compounds, where the polymerised component is obtainable by polymerisation of the polymerisable component.

8. LC medium according to one or more of Claims 1 to 7, **characterised in that**, besides one or more compounds of the formula I, it additionally comprises one or more non-polymerisable compounds of the formula I', R¹-[A³-Z³]ₘ-[A²]ₖ-[Z²]ₙ-A¹-R^{a} I' in which m, k, n and the group R^{a} are as defined for formula I according to Claim 1, and
A¹, A², A³ in each case, independently of one another, denote an aromatic, heteroaromatic, alicyclic or heterocyclic group, which may also contain fused rings, and which may also be mono- or polysubstituted by a group L,
Z² in each case, independently of one another, denotes -O-, -S-, -CO-, -CO-O-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₁-, -CF₂CH₂-, -CH₂CF₂-, -(CF₂)ₙ₁- , -CH=CH-, -CF=CF-, -C≡C-, -CH=CH-COO-, -OCO-CH=CH-, -(CR⁰R⁰⁰)ₙ₁-,
Z³ in each case, independently of one another, denotes a single bond, -O-, -S-, -CO-, -CO-O-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₁-, -CF₂CH₂-, -CH₂CF₂-, -(CF₂)ₙ₁-, -CH=CH-, -CF=CF-, -C≡C-, -CH=CH-COO-, -OCO-CH=CH-, -(CR⁰R⁰⁰)ₙ₁-,
n1 denotes 1, 2, 3 or 4,
L in each case, independently of one another, denotes H, F, Cl, Br, I, -CN, -NO₂, -NCO, -NCS, -OCN, -SCN, -C(=O)N(R⁰)₂, -C(=O)R⁰, optionally substituted silyl, optionally substituted aryl or cycloalkyl having 3 to 20 C atoms, or straight-chain or branched alkyl, alkoxy, alkylcarbonyl, alkoxycarbonyl, alkylcarbonyloxy or alkoxycarbonyloxy having 1 to 25 C atoms, in which, in addition, one or more H atoms may be replaced by F or Cl,
R⁰ in each case, independently of one another, denotes alkyl having 1 to 12 C atoms,
R⁰⁰ in each case, independently of one another, denotes H or alkyl having 1 to 12 C atoms,
and
R¹, independently of one another, denotes H, halogen, straight-chain, branched or cyclic alkyl having 1 to 25 C atoms, in which, in addition, one or more non-adjacent CH₂ groups may be replaced by -O-, -S-, -CO-, -CO-O-, -O-CO-, -O-CO-O- in such a way that O and/or S atoms are not linked directly to one another and in which, in addition, one or more H atoms may be replaced by F or Cl.

9. LC medium according to Claim 8, **characterised in that** it comprises one or more compounds selected from the following formulae: 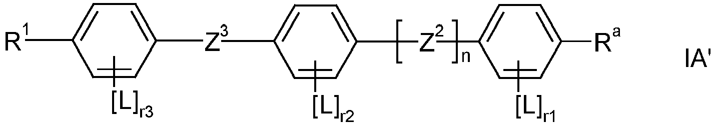 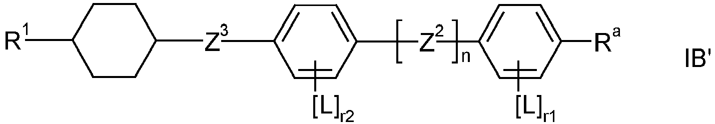 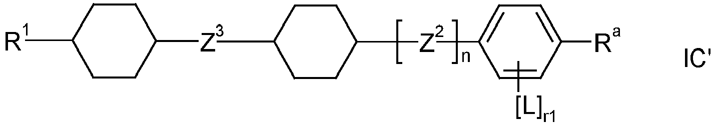 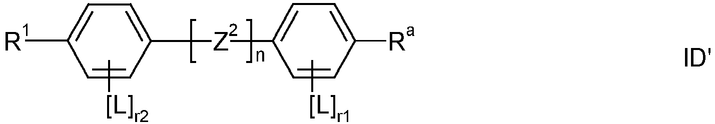 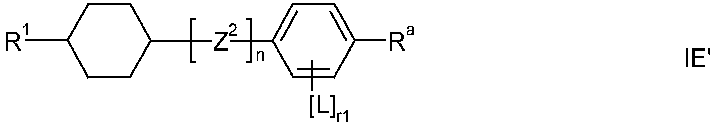
in which R¹, R^{a}, Z², Z³, L and n independently are as defined in Claim 8, and
r1, r2, r3 independently denote 0, 1, 2, 3 or 4.

10. LC medium according to one or more of Claims 1 to 9, **characterised in that** the compound of the formula I comprises one or more compounds selected from the following formulae: 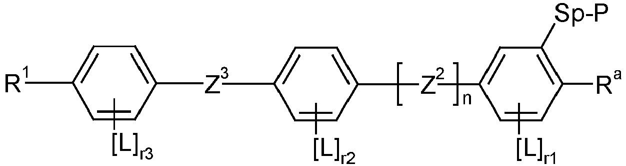 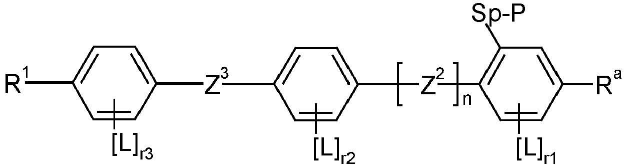 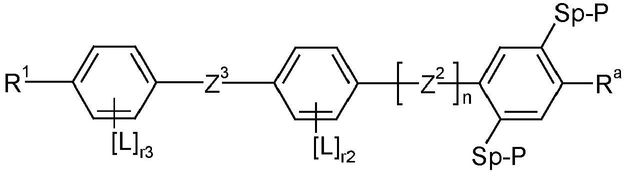 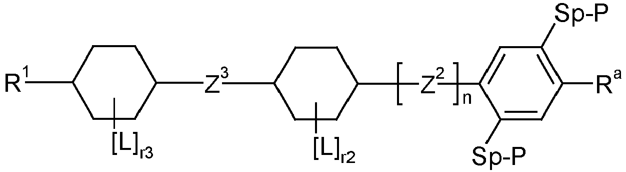 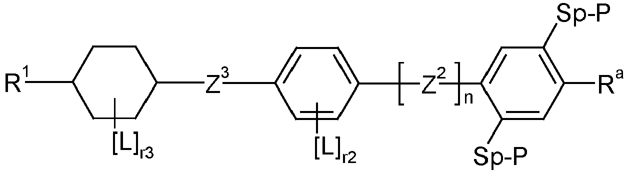 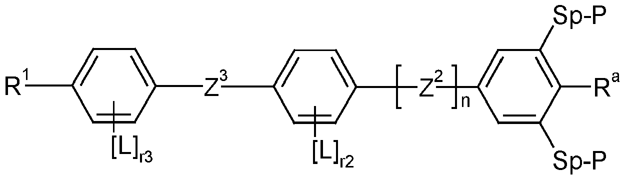 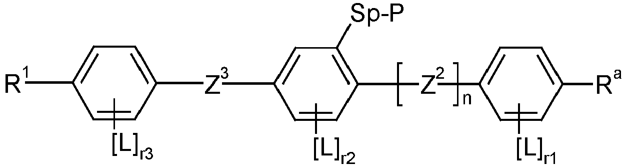 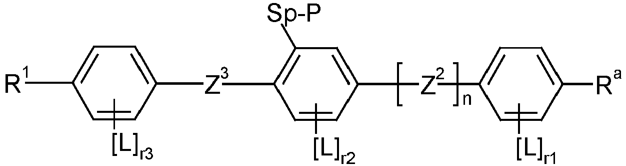 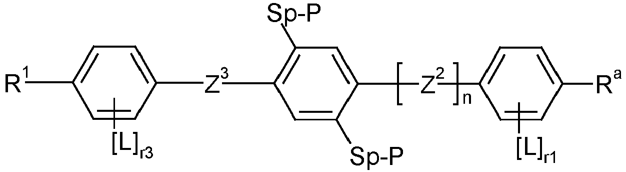 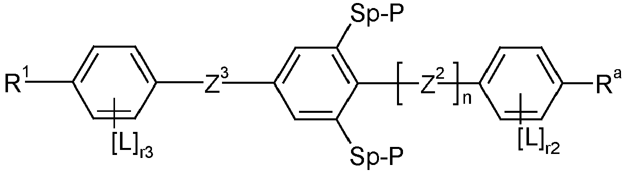 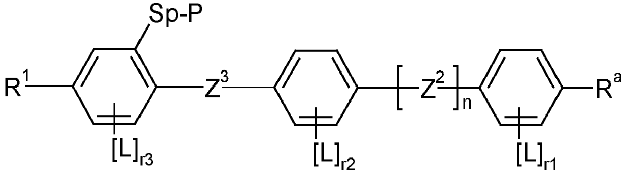 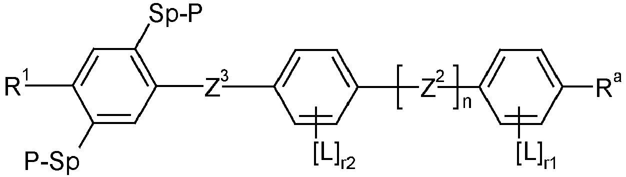 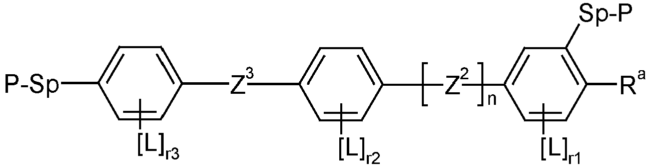 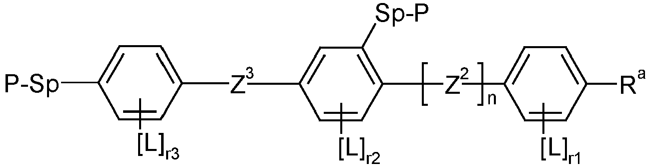 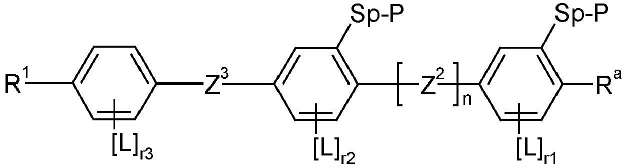 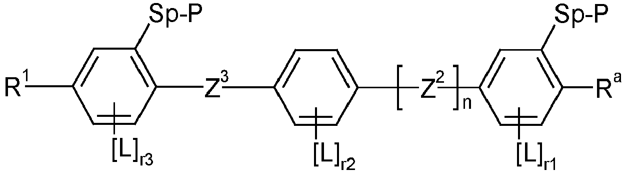
in which L, Sp, P, R^{a} and Z² independently are as defined in Claim 1, and
Z³ denotes a single bond or -CH₂CH₂-,
n denotes 0 or 1,
p1, p2, p3 independently denote 0, 1, 2 or 3,
r1, r2, r3 independently denote 0, 1, 2 or 3, and
R¹ denotes H, halogen, straight-chain, branched or cyclic alkyl having 1 to 25 C atoms, in which, in addition, one or more non-adjacent CH₂ groups may be replaced by -O-, -S-, -CO-, -CO-O-, -O-CO-, -O-CO-O- in such a way that O and/or S atoms are not linked directly to one another and in which, in addition, one or more H atoms may be replaced by F or Cl.

11. LC medium according to one or more of Claims 1 to 10, **characterised in that** the group R^{a} in formula I contains one, two or three OH groups.

12. LC medium according to one or more of Claims 1 to 11, **characterised in that** the group R^{a} denotes a group selected from
-Sp^{a}-X¹
or 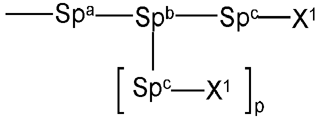 in which Sp^{a}, Sp^{b}, Sp^{c}, p and X¹ have the meaning as in Claim 1.

13. LC medium according to one or more of Claims 1 to 12, **characterised in that**
Sp^{a} denotes a group selected from the formulae -CH₂-, -CH₂CH₂-, -OCH₂CH₂-, -CH₂CH₂CH₂-, -OCH₂CH₂CH₂-, -CH₂CH₂CH₂CH₂-, -OCH₂CH₂CH₂CH₂-, -CH₂CH₂OCH₂CH₂- or -OCH₂CH₂OCH₂CH₂-.

14. LC medium according to one or more of Claims 1 to 13, **characterised in that** the group R^{a} denotes a group selected from the part-formulae

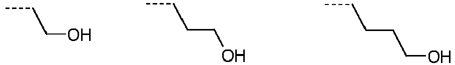

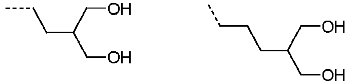

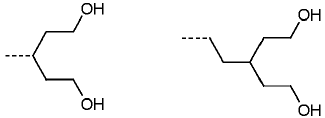

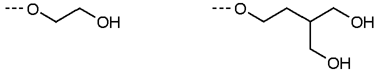

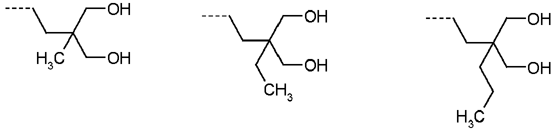

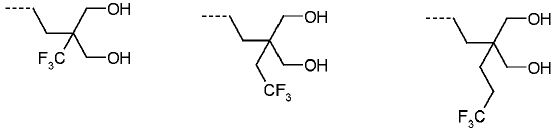

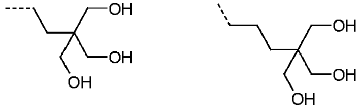

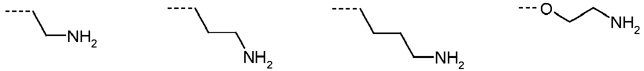

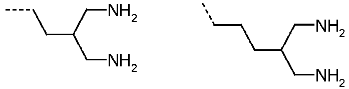

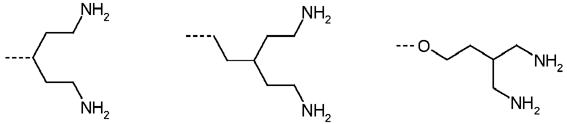

15. LC medium according to one or more of Claims 1 to 14, **characterised in that**, for the compound of the formula I,
n = 0.

16. LC medium according to one or more of Claims 1 to 15, **characterised in that** k = 1.

17. LC medium according to one or more of Claims 1 to 16, **characterised in that**, for the compound of the formula I, the group P is selected from vinyloxy, acrylate, methacrylate, fluoroacrylate, chloroacrylate, oxetane and epoxide.

18. LC medium according to one or more of Claims 1 to 17, **characterised in that** it comprises the compounds of the formula I in a concentration of less than 10% by weight.

19. LC medium according to one or more of Claims 1 to 18, **characterised in that** it comprises one or more polymerisable compounds of the formula M or a (co)polymer comprising compounds of the formula M:
P¹-Sp¹-A²-(Z¹-A¹)ₙ-Sp²-P² M
in which the individual radicals have the following meanings:
P¹, P² in each case independently denote a polymerisable group,
Sp¹, Sp² in each case independently denote a spacer group,
A¹, A² in each case, independently of one another, denote a radical selected from the following groups:
a) the group consisting of trans-1,4-cyclohexylene, 1,4-cyclohexenylene and 4,4'-bicyclohexylene, in which, in addition, one or more non-adjacent CH₂ groups may be replaced by -O- and/or -S- and in which, in addition, one or more H atoms may be replaced by a group L, or selected from 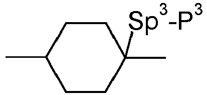
b) the group consisting of 1,4-phenylene and 1,3-phenylene, in which, in addition, one or two CH groups may be replaced by N and in which, in addition, one or more H atoms may be replaced by a group L or -Sp³-P,
c) the group consisting of tetrahydropyran-2,5-diyl, 1,3-dioxane-2,5-diyl, tetrahydrofuran-2,5-diyl, cyclobutane-1,3-diyl, piperidine-1,4-diyl, thiophene-2,5-diyl and selenophene-2,5-diyl, each of which may also be mono- or polysubstituted by a group L,
d) the group consisting of saturated, partially unsaturated or fully unsaturated, and optionally substituted, polycyclic radicals having 5 to 20 cyclic C atoms, one or more of which may, in addition, be replaced by heteroatoms, preferably selected from the group consisting of bicyclo[1.1.1]pentane-1,3-diyl, bicyclo[2.2.2]octane-1,4-diyl, spiro[3.3]heptane-2,6-diyl, 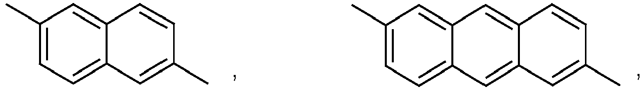 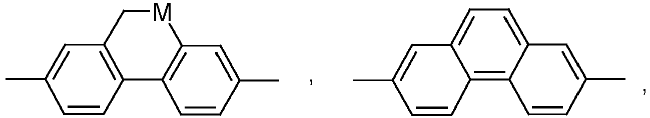 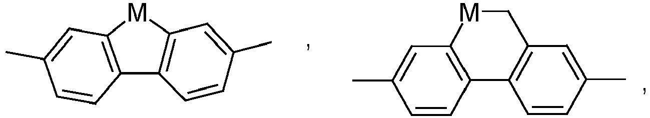 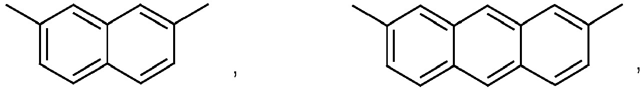 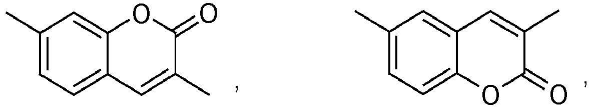 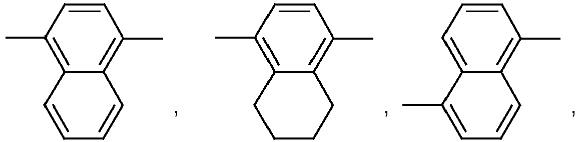 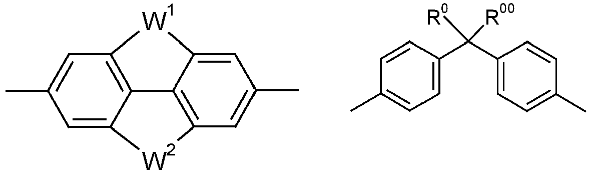 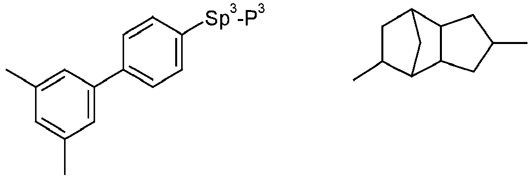 where, in addition, one or more H atoms in these radicals may be replaced by a group L or -Sp³-P, and/or one or more double bonds may be replaced by single bonds, and/or one or more CH groups may be replaced by N,
P³ denotes a polymerisable group,
Sp³ denotes a spacer group,
n denotes 0, 1, 2 or 3,
Z¹ in each case, independently of one another, denotes -CO-O-, -O-CO-, -CH₂O-, -OCH₂-, -CF₂O-, -OCF₂-, or -(CH₂)ₙ-, where n is 2, 3 or 4, -O-, -CO-, -C(R^{c}R^{d})-, -CH₂CF₂-, -CF₂CF₂- or a single bond,
L on each occurrence, identically or differently, denotes F, Cl, CN, SCN, SF₅ or straight-chain or branched, in each case optionally fluorinated, alkyl, alkoxy, alkylcarbonyl, alkoxycarbonyl, alkylcarbonyloxy or alkoxycarbonyloxy having 1 to 12 C atoms,
R⁰, R⁰⁰ in each case, independently of one another, denote H, F or straight-chain or branched alkyl having 1 to 12 C atoms, in which, in addition, one or more H atoms may be replaced by F,
M denotes -O-, -S-, -CH₂-, -CHY¹- or -CY¹Y²-,
Y¹ and Y² in each case, independently of one another, have one of the meanings indicated above for R⁰ or denote Cl or CN, and preferably H, F, Cl, CN, OCF₃ or CF₃,
W¹, W² in each case, independently of one another, denote -CH₂CH₂-, -CH=CH-, -CH₂-O-, -O-CH₂-, -C(R^{c}R^{d})- or -O-, and
R^{c} and R^{d} in each case, independently of one another, denote H or alkyl having 1 to 6 C atoms, preferably H, methyl or ethyl,
where one or more of the groups P¹-Sp¹-, -Sp²-P² and -Sp³-P³ may denote a radical R^{aa}, with the proviso that at least one of the groups P¹-Sp¹-, -Sp²-P² and -Sp³-P³ present does not denote R^{aa},
R^{aa} denotes H, F, Cl, CN or straight-chain or branched alkyl having 1 to 25 C atoms, in which, in addition, one or more non-adjacent CH₂ groups may in each case be replaced, independently of one another, by C(R⁰)=C(R⁰⁰)-, -C≡C-, -O-, -S-, -CO-, -CO-O-, -O-CO-, -O-CO-O- in such a way that O and/or S atoms are not linked directly to one another, and in which, in addition, one or more H atoms may be replaced by F, Cl, CN or P¹-Sp¹-, where the groups -OH, -NH₂, -SH, -NHR, -C(O)OH and -CHO are not present in R^{aa}.

20. LC medium according to one or more of Claims 1 to 19, **characterised in that** the polymerisable or polymerised component comprises 0.01 to 5% by weight of one or more compounds of the formula M according to Claim 19 and/or 0.01 to 10% by weight of one or more non-polymerisable compounds of the formula I' according to Claim 8 with at least one anchor group.

21. LC medium according to one or more of Claims 1 to 20, **characterised in that** the polymerisable or polymerised component comprises one or more compounds selected from the compounds of the following formulae: 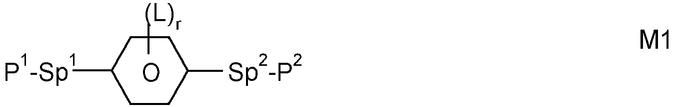 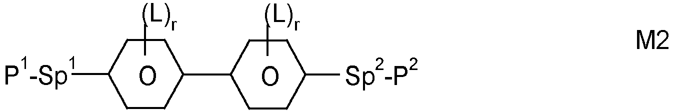 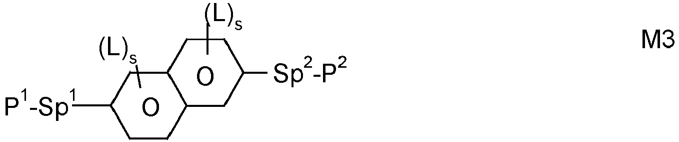 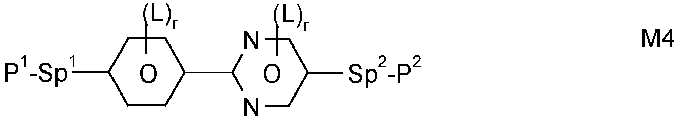 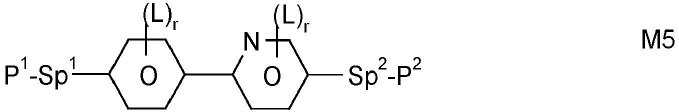 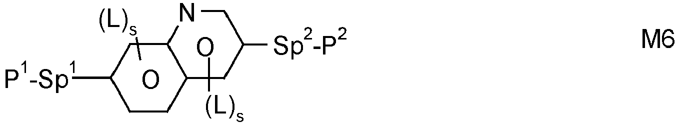 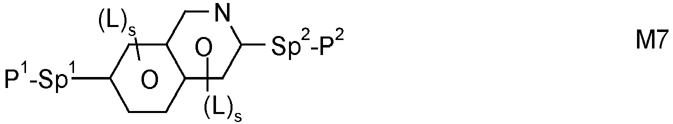 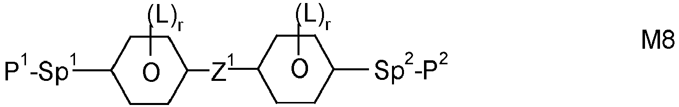 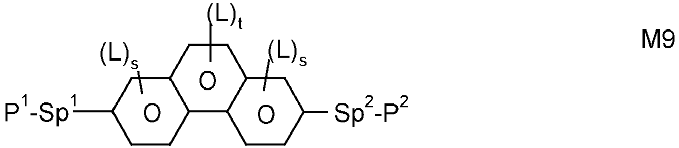 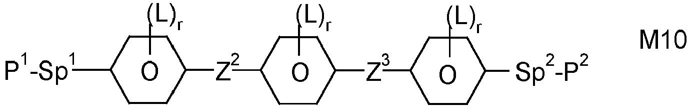 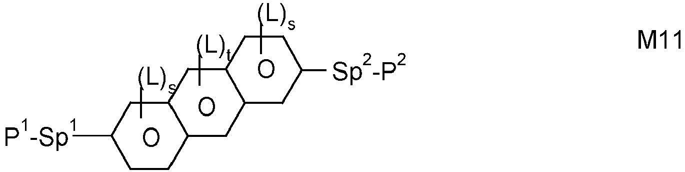 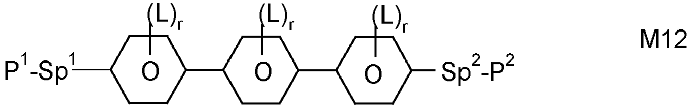 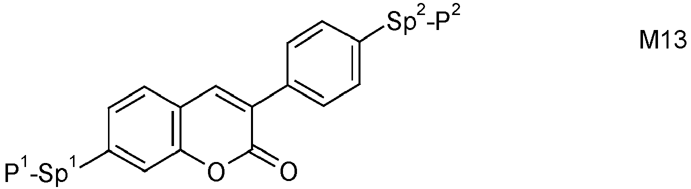 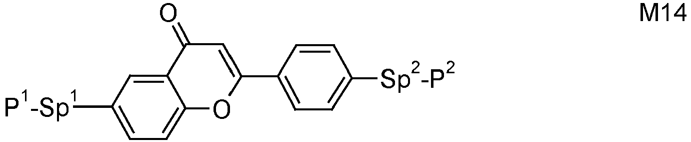 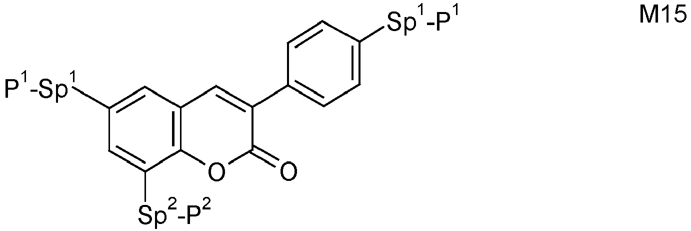 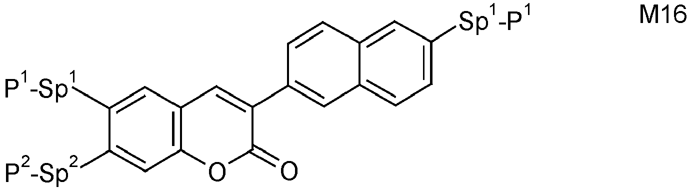 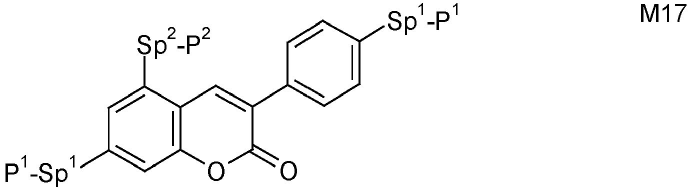 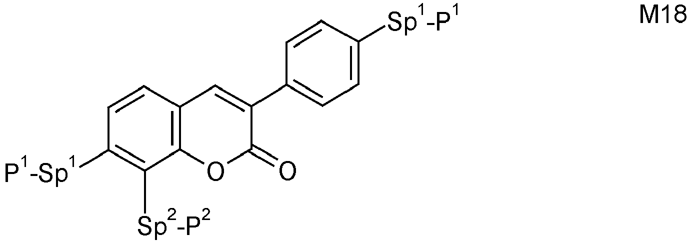 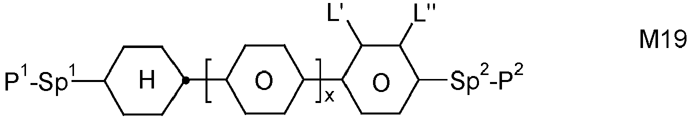 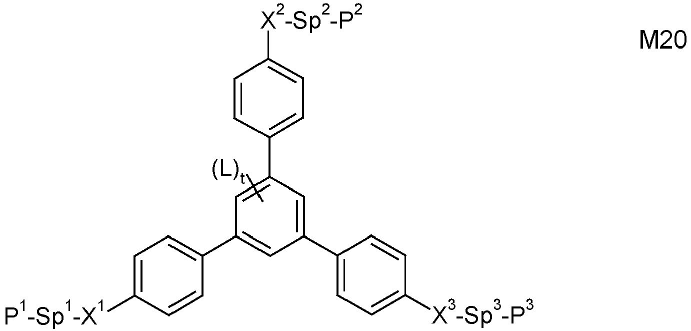 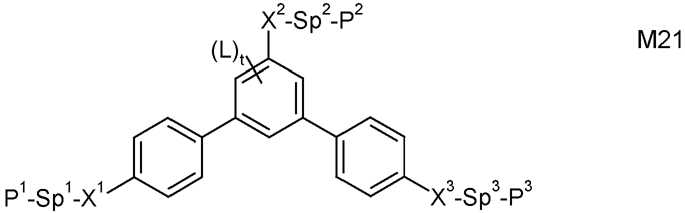 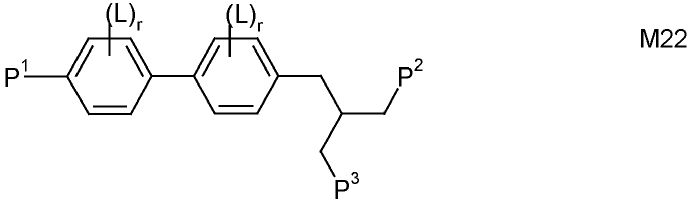 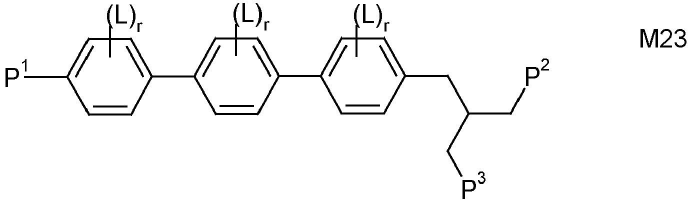 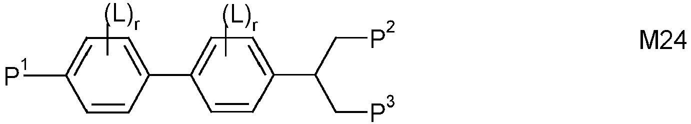 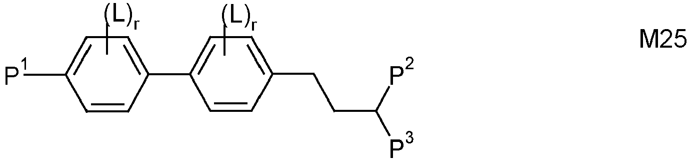 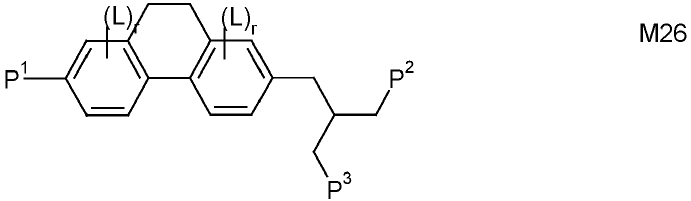 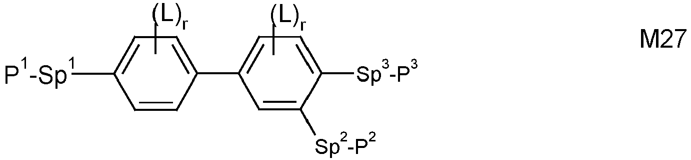 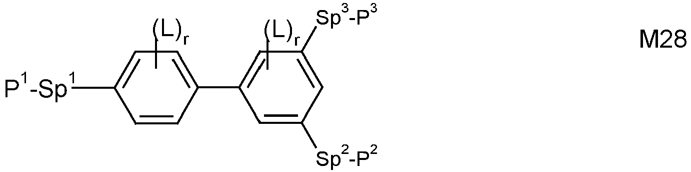 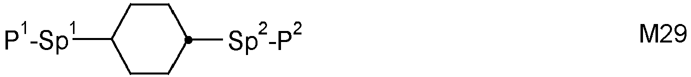 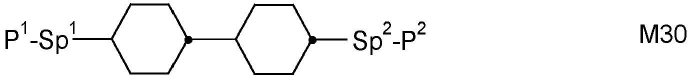 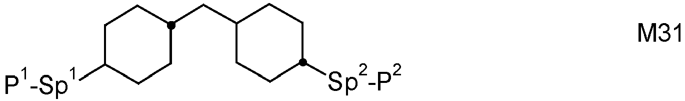 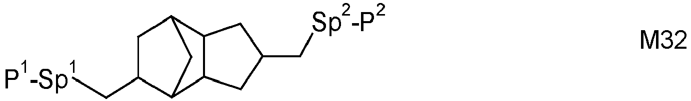 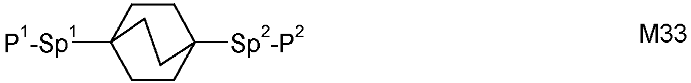 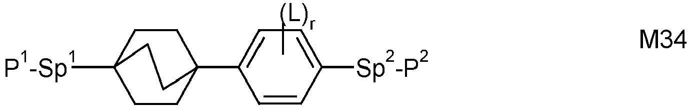 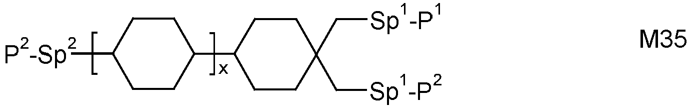 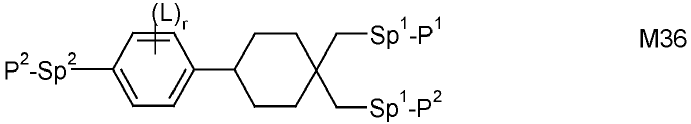 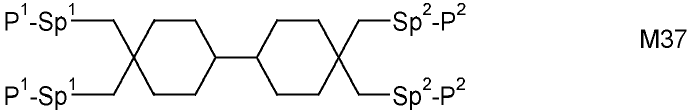 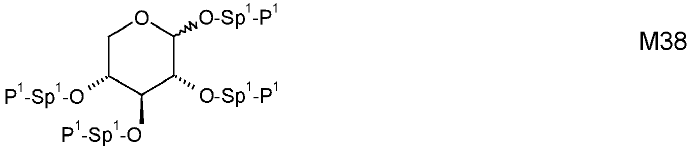 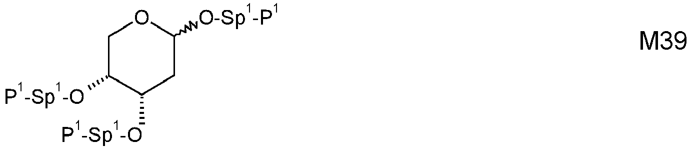 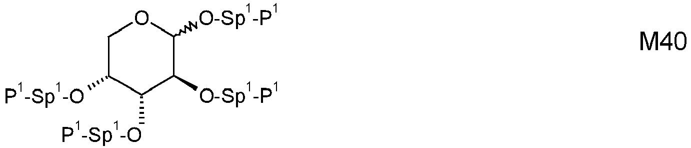 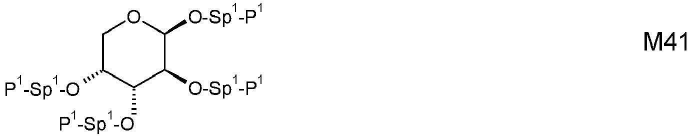 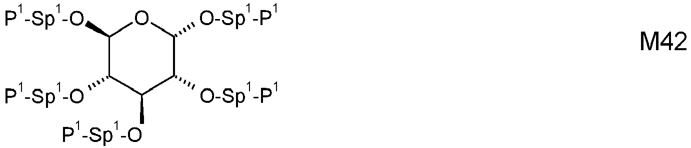 in which the individual radicals have the following meanings:
P¹, P² and P³ in each case, independently of one another, denote a polymerisable group, preferably having one of the meanings indicated above and below for P, particularly preferably an acrylate, methacrylate, fluoroacrylate, oxetane, vinyloxy or epoxide group,
Sp¹, Sp² and Sp³ in each case, independently of one another, denote a single bond or a spacer group, preferably having one of the meanings indicated above and below for Sp^{a}, and particularly preferably -(CH₂)ₚ₁-, -(CH₂)ₚ₁-O-, -(CH₂)ₚ₁-CO-O-or -(CH₂)ₚ₁-O-CO-O-, in which p1 is an integer from 1 to 12, and where the linking to the adjacent ring in the last-mentioned groups takes place via the O atom,
where, in addition, one or more of the radicals P¹-Sp¹-, P²-Sp²- and P³-Sp³- may denote a radical R^{aa}, with the proviso that at least one of the radicals P¹-Sp¹-, P²-Sp²- and P³-Sp³- present does not denote R^{aa},
R^{aa} denotes H, F, Cl, CN or straight-chain or branched alkyl having 1 to 25 C atoms, in which, in addition, one or more non-adjacent CH₂ groups may in each case be replaced, independently of one another, by C(R⁰)=C(R⁰⁰)-, -C≡C-, -N(R⁰)-, -O-, -S-, -CO-, -CO-O-, -O-CO-, -O-CO-O- in such a way that O and/or S atoms are not linked directly to one another, and in which, in addition, one or more H atoms may be replaced by F, Cl, CN or P¹-Sp¹-, where -OH, -NH₂, -SH, -NHR, -C(O)OH and -CHO are not present in the group R^{aa},
R⁰, R⁰⁰ in each case, independently of one another and identically or differently on each occurrence, denote H or alkyl having 1 to 12 C atoms,
R^{y} and R^{z} in each case, independently of one another, denote H, F, CH₃ or CF₃,
X¹, X² and X³ in each case, independently of one another, denote -CO-O-, O-CO- or a single bond,
Z¹ denotes -O-, -CO-, -C(R^{y}R^{z})- or -CF₂CF₂-,
Z² and Z³ in each case, independently of one another, denote -CO-O-, -O-CO-, -CH₂O-, -OCH₂-, -CF₂O-, -OCF₂- or -(CH₂)ₙ-, where n is 2, 3 or 4,
L on each occurrence, identically or differently, denotes F, Cl, CN, SCN, SF₅ or straight-chain or branched, optionally mono- or polyfluorinated alkyl, alkoxy, alkenyl, alkynyl, alkylcarbonyl, alkoxycarbonyl, alkylcarbonyloxy or alkoxy-carbonyloxy having 1 to 12 C atoms, preferably F,
L' and L" in each case, independently of one another, denote H, F or Cl,
r denotes 0, 1, 2, 3 or 4,
s denotes 0, 1, 2 or 3,
t denotes 0, 1 or 2, and
x denotes 0 or 1.

22. LC medium according to one or more of Claims 1 to 21, **characterised in that** it additionally comprises one or more compounds selected from the group of the compounds of the formula A, B and C, 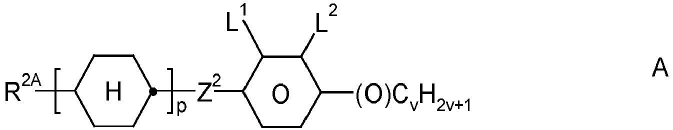 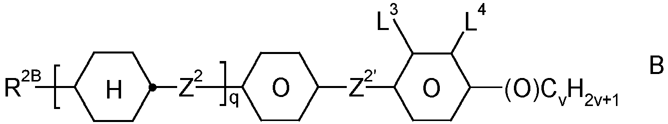 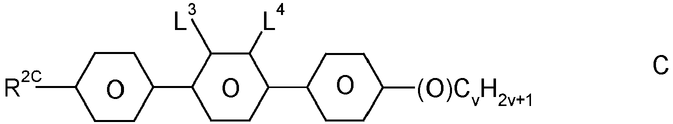 in which
R^{2A}, R^{2B} and R^{2C} in each case, independently of one another, denote H, an alkyl radical having up to 15 C atoms which is unsubstituted, monosubstituted by CN or CF₃ or at least mono-substituted by halogen, where, in addition, one or more CH₂ groups in these radicals may be replaced by -O-, -S-, 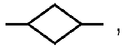 -C≡C-, -CF₂O-, -OCF₂-, -OC-O- or -O-CO- in such a way that O atoms are not linked directly to one another,
L¹⁻⁴ in each case, independently of one another, denote F, Cl, CF₃ or CHF₂,
Z² and Z^{2'} in each case, independently of one another, denote a single bond, -CH₂CH₂-, -CH=CH-, -CF₂O-, -OCF₂-, -CH₂O-, -OCH₂-, -COO-, -OCO-, -C₂F₄-, -CF=CF-, -CH=CHCH₂O-,
p denotes 1 or 2,
q denotes 0 or 1, and
v denotes 1 to 6.

23. LC display comprising an LC cell having two substrates and at least two electrodes, where at least one substrate is transparent to light and at least one substrate has one or two electrodes, and having a layer of an LC medium according to one or more of Claims 1 to 22 located between the substrates,
where the compound of the formula I is suitable for effecting a homeotropic alignment of the LC medium with respect to the substrate surfaces.

24. LC display according to Claim 23, **characterised in that** the substrates have no alignment layers for homeotropic alignment.

25. LC display according to Claim 23, **characterised in that** the substrates have alignment layers on one or both sides.

26. LC display according to one or more of Claims 23 to 25, **characterised in that** it is a VA display containing an LC medium having negative dielectric anisotropy and electrodes arranged on opposite substrates.

27. LC display according to one or more of Claims 23 to 25, **characterised in that** it is a VA-IPS display containing an LC medium having positive dielectric anisotropy and interdigital electrodes arranged on at least one substrate.

28. Process for the preparation of an LC medium, **characterised in that** one or more compounds of the formula I according to Claim 1 are mixed with a low-molecular-weight liquid-crystalline component, and one or more polymerisable compounds and/or any desired additives are optionally added.

29. Use of compounds of the formula I according to one or more of Claims 1 to 5 as additive for LC media for effecting a homeotropic alignment with respect to a surface delimiting the LC medium.

30. Process for the production of an LC display comprising an LC cell having two substrates and at least two electrodes, where at least one substrate is transparent to light and at least one substrate has one or two electrodes, comprising the process steps:
- filling of the cell with an LC medium according to one or more of Claims 1 to 22, where a homeotropic alignment of the LC medium with respect to the substrate surfaces becomes established, and
- polymerisation of the polymerisable component(s), optionally with application of a voltage to the cell or under the action of an electric field, in one or more process steps.

## Revendications

1. Milieu LC comprenant un composant cristallin liquide non polymérisable de poids moléculaire faible et un composant polymérisable ou polymérisé qui comprend un ou plusieurs composé(s) polymérisable(s) de la formule I, dans lequel le composant polymérisé peut être obtenu par polymérisation du composant polymérisable,
R¹-[A³-Z³]ₘ-[A²]ₖ-[Z²]ₙ-A¹-R^{a} (1)
dans laquelle
A¹, A², A³ représentent, dans chaque cas, de manière indépendante les uns des autres, un groupe aromatique, hétéroaromatique, alicyclique ou hétérocyclique, lequel peut également contenir des cycles fusionnés, et lequel peut également être mono- ou polysubstitué par un groupe L ou -Sp-P,
L représente, dans chaque cas, de manière indépendante les uns des autres, H, F, Cl, Br, I, -CN, -NO₂, -NCO, -NCS, -OCN, -SCN, -C(=O)N(R⁰)₂, -C(=O)R⁰, silyle en option substitué, aryle en option substitué ou cycloalkyle qui comporte de 3 à 20 atomes de C, ou alkyle, alcoxy, alkylcarbonyle, alcoxycarbonyle, alkylcarbonyloxy ou alcoxycarbonyloxy en chaîne droite ou ramifié qui comporte de 1 à 25 atome(s) de C, où, en outre, un ou plusieurs atome(s) de H peut/peuvent être remplacé(s) par F ou par Cl,
P représente un groupe polymérisable,
Sp représente un groupe d'espaceur ou une liaison simple,
Z² représente, dans chaque cas, de manière indépendante les uns des autres, -O-, -S-, -CO-, -CO-O-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₁-, -CF₂CH₂-, -CH₂CF₂-, -(CF₂)ₙ₁-, -CH=CH-, -CF=CF-, -C≡C-, -CH=CH-COO-, -OCO-CH=CH-, -(CR⁰R⁰⁰)ₙ₁-, -CH(-Sp-P)-, -CH₂CH(-Sp-P)-, -CH(-Sp-P)CH(-Sp-P)-,
Z³ représente, dans chaque cas, de manière indépendante les uns des autres, une liaison simple, -O-, -S-, -CO-, -CO-O-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₁-, -CF₂CH₂-, -CH₂CF₂-, -(CF₂)ₙ₁- , -CH=CH-, -CF=CF-, -C≡C-, -CH=CH-COO-, -OCO-CH=CH-, -(CR⁰R⁰⁰)ₙ₁-, -CH(-Sp-P)-, -CH₂CH(-Sp-P)-, -CH(-Sp-P)CH(-Sp-P)-,
n1 représente 1, 2, 3 ou 4,
n représente 0 ou 1,
m représente 0, 1, 2, 3, 4, 5 ou 6,
k représente 0 ou 1,
R⁰ représente, dans chaque cas, de manière indépendante les uns des autres, alkyle qui comporte de 1 à 12 atome(s) de C,
R⁰⁰ représente, dans chaque cas, de manière indépendante les uns des autres, H ou alkyle qui comporte de 1 à 12 atome(s) de C,
R¹ représente, de manière indépendante les uns des autres, H, halogène, alkyle en chaîne droite, ramifié ou cyclique qui comporte de 1 à 25 atome(s) de C, où, en outre, un ou plusieurs groupe(s) CH₂ non adjacents peut/peuvent être remplacé(s) par -O-, -S-, -CO-, -CO-O-, -O-CO-, -O-CO-O- de telle sorte que des atomes de O et/ou de S ne soient pas liés directement les uns aux autres et où, en outre, un ou plusieurs atome(s) de H peut/peuvent être remplacé(s) par F ou par Cl,
ou un groupe -Sp-P,
R^{a} représente un groupe d'ancrage de la formule 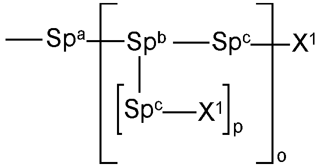 ou 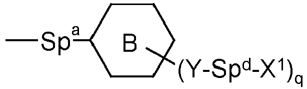
p représente 1 ou 2,
q représente 2 ou 3,
B représente un système de cycle substitué ou non substitué ou un système de cycle condensé,
Y représente, de manière indépendante les uns des autres, -O-, -S-, -C(O)-, -C(O)O-, -OC(O)-, -NR¹¹- ou une liaison simple,
o représente 0 ou 1,
X¹ représente, de manière indépendante les uns des autres, H, alkyle, fluoroalkyle, OH, NH₂, NHR¹¹, NR¹¹₂, OR¹¹, C(O)OH, -CHO,
où au moins un groupe X¹ représente un radical qui est sélectionné parmi -OH, -NH₂, NHR¹¹, C(O)OH et -CHO,
R¹¹ représente alkyle qui comporte de 1 à 12 atome(s) de C,
Sp^{a}, Sp^{c}, Sp^{d} représentent, dans chaque cas, de manière indépendante les uns des autres, un groupe d'espaceur ou une liaison simple, et
Sp^{b} représente un groupe tri- ou tétravalent,
où le composé de la formule I contient au moins un groupe polymérisable P à l'intérieur des groupes A¹, A², A³, Z² et Z³, quand ils sont présents.

2. Milieu LC selon la revendication 1, **caractérisé en ce que**, pour la formule I,
A¹, A², A³ représentent, dans chaque cas, de manière indépendante les uns des autres, 1,4-phénylène, naphtalène-1,4-diyle ou naphtalène-2,6-diyle, où, en outre, un ou plusieurs groupe(s) CH dans ces groupes peut/peuvent être remplacé(s) par N, cyclohexane-1,4-diyle, où, en outre, un ou plusieurs groupe(s) CH₂ non adjacents peut/peuvent être remplacé(s) par O et/ou par S, 3,3'-bicyclobutylidène, 1,4-cyclohexénylène, bicyclo[1.1.1]pentane-1,3-diyle, bicyclo-[2.2.2]octane-1,4-diyle, spiro[3.3]heptane-2,6-diyle, pipéridine-1,4-diyle, décahydronaphtalène-2,6-diyle, 1,2,3,4-tétrahydronaphtalène-2,6-diyle, indane-2,5-diyle ou octahydro-4,7-méthanoindane-2,5-diyle, perhydrocyclopenta[a]-phénanthrène-3,17-diyle (en particulier gonane-3,17-diyle), où tous ces groupes peuvent être non substitués ou mono- ou polysubstitués par un groupe L ou -Sp-P.

3. Milieu LC selon la revendication 1 ou 2, **caractérisé en ce que** le composé de la formule I est un composé de la formule I1, 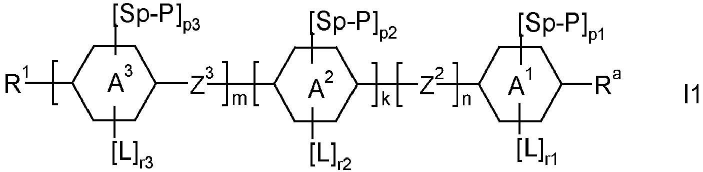 dans laquelle
R¹, R^{a}, A¹, A², A³, Z², Z³, L, Sp, P, k, m et n sont, de manière indépendante, comme il a été défini selon la revendication 1, et
p1, p2, p3 représentent de manière indépendante 0, 1, 2 ou 3, et
r1, r2, r3 représentent de manière indépendante 0, 1, 2 ou 3,
où le composé de la formule I1 contient au moins un groupe polymérisable P à l'intérieur des groupes A¹, A², A³, Z² et Z³, quand ils sont présents.

4. Milieu LC selon une ou plusieurs des revendications 1 à 3, **caractérisé en ce que** le composé de la formule I contient au total au moins un groupe polymérisable -Sp-P sur les groupes A¹, A² et A³, quand ils sont présents.

5. Milieu LC medium selon une ou plusieurs des revendications 1 à 4, **caractérisé en ce que** les uns ou plusieurs composés de la formule I sont sélectionnés parmi les composés des formules IA, IB, IC, ID ou IE : 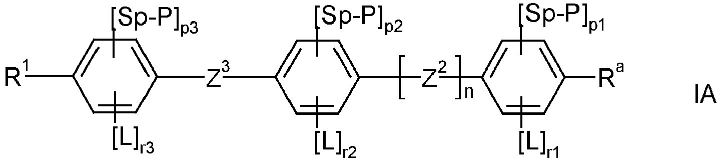 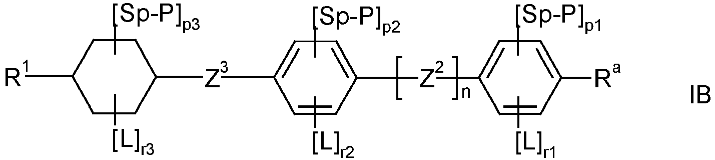 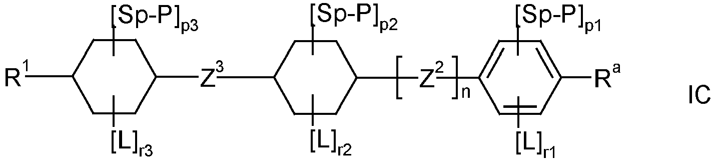 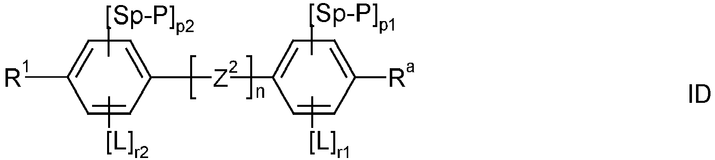 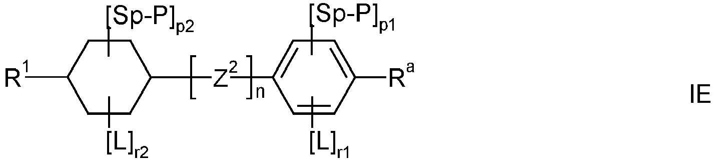
dans lesquelles R¹, R^{a}, Z², Z³, L, Sp, P et n sont, de manière indépendante, comme il a été défini selon la revendication 1, et
p1, p2, p3 représentent de manière indépendante 0, 1, 2 ou 3, et
r1, r2, r3 représentent de manière indépendante 0, 1, 2 ou 3,
où chacun des composés des formules IA, IB, IC, ID ou IE contient au moins un groupe polymérisable P.

6. Milieu LC selon une ou plusieurs des revendications 3 à 5, **caractérisé en ce que**
dans les formules I1, IA, IB et IC, r1 + r2 + r3 > 0, et
pour les formules ID et IE, r1 + r2 > 0 et
le substituant L ne représente pas H.

7. Milieu LC selon une ou plusieurs des revendications 1 à 6, **caractérisé en ce que**, en dehors d'un ou de plusieurs composé(s) de la formule I, le composant polymérisable ou polymérisé comprend un ou plusieurs autre(s) composé(s) polymérisable(s) ou polymérisé(s), où le composant polymérisé peut être obtenu par polymérisation du composant polymérisable.

8. Milieu LC selon une ou plusieurs des revendications 1 à 7, **caractérisé en ce que**, en dehors d'un ou de plusieurs composé(s) de la formule I, il comprend de façon additionnelle un ou plusieurs composé(s) non polymérisable(s) de la formule I',
R¹-[A³-Z³]ₘ-[A²]ₖ-[Z²]ₙ-A¹-R^{a} I'
dans laquelle m, k, n et le groupe R^{a} sont comme il a été défini pour la formule I selon la revendication 1, et
A¹, A², A³ représentent, dans chaque cas, de manière indépendante les uns des autres, un groupe aromatique, hétéroaromatique, alicyclique ou hétérocyclique, lequel peut également contenir des cycles fusionnés, et lequel peut également être mono- ou polysubstitué par un groupe L,
Z² représente, dans chaque cas, de manière indépendante les uns des autres, -O-, -S-, -CO-, -CO-O-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₁-, -CF₂CH₂-, -CH₂CF₂-, -(CF₂)ₙ₁- , -CH=CH-, -CF=CF-, -C≡C-, -CH=CH-COO-, -OCO-CH=CH-, -(CR⁰R⁰⁰)ₙ₁-,
Z³ représente, dans chaque cas, de manière indépendante les uns des autres, une liaison simple, -O-, -S-, -CO-, -CO-O-, -OCO-, -O-CO-O-, -OCH₂-, -CH₂O-, -SCH₂-, -CH₂S-, -CF₂O- , -OCF₂-, -CF₂S-, -SCF₂-, -(CH₂)ₙ₁-, -CF₂CH₂-, -CH₂CF₂-, -(CF₂)ₙ₁- , -CH=CH-, -CF=CF-, -C≡C-, -CH=CH-C OO-, -OCO-CH=CH-, -(CR⁰R⁰⁰)ₙ₁-,
n1 représente 1, 2, 3 ou 4,
L représente, dans chaque cas, de manière indépendante les uns des autres, H, F, Cl, Br, I, -CN, -NO₂, -NCO, -NCS, -OCN, -SCN, -C(=O)N(R⁰)₂, -C(=O)R⁰, silyle en option substitué, aryle en option substitué ou cycloalkyle qui comporte de 3 à 20 atomes de C, ou alkyle, alcoxy, alkylcarbonyle, alcoxycarbonyle, alkylcarbonyloxy ou alcoxycarbonyloxy en chaîne droite ou ramifié qui comporte de 1 à 25 atome(s) de C, où, en outre, un ou plusieurs atome(s) de H peut/peuvent être remplacé(s) par F ou par Cl,
R⁰ représente, dans chaque cas, de manière indépendante les uns des autres, alkyle qui comporte de 1 à 12 atome(s) de C,
R⁰⁰ représente, dans chaque cas, de manière indépendante les uns des autres, H ou alkyle qui comporte de 1 à 12 atome(s) de C,
et R¹ représente, de manière indépendante les uns des autres, H, halogène, alkyle en chaîne droite, ramifié ou cyclique qui comporte de 1 à 25 atome(s) de C, où, en outre, un ou plusieurs groupe(s) CH₂ non adjacents peut/peuvent être remplacé(s) par -O-, -S-, -CO-, -CO-O-, -O-CO-, -O-CO-O- de telle sorte que des atomes de O et/ou de S ne soient pas liés directement les uns aux autres et où, en outre, un ou plusieurs atome(s) de H peut/peuvent être remplacé(s) par F ou par Cl.

9. Milieu LC selon la revendication 8, **caractérisé en ce qu'**il comprend un ou plusieurs composé(s) qui est/sont sélectionné(s) parmi les formules qui suivent : 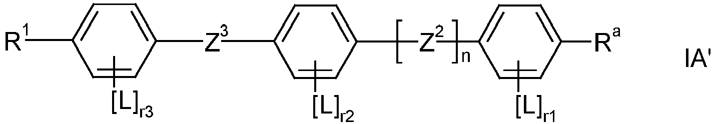 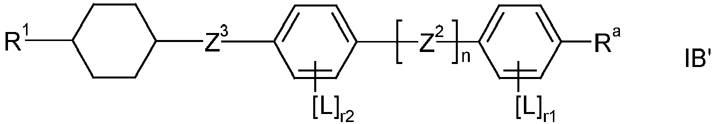 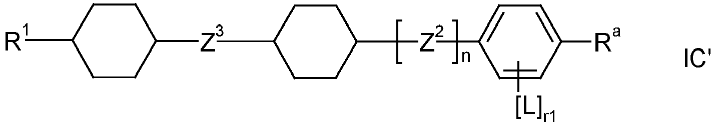 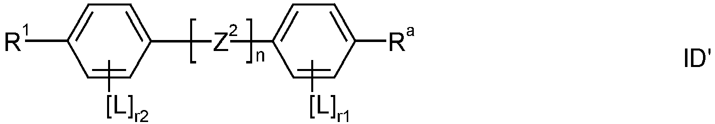 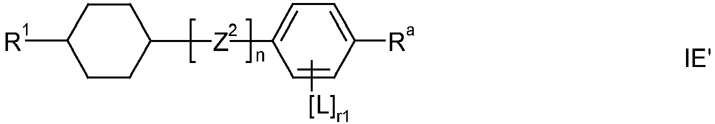
dans lesquelles R¹, R^{a}, Z², Z³, L et n sont, de manière indépendante, comme il a été défini selon la revendication 8, et
r1, r2, r3 représentent, de manière indépendante, 0, 1, 2, 3 ou 4.

10. Milieu LC selon une ou plusieurs des revendications 1 à 9, **caractérisé en ce que** le composé de la formule I comprend un ou plusieurs composé(s) qui est/sont sélectionné(s) parmi les formules qui suivent : 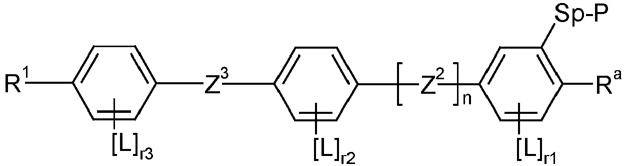 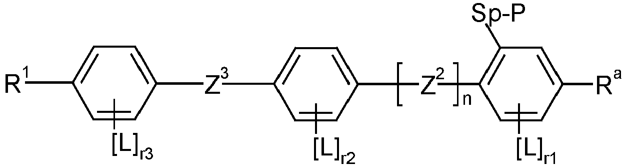 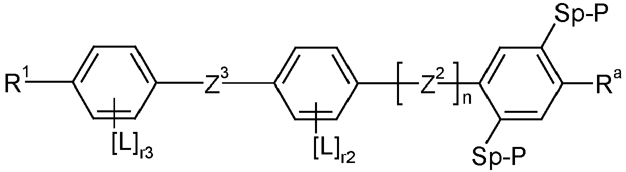 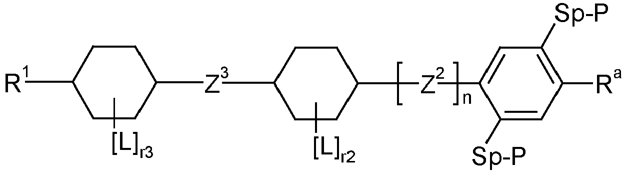 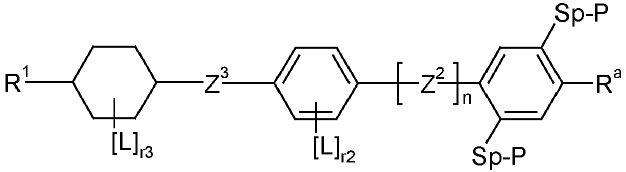 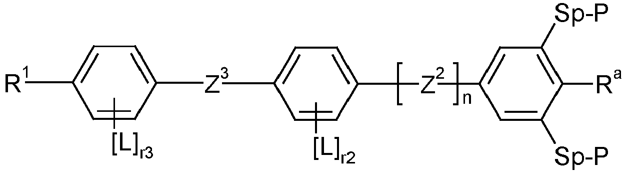 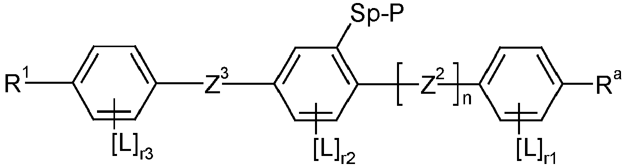 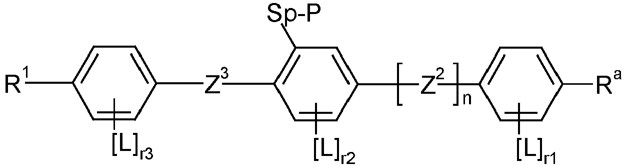 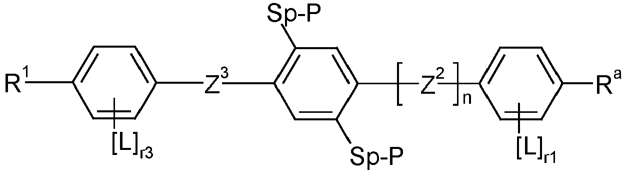 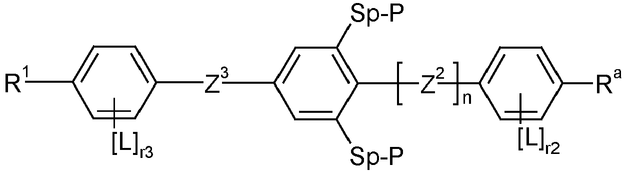 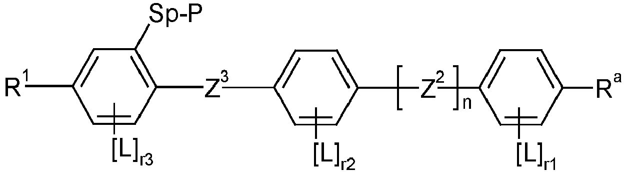 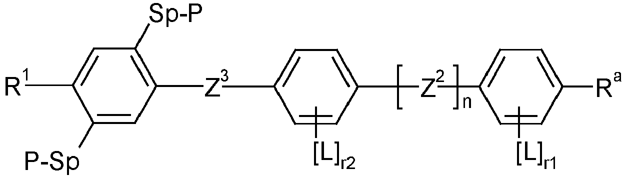 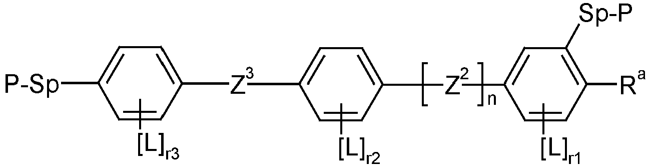 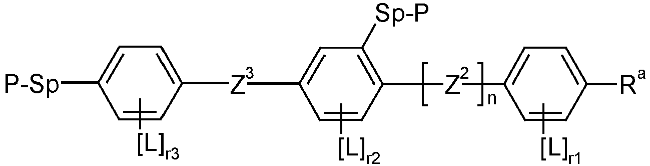 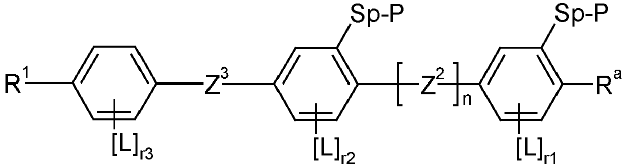 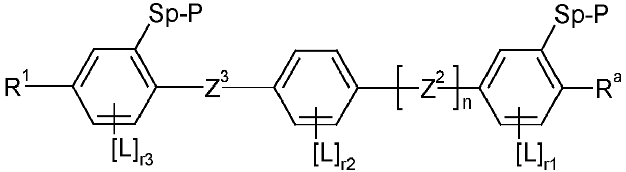
dans lesquelles L, Sp, P, R^{a} et Z² sont, de manière indépendante, comme il a été défini selon la revendication 1, et
Z³ représente une liaison simple ou -CH₂CH₂-,
n représente 0 ou 1,
p1, p2, p3 représentent de manière indépendante 0, 1, 2 ou 3,
r1, r2, r3 représentent de manière indépendante 0, 1, 2 ou 3, et
R¹ représente H, halogène, alkyle en chaîne droite, ramifié ou cyclique qui comporte de 1 à 25 atome(s) de C, où, en outre, un ou plusieurs groupe(s) CH₂ non adjacents peut/peuvent être remplacé(s) par -O-, -S-, -CO-, -CO-O-, -O-CO-, -O-CO-O- de telle sorte que des atomes de O et/ou de S ne soient pas liés directement les uns aux autres et où, en outre, un ou plusieurs atome(s) de H peut/peuvent être remplacé(s) par F ou par Cl.

11. Milieu LC selon une ou plusieurs des revendications 1 à 10, **caractérisé en ce que** le groupe R^{a} dans la formule I contient un, deux ou trois groupe(s) OH.

12. Milieu LC selon une ou plusieurs des revendications 1 à 11, **caractérisé en ce que** le groupe R^{a} représente un groupe qui est sélectionné parmi
-Sp^{a}-X¹
ou 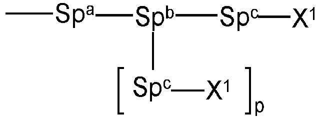 où Sp^{a}, Sp^{b}, Sp^{c}, p et X¹ présentent la signification comme il a été défini selon la revendication 1.

13. Milieu LC selon une ou plusieurs des revendications 1 à 12, **caractérisé en ce que**
Sp^{a} représente un groupe qui est sélectionné parmi les formules -CH₂-, -CH₂CH₂-, -OCH₂CH₂-, -CH₂CH₂CH₂-, -OCH₂CH₂CH₂-, -CH₂CH₂CH₂CH₂-, -OCH₂CH₂CH₂CH₂-, -CH₂CH₂OCH₂CH₂- ou -OCH₂CH₂OCH₂CH₂-.

14. Milieu LC selon une ou plusieurs des revendications 1 à 13, **caractérisé en ce que** le groupe R^{a} représente un groupe qui est sélectionné parmi les formules partielles

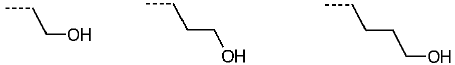

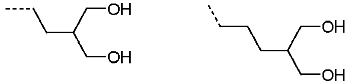

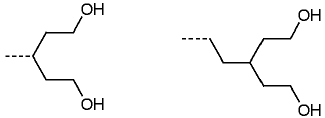

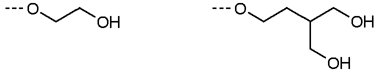

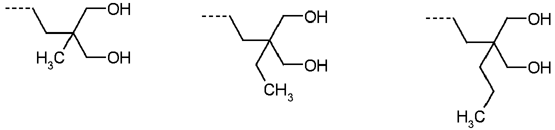

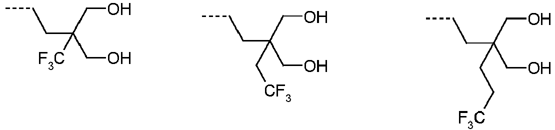

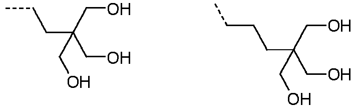

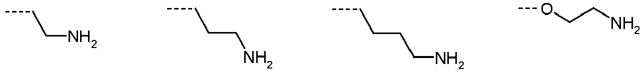

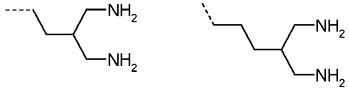

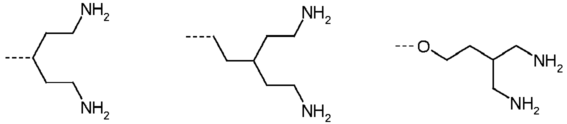

15. Milieu LC selon une ou plusieurs des revendications 1 à 14, **caractérisé en ce que**, pour le composé de la formule I,
n = 0.

16. Milieu LC selon une ou plusieurs des revendications 1 à 15, **caractérisé en ce que** k = 1.

17. Milieu LC selon une ou plusieurs des revendications 1 à 16, **caractérisé en ce que**, pour le composé de la formule I, le groupe P est sélectionné parmi le vinyloxy, l'acrylate, le méthacrylate, le fluoroacrylate, le chloro-acrylate, l'oxétane et l'époxyde.

18. Milieu LC selon une ou plusieurs des revendications 1 à 17, **caractérisé en ce qu'**il comprend les composés de la formule I selon une concentration inférieure à 10 % en poids.

19. Milieu LC selon une ou plusieurs des revendications 1 à 18, **caractérisé en ce qu'**il comprend un ou plusieurs composé(s) polymérisable(s) de la formule M ou un (co)polymère qui comprend des composés de la formule M :
P¹-Sp¹-A²-(Z¹-A¹)ₙ-Sp²-P² M
dans laquelle les radicaux individuels présentent les significations qui suivent :
P¹, P² représentent dans chaque cas, de manière indépendante, un groupe polymérisable,
Sp¹, Sp² représentent dans chaque cas, de manière indépendante, un groupe d'espaceur,
A¹, A² représentent dans chaque cas, de manière indépendante l'un de l'autre, un radical qui est sélectionné parmi les groupes qui suivent :
a) le groupe qui est constitué par trans-1,4-cyclohexylène, 1,4-cyclohexénylène et 4,4'-bicyclohexylène, où, en outre, un ou plusieurs groupe(s) CH₂ non adjacents peut/peuvent être remplacé(s) par -O- et/ou par -S- et où, en outre, un ou plusieurs atome(s) de H peut/peuvent être remplacé(s) par un groupe L, ou peut/peuvent être sélectionné(s) parmi 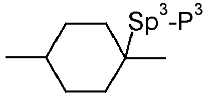
b) le groupe qui est constitué par 1,4-phénylène et 1,3-phénylène, où, en outre, un ou deux groupe(s) CH peut/peuvent être remplacés() par N et où, en outre, un ou plusieurs atome(s) de H peut/peuvent être remplacé(s) par un groupe L ou -Sp³-P,
c) le groupe qui est constitué par tétrahydropyran-2,5-diyle, 1,3-dioxane-2,5-diyle, tétrahydrofuran-2,5-diyle, cyclobutane-1,3-diyle, pipéridine-1,4-diyle, thiophène-2,5-diyle et sélénophène-2,5-diyle, dont chacun peut également être mono- ou polysubstitué par un groupe L,
d) le groupe qui est constitué par des radicaux polycycliques saturés, partiellement non saturés ou complètement non saturés, et en option substitués qui comportent de 5 à 20 atomes de C cycliques, dont un ou plusieurs peut/peuvent, en outre, être remplacé(s) par des hétéroatomes, de préférence sélectionnés parmi le groupe qui est constitué par bicyclo[1.1.1]-pentane-1,3-diyle, bicyclo[2.2.2]octane-1,4-diyle, spiro[3.3]-heptane-2,6-diyle, 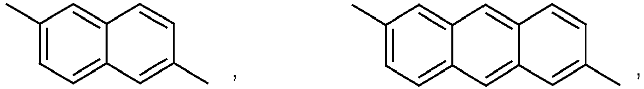 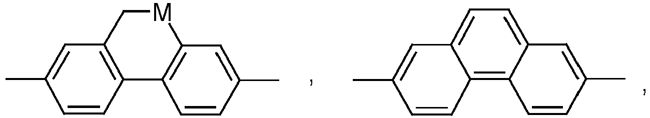 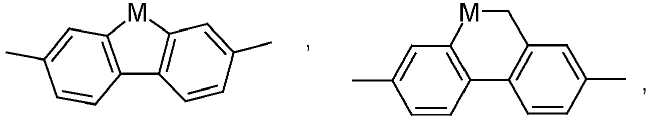 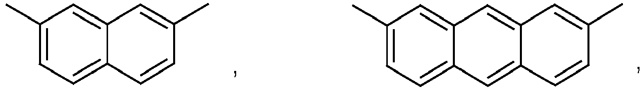 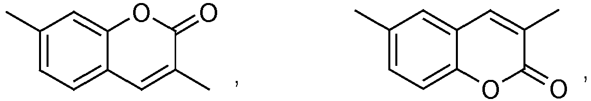 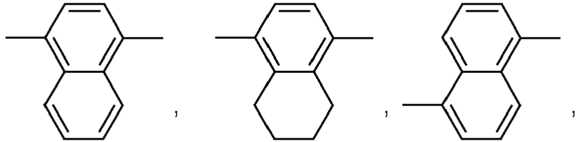 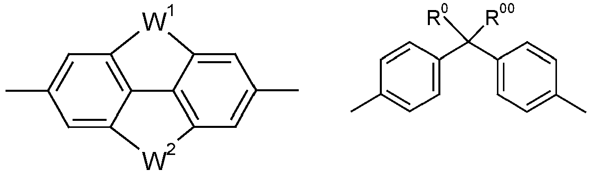 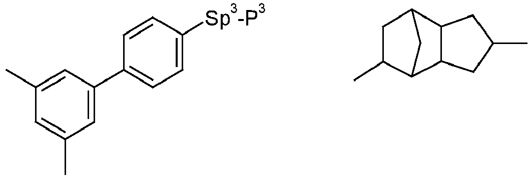 où, en outre, un ou plusieurs atome(s) de H dans ces radicaux peut/peuvent être remplacé(s) par un groupe L ou - Sp³-P, et/ou une ou plusieurs liaison(s) double(s) peut/peuvent être remplacée(s) par des liaisons simples, et/ou un ou plusieurs groupe(s) CH peut/peuvent être remplacé(s) par N,
P³ représente un groupe polymérisable,
Sp³ représente un groupe d'espaceur,
n représente 0, 1, 2 ou 3,
Z¹ représente dans chaque cas, de manière indépendante les uns des autres, -CO-O-, -O-CO-, -CH₂O-, -OCH₂-, -CF₂O-, -OCF₂-, ou -(CH₂)ₙ-, où n est 2, 3 ou 4, -O-, -CO-, -C(R^{c}R^{d})-, -CH₂CF₂-, -CF₂CF₂- ou une liaison simple,
L représente pour chaque occurrence, de manière identique ou différente, F, Cl, CN, SCN, SF₅ ou alkyle, alcoxy, alkylcarbonyle, alcoxycarbonyle, alkylcarbonyloxy ou alcoxycarbonyloxy en chaîne droite ou ramifié, dans chaque cas en option fluoré, qui comporte de 1 à 12 atome(s) de C,
R⁰, R⁰⁰ représentent dans chaque cas, de manière indépendante l'un de l'autre, H, F ou alkyle en chaîne droite ou ramifié qui comporte de 1 à 12 atome(s) de C, où, en outre, un ou plusieurs atome(s) de H peut/peuvent être remplacé(s) par F,
M représente -O-, -S-, -CH₂-, -CHY¹- ou -CY¹Y²-,
Y¹ et Y² présentent dans chaque cas, de manière indépendante l'un de l'autre, l'une des significations qui ont été indiquées ci-avant pour R⁰ ou représentent Cl ou CN, et de préférence H, F, Cl, CN, OCF₃ ou CF₃,
W¹, W² représentent dans chaque cas, de manière indépendante l'un de l'autre, -CH₂CH₂-, -CH=CH-, -CH₂-O-, -O-CH₂-, -C(R^{c}R^{d})-ou -O-, et
R^{c} et R^{d} représentent dans chaque cas, de manière indépendante l'un de l'autre, H ou alkyle qui comporte de 1 à 6 atome(s) de C, de préférence H, méthyle ou éthyle,
où un ou plusieurs des groupes P¹-Sp¹-, -Sp²-P² et -Sp³-P³ peut/peuvent représenter un radical R^{aa}, étant entendu qu'au moins l'un des groupes P¹-Sp¹-, -Sp²-P² et -Sp³-P³ qui sont présents ne représente pas R^{aa},
R^{aa} représente H, F, Cl, CN ou alkyle en chaîne droite ou ramifié qui comporte de 1 à 25 atome(s) de C, où, en outre, un ou plusieurs groupe(s) CH₂ non adjacents peut/peuvent dans chaque cas être remplacé(s), de manière indépendante les uns des autres, par C(R⁰)=C(R⁰⁰)-, -C≡C-, -O-, -S-, -CO-, -CO-O-, -O-CO-, -O-CO-O- de telle sorte que des atomes de O et/ou de S ne soient pas liés directement les uns aux autres, et où, en outre, un ou plusieurs atome(s) de H peut/ peuvent être remplacé(s) par F, Cl, CN ou P¹-Sp¹-, où les groupes -OH, -NH₂, -SH, -NHR, -C(O)OH et -CHO ne sont pas présents dans R^{aa}.

20. Milieu LC selon une ou plusieurs des revendications 1 à 19, **caractérisé en ce que** le composant polymérisable ou polymérisé comprend de 0,01 % à 5 % en poids d'un ou de plusieurs composé(s) de la formule M selon la revendication 19 et/ou de 0,01 % à 10 % en poids d'un ou de plusieurs composé(s) non polymérisable(s) de la formule I' selon la revendication 8 avec au moins un groupe d'ancrage.

21. Milieu LC selon une ou plusieurs des revendications 1 à 20, **caractérisé en ce que** le composant polymérisable ou polymérisé comprend un ou plusieurs composé(s) qui est/sont sélectionné(s) parmi les composés des formules qui suivent : 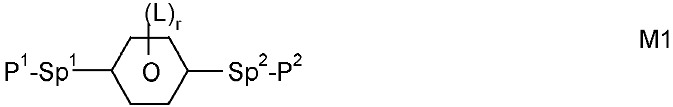 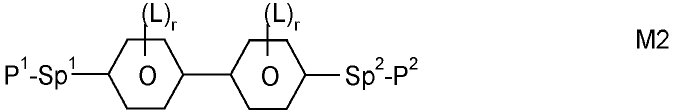 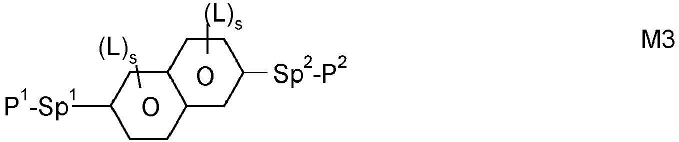 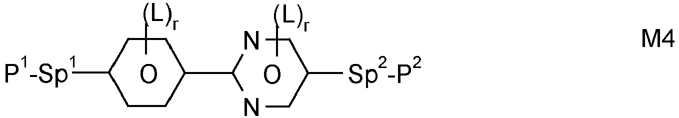 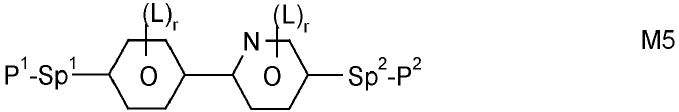 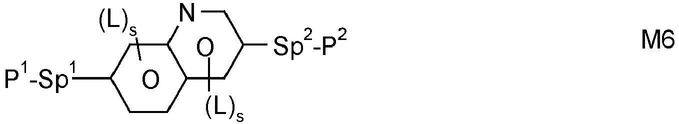 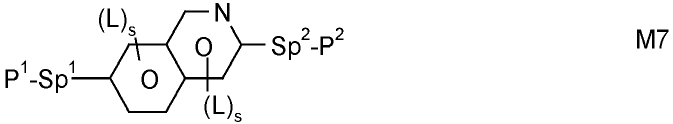 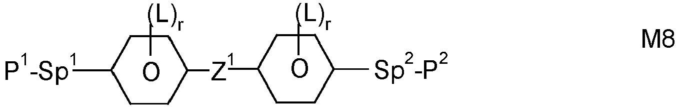 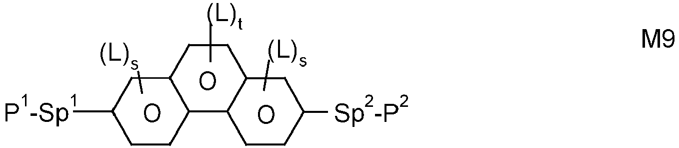 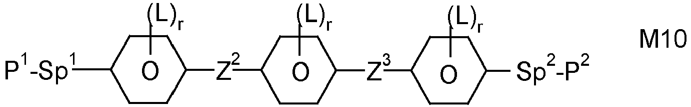 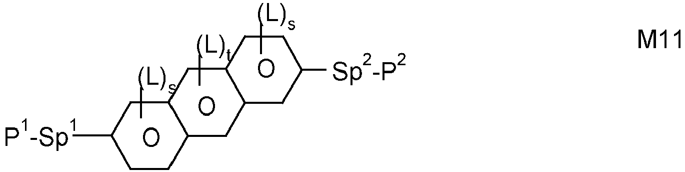 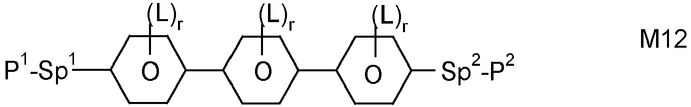 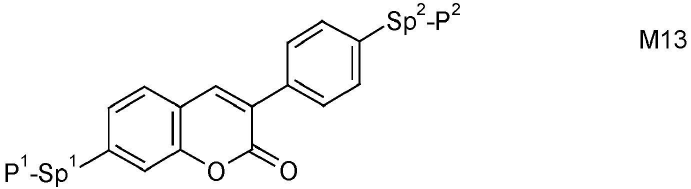 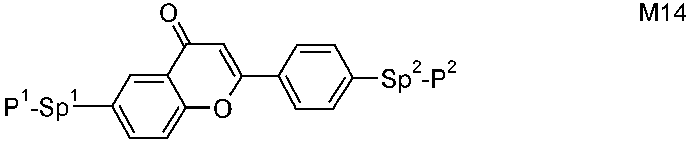 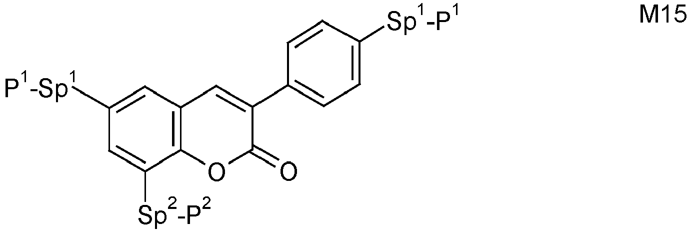 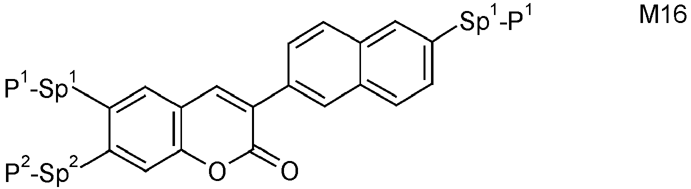 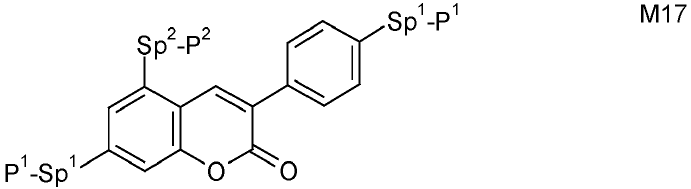 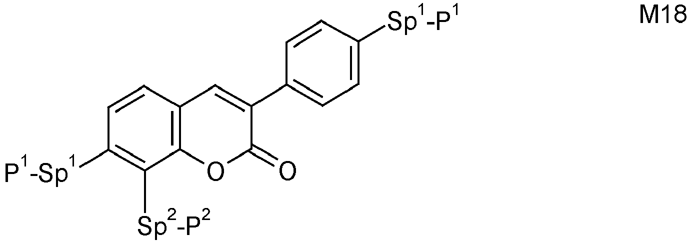 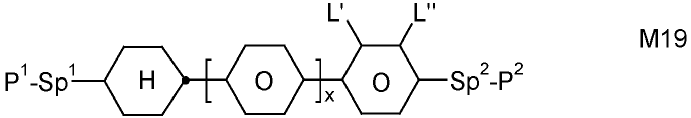 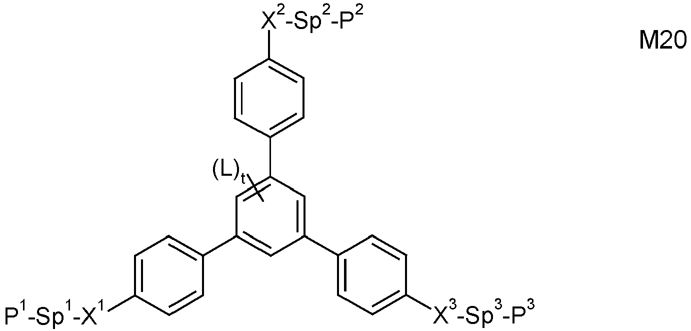 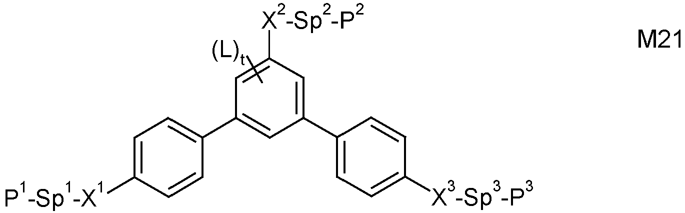 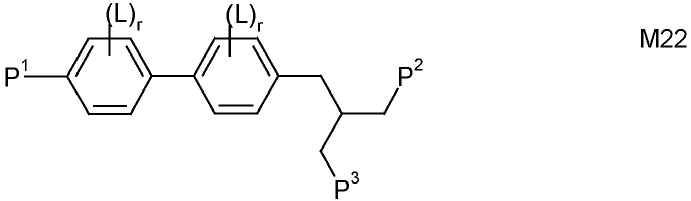 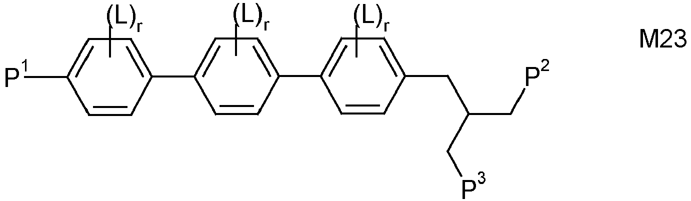 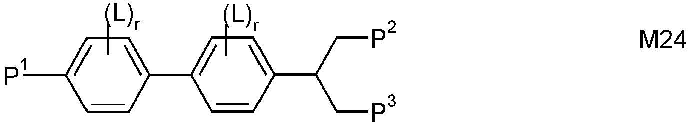 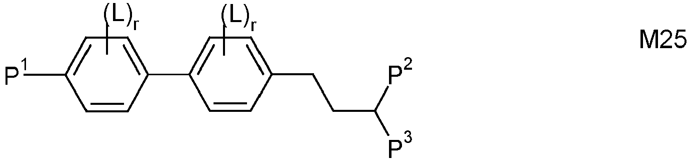 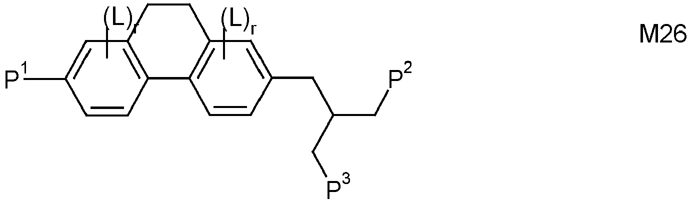 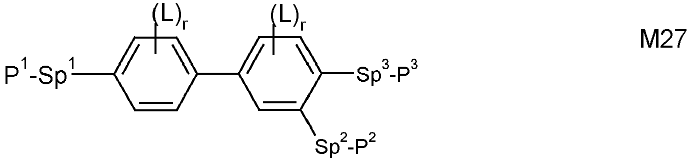 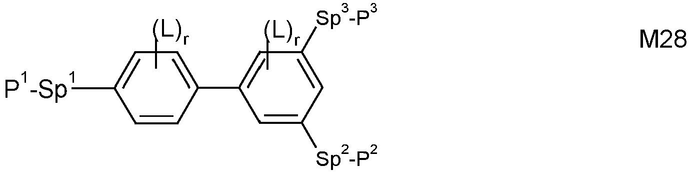 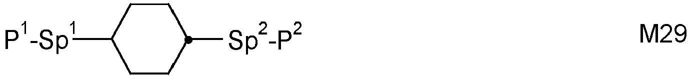 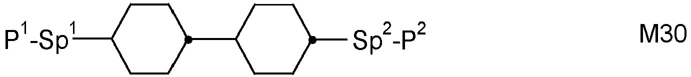 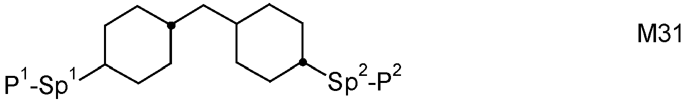 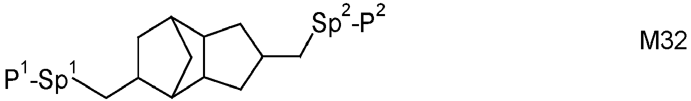 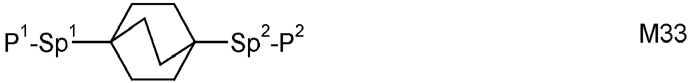 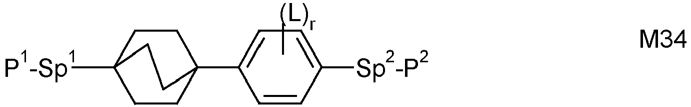 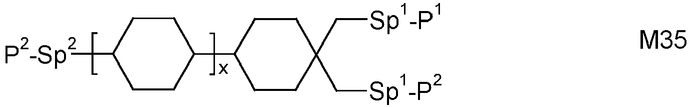 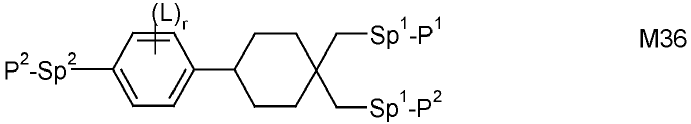 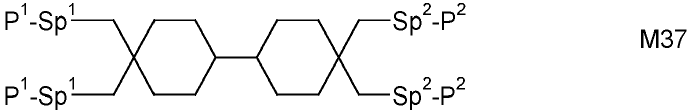 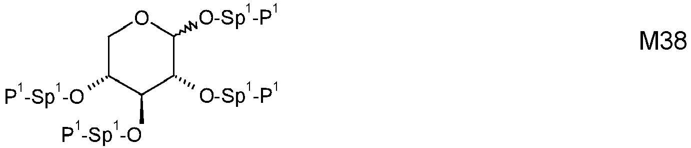 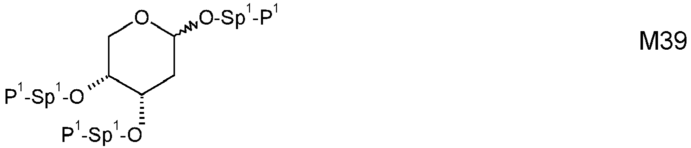 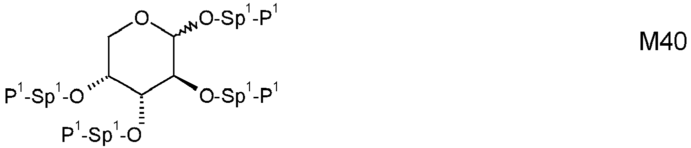 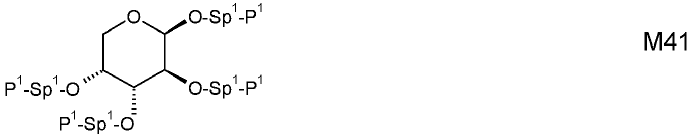 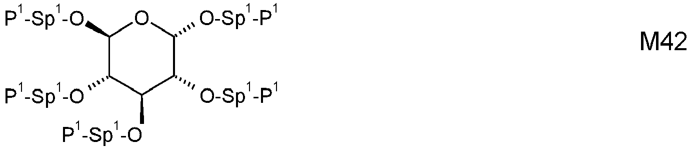 dans lesquelles les radicaux individuels présentent les significations qui suivent :
P¹, P² et P³ représentent dans chaque cas, de manière indépendante les uns des autres, un groupe polymérisable, de préférence qui présente l'une des significations qui ont été indiquées ci-avant et qui sont indiquées ci-après pour P, de façon particulièrement préférable un groupe acrylate, méthacrylate, fluoroacrylate, oxétane, vinyloxy ou époxyde,
Sp¹, Sp² et Sp³ représentent dans chaque cas, de manière indépendante les uns des autres, une liaison simple ou un groupe d'espaceur, de préférence qui présente l'une des significations qui ont été indiquées ci-avant et qui sont indiquées ci-après pour Sp^{a}, et de façon particulièrement préférable -(CH₂)ₚ₁-, -(CH₂)ₚ₁-O-, -(CH₂)ₚ₁-CO-O- ou -(CH₂)ₚ₁-O-CO-O-, où p1 est un entier de 1 à 12, et où la liaison sur le cycle adjacent dans les groupes qui ont été mentionnés en dernier est réalisée via l'atome de O,
où, en outre, un ou plusieurs des radicaux P¹-Sp¹-, P²-Sp²- et P³-Sp³-peut/peuvent représenter un radical R^{aa}, étant entendu qu'au moins l'un des radicaux P¹-Sp¹-, P²-Sp²- et P³-Sp³- qui sont présents ne représente pas R^{aa},
R^{aa} représente H, F, Cl, CN ou alkyle en chaîne droite ou ramifié qui comporte de 1 à 25 atome(s) de C, où, en outre, un ou plusieurs groupe(s) CH₂ non adjacents peut/peuvent dans chaque cas être remplacé(s), de manière indépendante les uns des autres, par C(R⁰)=C(R⁰⁰)-, -C≡C-, -N(R⁰)-, -O-, -S-, -CO-, -CO-O-, -O-CO-, -O-CO-O- de telle sorte que des atomes de O et/ou de S ne soient pas liés directement les uns aux autres, et où, en outre, un ou plusieurs atome(s) de H peut/peuvent être remplacé(s) par F, Cl, CN ou P¹-Sp¹-, où -OH, -NH₂, -SH, -NHR, -C(O)OH et -CHO ne sont pas présents dans le groupe R^{aa},
R⁰, R⁰⁰ représentent dans chaque cas, de manière indépendante l'un de l'autre et de manière identique ou différente pour chaque occurrence, H ou alkyle qui comporte de 1 à 12 atome(s) de C,
R^{y} et R^{z} représentent dans chaque cas, de manière indépendante l'un de l'autre, H, F, CH₃ ou CF₃,
X¹, X² et X³ représentent dans chaque cas, de manière indépendante les uns des autres, -CO-O-, O-CO- ou une liaison simple,
Z¹ représente -O-, -CO-, -C(R^{y}R^{z})- ou -CF₂CF₂-,
Z² et Z³ représentent dans chaque cas, de manière indépendante l'un de l'autre -CO-O-, -O-CO-, -CH₂O-, -OCH₂-, -CF₂O-, -OCF₂- ou -(CH₂)ₙ-, où n est 2, 3 ou 4,
L représente pour chaque occurrence, de manière identique ou différente, F, Cl, CN, SCN, SF₅ ou alkyle, alcoxy, alkényle, alkynyle, alkylcarbonyle, alcoxycarbonyle, alkylcarbonyloxy ou alcoxycarbonyloxy en chaîne droite ou ramifié, en option mono- ou polyfluoré qui comporte de 1 à 12 atome(s) de C, de préférence F,
L' et L" représentent dans chaque cas, de manière indépendante l'un de l'autre, H, F ou Cl,
r représente 0, 1, 2, 3 ou 4,
s représente 0, 1, 2 ou 3,
t représente 0, 1 ou 2, et
x représente 0 ou 1.

22. Milieu LC selon une ou plusieurs des revendications 1 à 21, **caractérisé en ce qu'**il comprend de façon additionnelle un ou plusieurs composé(s) qui est/sont sélectionné(s) parmi le groupe des composés des formules A, B et C, 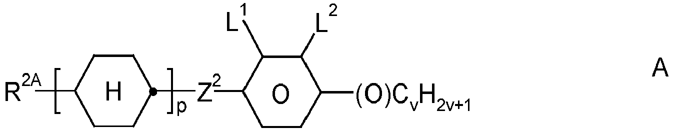 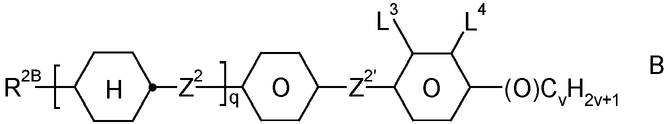 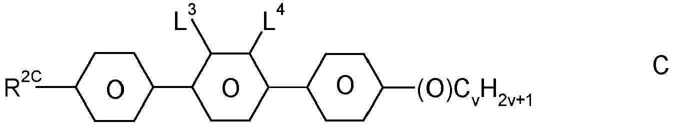 dans lesquelles
R^{2A}, R^{2B} et R^{2C} représentent dans chaque cas, de manière indépendante les uns des autres, H, un radical alkyle qui comporte jusqu'à 15 atomes de C, lequel est non substitué, monosubstitué par CN ou par CF₃ ou au moins monosubstitué par halogène, où, en outre, un ou plusieurs groupe(s) CH₂ dans ces radicaux peut/peuvent être remplacé(s) par -O-, -S-, 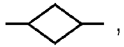 -C≡C-, -CF₂O-, -OCF₂-, -OC-O- ou -O-CO- de telle sorte que des atomes de O ne soient pas liés directement les uns aux autres,
L¹⁻⁴ représentent dans chaque cas, de manière indépendante les uns des autres F, Cl, CF₃ ou CHF₂,
Z² et Z^{2'} représentent dans chaque cas, de manière indépendante l'un de l'autre, une liaison simple, -CH₂CH₂-, -CH=CH-, -CF₂O-, -OCF₂-, -CH₂O-, -OCH₂-, -COO-, -OCO-, -C₂F₄-, -CF=CF-, -CH=CHCH₂O-,
p représente 1 ou 2,
q représente 0 ou 1, et
v représente 1 à 6.

23. Affichage LC comprenant une cellule LC qui comporte deux substrats et au moins deux électrodes, dans lequel au moins un substrat est transparent vis-à-vis de la lumière et au moins un substrat comporte une ou deux électrode(s), et qui comporte une couche en un milieu LC selon une ou plusieurs des revendications 1 à 22 qui est localisée entre les substrats,
dans lequel le composé de la formule I est approprié pour réaliser un alignement homéotrope du milieu LC en relation avec les surfaces de substrat.

24. Affichage LC selon la revendication 23, **caractérisé en ce que** les substrats ne comportent pas de couches d'alignement pour un alignement homéotrope.

25. Affichage LC selon la revendication 23, **caractérisé en ce que** les substrats comportent des couches d'alignement sur un côté ou sur les deux côtés.

26. Affichage LC selon une ou plusieurs des revendications 23 à 25, **caractérisé en ce qu'**il s'agit d'un affichage VA qui contient un milieu LC qui présente une anisotropie diélectrique négative et qui comporte des électrodes qui sont agencées sur des substrats opposés.

27. Affichage LC selon une ou plusieurs des revendications 23 à 25, **caractérisé en ce qu'**il s'agit d'un affichage VA-IPS qui contient un milieu LC qui présente une anisotropie diélectrique positive et qui comporte des électrodes imbriquées qui sont agencées sur au moins un substrat.

28. Procédé pour la préparation d'un milieu LC, **caractérisé en ce qu'**un ou plusieurs composé(s) de la formule I selon la revendication 1 est/sont mélangé(s) avec un composant cristallin liquide de poids moléculaire faible, et un ou plusieurs composé(s) polymérisable(s) et/ou de quelconques additifs souhaités sont en option ajoutés.

29. Utilisation de composés de la formule I selon une ou plusieurs des revendications 1 à 5 en tant qu'additif pour des milieux LC pour réaliser un alignement homéotrope par rapport à une surface qui délimite le milieu LC.

30. Procédé pour la fabrication d'un affichage LC qui comprend une cellule LC qui comporte deux substrats et au moins deux électrodes, dans lequel au moins un substrat est transparent vis-à-vis de la lumière et au moins un substrat comporte une ou deux électrode(s), comprenant les étapes de procédé qui suivent :
- le remplissage de la cellule avec un milieu LC selon une ou plusieurs des revendications 1 à 22, dans lequel un alignement homéotrope du milieu LC par rapport aux surfaces de substrat devient établi, et
- la polymérisation du/des composant(s) polymérisable(s), en option avec l'application d'une tension sur la cellule ou sous l'action d'un champ électrique, selon une ou plusieurs étape(s) de procédé.
